# EUROPEAN PATENT APPLICATION

(11) **EP 4 261 946 A1**
(43) Date of publication of application: **18.10.2023**
(21) Application number: 22882990.9
(22) Date of filing: 21.10.2022
(51) Int. Cl.: H01M 4/36, H01M 4/58, H01M 4/62, H01M 4/136, H01M 10/0525

(54) **POSITIVE ELECTRODE ACTIVE MATERIAL AND PREPARATION METHOD THEREFOR, POSITIVE ELECTRODE POLE PIECE, SECONDARY BATTERY, BATTERY MODULE, BATTERY PACK, AND POWER-CONSUMING DEVICE**

(30) Priority: 22.10.2021 WO PCT/CN2021/125898; 12.11.2021 WO PCT/CN2021/130350; 22.12.2021 WO PCT/CN2021/140462
(71) Applicant: Contemporary Amperex Technology Co., Limited, Ningde City, Fujian 352100 (CN)
(72) Inventor: JIANG, Yao, Ningde City, Fujian 352100 (CN); OUYANG, Chuying, Ningde City, Fujian 352100 (CN); ZHANG, Xinxin, Ningde City, Fujian 352100 (CN); DENG, Bin, Ningde City, Fujian 352100 (CN); WANG, Zhiqiang, Ningde City, Fujian 352100 (CN); YUAN, Tianci, Ningde City, Fujian 352100 (CN); XU, Bo, Ningde City, Fujian 352100 (CN); CHEN, Shangdong, Ningde City, Fujian 352100 (CN)
(74) Representative: Jacob, Reuben Ellis
(86) International application number: PCT/CN2022/126778
(87) International publication number: WO 2023/066386

(57) **Abstract**

The present application provides a positive electrode active material, comprising LiₐAₓMn_{1-y}B_{y}P_{1-z}C_{z}O₄₋ₙDₙ, wherein A comprises one or more selected from a group IA, a group IIA, a group IIIA, a group IIB, a group VB, and a group VIB; B comprises one or more selected from the group IA, the group IIA, the group IIIA, a group IVA, a group VA, the group IIB, a group IVB, the group VB, the group VIB, and a group VIII; C comprises one or more selected from the group IIIA, the group IVA, the group VA, and a group VIA; D comprises one or more selected from the group VIA and a group VIIA; a is selected from 0.85 to 1.15; x is selected from 0 to 0.1; y is selected from 0.001 to 0.999; z is selected from 0 to 0.5; and n is selected from 0 to 0.5. The present application further provides a preparation method for the positive electrode active material, a positive electrode pole piece, a secondary battery, a battery module, a battery pack, and a power-consuming device. According to the positive electrode active material of the present application, the rate capability is improved, the dissolution of Mn and a doped element at the position of Mn is reduced, and the cycle performance and the high-temperature stability of the secondary battery are remarkably improved.

## Description

### Technical Field

The present application relates to the technical field of lithium batteries, in particular to a positive electrode active material and a preparation method therefor, a positive electrode plate containing the positive electrode active material, a secondary battery, a battery module, a battery pack, and a power consuming device.

### Background Art

With the rapid development in the new energy field, lithium ion batteries, due to their advantages of good electrochemical performance, no memory effect and little environmental pollution, are widely applied in various large power devices, energy storage systems and various consumable products, especially in the field of new energy vehicles such as pure electric vehicles and hybrid electric vehicles. Among the batteries, a lithium manganese phosphate positive electrode active material has the advantages of a high working voltage, a wide range of raw material sources and less environmental pollution, and is considered to be a positive electrode active material that is expected to replace lithium iron phosphate and become a power lithium ion battery.

However, in the prior art, the cycling performance, high-temperature storage performance and safety performance of secondary batteries using lithium manganese phosphate positive electrode active materials have not been comprehensively improved, which greatly limits the wider application of lithium manganese phosphate batteries. Therefore, the industry is still looking forward to designing a lithium manganese phosphate positive electrode active material with a high gram capacity, good cycling performance and safety performance.

### Summary of the Invention

The present application is made in view of the above problems, and with an object to provide a positive electrode active material, a preparation method for the positive electrode active material, a positive electrode plate, a secondary battery, a battery module, a battery pack, and a power consuming device to solve existing problems, that the existing lithium manganese phosphate positive electrode active material is prone to Li/Mn antisite defects and serious manganese dissolution during the charging/discharging process, so as to solve the problems of a low capacity, poor safety performance and cycling performance of secondary batteries.

In order to achieve the above object, the first aspect of the present application provides a positive electrode active material, including a compound represented by formula (I),

LiₐAₓMn_{1-y}B_{y}P_{1-z}C_{z}O₄₋ₙDₙ (I)

wherein
the A includes one or more elements selected from group IA, group IIA, group IIIA, group IIB, group VB and group VIB;
the B includes one or more elements selected from group IA, group IIA, group IIIA, group IVA, group VA, group IIB, group IVB, group VB, group VIB and group VIII;
the C includes one or more elements selected from group IIIA, group IVA, group VA and group VIA;
the D includes one or more elements selected from group VIA and group VIIA;
the a is selected from a range of 0.85 to 1.15;
the x is selected from a range of 0 to 0.1;
the y is selected from a range of 0.001 to 0.999;
the z is selected from a range of 0 to 0.5; and
the n is selected from a range of 0 to 0.5.

Therefore, in the present application, by doping a compound LiMnPO₄ at Mn site and optionally Li, P and/or O sites with specific amounts of specific elements, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In any embodiment, the A includes one or more elements selected from Rb, Cs, Be, Ca, Sr, Ba, Ga, In, Cd, V, Ta, Cr, Zn, Al, Na, K, Mg, Nb, Mo and W, optionally one or more elements selected from Zn, Al, Na, K, Mg, Nb, Mo and W; and/or
the B includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb and Ge, optionally one or more elements selected from Zn, Al, Na, K, Mg, Mo, W, Ti, V, Zr, Fe, Ni, Co, Ga, Sn, Sb, Nb and Ge; and/or
the C includes one or more elements selected from B (boron), S, Si and N; and/or
the D includes one or more elements selected from S, F, Cl and Br.

Therefore, the rate performance, gram capacity, compacted density, cycling performance and/or high temperature performance of the secondary battery can be further improved, and the dissolution of Mn and Mn-site doping elements can be further reduced.

In any embodiment, the A includes any element selected from Zn, Al, Na, K, Mg, Nb, Mo and W, and optionally any element selected from Mg and Nb; and/or
the B includes one or more elements selected from Ti, V, Zr, Fe, Ni, Mg, Co, Ga, Sn, Sb, Nb and Ge, optionally at least two elements selected from Ti, V, Zr, Fe , Ni, Mg, Co, Ga, Sn, Sb, Nb and Ge, more optionally at least two elements selected from Fe, Ti, V, Ni, Co and Mg, further optionally at least two elements selected from Fe, Ti, V, Co and Mg, and more further optionally Fe and one or more elements selected from Ti, V, Co and Mg; and/or
the C includes any element selected from B (boron), S, Si and N, optionally S; and/or
the D includes any element selected from S, F, Cl and Br, optionally F.

Therefore, the rate performance of the secondary battery can be further improved, the dissolution of Mn and Mn-site doping elements can be further reduced, the cycling performance and/or high temperature performance of the secondary battery can be improved, and the gram capacity and compacted density of the material can be further improved.

In any embodiment, the a is selected from a range of 0.9 to 1.1, optionally in a range of 0.97 to 1.01; and/or
the x is selected from a range of 0.001 to 0.005; and/or
the y is selected from a range of 0.001 to 0.5, optionally in a range of 0.01 to 0.5, optionally in a range of 0.25 to 0.5; and/or
the z is selected from a range of 0.001 to 0.5, optionally in a range of 0.001 to 0.1, more optionally in a range of 0.001 to 0.005; and/or
then is selected from a range of 0 to 0.1, optionally in a range of 0.001 to 0.005.

Thus, the gram capacity of the material can be further improved, the rate performance and/or kinetic performance of the secondary battery can be further improved, and the cycling performance and/or high temperature performance of the battery can be further improved.

In any embodiment, the x is 0, the z is selected from a range of 0.001 to 0.5, and the n is selected from a range of 0.001 to 0.1; or,
the x is selected from a range of 0.001 to 0.1, the z is 0, and the n is selected from a range of 0.001 to 0.1; or,
the x is selected from a range of 0.001 to 0.1, the z is selected from a range of 0.001 to 0.5, and the n is 0; or,
the x is 0, the z is 0, and the n is selected from a range of 0.001 to 0.1; or,
the x is 0, the z is selected from a range of 0.001 to 0.5, and the n is 0; or,
the x is selected from a range of 0.001 to 0.1, the z is selected from a range of 0.001 to 0.5, and the n is selected from a range of 0.001 to 0.1.

Therefore, the present application, by doping the compound LiMnPO₄ with specific elements in specific amounts at the Mn-site and optionally at the Li-site, P-site and/or O-site, especially at the Mn-site and the P-site of LiMnPO₄ or doping LiMnPO₄ with specific elements in specific amounts at the Li-site, Mn-site, P-site, and O-site, can significantly improve the rate performance, significantly reduce the dissolution of Mn and Mn-site doping elements, and significantly improve the cycling performance and/or high temperature stability and remarkably improve the gram capacity and the compaction density of the material.

In any embodiment, y:z is selected from a range of 0.002 to 999, optionally in a range of 0.025 to 999, more optionally in a range of 0.2 to 600. Therefore, the defects of the material can be reduced, and the integrity of the frame structure of the material can be improved, thereby effectively improving the structural stability of the material, and further improving the cycling stability of the secondary battery.

In any embodiment, z:n is selected from a range of 0.002 to 500, optionally in a range of 0.2 to 100, more optionally in a range of 0.2 to 50. Therefore, the defects of the material can be further reduced, and the integrity of the frame structure of the material can be further improved, thereby effectively improving the structural stability of the material, and further improving the cycling stability of the secondary battery.

In any embodiment,
the A includes one or more elements selected from Zn, Al, Na, K, Mg, Nb, Mo and W;
the B includes one or more elements selected from Ti, V, Zr, Fe, Ni, Mg, Co, Ga, Sn, Sb, Nb and Ge;
the C includes one or more elements selected from B (boron), S, Si and N;
the D includes one or more elements selected from S, F, Cl and Br;
the a is selected from a range of 0.9 to 1.1, the x is selected from a range of 0.001 to 0.1, the y is selected from a range of 0.001 to 0.5, the z is selected from a range of 0.001 to 0.1, and the n is selected from a range of 0.001 to 0.1.

Therefore, in the present application, by doping a compound LiMnPO₄ at Li, Mn, P and O sites with specific amounts of specific elements, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In any embodiment,
the B includes one or more elements selected from Zn, Al, Na, K, Mg, Mo, W, Ti, V, Zr, Fe, Ni, Co, Ga, Sn, Sb, Nb and Ge, optionally one or more elements selected from Zn, Fe, Ti, V, Ni, Co and Mg;
the C is one or more elements selected from B, Si, N and S;
the a is selected from a range of 0.9 to 1.1, the x is 0, the y is selected from a range of 0.001 to 0.5, the z is selected from a range of 0.001 to 0.1, and the n is 0.

Thus, the present application, by doping the compound LiMnPO₄ with specific elements in specific amounts at the Mn-site and P-site, can improve the rate performance, reduce the dissolution of Mn and Mn - site doping elements, improve the cycling performance and/or high temperature stability, increase the gram capacity and compaction density of the material.

In any embodiment, the positive electrode active material includes an inner core and a shell coating the inner core, and the inner core includes a compound as shown in the above formula I;

the shell includes one or more coating layers; the coating layer has ion conductivity or electron conductivity.

The present application, by doping the compound LiMnPO₄ with specific elements in specific amounts at the Mn site and doping elements at Li-site, P-site and/or O-site to obtain a doped lithium manganese phosphate inner core and providing a coating on the surface of the core having ion conductivity and electron conductivity, provides a new positive electrode active material with a core-shell structure, and the use of the positive electrode active material in a secondary battery can significantly improve the high temperature cycling performance, cycling stability and high temperature storage performance of the secondary battery.

In any embodiment, the shell includes a coating layer;
optionally, the coating layer includes one or more selected from pyrophosphate, phosphate, carbon, doped carbon, an oxide, a boride and a polymer.

Therefore, the present application can obtain a coating layer with ion conductivity or electron conductivity by using the above materials, thereby improving the high-temperature cycling performance, cycling stability and high-temperature storage performance of the secondary battery.

In any embodiment, the shell includes a first coating layer coating the inner core and a second coating layer coating the first coating layer;
optionally, the first coating layer and the second coating layer each independently include one or more selected from pyrophosphate, phosphate, carbon, doped carbon, an oxide, a boride, and a polymer.

Therefore, the present application using the above materials as the materials of the coating layers, and providing two layers of coating layers can further improve the high-temperature cycling performance, cycling stability and high-temperature storage performance of the secondary battery.

In any embodiment, the first coating layer includes one or more selected from pyrophosphate, phosphate, an oxide and a boride, and the second coating layer includes one or more selected from carbon and doped carbon.

Therefore, in the present application, the use of a first coating layer of a specific material and a second coating layer of a specific material can further improve the rate performance, further reduce the dissolution of Mn and Mn-site doping elements, thereby improving the cycling performance of the secondary battery and/or high temperature stability.

In any embodiment, the shell includes a first coating layer coating the inner core, a second coating layer coating the first coating layer, and a third coating layer coating the second coating layer;
optionally, each of the first coating layer, the second coating layer and the third coating layer independently includes one or more selected from pyrophosphate, phosphate, carbon, doped carbon, an oxide, a boride and a polymer.

Therefore, the present application, by using the above materials as the materials of the coating layers, and providing three coating layers, can further reduce the dissolution of Mn and Mn-site doping elements, and further improve the high-temperature cycling performance, cycling stability and high-temperature storage performance stability of the secondary battery.

In any embodiment, the first coating layer includes pyrophosphate, the second coating layer includes one or more selected from phosphate, an oxide and a boride, and the third coating layer includes one or more of carbon and doped carbon.

Therefore, in the present application, the use of the first coating layer of a specific material, the second coating layer of a specific material, and the third coating layer of a specific material further improves the rate performance and further reduces the dissolution of Mn and Mn-site doping elements, thereby improving the cycling performance and/or high-temperature stability of the secondary battery, and further increasing the gram capacity and compacted density of the material.

In any embodiment, each of the one or more coating layers independently includes one or more selected from pyrophosphate, phosphate, carbon, doped carbon, an oxide, a boride and a polymer.

In any embodiment, the pyrophosphate is M_{b}(P₂O₇)_{c}; and/or
the phosphate is Xₘ(PO₄)_{q}; and/or
the doping elements in the doped carbon include one or more selected from group IIIA, group VA, group VIA and group VIIA; and/or
the oxide is M'_{d}Oₑ; and/or
the boride is ZᵥB_{w}; and/or
the polymer includes one or more selected from polysaccharides and their derivatives, and polysiloxanes;
wherein
the M, X and Z each independently include one or more elements selected from group IA, group IIA, group IIIA, group IB, group IIB, group IVB, group VB, group VIIB and group VIII; the b is selected from a range of 1 to 4, and the c is selected from a range of 1 to 6; the m is selected from a range of 1 to 2, and the q is selected from a range of 1 to 4; the M' includes one or more elements selected from alkali metals, alkaline earth metals, transition metals, group IIIA elements, group IVA elements, lanthanides and Sb, the d is greater than 0 and less than or equal to 2, and the e is greater than 0 and less than or equal to 5; the v is selected from a range of 1 to 7, and the w is selected from a range of 1 to 2.

Therefore, the present application, by using the above materials as the coating layers, can further reduce the dissolution of Mn and Mn-site doping elements further increase the gram capacity and compaction density of the material, and further improve the rate performance and high-temperature cycling performance and high-temperature storage performance of the secondary battery.

In any embodiment, the M, X and Z each independently include one or more elements selected from Li, Fe, Ni, Mg, Co, Cu, Zn, Ti, Ag, Zr, Nb and Al; and/or
the doping elements in the doped carbon include one or more selected from nitrogen, phosphorus, sulfur, boron and fluorine; and/or
the M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, optionally one or more elements selected from Mg, Al, Si, Zn, Zr and Sn; and/or
the polysiloxane is selected from one or more of polysiloxanes with a linear structure and polysiloxanes with a ring structure; and/or
the polysaccharide is selected from one or more of plant polysaccharides and marine polysaccharides.

Therefore, the present application, by using the above specific materials as the coating layers, can further reduce the dissolution of Mn and Mn-site doping elements and further improve the high-temperature cycling performance and high-temperature storage performance of the secondary battery.

In any embodiment, the positive electrode active material includes an inner core and a shell coating the inner core;
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb, Zn and Ge, and the C includes one or more elements of B (boron), S, Si and N;
the shell includes a first coating layer coating the inner core and a second coating layer coating the first coating layer,
wherein, the first coating layer includes pyrophosphate of MP₂O₇ and phosphate of XPO₄, wherein the M and X are each independently selected from one or more of Li, Fe, Ni, Mg, Co, Cu, Zn, Ti, Ag, Zr, Nb and Al; and
the second coating layer includes carbon.

Thus, the positive electrode active material of the present application can improve the gram capacity, cycling performance and safety performance of the secondary battery. Although the mechanism is not yet clear, it is speculated that the lithium manganese phosphate positive electrode active material of the present application has a core-shell structure, wherein doping the lithium manganese phosphate inner core at the manganese and phosphorus sites with elements, not only can effectively reduce the dissolution of manganese, and then reduce the migration of manganese ions to the negative electrode, reduce the consumption of electrolyte due to the decomposition of the SEI film, improve the cycling performance and safety performance of the secondary battery, and also promote the adjustment of Mn-O bonds, reduce the migration barrier of lithium ions, and promote the migration of lithium ions, and improve the rate performance of the secondary battery. Coating the inner core with a first coating layer including pyrophosphate and phosphate can further increase the migration resistance of manganese, and reduce the dissolution thereof, the content of lithium impurity on the surface, and the contact between the inner core and the electrolyte, thereby reducing the interface side reactions, reducing gas production, improving the high-temperature storage performance, cycling performance and safety performance of secondary batteries. By further coating the carbon-containing layer as the second coating layer, the safety performance and kinetic performance of the secondary battery can be further improved.

In any embodiment, the positive electrode active material includes an inner core and a shell coating the inner core;
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb and Ge, and the C includes one or more elements of B (boron), S, Si and N;
the shell includes a first coating layer coating the inner core, a second coating layer coating the first coating layer, and a third coating layer coating the second coating layer, wherein
the first coating layer includes pyrophosphate of Li_{f}QP₂O₇ and/or Q_{g}(P₂O₇)ₕ, wherein, 0 ≤ f ≤ 2, 1 ≤ g ≤ 4, 1 ≤ h ≤ 6, the Q in the pyrophosphate of Li_{f}QP₂O₇ and/or Q_{g}(P₂O₇)ₕ are each independently one or more elements selected from Fe, Ni, Mg, Co, Cu, Zn, Ti, Ag, Zr, in Nb and Al;
the second coating layer includes crystalline phosphate of XPO₄, wherein X is one or more elements selected from Li, Fe, Ni, Mg, Co, Cu, Zn, Ti, Ag, Zr, Nb and Al; and
the third coating layer includes carbon.

The present application, by doping elements at the manganese site of lithium manganese phosphate and doping elements at the phosphorus site to obtain a doped lithium manganese phosphate inner core and sequentially coating the surface of the core with three layers, provides a new lithium manganese phosphate positive electrode active material with a core-shell structure, and the use of the positive electrode active material in a secondary battery can significantly improve the high temperature cycling performance, cycling stability and high temperature storage performance of the secondary battery.

In any embodiment, the one or more coating layers in the shell which are farthest from the inner core each independently comprise one or more of polysiloxanes, polysaccharides and polysaccharide derivatives.

As a result, the uniformity of coating can be improved, and the interface side reactions caused by a high voltage can be effectively prevented, thereby improving the high-temperature cycling performance and high-temperature storage performance of the material. Moreover, the coating layer has good electron conductivity and ion conductivity, which helps to increase the gram capacity of the material while reducing the heat generation of the battery cell.

In any embodiment, the polysiloxane comprises a structural unit represented by formula (i), 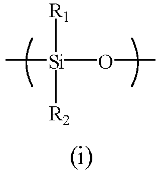
wherein R₁ and R₂ are independently selected from H, -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group;
optionally, R₁ and R₂ are independently selected from H, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl.

In any embodiment, the polysiloxane includes a blocking group including at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, a C1-C8 carboxyalkyl.

In any embodiment, the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, side-chain polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In any embodiment, the number average molecular weights of the polysiloxane, the polysaccharide and the polysaccharide derivative are each independently 300000 or less, optionally 10000 to 200000, more optionally 20000 to 120000, further optionally 400 to 80000.

In any embodiment, the polysiloxane has a polar functional group mass content percentage of α, with 0 ≤ α < 50%, optionally 5% ≤ α ≤ 30%.

In any embodiment, the substituents attached to the sugar units in the polysaccharide and the polysaccharide derivative each independently include at least one of the following functional groups: -OH, -COOH and a salt thereof, -R-OH, -SO₃H and a salt thereof, -R-OH, -R-SO₃H and a salt thereof, a sulfate ester group, an alkoxy group, where R represents an alkylene, optionally a C1-C5 alkylene;
optionally, the substituents attached to the sugar units in the polysaccharide and the polysaccharide derivative each independently include at least one of the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, a methoxy, and an ethoxy.

In any embodiment, the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, acacia gum, lithium alginate, sodium alginate, potassium alginate, fucoidan, agar, carrageenan, carrageenan, xanthan gum and fenugreek gum.

In any embodiment, the mass percentages of the substituents attached to the sugar units in the polysaccharide and the polysaccharide derivative are each independently 20% to 85%, optionally 30% to 78%.

In any embodiment, the degree of lattice mismatch between the material of the inner core and the material of the shell is less than 10%. Therefore, the contact between the inner core and the shell (or coating layer) can be improved to prevent the shell (or coating layer) from detachment.

In any embodiment, based on the weight of the positive electrode active material,
a manganese element content is in a range of 10 wt% to 35 wt%, optionally in a range of 13.3 wt% to 33.2 wt%, more optionally in a range of 15 wt% to 30 wt%, further optionally in a range of 17 wt% to 20 wt%; and/or
a content of phosphorus element is in a range of 12 wt% to 25 wt%, optionally in a range of 15 wt% to 20 wt%, more optionally in a range of 16.8 wt% to 19.5 wt%; and/or
a weight ratio range of manganese element to phosphorus element is 0.71-1.85, optionally 0.90-1.25, more optionally 0.95-1.20.

When the content of the manganese element in the present application is within the above range, the problems of poor material structure stability and density decreasing can be effectively reduced, thereby improving the performance of the secondary battery such as cycling, storage and compaction density. Moreover, the problem of a too low voltage can be reduced, thereby improving the energy density of the secondary battery.

In any embodiment, the surface of the positive electrode active material is coated with one or more of carbon and doped carbon; optionally, the surface of the positive electrode active material is coated with carbon. Therefore, the electrical conductivity of the positive electrode active material can be improved.

In any embodiment, the doping elements in the doped carbon include one or more selected from nitrogen, phosphorus, sulfur, boron and fluorine. It facilitates to control the properties of the doped carbon layer.

In any implementation, in the inner core,
(1-y) : y is in a range of 0.1-999, optionally in a range of 0.1-10 or a range of 0.67-999, more optionally in a range of 1 to 10, further optionally in a range of 1 to 4, more further optionally in a range of 1.5 to 3; and/or
a : x is in a range of 1 to 1200, optionally in a range of 9 to 1100, more optionally in a range of 190-998.

Therefore, the energy density and cycling performance of the positive electrode active material can be further improved.

In any implementation, in the inner core, the ratio of z to 1-z is 1 : 9 to 1 : 999, optionally 1 : 499 to 1 : 249. Thus, the cycling performance and rate performance of the secondary battery are further improved.

In any embodiment, the coating amount of the shell is 0.1% to 6%, based on the weight of the inner core. The coating amount of the coating layer in the present application is preferably within the above range, which can enable the full coating of the inner core, while further improving the kinetic performance and safety performance of the secondary battery without sacrificing the gram capacity of the positive electrode active material.

In any embodiment, the coating amount of the first coating layer is greater than 0 wt% and less than or equal to 7 wt%, optionally greater than 0 and less than or equal to 6 wt%, more optionally greater than 0 and less than or equal to 5.5 wt% or 4-5.6 wt%, further optionally greater than 0 and less than or equal to 2 wt%, based on the weight of the inner core; and/or
a coating amount of the second coating layer is greater than 0 wt% and less than or equal to 6 wt%, optionally greater than 0 and less than or equal to 5.5 wt%, more optionally 2-4 wt% or 3-5 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In any embodiment, the shell further includes a fourth coating layer coating the third coating layer and a fifth coating layer coating the fourth coating layer; wherein
the coating amounts of the fourth coating layer and the fifth coating layer are each independently 0.01 wt% to 10 wt%, optionally 0.05 wt% to 10 wt%, more optionally 0.1 wt% to 5 wt%, further 0.1% to 2 wt%, based on the weight of the inner core.

In the positive electrode active material with a core-shell structure of the present application, the coating amount of the each coating layer in the present application is preferably within the above range, which thus can enable the full coating of the inner core, while further improving the kinetic performance and safety performance of the secondary battery without sacrificing the gram capacity of the positive electrode active material.

In any embodiment, the shell is located on 40% to 90% of the surface of the inner core, optionally 60% to 80% of the surface. Thus, the inner core can be fully coated, thereby improving the kinetic performance and safety performance of the secondary battery.

In any embodiment, the thickness of the shell is 1-15 nm.

In any embodiment, the thickness of the first coating layer is 1-10 nm, optionally 2-10 nm; and/or
the thickness of the second coating layer is 2-25 nm, optionally 2-15 nm, more optionally 3-15 nm; and/or
the thickness of the third coating layer is 2-25 nm, optionally 5-25 nm.

In the present application, when the first coating layer has a thickness within the above range, the adverse effect on the dynamic performance of the material can be further reduced, and problem that the migration of transition metal ions cannot be effectively prevented can be reduced.

The second coating layer has a thickness within the above range, such that the surface structure of the second coating layer is stable, and the side reaction with the electrolyte is small, so the interface side reaction can be effectively reduced, thereby improving the high temperature performance of the secondary battery.

The third coating layer has a thickness within above range, such that the electrical conductivity of the material can be improved and the compaction density performance of the battery electrode plate prepared by using the positive electrode active material can be improved.

In any embodiment, the one or more coating layers each independently include one or more selected from pyrophosphate, phosphate and an oxide, and from one or more of pyrophosphate, phosphate and an oxide in a crystalline state;
optionally, the pyrophosphate, the phosphate and the oxide each independently has a crystallinity of 10% to 100%, more optionally 50% to 100%.

Herein, the crystalline state means that the crystallinity is 50% or more, that is, 50%-100%. A crystalline state with a crystallinity less than 50% is referred to as a glassy state. The crystallinity of the crystalline pyrophosphate and crystalline phosphate of the present application is 50% to 100%.

The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interface side reactions, but also the better lattice matching between the phosphate coating layer and the phosphate coating layer, such that a close combination between the coating layer and the coating layer can be achieved.

In any embodiment, in the shell, a weight ratio of the pyrophosphate to the phosphate and a weight ratio of the pyrophosphate to the oxide are each independently 1 : 3 to 3 : 1, optionally 1 : 3 to 1 : 1. Therefore, using pyrophosphate and phosphate in a suitable weight ratio range or pyrophosphate and oxide in a suitable weight ratio range, can not only effectively prevent the dissolution of manganese, but also effectively reduce the content of lithium impurities on the surface and reduce interface side reactions, thereby improving the high-temperature storage performance, safety performance and cycling performance of the secondary battery.

In any embodiment, the one or more coating layers each independently includes carbon, and the carbon is a mixture of SP2-form carbon and SP3-form carbon; optionally, in the carbon, a molar ratio of the SP2-form carbon to the SP3-form carbon is any value within a range of 0.07-13, more optionally any value within a range of 0.1-10, further optionally any value within a range of 2.0-3.0.

In the present application, the overall performance of the secondary battery is improved by limiting the molar ratio of the SP2-form carbon to the SP3-form carbon within the above range.

In any embodiment, the one or more coating layers each independently include doped carbon, and, in the doped carbon, a mass content of the doping element is no more than 30%; and optionally, in the doped carbon, the mass content of the doping element is 20% or less. Doping elements within the above content range can not only fully improve the conductivity of the pure carbon layer, but also effectively avoid the excessive surface activity due to excessive doping of doping elements, thereby effectively controlling the interface side reactions resulting from the overdoping of the coating layer.

In any embodiment, the one or more coating layers each independently includes doped carbon, and in the doped carbon,
the doping element is a nitrogen element and/or a sulfur element, and a mass content of the doping element in the doped carbon is 1% to 15%; or,
the doping element is a phosphorus element, a boron element and/or a fluorine element, and a mass content of the doping element in the doped carbon is 0.5% to 5%; and
optionally, the doping element is nitrogen, phosphorus, sulfur, boron or fluorine.

Since the nitrogen atoms and sulfur atoms have an atomic radius closer to that of carbon atoms and the carbon skeleton does not tend to damage, when the doping amounts of nitrogen atoms and sulfur atoms are within the above relatively wide range, the conductivity of the doped carbon layer can be fully utilized, and the lithium ion transport and lithium ion desolvation ability can also be promoted.

Due to the difference in atomic radius between the phosphorus atoms, boron atoms and/or fluorine atoms and the carbon atoms, excessive doping may tend to the damage of the carbon skeleton, so when the phosphorus atoms, boron atoms and/or fluorine atoms are in relatively small doping amounts in the above range, the conductivity of the doped carbon layer can be fully utilized, and the lithium ion transport and lithium ion desolvation ability can also be promoted.

In any embodiment, the one or more coating layers each independently include pyrophosphate, and the pyrophosphate has an interplanar distance in a range of 0.293-0.470 nm, optionally 0.297-0.462 nm or 0.293-0.326 nm, more optionally 0.300-0.310 nm, and the crystal direction (111) has an angle in a range of 18.00°-32.57°, optionally 18.00°-32.00° or 26.41°-32.57°, more optionally 19.211°-30.846°, further optionally 29.00°-30.00°; and/or
the one or more coating layers each independently include phosphate, the phosphate has an interplanar spacing in a range of 0.244-0.425 nm, optionally 0.345-0.358 nm, and the crystal direction (111) has an angle range of 20.00°-37.00°, optionally 24.25°-26.45°;
optionally, the first coating layer or the second coating layer comprises phosphate.

Both the first coating layer and the second coating layer in the positive electrode active material of the present application are crystalline substances, and the interplanar spacing and angle ranges thereof are within the above ranges. Thus, the impurity phase in the coating layer can be effectively reduced, thereby improving the gram capacity, cycling performance and rate performance of the material.

In any embodiment, the positive electrode active material has a lattice change rate of, before and after complete lithium intercalation-deintercalation, 50% or less, optionally 9.8% or less, more optionally 8.1% or less, further optionally 7.5% or less, further optionally 6% or less, further optionally 4% or less, further optionally 3.8% or less, and further optionally 2.0-3.8% or less.

Therefore, the use of positive electrode active material can improve the gram capacity and rate performance of the secondary battery.

In any embodiment, the positive electrode active material has an Li/Mn anti site defect concentration of 5.3% or less, optionally 5.1% or less, more optionally 4% or less, further optionally 2.2% or less, more further optionally 2% or less, more further optionally 1.5%-2.2% or 0.5% or less.

The Li/Mn antisite defect concentration within the above range avoids the prevention of transport of Li⁺ by Mn²⁺, while increasing the gram capacity and rate performance of the positive electrode active material.

In any embodiment, the positive electrode active material has a compacted density at 3T of 1.89 g/cm³ or more, optionally 1.95 g/cm³ or more, more optionally 1.98 g/cm³ or more, further optionally 2.0 g/cm³ or more, more further optionally 2.2 g/cm³ or more, more further optionally 2.2 g/cm³ or more and 2.8 g/cm³ or less, or 2.2 g/cm³ or more and 2.65 g/cm³ or less.

Thus, increasing the compaction density increases the weight of the active material per unit volume, which is more conducive to increasing the volumetric energy density of the secondary battery.

In any embodiment, the positive electrode active material has a surface oxygen valence state of-1.55 or less, optionally -1.82 or less, more optionally -1.88 or less, further optionally -1.90 or less or -1.98 to -1.88, more further optionally -1.98 to -1.89, more further optionally -1.98 to -1.90.

Therefore, by limiting the surface oxygen valence state of the positive electrode active material within the above range, the interface side reactions between the positive electrode material and the electrolyte can be reduced, thereby improving the performance, such as cycling, high temperature storage and gas production, of the battery cell.

The second aspect of the present application also provides a method for preparing a positive electrode active material, including the steps of:
reacting a manganese source with an element B source, to obtain a manganese salt doped with element B;
mixing a lithium source, a phosphorus source, optionally an element A source, and optionally an element C source, and an optional source of element D with the manganese salt doped with element B, followed by drying, and sintering to obtain an inner core of LiₐAₓMn_{1-y}B_{y}P_{1-z}C_{z}O₄₋ₙDₙ, wherein, the A, B, C, D, a, x, y, z and n are as defined in the first aspect of the present application.

Therefore, in the present application, by doping a compound LiMnPO₄ with specific elements in specific amounts at Mn-site and optionally Li, P and/or O-sites, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In any embodiment, the method specifically includes the steps of:
mixing and stirring the manganese source, the element B source and an acid in a solvent to produce a suspension of a manganese salt doped with element B, filtering the suspension and drying the filter cake to obtain the manganese salt doped with element B;
adding a lithium source, a phosphorus source, optionally an element A source, optionally an element C source, and optionally an element D source, a solvent, and the manganese salt doped with element B into a reaction container and grinding and mixing same to obtain a slurry;
transferring the resulting slurry to a spray drying apparatus for spray drying and granulation to obtain particles;
sintering the resulting particles to obtain an inner core of LiₐAₓMn_{1-y}B_{y}P_{1-z}C_{z}O₄₋ₙDₙ; wherein, the A, B, C, D, a, x, y, z and n are as defined in the first aspect of the present application.

In any embodiment, in the step of preparing the slurry, a lithium source, a phosphorus source, optionally an element A source, optionally an element C source, optionally an element D source, a carbon source, a source of a doping element for a carbon layer, a solvent, and the manganese salt doped with element B are added to a reaction container for grinding and mixing to obtain a slurry; the other steps are the same as above; to obtain the positive electrode active material;
the positive electrode active material includes an inner core and a shell coating the inner core, the inner core includes LiₐAₓMn_{1-y}B_{y}P_{1-z}C_{z}O₄₋ₙDₙ, and the shell includes doped carbon, and the doped carbon has doping elements including one or more selected from nitrogen, phosphorus, sulfur, boron and fluorine; wherein, the A, B, C, D, a, x, y, z and n are as defined in the first aspect of the present application.

In any embodiment, the method includes the steps of:
treating the surface of the inner core by coating by dry-coating or wet-coating with one or a mixture of more selected from pyrophosphate, phosphate, carbon, doped carbon, an oxide, a boride and a polymer, to obtain the positive electrode active material;
the positive electrode active material includes an inner core and a shell coating the inner core, the inner core is LiₐAₓMn_{1-y}B_{y}P_{1-z}C_{z}C₄₋ₙDₙ, and the shell includes one or more coating layers, each of which independently includes one or more selected from pyrophosphate, phosphate, carbon, doped carbon, an oxide, a boride, and a polymer, wherein, the A, B, C, D, a, x, y, z and n are as defined in the first aspect of the present application; optionally, the polymer includes one or more selected from polysiloxanes, polysaccharides and polysaccharide derivatives.

In any embodiment, the method includes the steps of:
providing a pyrophosphate M_{b}(P₂O₇), powder, a suspension comprising phosphate Xₘ(PO₄)_{q} and/or oxide M'_{d}Oₑ, wherein the suspension further comprises a carbon source and/or a doped carbon source;
adding the inner core and pyrophosphate M_{b}(P₂O₇)_{c} powder into the suspension and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate M_{b}(P₂O₇)_{c} and one or more selected from phosphate Xₘ(PO₄)_{q} and oxide M'_{d}Oₑ, the second coating layer includes one or more of selected from carbon and doped carbon, optionally, the doping element in the doped carbon include one or more selected from nitrogen, phosphorus, sulfur, boron and fluorine, wherein the A, B, C, D, a, x, y, z and n are defined as in the first aspect of the present application, and the M, X, M', b, c, d, e, m, and q are defined as in the first aspect of the present application.

In any embodiment, the method includes the steps of:
providing a pyrophosphate MP₂O₇ powder, a phosphate XPO₄ suspension comprising a carbon source;
adding the inner core and pyrophosphate MP₂O₇ powder into the XPO₄ suspension comprising a carbon source and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate MP₂O₇ and phosphate XPO₄, the second coating layer includes carbon, wherein the A, B, C, D, a, x, y, z and n are defined as in the first aspect of the present application, and the M and X are defined as in the first aspect of the present application.

In any embodiment, the method includes the steps of:
providing a pyrophosphate M_{b}(P₂O₇)_{c} suspension, a suspension containing one or more selected from phosphate Xₘ(PO₄)_{q}, oxide M'_{d}Oₑ and a boride and a suspension comprising a carbon source and/or a doped carbon source;
mixing the inner core with all the above suspensions, and sintering same to obtain the positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n are defined as in the first aspect of the present application, and the M, X, M', b, c, d, e, m and q are defined as in the first aspect of the present application.

In any embodiment, the method includes the steps of:
providing an Li_{f}QP₂O₇ and/or Q_{g}(P₂O₇)ₕ and XPO₄ suspension respectively, adding the inner core to the above suspension, mixing and sintering same to obtain the positive electrode active material; wherein
the positive electrode active material includes an inner core and a shell coating the inner core, the inner core includes LiₐAₓMn_{1-y}B_{y}P_{1-z}C_{z}O₄₋ₙDₙ, and the shell includes a first coating layer coating the inner core, a second coating layer coating the first coating layer, and a third coating layer coating the second coating layer, the first coating layer includes pyrophosphate Li_{f}QP₂O₇ and/or Q_{g}(P₂O₇)ₕ, the second coating layer includes phosphate XPO₄, and the third coating layer includes carbon, wherein the A, B, C, D, a, x, y, z and n are defined as in the first aspect of the present application, and the Q, X, f, g and h are defined as in the first aspect of the present application.

In any embodiment, the method includes the steps of:
first coating step: dissolving an element Q source, a phosphorus source and an acid, and optionally a lithium source in a solvent to obtain a first coating layer suspension comprising Li_{f}QP₂O₇ and/or Q_{g}(P₂O₇)ₕ; fully mixing the inner core with the first coating layer suspension, drying, and sintering same to obtain a first coating layer-coated material;
second coating step: dissolving an element X source, a phosphorus source and an acid in a solvent to obtain a second coating layer suspension comprising XPO₄; fully mixing the first coating layer-coated material obtained in the first coating step with the second coating layer suspension, drying, and sintering same to obtain a two-layer coating layer-coated material;
third coating step: dissolving the carbon source in a solvent, fully dissolving same to obtain a third coating layer solution; then adding the two-layer coating layer-coated material obtained in the second coating step into the third coating layer solution, mix uniformly, drying, and then sintering same to obtain a three-layer coating layer-coated material, that is, the positive electrode active material.

In any embodiment, the method includes the steps of:
providing a pyrophosphate M_{b}(P₂O₇)_{c} powder, a powder selected from one or more of phosphate Xₘ(PO₄)_{q}, oxide M'_{d}Oₑ and a boride, and a carbon source powder and/or a doped carbon source powder;
mixing the inner core with all the above powders and grinding, and drying same to obtain a positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n and the M, X, M', b, c, d, e, m and q are defined as in the first aspect of the present application;
optionally, the drying is carried out by a spray granulation dryer.

In any embodiment, the method includes the steps of:
providing a polymer, wherein the polymer includes one or more selected from polysiloxanes, polysaccharides and polysaccharide derivatives;

The positive electrode active material and the polymer are coated by dry-coating or wet-coating, and the obtained material includes an inner core and a shell coating the inner core;
the one or more coating layers in the shell which are farthest from the inner core each independently comprise one or more of polysiloxanes, polysaccharides and polysaccharide derivatives.

In any embodiment, the element A source is selected from at least one of the elementary substances, oxides, phosphates, oxalates, carbonates, and sulfates of element A; and/or
the element B source is selected from at least one of the elementary substances, oxides, phosphates, oxalates, carbonates, halides, nitrates, organic acid salts, hydroxides and sulfates of the element B, optionally at least one of the elementary substances, oxides, phosphates, oxalates, carbonates, and sulfates of the element B, optionally at least one of the elementary substances, sulfates, halides, nitrates, organic acid salts, oxides and hydroxides of the element B, optionally at least one of the elementary substances, carbonates, sulfates, chlorides, nitrates, organic acid salts, oxides and hydroxides of the element B; and/or
the element C source is selected from at least one of the elementary substances, halides, organic acid salts, oxides, hydroxides, inorganic acids, organic acids, sulfates, borates, nitrates and silicates of the element C, optionally at least one of the sulfate, borate, nitrate and silicate of the element C, optionally at least one of the elementary substances, sulfates, halides, nitrates, organic acid salts, oxides, hydroxides and inorganic acids of the element C, optionally at least one of the inorganic acids, organic acids, sulfates, chlorides, nitrates, organic acid salts, oxides, and hydroxides of the element C; and/or
the element D source is selected from at least one of the elementary substances and ammonium salts of the element D.

In any embodiment, in the step of preparing the manganese salt doped with element B,
the stirring is carried out at a temperature in a range of 20-120°C, optionally in a range of 25-80°C or 40-120°C, further optionally in a range of 60-120°C, and /or,
at a stirring rate of 200-800 rpm, optionally at 400-700 rpm for 1-9 hours, more optionally at 500-700 rpm for 60-420 minutes, further optionally for 3-7 hours or 120-360 minutes.

In any embodiment, in the step of preparing the slurry, grinding and mixing are carried out for 1-15 hours, optionally 8-15 hours; optionally, the mixing is carried out at a temperature of 20-120°C, more optionally 40-120°C, for 1-10 h.

In any embodiment, in the step of preparing the inner core, the sintering is carried out at a temperature in a range of 600-900°C for 6-14 hours.

In any embodiment, the step of preparing the slurry also includes: a carbon source is added into the reaction container for grinding and mixing.

In any embodiment, the MP₂O₇ powder is prepared by the following procedure:
adding the element M source and the phosphorus source into the solvent to obtain a mixture, adjusting the pH of the mixture to 4-6, stirring and fully reacting same, and then drying and sintering same to obtain the powder, wherein M is selected from one or more of Li, Fe, Ni, Mg, Co, Cu, Zn, Ti, Ag, Zr, Nb and Al.

In any embodiment, in the method for preparing an MP₂O₇ powder,

The drying step involves drying at 100-300°C, optionally 150-200°C, for 4-8 hours.

In any embodiment, in the method for preparing an MP₂O₇ powder,
the sintering step involves sintering at 500-800°C, optionally 650-800°C, in an inert gas atmosphere for 4-10 hours.

In any embodiment, the sintering temperature in the coating step is 500-800°C, and the sintering time is 4-10 hours.

In any embodiment, in the first coating step,
the pH of the solution dissolved with an element Q source, a phosphorus source and an acid, and optionally a lithium source is controlled to be 3.5-6.5, followed by stirring and reacting for 1-5 h, and then the temperature of the solution is increased to 50-120°C and maintained for 2-10 h, and/or,
the sintering is carried out at 650-800°C for 2-6 hours.

In any embodiment, in the second coating step,
after dissolving the element X source, phosphorus source and acid in the solvent, the mixture is stirred and reacted for 1-10 h, then the solution is brought to an increased temperature of 60-150°C and maintained at this temperature for 2-10 h, and/or,
the sintering is carried out at 500-700°C for 6-10 hours.

In any embodiment, the sintering in the third coating step is carried out at 700-800°C for 6-10 hours.

A third aspect of the present application provides a positive electrode plate, including a positive electrode current collector and a positive electrode film layer provided on at least one surface of the positive electrode current collector, wherein the positive electrode film layer includes a first positive electrode active material, and the first positive electrode active material is a positive electrode active material of the first aspect of the present application, or a positive electrode active material prepared by the method of the second aspect of the present application; optionally, the content of the positive electrode active material in the positive electrode film layer is 90-99.5 wt%, more optionally 95-99.5 wt%, based on the total weight of the positive electrode film layer.

In any embodiment, the positive electrode plate further includes a second positive electrode active material, and the second positive electrode active material is different from the first positive electrode active material.

In any embodiment, the second positive electrode active material includes one or more of LiEₜCoₛF₍₁₋ₜ₋ₛ₎O₂, spinel-type lithium manganate and spinel-type of lithium titanate, wherein E includes one or more elements selected from group VIII, F includes one or more elements selected from IIIA and VIIB, t is selected from a range of 0 to 0.9 , the sum of t and s is selected from a range of 0.3 to 1.

In any embodiment, E includes one or more elements selected from Ni, Fe, Ru, and Rh, and F includes one or more elements selected from Mn, Al, Ga, and In.

In any embodiment, the second positive electrode active material is selected from one or more of LiNiₜCoₛMn₍₁₋ₜ₋ₛ₎O₂, LiNiₜCoₛAl₍₁₋ₜ₋ₛ₎O₂, LiCoO₂, spinel-type lithium manganate and spinel-type lithium titanate; wherein t is independently selected from 0.3-0.9, optionally 0.33-0.8, and the sum of t and s is independently selected from 0.3-0.9, optionally 0.66-0.9.

In any embodiment, the mass ratio of the first active material to the second active material is 1 : 7-7 : 1, optionally 1 : 4-4 : 1.

In any embodiment, in the second positive electrode active material,
the ratio of t, (1-t-s) to s in the LiNiₜCoₛMn₍₁₋ₜ₋ₛ₎O₂ is 5 : 2 : 3 or 3 : 1 : 1 or 8 : 1 : 1; and/or
the ratio of t, s to (1-t-s) in the LiNiₜCoₛAl₍₁₋ₜ₋ₛ₎O₂ is 5 : 2 : 3 or 3 : 1 : 1 or 8 : 1 : 1.

In any embodiment, the sum of the mass of the first positive electrode active material and the second positive electrode active material accounts for 88%-98.7% of the mass of the positive electrode plate.

A fourth aspect of the present application provides a secondary battery, including the positive electrode material of the first aspect of the present application or the positive electrode active material prepared by the method of the second aspect of the present application or the positive electrode plate of the third aspect of the present application.

A fifth aspect of the present application provides a battery module comprising the secondary battery of the fourth aspect of the present application.

A sixth aspect of the present application provides a battery pack comprising the battery module of the fifth aspect of the present application.

A seventh aspect of the present application provides a power consuming device, including at least one selected from a secondary battery of the fourth aspect of the present application, a battery module of the fifth aspect of the present application and a battery pack of the sixth aspect of the present application.
1. A positive electrode active material having a chemical formula of LiₐAₓMn_{1-y}B_{y}P_{1-z}C_{z}O₄₋ₙDₙ
   wherein the A includes one or more elements selected from Zn, Al, Na, K, Mg, Nb, Mo and W,
   the B includes one or more elements selected from Ti, V, Zr, Fe, Ni, Mg, Co, Ga, Sn, Sb, Nb and Ge;
   the C includes one or more elements selected from B (boron), S, Si and N;
   the D includes one or more elements selected from S, F, Cl and Br;
   the a is selected from a range of 0.9 to 1.1, the x is selected from a range of 0.001 to 0.1, the y is selected from a range of 0.001 to 0.5, the z is selected from a range of 0.001 to 0.1, the n is selected from a range of 0.001 to 0.1, and the positive electrode active material is electrically neutral.
2. The positive electrode active material of item 1, wherein the A, C and D are each independently any element in the respective ranges, and the B is at least two elements in the range thereof;
   and optionally,
   the A is any element selected from Mg and Nb, and/or,
   the B is at least two elements selected from Fe, Ti, V, Co and Mg, and optionally Fe and one or more elements selected from Ti, V, Co and Mg, and/or
   the C is S, and/or,
   the D is F.
3. The positive electrode active material according to 1 or 2, wherein the x is selected from a range of 0.001 to 0.005; and/or, the y is selected from a range of 0.01 to 0.5, and optionally in a range of 0.25 to 0.5; and/or, the z is selected from a range of 0.001 to 0.005; and/or, the n is selected from a range of 0.001 to 0.005.
4. The positive electrode active material of any one of items 1 to 3, wherein (1-y):y is in a range of 1 to 4, and optionally in a range of 1.5 to 3, and a:x is in a range of 9 to 1100, and optionally in a range of 190 to 998.
5. The positive electrode active material of any one of items 1 to 4, wherein it has a lattice change rate of 8% or less, and optionally 4% or less.
6. The positive electrode active material of any one of items 1 to 5, wherein it has an Li/Mn antisite defect concentration of 2% or less, and optionally 0.5% or less.
7. The positive electrode active material of any one of items 1 to 6, wherein it has a surface oxygen valence state of no more than -1.82, and optionally -1.89 to -1.98.
8. The positive electrode active material of any one of items 1 to 7, wherein it has a compacted density under 3T of 2.0 g/cm³ or more, and optionally 2.2 g/cm³ or more.
9. The positive electrode active material of any one of items 1 to 8, wherein it has a surface coated with carbon.
10. A method for preparing a positive electrode active material, comprising the steps of:
   (1) a manganese source, a source of an element B and an acid are dissolved and stirred in a solvent to generate a suspension of an element B-doped manganese salt, the suspension is filtered, and the resultant filter cake is dried, to obtain the element B-doped manganese salt;
   (2) a lithium source, a phosphorus source, a source of an element A, a source of an element C and a source of an element D, a solvent and the element B-doped manganese salt obtained instep (1) are added into a reaction container, and ground and mixed to obtain a slurry;
   (3) the slurry obtained instep (2) is transferred into a spray drying apparatus for spray-drying granulation, to obtain particles; and
   (4) the particles obtained instep (3) are sintered, to obtain a positive electrode active material.
11. The method of item 10, wherein the element A source is selected from at least one of the elementary substance, oxide, phosphate, oxalate, carbonate and sulfate of the element A, the element B source is selected from at least one of the elementary substance, oxide, phosphate, oxalate, carbonate and sulfate of the element B, the element C source is selected from at least one of the sulfate, borate, nitrate and silicate of the element C, and the element D source is selected from at least one of the elementary substance and ammonium salt of the element D.
12. The method of item 10 or 11, wherein the stirring of step (1) is carried out at a temperature in a range of 60°C to 120°C, and/or
   the stirring of step (1) is carried out at a stirring speed of 200 to 800 rpm.
13. The method of any one of items 10 to 12, wherein the grinding and mixing of step (2) are carried out for 8 to 15 h.
14. The method of any one of items 10 to 13, wherein the sintering in step (4) is carried out at a temperature in a range of 600-900°C. for 6-14 hours.
15. The method of any one of items 10 to 14, wherein step (2) also includes: a carbon source is added into the reaction container for grinding and mixing.
16. A positive electrode plate, including a positive electrode current collector and a positive electrode film layer provided on at least one surface of the positive electrode current collector, the positive electrode film layer including a positive electrode active material of any one of items 1 to 9 or a positive electrode active material prepared by the method of any one of items 10 to 15, and the content of the positive electrode active material in the positive electrode film layer being 10 wt% or more, and optionally 95 to 99.5 wt%, based on the total weight of the positive electrode film layer.
17. A secondary battery, including a positive electrode active material of any one of items 1 to 8 or a positive electrode active material prepared by the method of any one of items 10 to 15 or a positive electrode plate of item 16.
18. A battery module, wherein it includes a secondary battery of item 17.
19. A battery pack, wherein it includes a battery module of item 18.
20. A power consuming device, including at least one selected from a secondary battery of item 17, a battery module of item 18, and a battery pack of item 19.
   1) a positive electrode active material with a core-shell structure, which includes an inner core and a shell coating the inner core,
      the inner core includes Li₁₊ₓMn_{1-y}A_{y}P_{1-z}R_{z}O₄, where x = -0.100 to 0.100, y = 0.001 to 0.500, z = 0.001 to 0.100; the A includes one or more elements selected from Zn, Al, Na, K, Mg, Mo, W, Ti, V, Zr, Fe, Ni, Co, Ga, Sn, Sb, Nb and Ge; optionally one or more of Fe, Ti, V, Ni, Co and Mg; the R is one or more selected from B, Si, N and S;
      the shell includes a first coating layer coating the inner core and a second coating layer coating the first coating layer,
      wherein the first coating layer includes pyrophosphate of MP₂O₇ and phosphate of XPO₄, wherein the M and X are each independently selected from one or more of Li, Fe, Ni, Mg, Co, Cu, Zn, Ti, Ag, Zr, Nb or Al; and
      the second coating layer includes carbon.
   2) The positive electrode active material of item 1), wherein
      the first coating layer has an interplanar spacing of the phosphate of 0.345-0.358 nm, and an angle of the crystal direction (111) of 24.25°-26.45°; the first coating layer has an interplanar spacing of the pyrophosphate of 0.293-0.326 nm, and an angle of the crystal direction (111) of 26.41°-32.57°.
   3) The positive electrode active material of item 1) or 2), wherein
      in the inner core, the ratio of y to 1-y is 1 : 10 to 10 : 1, optionally 1 : 4 to 1 : 1.
   4) The positive electrode active material of items 1)-3), wherein
      in the inner core, the ratio of z to 1-z is 1 : 9 to 1 : 999, optionally 1 : 499 to 1 : 249.
   5) The positive electrode active material of items 1)-4), wherein
      the coating amount of the first coating layer is greater than 0 wt% and less than or equal to 7 wt%, optionally 4-5.6 wt%, based on the weight of the inner core.
   6) The positive electrode active material of items 1)-5), wherein
      the weight ratio of the pyrophosphate to phosphate in the first coating layer is 1 : 3 to 3 : 1, optionally 1 : 3 to 1 : 1.
   7) The positive electrode active material of items 1)-6), wherein
      the pyrophosphate and the phosphate each independently has a crystallinity of 10% to 100%, more optionally 50% to 100%.
   8) The positive electrode active material of items 1)-7), wherein
      The coating amount of the second coating layer is greater than 0 wt% and less than or equal to 6 wt%, optionally 3-5 wt%, based on the weight of the inner core.
   9) The positive electrode active material of items 1)-8), wherein
      the A is selected from at least two of Fe, Ti, V, Ni, Co and Mg.
   10) The positive electrode active material of items 1)-9), wherein
      the Li/Mn antisite defect concentration of the positive electrode active material is 4% or less, and optionally 2% or less.
   11) The positive electrode active material of items 1)-10), wherein
      the lattice change rate of the positive electrode active material is 6% or less, and optionally 4% or less.
   12) The positive electrode active material of items 1)-11), wherein
      the surface oxygen valence state of the positive electrode active material is no more than -1.88, and optionally -1.98 to -1.88.
   13) The positive electrode active material of items 1)-12), wherein
      the compacted density of the positive electrode active material under 3T is 2.0 g/cm³ or more, and optionally 2.2 g/cm³ or more.
   14) A method for preparing a positive electrode active material, including the following steps:
      step to provide inner core material: the inner core includes Li₁₊ₓMn_{1-y}A_{y}P_{1-z}R_{z}O₄, where x = -0.100 to 0.100, y = 0.001 to -0.500, z = 0.001 to 0.100; the A includes one or more elements selected from Zn, Al, Na, K, Mg, Mo, W, Ti, V, Zr, Fe, Ni, Co, Ga, Sn, Sb, Nb and Ge; optionally one or more of Fe, Ti, V, Ni, Co and Mg; the R is one or more selected from B, Si, N and S;
      coating steps: provide an MP₂O₇ powder and an XPO₄ suspension containing a carbon source, adding the core material and the MP₂O₇ powder to the XPO₄ suspension containing a carbon source, mixing and sintering same to obtain a positive electrode active material, wherein the M and X are each independently selected from one or more of Li, Fe, Ni, Mg, Co, Cu, Zn, Ti, Ag, Zr, Nb or Al;
      wherein, the positive electrode active material has a core-shell structure, which includes an inner core and a shell coating the inner core; the shell includes a first coating layer coating the inner core and a second coating layer coating the first coating layer; the first coating layer includes pyrophosphate MP₂O₇ and phosphate XPO₄, and the second coating includes carbon.
   15) The preparation method for the positive electrode active material of item 14), wherein the step to provide the inner core material includes the steps of:
      Step (1): mixing and stirring a manganese source, an element A source, and an acid in a container to obtain manganese salt particles doped with element A;
      Step (2): mixing the manganese salt particles doped with element A with the lithium source, the phosphorus source and an element R source in a solvent to obtain a slurry, and sintering same under the protection of an inert gas atmosphere to obtain a lithium manganese phosphate doped with element A and element R, wherein the lithium manganese phosphate doped with element A and element R is Li₁₊ₓMn_{1-y}A_{y}P_{1-z}R_{z}O₄, where x = -0.100 to 0.100, y = 0.001 to -0.500, z = 0.001 to 0.100; A is selected from Zn, Al, Na, K, Mg, Mo, W, Ti, V, Zr, Fe, Ni, Co, Ga, Sn, Sb, Nb and Ge; optionally one or more of Fe, Ti, V, Ni, Co and Mg; the R is one or more selected from B, Si, N and S.
   16) The method of item 15), wherein
      Step (1) is carried out at a temperature of 20-120°C, optionally 25-80°C; and/or
      the stirring in step (1) is carried out at 500-700 rpm for 60-420 minutes, optionally for 120-360 minutes.
   17) The method of any one of items 15) to 16), wherein
      the element A source is selected from one or more of the elementary substance, sulfate, halide, nitrate, organic acid salt, oxide or hydroxide of the element A; and/or, the element R source is selected from one or more of the elementary substance, sulfate, halide, nitrate, organic acid salt, oxide or hydroxide of the element R and the inorganic acid of the element R.
   18) The method of any one of items 14) to 17), wherein
      the MP₂O₇ powder is prepared by the following procedure:
      adding the element M source and the phosphorus source into the solvent to obtain a mixture, adjusting the pH of the mixture to 4-6, stirring and fully reacting same, and then drying and sintering same to obtain the powder, wherein M is selected from one or more of Li, Fe, Ni, Mg, Co, Cu, Zn, Ti, Ag, Zr, Nb or Al.
   19) The method of item 18), wherein
      The drying step involves drying at 100-300°C, optionally 150-200°C, for 4-8 hours.
   20) The method of any one of items 18) to 19), wherein
      the sintering step involves sintering at 500-800°C, optionally 650-800°C, in an inert gas atmosphere for 4-10 hours.
   21) The method of any one of items 14) to 20), wherein
      the sintering temperature in the coating step is 500-800°C, and the sintering time is 4-10 hours.
   22) A positive electrode plate, including a positive electrode current collector and a positive electrode film layer provided on at least one surface of the positive electrode current collector, the positive electrode film layer including a positive electrode active material of any one of items 1) to 13) or a positive electrode active material prepared by the method of any one of items 14) to 21), and the content of the positive electrode active material in the positive electrode film layer being 10 wt% or more, based on the total weight of the positive electrode film layer.
   23) The positive electrode plate of item 22), wherein the content of the positive electrode active material in the positive electrode film layer is 90-99.5 wt%, based on the total weight of the positive electrode film layer.
   24) A secondary battery, including a positive electrode active material of any one of items 1) to 13) or a positive electrode active material prepared by the method of any one of items 14) to 21) or a positive electrode plate of item 22) or 23).
   25) A battery module, characterized by including a secondary battery of item 24).
   26) A battery pack, characterized by including a battery module of item 25).
   27) A power consuming device, characterized by including at least one selected from a secondary battery of item 24), a battery module of item 25), and a battery pack of item 26).
      (1). A positive electrode active material with a core-shell structure, which includes an inner core and a shell coating the inner core,
         the inner core has a chemical formula of Li₁₊ₓMn_{1-y}A_{y}P_{1-z}R_{z}O₄, where x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is an element selected from B, Si, N and S;
         the values of x, y, and z satisfy the following conditions: keeping the entire inner core electrically neutral;
         the shell includes a first coating layer coating the inner core, a second coating layer coating the first coating layer, and a third coating layer coating the second coating layer, wherein
         the first coating layer includes crystalline pyrophosphate LiₐMP₂O₇ and/or M_{b}(P₂O₇)_{c}, wherein 0 ≤ a ≤ 2, 1 ≤ b ≤ 4, 1 ≤ c ≤ 6, the values of a, b, and c satisfy the following conditions: keeping the crystalline pyrophosphate LiₐMP₂O₇ and/or M_{b}(P₂O₇)_{c} electrically neutral;
         M in crystalline pyrophosphate LiₐMP₂O₇ 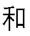 M_{b}(P₂O₇)_{c} is each independently one or more elements selected from Fe, Ni, Mg, Co, Cu, Zn, Ti, Ag, Zr, Nb or Al;
         the second coating layer includes crystalline phosphate of XPO₄, wherein X is one or more elements selected from Li, Fe, Ni, Mg, Co, Cu, Zn, Ti, Ag, Zr, Nb or Al; and
         the third coating layer is carbon.
      (2) The positive electrode active material with a core-shell structure of item (1), wherein
         the first coating layer has an interplanar spacing of the crystalline pyrophosphate of a range of 0.293-0.470 nm, and an angle of the crystal direction (111) of 18.00°-32.00°; the second coating layer has an interplanar spacing of the crystalline phosphate of a range of 0.244-0.425 nm, and an angle of the crystal direction (111) of 20.00°-37.00°.
      (3) The positive electrode active material with a core-shell structure of item (1) or (2), wherein in the inner core, the ratio of y to 1-y is 1 : 10 to 1 : 1, optionally 1 : 4 to 1 : 1.
      (4) The positive electrode active material with a core-shell structure of items (1) to (4) , wherein in the inner core, the ratio of z to 1-z is 1 : 9 to 1 : 999, optionally 1 : 499 to 1 : 249.
      (5) The positive electrode active material with a core-shell structure of (1)-(4), wherein the carbon in the third coating layer is a mixture of SP2-form carbon and SP3-form carbon, optionally, the molar ratio of the SP2-form carbon to the SP3-form carbon is any value within a range of 0.1-10, optionally any value within a range of 2.0-3.0.
      (6) The positive electrode active material with a core-shell structure of any one of items (1) to (5), wherein
         the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or
         a coating amount of the second coating layer is greater than 0 and less than or equal to 6 wt%, optionally greater than 0 and less than or equal to 5.5 wt%, more optionally 2-4 wt%, based on the weight of the inner core; and/or
         a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.
      (7) The positive electrode active material with a core-shell structure of any one of (1)-(6), wherein the first coating layer has a thickness of 1-10 nm; and/or
         the second coating layer has a thickness of 2-15 nm; and/or
         the third coating layer has a thickness of 2-25 nm.
      (8) The positive electrode active material with a core-shell structure of any one of items (1) to (7), wherein
         based on the weight of the positive electrode active material, the manganese element content is in a range of 10 wt% to 35 wt%, optionally in a range of 15 wt% to 30 wt%, more optionally in a range of 17 wt% to 20 wt%, the phosphorus element content is in a range of 12 wt %-25 wt %, optionally in a range of 15 wt %-20 wt %, and the weight ratio of the manganese element to phosphorus element is in a range of 0.90-1.25, optionally 0.95-1.20.
      (9) The positive electrode active material with a core-shell structure of any one of items (1)-(8), wherein the positive electrode active material with a core-shell structure has a lattice change rate, before and after complete intercalation-deintercalation, of lithium of 4 % or less, optionally 3.8% or less, more optionally 2.0-3.8% or less.
      (10) The positive electrode active material with a core-shell structure of any one of items (1)-(9), wherein the positive electrode active material with a core-shell structure has an Li/Mn antisite defect concentration of is 4% or less, optionally 2.2% or less, more optionally 1.5-2.2%.
      (11) The positive electrode active material with a core-shell structure of any one of items (1)-(10), wherein the positive electrode active material with a core-shell structure has a compacted density under 3T of 2.2 g/cm³ or more, optionally 2.2 g/cm³ or more and 2.8 g/cm³ or less.
      (12) The positive electrode active material with a core-shell structure of any one of items (1)-(11), wherein the positive electrode active material with a core-shell structure has a surface oxygen valence state of -1.90 or less, optionally -1.90 to -1.98.
      (13) A method for preparing a positive electrode active material, including the following steps:
         step to provide inner core material: the inner core has a chemical formula of Li₁₊ₓMn_{1-y}A_{y}P_{1-z}R_{z}O₄, where x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is an element selected from B, Si, N and S;
         coating steps: providing an LiₐMP₂O₇ and/or M_{b}(P₂O₇)_{c} and XPO₄ suspension respectively, adding the inner core material to the above suspension, mixing and sintering same to obtain the positive electrode active material, where 0 ≤ a ≤ 2, 1 ≤ b ≤ 4, 1 ≤ c ≤ 6, the values of a, b and c satisfy the following conditions: keeping the crystalline pyrophosphate LiₐMP₂O₇ and/or M_{b}(P₂O₇)_{c} electrically neutral; M is each independently one or more elements selected from Fe, Ni, Mg, Co, Cu, Zn, Ti, Ag, Zr, Nb or Al; X is one or more elements selected from Li, Fe, Ni, Mg, Co, Cu, Zn, Ti, Ag, Zr, Nb or Al; and
         wherein, the positive electrode active material has a core-shell structure, which includes an inner core and a shell coating the inner core, and the shell includes a first coating layer coating the inner core, a second coating layer coating the first coating layer, and a third coating layer coating the second coating layer, the first coating layer includes crystalline pyrophosphate LiₐMP₂O₇ and/or M_{b}(P₂O₇)_{c}, the second coating layer includes crystalline phosphoric acid salt XPO₄, and the third coating includes carbon.
      (14) The preparation method for the positive electrode active material of item (13), wherein the step to provide the inner core material includes the steps of:
         Step (1): mixing and stirring a manganese source, an element A dopant, and an acid in a container to obtain manganese salt particles doped with element A;
         Step (2): mixing the manganese salt particles doped with element A with the lithium source, the phosphorus source and the element R dopant in a solvent to obtain a slurry, and sintering same under the protection of an inert gas atmosphere to obtain an inner core doped with element A and element R wherein the inner core doped with element A and element R comprises Li₁₊ₓMn_{1-y}A_{y}P_{1-z}R_{z}O₄, wherein x is any value in a range of -0.100 to 0.100, and y is any value in a range of 0.001 to 0.500, z is any value in a range of 0.001 to 0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is an element selected from B, Si, N and S.
      (15) The preparation method for a positive electrode active material of item (14), wherein
         in Step (1), the mixing is carried out at a temperature of20-120°C, optionally 40-120°C; and/or
         the stirring in Step (1) is carried out at 400-700 rpm for 1-9 h, optionally for 3-7 h.
      (16) The preparation method for a positive electrode active material of item (14), wherein in step (2), the mixing is carried out at a temperature of 20-120°C, optionally 40-120°C, for 1-10 hours.
      (17) The preparation method for a positive electrode active material of any one of items (14)-(16), wherein
         the element A dopant is one or more of the elementary substance, carbonate, sulfate, chloride, nitrate, organic acid salt, oxide, and hydroxide of each of one or more elements selected from Zn, Al, Na, K, Mg, Mo, W, Ti, V, Zr, Fe, Ni, Co, Ga, Sn, Sb, Nb and Ge; and/or
         the element R dopant is one or more selected from the inorganic acid, organic acid, sulfate, chloride, nitrate, organic acid salt, oxide, hydroxide of each of one or more elements of B, Si, N and S.
      (18) The preparation method for a positive electrode active material of any one of items (13)-(17), wherein the coating step includes:
         first coating step: dissolving an element M source, a phosphorus source and an acid, and optionally a lithium source in a solvent to obtain a first coating layer suspension; fully mixing the inner core obtained in the inner core step with the first coating layer suspension obtained in the first coating step, drying, and then sintering same to obtain a first coating layer-coated material;
         second coating step: dissolving an element X source, a phosphorus source and an acid in a solvent to obtain a second coating layer suspension; fully mixing the first coating layer-coated material obtained in the first coating step with the second coating layer suspension obtained in the second coating step, drying, and then sintering same to obtain a two-layer coating layer-coated material;
         third coating step: dissolving the carbon source in a solvent, fully dissolving same to obtain a third coating layer solution; then adding the two-layer coating layer-coated material obtained in the second coating step into the third coating layer solution, mix uniformly, drying, and then sintering same to obtain a three-layer coating layer-coated material, that is, the positive electrode active material.
      (19) The preparation method for a positive electrode active material of item (18), wherein
         in the first coating step, the pH of the solution dissolved with an element M source, a phosphorus source and an acid, and optionally a lithium source is controlled to be 3.5-6.5, followed by stirring and reacting for 1-5 h, and then the temperature of the solution is increased to 50-120°C and maintained for 2-10 h, and/or,
         the sintering is carried out at 650-800°C for 2-6 hours.
      (20) The preparation method for a positive electrode active material of any one of items (18)-(19), wherein
         in the second coating step, after dissolving the element X source, phosphorus source and acid in the solvent, the mixture is stirred and reacted for 1-10 h, then the solution is brought to an increased temperature of 60-150°C and maintained at this temperature for 2-10 h, and/or,
         the sintering is carried out at 500-700°C for 6-10 hours.
      (21) The preparation method for a positive electrode active material of any one of items (18)-(20), wherein the sintering in the third coating step is carried out at 700-800°C for 6-10 hours.
      (22) A positive electrode plate, including a positive electrode current collector and a positive electrode film layer provided on at least one surface of the positive electrode current collector, the positive electrode film layer including a positive electrode active material with a core-shell structure of any one of items (1) to (12) or a positive electrode active material prepared by the preparation method for a positive electrode active material of any one of items (13) to (21), and the content of the positive electrode active material in the positive electrode film layer being no less than 90-99.5 wt%, optionally 95 to 99.5 wt%, based on the total weight of the positive electrode film layer.
      (23) A secondary battery, including a positive electrode active material of any one of items (1) to (12) or a positive electrode active material prepared by the preparation method for a positive electrode active material of any one of items (13) to (21) or a positive electrode plate of item (22).
      (24) A battery module, including a secondary battery of item (23).
      (25) A battery pack, including a battery module of item (24).
      (26) A power consuming device, including at least one selected from a secondary battery of item (23), a battery module of item (24), and a battery pack of item (25).

### Brief Description of the Drawings

FIG. 1 is a schematic diagram of a positive electrode active material with a core-shell structure having two coating layers in an embodiment of the present application.
Fig. 2 is an X-ray diffraction (XRD) pattern of undoped LiMnPO₄ and a positive electrode active material prepared in Example I-2.
FIG. 3 is a schematic diagram of a positive electrode active material with a core-shell structure having three coating layers in an embodiment of the present application.
Fig. 4 is a schematic diagram of a secondary battery according to an embodiment of the present application.
Fig. 5 is an exploded view of a secondary battery according to an embodiment of the present application as shown in Fig. 4.
Fig. 6 is a schematic diagram of a battery module according to an embodiment of the present application.
Fig. 7 is a schematic diagram of a battery pack according to an embodiment of the present application.
Fig. 8 is an exploded view of a battery pack according to an embodiment of the present application as shown in Fig. 7.
Fig. 9 is a schematic diagram of a power consuming device using a secondary battery according to an embodiment of the present application as a power source.
Fig. 10 is an EDS diagram of a positive electrode active material prepared in Example I-2 of the present application.

List of reference signs:
1 battery pack; 2 upper box body; 3 lower box body; 4 battery module; 5 secondary battery; 51 housing; 52 electrode assembly; 53 top cover assembly.

### Detailed Description of Embodiments

Hereinafter, embodiments of the positive electrode active material and the preparation method therefor, the negative electrode plate, the secondary battery, the battery module, the battery pack, and the power consuming device of the present application are described in detail and specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the implementations and optional implementations of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be carried out sequentially or randomly, preferably sequentially. For example, the method including steps (a) and (b) indicates that the method may include steps (a) and (b) carried out sequentially, and may also include steps (b) and (a) carried out sequentially. For example, reference to "the method may further include step (c)" indicates that step (c) may be added to the method in any order, e.g., the method may include steps (a), (b) and (c), steps (a), (c) and (b), or steps (c), (a) and (b).

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

### [Secondary battery]

A secondary battery, also known as a rechargeable battery or an accumulator, refers to a battery of which active materials can be activated by means of charging for reuse of the battery after the battery is discharged.

Generally, the secondary battery comprises a positive electrode plate, a negative electrode plate, a separator and an electrolyte. During a charge/discharge process of the battery, active ions (e.g., lithium ions) are intercalated and de-intercalated back and forth between the positive electrode plate and the negative electrode plate. The separator is provided between the positive electrode plate and the negative electrode plate, and mainly prevents positive and negative electrodes from short-circuiting and enables the active ions to pass through. The electrolyte is provided between the positive electrode plate and the negative electrode plate and mainly functions for active ion conduction.

### [Positive electrode active material]

One embodiment of the present application provides a positive electrode active material, including a compound represented by formula (I),

LiₐAₓMn_{1-y}B_{y}P_{1-z}C_{z}O₄₋ₙDₙ (I)

wherein
the A includes one or more elements selected from group IA, group IIA, group IIIA, group IIB, group VB and group VIB;
the B includes one or more elements selected from group IA, group IIA, group IIIA, group IVA, group VA, group IIB, group IVB, group VB, group VIB and group VIII;
the C includes one or more elements selected from group IIIA, group IVA, group VA and group VIA;
the D includes one or more elements selected from group VIA and group VIIA;
the a is selected from a range of 0.85 to 1.15;
the x is selected from a range of 0 to 0.1;
the y is selected from a range of 0.001 to 0.999;
the z is selected from a range of 0 to 0.5; and
the n is selected from a range of 0 to 0.5.

Unless otherwise stated, in the above chemical formula, when the A is a combination of at least two elements, the above definition of the numerical range of x not only represents a definition of the stoichiometric number of each element as A, but also represents a definition of the sum of the stoichiometric numbers of the elements as A. For example, when the A is a combination of at least two elements A1, A2...An, the stoichiometric numbers x1, x2...xn of A1, A2...An each fall within the numerical range of x defined in the present application, and the sum of x1, x2...xn also falls within this numerical range. Similarly, when B, C and D are each a combination of at least two elements, the definitions of the numerical ranges of the stoichiometric numbers of B, C and D in the present application also have the above meanings.

The positive electrode active material of the present application is obtained by doping a compound LiMnPO₄ with elements, wherein A, B, C and D are respectively the elements for doping at Li, Mn, P and O sites of the compound LiMnPO₄. Without wishing to be bound by theory, it is now believed that a performance improvement of lithium manganese phosphate is associated with a reduction in the lattice change rate of lithium manganese phosphate in a lithium intercalation/de-intercalation process and a decrease in surface activity. A reduction in the lattice change rate can reduce the difference of lattice constants between two phases at a grain boundary, lower the interface stress and enhance the Li⁺ transport ability at an interface, thereby improving the rate performance of the positive electrode active material. A high surface activity can easily lead to severe interfacial side reactions, and exacerbates gas production, electrolyte solution consumption and interface damage, thereby affecting the cycling performance and the like of the battery. In the present application, the lattice change rate can be reduced by doping at the Li and/or Mn sites. The Mn-site doping also effectively decreases the surface activity, thereby inhibiting the Mn dissolution and the interfacial side reactions between the positive electrode active material and the electrolyte solution. The P-site doping increases the change rate of the Mn-O bond length and reduces the small-polaron migration barrier of the material, which is beneficial for electronic conductivity. The O-site doping plays a good role in reducing the interfacial side reactions. The P-site and O-site doping also has an effect on the dissolution of Mn of antisite defects and the dynamic performance. Therefore, the doping reduces the antisite effect concentration in the material, improves the dynamic performance and gram capacity of the material, and can also change the particle morphology, thereby increasing the compacted density. The applicant has unexpectedly found that: By doping a compound LiMnPO₄ at Mn site and optionally Li, P and/or O sites with specific amounts of specific elements, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In some embodiments, the A includes one or more elements selected from Rb, Cs, Be, Ca, Sr, Ba, Ga, In, Cd, V, Ta, Cr, Zn, Al, Na, K, Mg, Nb, Mo and W, optionally one or more elements selected from Zn, Al, Na, K, Mg, Nb, Mo and W; and/or
the B includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb and Ge, optionally one or more elements selected from Zn, Al, Na, K, Mg, Mo, W, Ti, V, Zr, Fe, Ni, Co, Ga, Sn, Sb, Nb and Ge; and/or
the C includes one or more elements selected from B (boron), S, Si and N; and/or
the D includes one or more elements selected from S, F, Cl and Br.

In some embodiments, the A includes any element selected from Zn, Al, Na, K, Mg, Nb, Mo and W, and optionally any element selected from Mg and Nb; and/or
the B includes one or more elements selected from Ti, V, Zr, Fe, Ni, Mg, Co, Ga, Sn, Sb, Nb and Ge, optionally at least two elements selected from Ti, V, Zr, Fe , Ni, Mg, Co, Ga, Sn, Sb, Nb and Ge, more optionally at least two elements selected from Fe, Ti, V, Ni, Co and Mg, further optionally at least two elements selected from Fe, Ti, V, Co and Mg, and more further optionally Fe and one or more elements selected from Ti, V, Co and Mg; and/or
the C includes any element selected from B (boron), S, Si and N, optionally S; and/or
the D includes any element selected from S, F, Cl and Br, optionally F.

By selecting the Li-site doping element in the above ranges, the lattice change rate in a lithium de-intercalation process can be further reduced, thereby further improving the rate performance of the battery. By selecting the Mn-site doping element in the above ranges, the electronic conductivity can be further increased while the lattice change rate is further reduced, thereby improving the rate performance and gram capacity of the battery. By selecting the P-site doping element in the above ranges, the rate performance of the battery can be further improved. By selecting the O-site doping element in the above ranges, interfacial side reactions can be further alleviated, thereby improving the high-temperature performance of the battery.

In some embodiments, the a is selected from a range of 0.9 to 1.1, optionally in a range of 0.97 to 1.01; and/or
the x is selected from a range of 0.001 to 0.005; and/or
the y is selected from a range of 0.001 to 0.5, optionally in a range of 0.01 to 0.5, optionally in a range of 0.25 to 0.5; and/or
the z is selected from a range of 0.001 to 0.5, optionally in a range of 0.001 to 0.1, more optionally in a range of 0.001 to 0.005; and/or
the n is selected from a range of 0 to 0.1, optionally in a range of 0.001 to 0.005.

By selecting the y value in the above ranges, the gram capacity and rate performance of the material can be further improved. By selecting the x value in the above ranges, the dynamic performance of the material can be further improved. By selecting the z value in the above ranges, the rate performance of the secondary battery can be further improved. By selecting the n value in the above ranges, the high-temperature performance of the secondary battery can be further improved.

In some embodiments, the x is 0, z is selected from a range of 0.001 to 0.5, and n is selected from a range of 0.001 to 0.1; or,
the x is selected from a range of 0.001 to 0.1, the z is 0, and the n is selected from a range of 0.001 to 0.1; or,
the x is selected from a range of 0.001 to 0.1, the z is selected from a range of 0.001 to 0.5, and the n is 0; or,
the x is 0, the z is 0, and the n is selected from a range of 0.001 to 0.1; or,
the x is 0, the z is selected from a range of 0.001 to 0.5, and the n is 0; or,
the x is selected from a range of 0.001 to 0.1, the z is selected from a range of 0.001 to 0.5, and the n is selected from a range of 0.001 to 0.1.

Therefore, the present application, by doping the compound LiMnPO₄ with specific elements in specific amounts at the Mn-site and optionally at the Li-site, P-site and/or O-site, especially at the Mn-site and the P-site of LiMnPO₄ or doping LiMnPO₄ with specific elements in specific amounts at the Li-site, Mn-site, P-site, and O-site, can significantly improve the rate performance, significantly reduce the dissolution of Mn and Mn-site doping elements, and significantly improve the cycling performance and/or high temperature stability and remarkably improve the gram capacity and the compaction density of the material.

In some embodiments, y:z is selected from a range of 0.002 to 999, optionally in a range of 0.025 to 999 or 0.002 to 500, more optionally in a range of 0.2 to 600, such as 0.2, 0.25 , 1, 2, 3, 4, 5, 6, 8, 10, 12, 13, 15, 17, 20, 70, 80, 84, 67, 91, 100, 134, 150, 182, 200, 250, 300, 320, 350, 400, 420, 450, 500, 600, 999 or a range composed of any two of the above values. Therefore, the defects of the material can be reduced, and the integrity of the frame structure of the material can be improved, thereby effectively improving the structural stability of the material, and further improving the cycling stability of the secondary battery.

In some embodiments, z:n is selected from a range of 0.002 to 500, optionally in a range of 0.2 to 100, more optionally in a range of 0.2 to 50, such as 0.2, 0.8, 1, 1.25, 4 , 5, 50 or a range composed of any two of the above values. Therefore, the defects of the material can be further reduced, and the integrity of the frame structure of the material can be further improved, thereby effectively improving the structural stability of the material, and further improving the cycling stability of the secondary battery.

In some embodiments,
the A includes one or more elements selected from Zn, Al, Na, K, Mg, Nb, Mo and W;
the B includes one or more elements selected from Ti, V, Zr, Fe, Ni, Mg, Co, Ga, Sn, Sb, Nb and Ge;
the C includes one or more elements selected from B (boron), S, Si and N;
the D includes one or more elements selected from S, F, Cl and Br;
the a is selected from a range of 0.9 to 1.1, the x is selected from a range of 0.001 to 0.1, the y is selected from a range of 0.001 to 0.5, the z is selected from a range of 0.001 to 0.1, and the n is selected from a range of 0.001 to 0.1.

Therefore, in the present application, by doping a compound LiMnPO₄ at Li, Mn, P and O sites with specific amounts of specific elements, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In some embodiments,
the B includes one or more elements selected from Zn, Al, Na, K, Mg, Mo, W, Ti, V, Zr, Fe, Ni, Co, Ga, Sn, Sb, Nb and Ge, optionally one or more elements selected from Zn, Fe, Ti, V, Ni, Co and Mg;
the C is one or more elements selected from B, Si, N and S;
the a is selected from a range of 0.9 to 1.1, the x is 0, the y is selected from a range of 0.001 to 0.5, the z is selected from a range of 0.001 to 0.1, and the n is 0.

Thus, the present application, by doping the compound LiMnPO₄ with specific elements in specific amounts at the Mn-site and P-site, can improve the rate performance, reduce the dissolution of Mn and Mn-site doping elements, improve the cycling performance and/or high temperature stability, increase the gram capacity and compaction density of the material.

The average particle size range of the inner core prepared in the present application is 50-500 nm, and the Dᵥ50 is 200-300 nm. The primary particle size of the inner core is in a range of 50-500 nm, and the Dᵥ50 is 200-300 nm. Thus, the gram capacity of the secondary battery is increased, and the uniformity of the coating layer coating the inner core is improved.

n this application, the median particle size D_{V}50 represents a particle size corresponding to a cumulative volume distribution percentage of the material reaching 50%. In the present application, the median particle size Dᵥ50 of the material may be determined using a laser diffraction particle size analysis method. For example, the determination may be carried out with reference to the standard GB/T 19077-2016 using a laser particle size analyzer (e.g., Malvern Master Size 3000).

It is possible to ensure that each element is uniformly distributed in the crystal lattice without aggregation by means of process control (for example, sufficient mixing and grinding of various source materials). The positions of the main characteristic peaks in the XRD pattern of the lithium manganese phosphate doped with B and C elements are consistent with those of the undoped LiMnPO₄, indicating that no impurity phase is introduced in the doping process, and an improvement in performance of the inner core is mainly attributed to the doping with elements, rather than an impurity phase. After preparing the positive electrode active material of the present application, the inventors of the present application cut out an middle area of the prepared positive electrode active material particles by a focusing ion beam (abbreviated as FIB), and tested through transmission electron microscope (abbreviated as TEM) and X-ray energy dispersive spectrum (abbreviated as EDS) analysis and found that the elements are uniformly distributed with no aggregation.

In some embodiments, the positive electrode active material includes an inner core and a shell coating the inner core, and the inner core includes a compound as shown in the above formula (I);
the shell includes one or more coating layers; the coating layer has ion conductivity or electron conductivity.

The present application, by doping the compound LiMnPO₄ with specific elements in specific amounts at the Mn site and doping elements at Li-site, P-site and/or O-site to obtain a doped lithium manganese phosphate inner core and providing a coating on the surface of the core having ion conductivity and electron conductivity, provides a new positive electrode active material with a core-shell structure, and the use of the positive electrode active material in a secondary battery can significantly improve the high temperature cycling performance, cycling stability and high temperature storage performance of the secondary battery.

In some embodiments, the shell includes a coating layer;
optionally, the coating layer includes one or more selected from pyrophosphate, phosphate, carbon, doped carbon, an oxide, a boride and a polymer.

Therefore, the present application can obtain a coating layer with ion conductivity or electron conductivity by using the above materials, thereby improving the high-temperature cycling performance, cycling stability and high-temperature storage performance of the secondary battery.

In some embodiments, he shell includes a first coating layer coating the inner core and a second coating layer coating the first coating layer;
optionally, the first coating layer and the second coating layer each independently include one or more selected from pyrophosphate, phosphate, carbon, doped carbon, an oxide, a boride, and a polymer.

Therefore, the present application using the above materials as the materials of the coating layers, and providing two layers of coating layers can further improve the high-temperature cycling performance, cycling stability and high-temperature storage performance of the secondary battery.

In some embodiments, the first coating layer includes one or more selected from pyrophosphate, phosphate, an oxide and a boride, and the second coating layer includes one or more selected from carbon and doped carbon.

Therefore, in the present application, the use of a first coating layer of a specific material and a second coating layer of a specific material can further improve the rate performance, further reduce the dissolution of Mn and Mn-site doping elements, thereby improving the cycling performance of the secondary battery and/or high temperature stability.

In some embodiments, the shell includes a first coating layer coating the inner core, a second coating layer coating the first coating layer, and a third coating layer coating the second coating layer;
optionally, each of the first coating layer, the second coating layer and the third coating layer independently includes one or more selected from pyrophosphate, phosphate, carbon, doped carbon, an oxide, a boride and a polymer.

Therefore, the present application, by using the above materials as the materials of the coating layers, and providing three coating layers, can further reduce the dissolution of Mn and Mn-site doping elements, and further improve the high-temperature cycling performance, cycling stability and high-temperature storage performance stability of the secondary battery.

In some embodiments, the first coating layer includes pyrophosphate, the second coating layer includes one or more selected from phosphate, an oxide and a boride, and the third coating layer includes one or more of carbon and doped carbon.

Therefore, in the present application, the use of the first coating layer of a specific material, the second coating layer of a specific material, and the third coating layer of a specific material further improves the rate performance and further reduces the dissolution of Mn and Mn-site doping elements, thereby improving the cycling performance and/or high-temperature stability of the secondary battery, and further increasing the gram capacity and compacted density of the material.

In some embodiments, each of the one or more coating layers independently includes one or more selected from pyrophosphate, phosphate, carbon, doped carbon, an oxide, a boride and a polymer.

In some embodiments, the pyrophosphate is M_{b}(P₂O₇)_{c}; and/or
the phosphate is Xₘ(PO₄)_{q}; and/or
the doping elements in the doped carbon include one or more selected from group IIIA, group VA, group VIA and group VIIA; and/or
the oxide is M'_{d}Oₑ; and/or
the boride is ZᵥB_{w}; and/or
the polymer includes one or more selected from polysaccharides and their derivatives, and polysiloxanes;
wherein
the M, X and Z each independently include one or more elements selected from group IA, group IIA, group IIIA, group IB, group IIB, group IVB, group VB, group VIIB and group VIII; the b is selected from a range of 1 to 4, and the c is selected from a range of 1 to 6; the m is selected from a range of 1 to 2, and the q is selected from a range of 1 to 4; the M' includes one or more elements selected from alkali metals, alkaline earth metals, transition metals, group IIIA elements, group IVA elements, lanthanides and Sb, the d is greater than 0 and less than or equal to 2, and the e is greater than 0 and less than or equal to 5; the v is selected from a range of 1 to 7, and the w is selected from a range of 1 to 2.

Therefore, the present application, by using the above materials as the coating layers, can further reduce the dissolution of Mn and Mn-site doping elements further increase the gram capacity and compaction density of the material, and further improve the rate performance and high-temperature cycling performance and high-temperature storage performance of the secondary battery.

In some embodiments, the M, X and Z each independently include one or more elements selected from Li, Fe, Ni, Mg, Co, Cu, Zn, Ti, Ag, Zr, Nb and Al; and/or
the doping elements in the doped carbon include one or more selected from nitrogen, phosphorus, sulfur, boron and fluorine; and/or
the M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, optionally one or more elements selected from Mg, Al, Si, Zn, Zr and Sn; and/or
the polysiloxane is selected from one or more of polysiloxanes with a linear structure and polysiloxanes with a ring structure; and/or
the polysaccharide is selected from one or more of plant polysaccharides and marine polysaccharides.

Therefore, the present application, by using the above specific materials as the coating layers, can further reduce the dissolution of Mn and Mn-site doping elements and further improve the high-temperature cycling performance and high-temperature storage performance of the secondary battery.

In some embodiments, the positive electrode active material includes an inner core and a shell coating the inner core;
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb, Zn and Ge, and the C includes one or more elements of B (boron), S, Si and N;
the shell includes a first coating layer coating the inner core and a second coating layer coating the first coating layer,
wherein, the first coating layer includes pyrophosphate of MP₂O₇ and phosphate of XPO₄, wherein the M and X are each independently selected from one or more of Li, Fe, Ni, Mg, Co, Cu, Zn, Ti, Ag, Zr, Nb and Al; and
the second coating layer includes carbon.

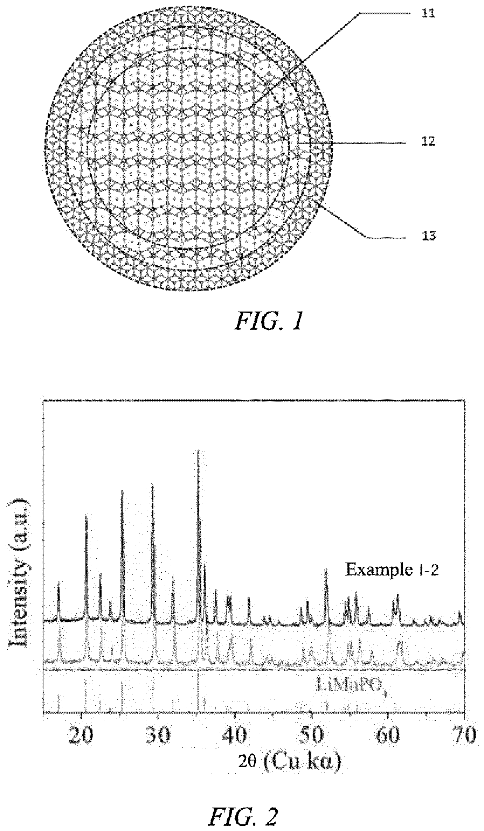

As shown in Figure 1, the lithium manganese phosphate positive electrode active material of the present application has a core-shell structure with two coating layers, and the element B doped at the manganese site of the lithium manganese phosphate in the inner core facilitates to reduce the crystal lattice change rate of the lithium manganese phosphate during the process of lithium intercalation-deintercalation, improves the structural stability of the lithium manganese phosphate positive electrode material, and greatly reduces the dissolution of manganese and reduces the oxygen activity on the particle surface. The element C doped at the phosphorus site facilitates to change the difficulty of the change of the Mn-O bond length, thereby reducing the migration barrier of lithium ions, promoting the migration of lithium ions, and improving the rate performance of the secondary battery. The first coating layer of the positive electrode active material of the present application includes pyrophosphate and phosphate. Due to the high migration barrier (> 1 eV) of transition metals in pyrophosphate, the dissolution of the transition metals can be effectively inhibited. The phosphate has an excellent lithium ion conductivity, and can reduce the content of lithium impurities on the surface. In addition, since the second coating layer is a carbon-containing layer, the electrical conductivity and desolvation ability of LiMnPO₄ can be effectively improved. In addition, the "barrier" effect of the second coating layer can further hinder the migration of manganese ions into the electrolyte and reduce the corrosion of the active material by the electrolyte. Therefore, the present application, by specific element doping and surface coating on lithium manganese phosphate, can effectively inhabit the dissolution of Mn in the process of lithium intercalation-deintercalation, and at the same time promote the migration of lithium ions, thereby improving the rate performance of the battery cell and increasing the cycling performance and high temperature performance of the secondary battery.

It should be pointed out that, as shown in Fig. 2, by comparing the XRD spectra before and after doping of LiMnPO₄ in the present application, it can be seen that the positions of the main characteristic peaks, before doping, of the positive electrode active material in the present application is basically consistent with those of LiMnPO₄, indicating that doped lithium manganese phosphate positive electrode active material has no impurity phase, and the improvement of the performance of the secondary battery mainly results from element doping, not the impurity phase.

In some embodiments, the positive electrode active material includes an inner core and a shell coating the inner core;
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb and Ge, and the C includes one or more elements of B (boron), S, Si and N;
the shell includes a first coating layer coating the inner core, a second coating layer coating the first coating layer, and a third coating layer coating the second coating layer, wherein
the first coating layer includes pyrophosphate of Li_{f}QP₂O₇ and/or Q_{g}(P₂O₇)ₕ, wherein, 0 ≤ f ≤ 2, 1 ≤ g ≤ 4, 1 ≤ h ≤ 6, the Q in the pyrophosphate of Li_{f}QP₂O₇ and/or Q_{g}(P₂O₇)ₕ are each independently one or more elements selected from Fe, Ni, Mg, Co, Cu, Zn, Ti, Ag, Zr, in Nb and Al;
the second coating layer includes crystalline phosphate of XPO₄, wherein X is one or more elements selected from Li, Fe, Ni, Mg, Co, Cu, Zn, Ti, Ag, Zr, Nb and Al; and
the third coating layer includes carbon.

The positive electrode active material of the present application can improve the gram capacity, cycling performance and safety performance of the secondary battery. Although the mechanism is not yet clear, it is speculated that the lithium manganese phosphate positive electrode active material of the present application has a core-shell structure, wherein doping the lithium manganese phosphate inner core at the manganese and phosphorus sites with element B and element C, not only can effectively reduce the dissolution of manganese, and then reduce the migration of manganese ions to the negative electrode, reduce the consumption of electrolyte due to the decomposition of the SEI film, improve the cycling performance and safety performance of the secondary battery, and also promote the adjustment of Mn-O bonds, reduce the migration barrier of lithium ions, and promote the migration of lithium ions, and improve the rate performance of the secondary battery. Coating the inner core with a first coating layer including pyrophosphate can further increase the migration resistance of manganese, and reduce the dissolution thereof, the content of lithium impurity on the surface, and the contact between the inner core and the electrolyte, thereby reducing the interface side reactions, reducing gas production, improving the high-temperature storage performance, cycling performance and safety performance of secondary batteries. Further coating with a phosphate coating layer with excellent lithium ion conductivity, the interface side reactions on the surface of the positive electrode active material can be effectively reduced, thereby improving the high-temperature cycling and storage performance of the secondary battery. Further coating with a carbon layer as the third coating layer, can further improve the safety performance and kinetic performance of the secondary battery. In addition, in the inner core, the element B doped at the manganese site of lithium manganese phosphate also facilitates to reduce the lattice change rate of the lithium manganese phosphate during the process of lithium intercalation-deintercalation, and improves the structural stability of the lithium manganese phosphate positive electrode material, greatly reducing the dissolution of manganese and reducing the oxygen activity on the particle surface. The element C doped at the phosphorus site also facilitates to change the difficulty of the change of the Mn-O bond length, thereby improving the electron conductivity and reducing the migration barrier of lithium ions, promoting the migration of lithium ions, and improving the rate performance of the secondary battery.

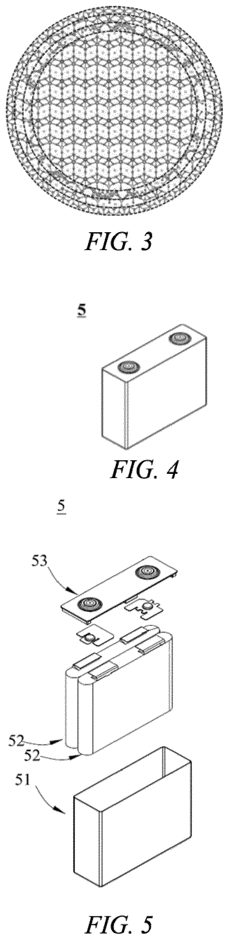

FIG. 3 is a schematic diagram of an ideal positive electrode active material with a three-layer coating structure. As shown in the figure, the innermost circle schematically represents the inner core, and the first coating layer, the second coating layer, and the third coating layer are sequentially arranged from the inside to the outside. This figure shows an ideal state where each layer involves complete coating, but in practice, each coating layer can be complete coating or partial coating.

In addition, the entire inner core system keeps electrical neutrality, which can ensure that the defects and impurity phases in the positive electrode active material are as small as possible. If there is an excess of a transition metal (such as manganese) in the positive electrode active material, since the structure of the material system itself is relatively stable, the excess transition metal is likely prone to be precipitated in the form of an elementary substance, or form impurity phases inside the lattice to keep the electrical neutrality, so that such an impurity can be as little as possible. In addition, ensuring the electrical neutrality of the system can also result in lithium vacancies in the material in some cases, so that the kinetic performance of the material is more excellent.

In some embodiments, the one or more coating layers in the shell which are farthest from the inner core each independently comprise one or more of polysiloxanes, polysaccharides and polysaccharide derivatives.

As a result, the uniformity of coating can be improved, and the interface side reactions caused by a high voltage can be effectively prevented, thereby improving the high-temperature cycling performance and high-temperature storage performance of the material. Moreover, the coating layer has good electron conductivity and ion conductivity, which helps to increase the gram capacity of the material while reducing the heat generation of the battery cell.

In some embodiments, the polysiloxane comprises a structural unit represented by formula (i), 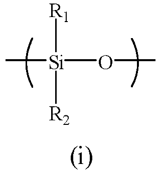
wherein R₁ and R₂ are independently selected from H, -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group;
optionally, R₁ and R₂ are independently selected from H, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl.

In some embodiments, the polysiloxane includes a blocking group including at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, a C1-C8 carboxyalkyl.

In some embodiments, the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, side-chain polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In some embodiments, the number average molecular weights of the polysiloxane, the polysaccharide and the polysaccharide derivative are each independently 300000 or less, optionally 10000 to 200000, more optionally 20000 to 120000, further optionally 400 to 80000.

In some embodiments, the polysiloxane has a polar functional group mass content percentage of α, with 0 ≤ α < 50%, optionally 5% ≤ α ≤ 30%.

In some embodiments, the substituents attached to the sugar units in the polysaccharide and the polysaccharide derivative each independently include at least one of the following functional groups: -OH, -COOH and a salt thereof, -R-OH, -SO₃H and a salt thereof, -R-OH, -R-SO₃H and a salt thereof, a sulfate ester group, an alkoxy group, where R represents an alkylene, optionally a C1-C5 alkylene;
optionally, the substituents attached to the sugar units in the polysaccharide and the polysaccharide derivative each independently include at least one of the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, a methoxy, and an ethoxy.

In some embodiments, the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, acacia gum, lithium alginate, sodium alginate, potassium alginate, fucoidan, agar, carrageenan, carrageenan, xanthan gum and fenugreek gum.

In some embodiments, the mass percentages of the substituents attached to the sugar units in the polysaccharide and the polysaccharide derivative are each independently 20% to 85%, optionally 30% to 78%.

In some embodiments, the degree of lattice mismatch between the material of the inner core and the material of the shell is less than 10%. Therefore, the contact between the inner core and the shell (or coating layer) can be improved to prevent the shell (or coating layer) from detachment.

In some embodiments, based on the weight of the positive electrode active material,
a manganese element content is in a range of 10 wt% to 35 wt%, optionally in a range of 13.3 wt% to 33.2 wt%, more optionally in a range of 15 wt% to 30 wt%, further optionally in a range of 17 wt% to 20 wt%; and/or
a content of phosphorus element is in a range of 12 wt% to 25 wt%, optionally in a range of 15 wt% to 20 wt%, more optionally in a range of 16.8 wt% to 19.5 wt%; and/or
a weight ratio range of manganese element to phosphorus element is 0.71-1.85, optionally 0.90-1.25, more optionally 0.95-1.20.

In the present application, in the case where manganese is contained only in the inner core of the positive electrode active material, the content of manganese may correspond to that of the inner core.

In the present application, limiting the manganese element content within the above range can further improve the stability and density of the material, thereby improving the performance of the secondary battery such as cycling, storage and compaction density. Moreover, a relatively high voltage can be maintained, thereby improving the energy density of the secondary battery.

In the present application, limiting the phosphorus element content within the above range can effectively reduce the influence of small polaron conduction on the electrical conductivity of the material, and can further improve the stability of the lattice structure, thereby affecting the overall stability of the material.

The weight ratio of manganese to phosphorus content has the following effects on the performance of secondary battery: it can further reduce the dissolution of manganese, further improve the stability and gram capacity of the positive electrode active material, and then affect the cycling performance and storage performance of the secondary battery; it can reduce the impurity phase and further reduce the discharge voltage platform of the material, thereby reducing the energy density of the secondary battery.

The determination of manganese and phosphorus elements can be carried out by conventional technical means in the art. In particular, the following methods are used to determine the manganese and phosphorus contents: dissolving the material in dilute hydrochloric acid (concentration 10-30%), measuring the content of each element in the solution using ICP, and then determining and converting the manganese content to obtain the weight percentage thereof.

In some embodiments, the surface of the positive electrode active material is coated with one or more of carbon and doped carbon; optionally, the surface of the positive electrode active material is coated with carbon. Therefore, the electrical conductivity of the positive electrode active material can be improved.

In some embodiments, the doping elements in the doped carbon include one or more selected from nitrogen, phosphorus, sulfur, boron and fluorine. It facilitates to control the properties of the doped carbon layer.

In some embodiments, in the inner core,
(1-y) : y is in a range of 0.1-999, optionally in a range of 0.1-10 or a range of 0.67-999, more optionally in a range of 1 to 10, further optionally in a range of 1 to 4, more further optionally in a range of 1.5 to 3; and/or
a : x is in a range of 1 to 1200, optionally in a range of 9 to 1100, more optionally in a range of 190-998.

Here, y denotes the sum of the stoichiometric numbers of the Mn-site doping elements. When the above conditions are satisfied, the energy density and cycling performance of the positive electrode active material can be further improved.

In some embodiments, in the inner core, the ratio of z to 1-z is 1 : 9 to 1 : 999, optionally 1 : 499 to 1 : 249. When the above conditions are satisfied, the energy density and cycling performance of the positive electrode active material can be further improved.

In some embodiments, the coating amount of the shell is 0.1% to 6%, based on the weight of the inner core. The coating amount of the coating layer in the present application is preferably within the above range, which can enable the full coating of the inner core, while further improving the kinetic performance and safety performance of the secondary battery without sacrificing the gram capacity of the positive electrode active material.

In some embodiments, the coating amount of the first coating layer is greater than 0 wt% and less than or equal to 7 wt%, optionally greater than 0 and less than or equal to 6 wt%, more optionally greater than 0 and less than or equal to 5.5 wt% or 4-5.6 wt%, further optionally greater than 0 and less than or equal to 2 wt%, based on the weight of the inner core; and/or
a coating amount of the second coating layer is greater than 0 wt% and less than or equal to 6 wt%, optionally greater than 0 and less than or equal to 5.5 wt%, more optionally 2-4 wt% or 3-5 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In some embodiments, the shell further includes a fourth coating layer coating the third coating layer and a fifth coating layer coating the fourth coating layer; wherein
the coating amounts of the fourth coating layer and the fifth coating layer are each independently 0.01 wt% to 10 wt%, optionally 0.05 wt% to 10 wt%, more optionally 0.1 wt% to 5 wt%, further 0.1% to 2 wt%, based on the weight of the inner core.

In the positive electrode active material with a core-shell structure of the present application, the coating amount of the each coating layer in the present application is preferably within the above range, which thus can enable the full coating of the inner core, while further improving the kinetic performance and safety performance of the secondary battery without sacrificing the gram capacity of the positive electrode active material.

In some embodiments, the shell is located on 40% to 90% of the surface of the inner core, optionally 60% to 80% of the surface. Thus, the inner core can be fully coated, thereby improving the kinetic performance and safety performance of the secondary battery.

In some embodiments, the thickness of the shell is 1-15 nm.

In some embodiments, the thickness of the first coating layer is 1-10 nm, optionally 2-10 nm; and/or
the thickness of the second coating layer is 2-25 nm, optionally 2-15 nm, more optionally 3-15 nm; and/or
the thickness of the third coating layer is 2-25 nm, optionally 5-25 nm.

In some embodiments, the thickness of the first coating layer can be about 2 nm, about 3 nm, about 4 nm, about 5 nm, about 6 nm, about 7 nm, about 8 nm, about 9 nm, or about 10 nm, or within any range of any of the above values.

In some embodiments, the thickness of the second coating layer can be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above numerical values.

In some embodiments, the thickness of the third coating layer can be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm or about 25 nm, or within any range of any of the above numerical values.

In the present application, when the first coating layer has a thickness within the above range, the adverse effect on the dynamic performance of the material can be further reduced, and problem that the migration of transition metal ions cannot be effectively prevented can be reduced.

The second coating layer has a thickness within the above range, such that the surface structure of the second coating layer is stable, and the side reaction with the electrolyte is small, so the interface side reaction can be effectively reduced, thereby improving the high temperature performance of the secondary battery.

The third coating layer has a thickness within above range, such that the electrical conductivity of the material can be improved and the compaction density performance of the battery electrode plate prepared by using the positive electrode active material can be improved.

The thickness determination of the coating layer is mainly carried out by FIB, and the specific method may include the following steps: randomly selecting a single particle from the positive electrode active material powder to be tested, cut out a thin slice with a thickness of about 100 nm from the middle position or near the middle position of the selected particle, and then conducting a TEM test on the slice, measuring the thickness of the coating layer, with 3-5 positions being measured and the average value taken.

In some embodiments, the one or more coating layers each independently include one or more selected from pyrophosphate, phosphate and an oxide, and from one or more of pyrophosphate, phosphate and an oxide in a crystalline state;
optionally, the pyrophosphate, the phosphate and the oxide each independently has a crystallinity of 10% to 100%, more optionally 50% to 100%.

Herein, the crystalline state means that the crystallinity is 50% or more, that is, 50%-100%. A crystalline state with a crystallinity less than 50% is referred to as a glassy state. The crystallinity of the crystalline pyrophosphate and crystalline phosphate of the present application is 50% to 100%.

The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interface side reactions, but also the better lattice matching between the phosphate coating layer and the phosphate coating layer, such that a close combination between the coating layer and the coating layer can be achieved.

It should be noted that, in the present application, the crystallinity can be adjusted, for example, by adjusting the process conditions of the sintering process, such as the sintering temperature, and sintering time. The crystallinity can be measured by methods known in the art, such as by X-ray diffraction, density, infrared spectroscopy, differential scanning calorimetry, and nuclear magnetic resonance absorption methods. In particular, the method for measuring the crystallinity of the positive electrode active material by the X-ray diffraction method may include the following steps:
taking a certain amount of a positive electrode active material powder, and measure the total scattering intensity by X-rays, which is the sum of the scattering intensity of the material in the whole space, only related to the intensity of the primary rays, the chemical structure of the positive electrode active material powder, and the total number of electrons participating in the diffraction, that is the mass, but has nothing to do with the ordered state of the sample. Then the crystalline scattering and non-crystalline scattering are separated from the diffraction pattern, and the crystallinity is the ratio of the crystalline partial scattering to the total scattering intensity.

In some embodiments, in the shell, a weight ratio of the pyrophosphate to the phosphate and a weight ratio of the pyrophosphate to the oxide are each independently 1 : 3 to 3 : 1, optionally 1 : 3 to 1 : 1. Therefore, using pyrophosphate and phosphate in a suitable weight ratio range or pyrophosphate and oxide in a suitable weight ratio range, can not only effectively prevent the dissolution of manganese, but also effectively reduce the content of lithium impurities on the surface and reduce interface side reactions, thereby improving the high-temperature storage performance, safety performance and cycling performance of the secondary battery.

In some embodiments, the one or more coating layers each independently includes carbon, and the carbon is a mixture of SP2-form carbon and SP3-form carbon; optionally, in the carbon, a molar ratio of the SP2-form carbon to the SP3-form carbon is any value within a range of 0.07-13, more optionally any value within a range of 0.1-10, further optionally any value within a range of 2.0-3.0.

In some embodiments, the molar ratio of the SP2-form carbon to SP3-form carbon can be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or within any range of any of the above values.

In the present application, "about" a numerical value means a range, i.e., a range of ± 10% of the numerical value.

The comprehensive electrical performance of the secondary battery is improved by selecting the form of carbon in the carbon coating layer. Specifically, by using a mixed form of SP2-form and SP3-form carbon and limiting the ratio of SP2-form to SP3-form carbon within a certain range, the following can be avoided: if the carbon in the coating layer is in the form of amorphous SP3, the conductivity is poor; if all the carbon is in a graphitized SP2-form, although the conductivity is good, there are few lithium ion paths, which is not conducive to the deintercalation of lithium. In addition, limiting the molar ratio of SP2-form carbon to SP3-form carbon within the above range can not only achieve good electrical conductivity, but also ensure the paths of lithium ions, which is beneficial to the realization of the function of the secondary battery and the cycling performance thereof. The mixing ratio of the SP2-form and the SP3-form carbon can be controlled by sintering conditions such as the sintering temperature and sintering time. The molar ratio of the SP2-form carbon to SP3-form carbon can be determined by Raman spectroscopy, and the specific measuring method is as follows: splitting the energy spectrum of the Raman measurement, to obtain Id/Ig (where Id is the peak intensity of SP3-form carbon, and Ig is the peak intensity of SP2-form carbon) and thus to confirm the molar ratio of the two forms.

In some embodiments, the one or more coating layers each independently include doped carbon, and, in the doped carbon, a mass content of the doping element is 30% or less; and optionally, in the doped carbon, the mass content of the doping element is 20% or less. Doping elements within the above content range can not only fully improve the conductivity of the pure carbon layer, but also effectively avoid the excessive surface activity due to excessive doping of doping elements, thereby effectively controlling the interface side reactions resulting from the overdoping of the coating layer.

In some embodiments, the one or more coating layers each independently includes doped carbon, and in the doped carbon,
the doping element is a nitrogen element and/or a sulfur element, and a mass content of the doping element in the doped carbon is 1% to 15%; or
the doping element is a phosphorus element, a boron element and/or a fluorine element, and a mass content of the doping element in the doped carbon is 0.5% to 5%; and
optionally, the doping element is nitrogen, phosphorus, sulfur, boron or fluorine.

Since the nitrogen atoms and sulfur atoms have an atomic radius closer to that of carbon atoms and the carbon skeleton does not tend to damage, when the doping amounts of nitrogen atoms and sulfur atoms are within the above relatively wide range, the conductivity of the doped carbon layer can be fully utilized, and the lithium ion transport and lithium ion desolvation ability can also be promoted.

Due to the difference in atomic radius between the phosphorus atoms, boron atoms and/or fluorine atoms and the carbon atoms, excessive doping may tend to the damage of the carbon skeleton, so when the phosphorus atoms, boron atoms and/or fluorine atoms are in relatively small doping amounts in the above range, the conductivity of the doped carbon layer can be fully utilized, and the lithium ion transport and lithium ion desolvation ability can also be promoted.

In some embodiments, the one or more coating layers each independently include pyrophosphate, and the pyrophosphate has an interplanar distance in a range of 0.293-0.470 nm, optionally 0.297-0.462 nm or 0.293-0.326 nm, more optionally 0.300-0.310 nm, and the crystal direction (111) has an angle in a range of 18.00°-32.57°, optionally 18.00°-32.00° or 26.41°-32.57°, more optionally 19.211°-30.846°, further optionally 29.00°-30.00°; and/or
the one or more coating layers each independently include phosphate, the phosphate has an interplanar spacing in a range of 0.244-0.425 nm, optionally 0.345-0.358 nm, and the crystal direction (111) has an angle range of 20.00°-37.00°, optionally 24.25°-26.45°;
optionally, the first coating layer or the second coating layer comprises phosphate.

Both the first coating layer and the second coating layer in the positive electrode active material of the present application are crystalline substances, and the interplanar spacing and angle ranges thereof are within the above ranges. Thus, the impurity phase in the coating layer can be effectively reduced, thereby improving the gram capacity, cycling performance and rate performance of the material.

In some embodiments, the positive electrode active material has a lattice change rate of, before and after complete lithium intercalation-deintercalation, 50% or less, optionally 9.8% or less, more optionally 8.1% or less, further optionally 7.5% or less, further optionally 6% or less, further optionally 4% or less, further optionally 3.8% or less, and further optionally 2.0-3.8% or less.

By lowering the lattice change rate, the Li ion transport can be made easier, that is, the Li ions have a stronger migration ability in the material, which is beneficial in improving the rate performance of the secondary battery. The lattice change rate may be measured with a method known in the art, e.g., X-ray diffraction (XRD).

In some embodiments, the positive electrode active material has an Li/Mn antisite defect concentration of 5.3% or less, optionally 5.1% or less, more optionally 4% or less, further optionally 2.2% or less, more further optionally 2% or less, more further optionally 1.5%-2.2% or 0.5% or less.

The so-called Li/Mn anti site defect means that the positions of Li⁺ and Mn²⁺ have been exchanged in the LiMnPO₄ lattices. The Li/Mn antisite defect concentration refers to a percentage of the Li⁺ exchanged with Mn²⁺ based on the total amount of Li⁺ in the positive electrode active material. The Mn²⁺ of antisite defects can hinder the transport of Li⁺, and a reduction in the Li/Mn antisite defect concentration is beneficial in improving the gram capacity and rate performance of the positive electrode active material. The Li/Mn antisite defect concentration may be measured with a method known in the art, e.g., XRD.

In some embodiments, the positive electrode active material has a compacted density at 3T of 1.89 g/cm³ or more, optionally 1.95 g/cm³ or more, more optionally 1.98 g/cm³ or more, further optionally 2.0 g/cm³ or more, more further optionally 2.2 g/cm³ or more, more further optionally 2.2 g/cm³ or more and 2.8 g/cm³ or less, or 2.2 g/cm³ or more and 2.65 g/cm³ or less.

A higher compacted density indicates a greater weight of the active material per unit volume, and thus, increasing the compacted density is beneficial in increasing the volumetric energy density of a cell. The compacted density may be measured in accordance with GB/T 24533-2009.

In some embodiments, the surface oxygen valence state of the positive electrode active material is -1.55 or less, optionally -1.82 or less, more preferably -1.88 or less, further optionally -1.90 or less or -1.98 to -1.88, more further optionally -1.98 to -1.89, and more further optionally -1.98 to -1.90.

By lowering the surface oxygen valence state, the interfacial side reactions between the positive electrode active material and an electrolyte solution can be alleviated, thereby improving the cycling performance and high-temperature stability of the secondary battery. The surface oxygen valence state may be measured with a method known in the art, e.g., electron energy loss spectroscopy (EELS).

### [Method for producing positive electrode active material]

The present application provides a method for preparing a positive electrode active material, includes the steps of:
reacting a manganese source with an element B source, to obtain a manganese salt doped with element B;
mixing a lithium source, a phosphorus source, optionally an element A source, and optionally an element C source, and an optional source of element D with the manganese salt doped with element B, followed by drying, and sintering to obtain an inner core of LiₐAₓMn_{1-y}B_{y}P_{1-z}C_{z}O₄₋ₙDₙ, wherein the A, B, C, D, a, x, y, z and n are defined as in [positive electrode active material].

Therefore, in the present application, by doping a compound LiMnPO₄ with specific elements in specific amounts at Mn-site and optionally Li, P and/or O-sites, a markedly improved rate performance can be obtained while the dissolution of Mn and Mn-site doping element is significantly reduced, thereby obtaining significantly improved cycling performance and/or high-temperature stability; and the gram capacity and compacted density of the material can also be enhanced.

In some embodiments, the method specifically includes the steps of:
mixing and stirring the manganese source, the element B source and an acid in a solvent to produce a suspension of a manganese salt doped with element B, filtering the suspension and drying the filter cake to obtain the manganese salt doped with element B;
adding a lithium source, a phosphorus source, optionally an element A source, optionally an element C source, and optionally an element D source, a solvent, and the manganese salt doped with element B into a reaction container and grinding and mixing same to obtain a slurry;
transferring the resulting slurry to a spray drying apparatus for spray drying and granulation to obtain particles;
sintering the resulting particles to obtain an inner core of LiₐAₓMn_{1-y}B_{y}P_{1-z}C_{z}O₄₋ₙDₙ; wherein the A, B, C, D, a, x, y, z and n are defined as in [positive electrode active material].

In some embodiments, in the step of preparing the slurry, a lithium source, a phosphorus source, optionally an element A source, optionally an element C source, optionally an element D source, a carbon source, a source of a doping element for a carbon layer, a solvent, and the manganese salt doped with element B are added to a reaction container for grinding and mixing to obtain a slurry; the other steps are the same as above; to obtain the positive electrode active material;
the positive electrode active material includes an inner core and a shell coating the inner core, the inner core includes LiₐAₓMn_{1-y}B_{y}P_{1-z}C_{z}O₄₋ₙDₙ, and the shell includes doped carbon, and the doped carbon has doping elements including one or more selected from nitrogen, phosphorus, sulfur, boron and fluorine; wherein the A, B, C, D, a, x, y, z and n are defined as in [positive electrode active material].

In some embodiments, the solvents in the step of preparing the manganese salt doped with element B and the step of preparing the slurry can each independently be a solvent conventionally used by those skilled in the art for the preparation of a manganese salt and lithium manganese phosphate, for example they can be each independently selected from at least one of ethanol, water (such as deionized water), etc.

In some embodiments , the method also includes the steps of:
treating the surface of the inner core by coating by dry-coating or wet-coating with one or a mixture of more selected from pyrophosphate, phosphate, carbon, doped carbon, an oxide, a boride and a polymer, to obtain the positive electrode active material;
the positive electrode active material includes an inner core and a shell coating the inner core, the inner core is LiₐAₓMn_{1-y}B_{y}P_{1-z}C_{z}C₄₋ₙDₙ, and the shell includes one or more coating layers, each of which independently includes one or more selected from pyrophosphate, phosphate, carbon, doped carbon, an oxide, a boride, and a polymer, wherein the A, B, C, D, a, x, y, z and n are defined as in [positive electrode active material]; optionally, the polymer includes one or more selected from polysiloxanes, polysaccharides and polysaccharide derivatives.

In some embodiments , the method also includes the steps of:
providing a pyrophosphate M_{b}(P₂O₇)_{c} powder, a suspension comprising phosphate Xₘ(PO₄)_{q} and/or oxide M'_{d}Oₑ, wherein the suspension further comprises a carbon source and/or a doped carbon source;
adding the inner core and pyrophosphate M_{b}(P₂O₇)_{c} powder into the suspension and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate M_{b}(P₂O₇)_{c} and one or more selected from phosphate Xₘ(PO₄)_{q} and oxide M'_{d}Oₑ, the second coating layer includes one or more of selected from carbon and doped carbon, optionally, the doping element in the doped carbon include one or more selected from nitrogen, phosphorus, sulfur, boron and fluorine, wherein the A, B, C, D, a, x, y, z and n are defined as in [positive electrode active material], and the M, X, M', b, c, d, e, m, and q are defined as in [positive electrode active material].

In some embodiments , the method also includes the steps of:
providing a pyrophosphate MP₂O₇ powder, a phosphate XPO₄ suspension comprising a carbon source;
adding the inner core and pyrophosphate MP₂O₇ powder into the XPO₄ suspension comprising a carbon source and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate MP₂O₇ and phosphate XPO₄, the second coating layer includes carbon, wherein the A, B, C, D, a, x, y, z and n are defined as in [positive electrode active material], and the M and X are defined as in [positive electrode active material].

In some embodiments , the method also includes the steps of:
providing a pyrophosphate M_{b}(P₂O₇)_{c} suspension, a suspension containing one or more selected from phosphate Xₘ(PO₄)_{q}, oxide M'_{d}Oₑ and a boride and a suspension comprising a carbon source and/or a doped carbon source;
mixing the inner core with all the above suspensions, and sintering same to obtain the positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n are defined as in [positive electrode active material]and the M, X, M', b, c, d, e, m and q are defined as in [positive electrode active material].

In some embodiments , the method also includes the steps of:
providing an Li_{f}QP₂O₇ and/or Q_{g}(P₂O₇)ₕ and XPO₄ suspension respectively, adding the inner core to the above suspension, mixing and sintering same to obtain the positive electrode active material; wherein

The positive electrode active material includes an inner core and a shell coating the inner core, the inner core includes LiₐAₓMn_{1-y}B_{y}P_{1-z}C_{z}O₄₋ₙDₙ, the shell includes a first coating layer coating the inner core, a second coating layer coating the first coating layer and a third coating layer coating the second coating layer, the first coating layer including pyrophosphate Li_{f}QP₂O₇ and/or Q_{g}(P₂O₇)ₕ, the second coating layer includes phosphate XPO₄, and the third coating layer includes carbon, wherein A, B, C, D, a, x, y, z and n are defined as in [Positive electrode active material], and Q, X, f, g and h are defined as in [positive electrode active material].

In some embodiments , the method also includes the steps of:
first coating step: dissolving an element Q source, a phosphorus source and an acid, and optionally a lithium source in a solvent to obtain a first coating layer suspension comprising Li_{f}QP₂O₇ and/or Q_{g}(P₂O₇)ₕ; fully mixing the inner core with the first coating layer suspension, drying, and sintering same to obtain a first coating layer-coated material;
second coating step: dissolving an element X source, a phosphorus source and an acid in a solvent to obtain a second coating layer suspension comprising XPO₄; fully mixing the first coating layer-coated material obtained in the first coating step with the second coating layer suspension, drying, and sintering same to obtain a two-layer coating layer-coated material;
third coating step: dissolving the carbon source in a solvent, fully dissolving same to obtain a third coating layer solution; then adding the two-layer coating layer-coated material obtained in the second coating step into the third coating layer solution, mix uniformly, drying, and then sintering same to obtain a three-layer coating layer-coated material, that is, the positive electrode active material.

In some embodiments, the method also includes the steps of:
providing a pyrophosphate M_{b}(P₂O₇)_{c} powder, a powder selected from one or more of phosphate Xₘ(PO₄)_{q}, oxide M'_{d}Oₑ and a boride, and a carbon source powder and/or a doped carbon source powder;
mixing the inner core with all the above powders and grinding, and drying same to obtain a positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n and the M, X, M', b, c, d, e, m and q are defined as in [positive electrode active material];
optionally, the drying is carried out by a spray granulation dryer.

In some embodiments , the method also includes the steps of:
providing a polymer, wherein the polymer includes one or more selected from polysiloxanes, polysaccharides and polysaccharide derivatives;

The positive electrode active material and the polymer are coated by dry-coating or wet-coating, and the obtained material includes an inner core and a shell coating the inner core;
the one or more coating layers in the shell which are farthest from the inner core each independently comprise one or more of polysiloxanes, polysaccharides and polysaccharide derivatives.

In any embodiment, the element A source is selected from at least one of the elementary substances, oxides, phosphates, oxalates, carbonates, and sulfates of element A; and/or
the element B source is selected from at least one of the elementary substances, oxides, phosphates, oxalates, carbonates, halides, nitrates, organic acid salts, hydroxides and sulfates of the element B, optionally at least one of the elementary substances, oxides, phosphates, oxalates, carbonates, and sulfates of the element B, optionally at least one of the elementary substances, sulfates, halides, nitrates, organic acid salts, oxides and hydroxides of the element B, optionally at least one of the elementary substances, carbonates, sulfates, chlorides, nitrates, organic acid salts, oxides and hydroxides of the element B; and/or
the element C source is selected from at least one of the elementary substances, halides, organic acid salts, oxides, hydroxides, inorganic acids, organic acids, sulfates, borates, nitrates and silicates of the element C, optionally at least one of the sulfate, borate, nitrate and silicate of the element C, optionally at least one of the elementary substances, sulfates, halides, nitrates, organic acid salts, oxides, hydroxides and inorganic acids of the element C, optionally at least one of the inorganic acids, organic acids, sulfates, chlorides, nitrates, organic acid salts, oxides, and hydroxides of the element C; and/or
the element D source is selected from at least one of the elementary substances and ammonium salts of the element D.

In some embodiments, the acid is selected from one or more of hydrochloric acid, sulfuric acid, nitric acid, phosphoric acid, an organic acid like oxalic acid, etc., and may be, for example, oxalic acid. In some embodiments, the acid is a dilute acid with a concentration of 60 wt% or less.

In some embodiments, the manganese source may be a manganese-containing substance useful for preparing lithium manganese phosphate that is known in the art. For example, the manganese source may be selected from one or a combination of elemental manganese, manganese dioxide, manganese phosphate, manganese oxalate and manganese carbonate.

In some embodiments, the lithium source may be a lithium-containing substance useful for preparing lithium manganese phosphate that is known in the art. For example, the lithium source may be selected from one or a combination of lithium carbonate, lithium hydroxide, lithium phosphate and lithium dihydrogen phosphate.

In some embodiments, the phosphorus source may be a phosphorus-containing substance useful for preparing lithium manganese phosphate that is known in the art. For example, the phosphorus source may be selected from one or a combination of diammonium hydrogen phosphate, ammonium dihydrogen phosphate, ammonium phosphate and phosphoric acid.

The addition amounts of respective sources of the elements A, B, C and D depend on a target doping amount, and a ratio of the amounts of the lithium source, the manganese source and the phosphorus source conforms to a stoichiometric ratio.

In any embodiment, in the step of preparing the manganese salt doped with element B,
the stirring is carried out at a temperature in a range of 20-120°C, optionally in a range of 25-80°C or 40-120°C, further optionally in a range of 60-120°C, and /or,
at a stirring rate of 200-800 rpm, optionally at 400-700 rpm for 1-9 hours, more optionally at 500-700 rpm for 60-420 minutes, further optionally for 3-7 hours or 120-360 minutes.

In some embodiments, in the step of preparing the slurry, grinding and mixing are carried out for 1-15 hours, optionally 8-15 hours; optionally, the mixing is carried out at a temperature of 20-120°C, more optionally 40-120°C, for 1-10 h.

By controlling the reaction temperature, the stirring speed and the mixing time during the doping, the doping elements can be uniformly distributed, and the sintered material has a higher degree of crystallinity, thereby improving the gram capacity, rate performance and the like of the material.

In some embodiments, the filter cake can be washed before drying same in the step of preparing the manganese salt doped with element B.

In some embodiments, the drying in the step of preparing the manganese salt doped with element B can be carried out by means and conditions known to those skilled in the art. For example, the drying temperature can be in a range of 120°C to 300°C. Optionally, the dried filter cake may be ground into particles, for example, to a median particle size Dv₅₀ of the particles in a range of 50 to 200 nm. Herein, the median particle size Dv₅₀ refers to a particle size corresponding to a cumulative volume distribution percentage of the positive electrode active material reaching 50%. In the present application, the median diameter Dv₅₀ of the inner core can be determined by laser diffraction particle size analysis method. For example, the determination may be carried out with reference to the standard GB/T 19077-2016 using a laser particle size analyzer (e.g., Malvern Master Size 3000).

In some embodiments, in the step of preparing the slurry, a carbon source is also added to the reaction container for grinding and mixing. Therefore, the method can result in a positive electrode active material having a surface coated with carbon. Optionally, the carbon source includes one or a combination of starch, surcose, glucose, polyvinyl alcohol, polyethylene glycol and citric acid. The molar ratio of the amount of the carbon source to the amount of the lithium source is usually in a range of 0.1% to 5%. The grinding may be carried out by suitable grinding means known in the art, e.g., sanding.

The temperature and time of the spray drying can be conventional temperature and time for spray drying in the art, e.g., at 100°C to 300°C for 1 to 6 hours.

In some embodiments, in the step of preparing the inner core, the sintering is carried out at a temperature in a range of 600-900°C. for 6-14 hours.

In some embodiments, the sintering is carried in a protective atmosphere, and the protective atmosphere can be nitrogen, an inert gas, hydrogen or a mixture thereof.

In any embodiment, the MP₂O₇ powder is a commercially available product, or the MP₂O₇ powder is prepared by the following procedure:
adding the element M source and the phosphorus source into the solvent to obtain a mixture, adjusting the pH of the mixture to 4-6, stirring and fully reacting same, and then drying and sintering same to obtain the powder, wherein M is selected from one or more of Li, Fe, Ni, Mg, Co, Cu, Zn, Ti, Ag, Zr, Nb and Al.

In some embodiments, in the method for preparing an MP₂O₇ powder,
the drying step involves drying at 100-300°C, optionally 150-200°C, for 4-8 hours.

In some embodiments, in the method for preparing an MP₂O₇ powder,
the sintering step involves sintering at 500-800°C, optionally 650-800°C, in an inert gas atmosphere for 4-10 hours.

In some embodiments, the sintering temperature in the coating step is 500-800°C, and the sintering time is 4-10 h.

In some embodiments, optionally, the XPO₄ suspension comprising a carbon source is commercially available, or optionally, prepared by: uniformly mixing a lithium source, a X source, a phosphorus source and a carbon source in a solvent, then increasing the temperature of the reaction mixture to 60-120°C and keep same for 2-8 hours to obtain an XPO₄ suspension containing a carbon source. Optionally, during the preparation of the XPO₄ suspension containing a carbon source, the pH of the mixture is adjusted to 4-6.

In some embodiments, in the step of preparing the positive electrode active material, the mass ratio of the inner core, MP₂O₇ powder to the XPO₄ suspension containing a carbon source is: 1 : (0.001-0.05) : (0.001-0.05).

In some embodiments, in the first coating step,
the pH of the solution dissolved with an element Q source, a phosphorus source and an acid, and optionally a lithium source is controlled to be 3.5-6.5, followed by stirring and reacting for 1-5 h, and then the temperature of the solution is increased to 50-120°C and maintained for 2-10 h, and/or,
the sintering is carried out at 650-800°C for 2-6 hours.

In some embodiments, in the second coating step,
after dissolving the element X source, phosphorus source and acid in the solvent, the mixture is stirred and reacted for 1-10 h, then the solution is brought to an increased temperature of 60-150°C and maintained at this temperature for 2-10 h, and/or,
the sintering is carried out at 500-700°C for 6-10 hours.

In some embodiments, the sintering in the third coating step is carried out at 700-800°C for 6-10 hours.

### [Positive electrode plate]

The positive electrode plate includes a positive electrode current collector and a positive electrode film layer provided on at least one surface of the positive electrode current collector, the positive electrode film layer includes a first positive electrode active material, and the first positive electrode active material is the positive electrode active material as described above or the positive electrode active material prepared by method as described above; optionally, the content of the positive electrode active material in the positive electrode film layer is 90-99.5 wt%, more optionally 95-99.5 wt%, based on the total weight of the positive electrode film layer.

In some embodiments, the positive electrode plate further includes a second positive electrode active material, and the second positive electrode active material is different from the first positive electrode active material.

In some embodiments, the second positive electrode active material includes one or more of LiEₜCoₛF₍₁₋ₜ₋ₛ₎O₂, spinel-type lithium manganate and spinel-type of lithium titanate, wherein E includes one or more elements selected from group VIII, F includes one or more elements selected from IIIA and VIIB, t is selected from a range of 0 to 0.9 , the sum of t and s is selected from a range of 0.3 to 1.

In some embodiments, E includes one or more elements selected from Ni, Fe, Ru, and Rh, and F includes one or more elements selected from Mn, Al, Ga, and In.

In some embodiments, the second positive electrode active material is selected from one or more of LiNiₜCoₛMn₍₁₋ₜ₋ₛ₎O₂, LiNiₜCoₛAl₍₁₋ₜ₋ₛ₎O₂, LiCoO₂, spinel-type lithium manganate and spinel-type lithium titanate; wherein t is independently selected from 0.3-0.9, optionally 0.33-0.8, and the sum of t and s is independently selected from 0.3-0.9, optionally 0.66-0.9.

In some embodiments, the mass ratio of the first active material to the second active material is 1 : 7-7 : 1, optionally 1 : 4-4 : 1.

In some embodiments, in the second positive electrode active material,
the ratio of t, (1-t-s) to s in the LiNiₜCoₛMn₍₁₋ₜ₋ₛ₎O₂ is 5 : 2 : 3 or 3 : 1 : 1 or 8 : 1 : 1; and/or
the ratio of t, s to (1-t-s) in the LiNiₜCoₛAl₍₁₋ₜ₋ₛ₎O₂ is 5 : 2 : 3 or 3 : 1 : 1 or 8 : 1 : 1.

In some embodiments, the sum of the mass of the first positive electrode active material and the second positive electrode active material accounts for 88%-98.7% of the mass of the positive electrode plate.

As an example, the positive electrode current collector has two surfaces opposite in its own thickness direction, and the positive electrode film layer is provided on either or both of opposite surfaces of the positive electrode current collector.

In some embodiments, the positive current collector can be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some implementations, the positive electrode active material may also be a positive electrode active material known in the art for batteries. As an example, the positive electrode active material may include at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more.

In some embodiments, the positive electrode film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. As an example, the additive may include a negative electrode film-forming additive and a positive electrode film-forming additive, and may further include an additive that can improve some performance of the battery, such as an additive that improves overcharge performance of the battery, or an additive that improves high-temperature performance or low-temperature performance of the battery.

### [Separator]

In some embodiments, the secondary battery further comprises a separator. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may include polypropylene, polybutylene terephthalate, polybutylene succinate, etc.

The shape of the secondary battery is not particularly limited in the present application, and may be cylindrical, square or of any other shape. For example, Fig. 4 shows a secondary battery 5 with a square structure as an example.

In some embodiments, with reference to Fig. 5, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a stacking process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

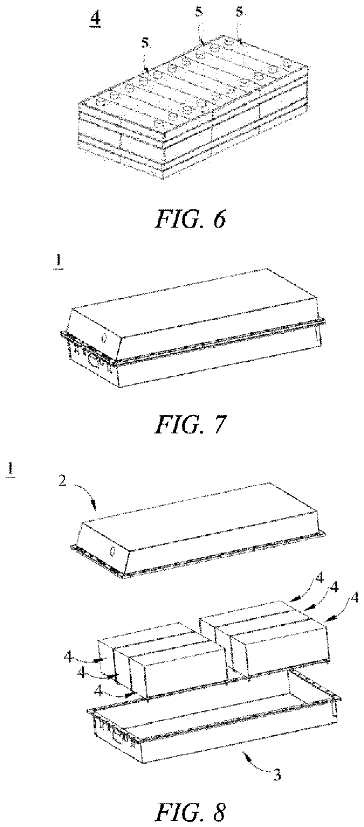

Fig. 6 is an exemplary battery module 4. Referring to Fig. 6, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Fig. 7 and Fig. 8 show an exemplary battery pack 1. Referring to Fig. 7 and Fig. 8, the battery pack 1 may comprise a battery case and a plurality of battery modules 4 provided in the battery case. The battery box comprises an upper box body 2 and a lower box body 3, wherein the upper box body 2 can cover the lower box body 3 to form a closed space for accommodating the battery modules 4. A plurality of battery modules 4 may be arranged in the battery case in any manner.

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

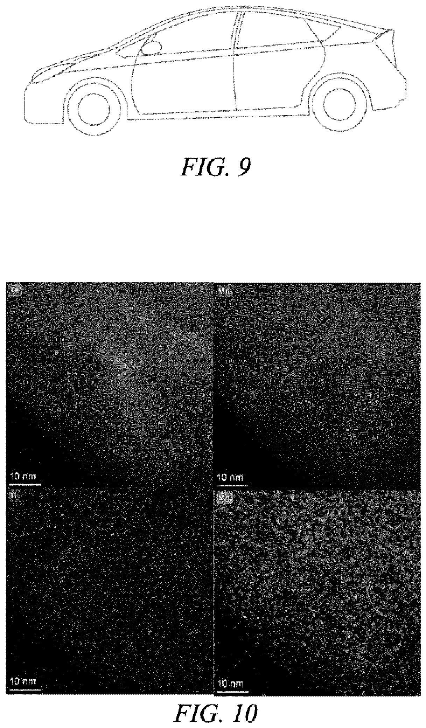

Fig. 9 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

### [Examples]

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

The sources of the raw materials involved in the examples of the present application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄.2(H₂O) | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Dilute sulfuric acid | H₂SO₄ | Shenzhen Hisian Biotechnology Co., Ltd. | Mass fraction 60% |
| Dilute nitric acid | HNO₃ | Anhui Lingtian Fine Chemical Co., Ltd. | Mass fraction 60% |
| Siliceous acid | H₂SiO₃ | Shanghai Yuanye Biotechnology Co., Ltd. | 100 g, mass fraction 99.8% |

### [Positive electrode active material including inner core and preparation of battery]

### Example 1-1

### 1) Preparation of a positive electrode active material

Preparation of doped manganese oxalate: 1.3 mol of MnSO₄· H₂O and 0.7 mol of FeSO₄· H₂O are mixed thoroughly for 6 hours in a mixer. The mixture is transferred into a reaction kettle, and 10 L of deionized water and 2 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain an Fe-doped manganese oxalate suspension. Then, the suspension is filtered, and the resulting filter cake is dried at 120°C and then ground to obtain Fe-doped manganese oxalate particles with a median particle size Dv₅₀ of about 100 nm.

Preparation of doped lithium manganese phosphate: 1 mol of the above manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 hours, so as to obtain particles. The above powder is sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}. The positive electrode active material may be tested for element content using inductively coupled plasma (ICP) emission spectroscopy.

### 2) Preparation of button battery

The above positive electrode active material, polyvinylidene fluoride (PVDF) and acetylene black in a weight ratio of 90 : 5 : 5 are added into N-methylpyrrolidone (NMP), and stirred in a drying room to make a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate is used as a negative electrode, a solution of 1 mol/L LiPF₆ in ethylene carbonate (EC), diethyl carbonate (DEC) and dimethyl carbonate (DMC) in a volume ratio of 1 : 1 : 1 is used as an electrolyte solution, and the lithium plate and the electrolyte solution are assembled, together with the positive electrode plate prepared above, into a button battery in a button battery box.

### (3) Preparation of full battery

The above positive electrode active material is uniformly mixed with a conductive agent acetylene black and a binder polyvinylidene fluoride (PVDF) in a weight ratio of 92 : 2.5 : 5.5 in an N-methylpyrrolidone solvent system, and the mixture is applied to an aluminum foil, followed by drying and cold pressing, so as to obtain a positive electrode plate. The coating amount is 0.4 g/cm², and the compacted density is 2.4 g/cm³.

Negative electrode active materials artificial graphite and hard carbon, a conductive agent acetylene black, a binder styrene butadiene rubber (SBR) and a thickening agent sodium carboxymethylcellulose (CMC) are uniformly mixed in deionized water in a weight ratio of 90 : 5 : 2 : 2 : 1, and the mixture is applied to a copper foil, followed by drying and cold pressing, so as to obtain a negative electrode plate. The coating amount is 0.2 g/cm², and the compacted density is 1.7 g/cm³.

With a polyethylene (PE) porous polymer film as a separator, the positive electrode plate, the separator and the negative electrode plate are stacked in sequence, such that the separator is located between the positive electrode and the negative electrode to play a role of isolation, and then winding is performed to obtain a bare cell. The bare cell is placed in an outer package, and the same electrolyte solution as that for the preparation of the button battery is injected, followed by encapsulation, so as to obtain a full battery.

### Example 1-2

Except that in "1) Preparation of positive electrode active material", the amount of high-purity Li₂CO₃ is changed into 0.4885 mol, Mo(SO₄)₃ is replaced by MgSO₄, the amount of FeSO₄· H₂O is changed into 0.68 mol, 0.02 mol of Ti(SO₄)₂ is also added in the preparation of doped manganese oxalate, and H₄SiO₄ is replaced by HNO₃, the rest are the same as in Example I-1.

### Example 1-3

Except that in "1) Preparation of positive electrode active material", the amount of high-purity Li₂CO₃ is changed into 0.496 mol, Mo(SO₄)₃ is replaced by W(SO₄)₃, and H₄SiO₄ is replaced by H₂SO₄, the rest are the same as in Example I-1.

### Example I-4

Except that in "1) Preparation of positive electrode active material", the amount of high-purity Li₂CO₃ is changed into 0.4985 mol, 0.001 mol of Mo(SO₄)₃ is replaced by 0.0005 mol of Al₂(SO₄)₃, and NH₄HF₂ is replaced by NH₄HCl₂, the rest are the same as in Example I-1.

### Example I-5

Except that in "1) Preparation of positive electrode active material", 0.7 mol of FeSO₄· H₂O is changed into 0.69 mol, 0.01 mol of VCl₂ is also added in the preparation of doped manganese oxalate, the amount of Li₂CO₃ is changed into 0.4965 mol, 0.001 mol of Mo(SO₄)₃ is replaced by 0.0005 mol of Nb₂(SO₄)₅, and H₄SiO₄ is replaced by H₂SO₄, the rest are the same as in Example I-1.

### Example I-6

Except that in "1) Preparation of positive electrode active material", the amount of FeSO₄· H₂O is changed into 0.68 mol, 0.01 mol of VCl₂ and 0.01 mol of MgSO₄ are also added in the preparation of doped manganese oxalate, the amount of Li₂CO₃ is changed into 0.4965 mol, 0.001 mol of Mo(SO₄)₃ is replaced by 0.0005 mol of Nb₂(SO₄)₅, and H₄SiO₄ is replaced by H₂SO₄, the rest are the same as in Example I-1.

### Example I-7

Except that in "1) Preparation of positive electrode active material", MgSO₄ is replaced by CoSO₄, the rest are the same as in Example I-6.

### Example I-8

Except that in "1) Preparation of positive electrode active material", MgSO₄ is replaced by NiSO₄, the rest are the same as in Example I-6.

### Example I-9

Except that in "1) Preparation of positive electrode active material", the amount of FeSO₄· H₂O is changed into 0.698 mol, 0.002 mol of Ti(SO₄)₂ is also added in the preparation of doped manganese oxalate, the amount of Li₂CO₃ is changed into 0.4955 mol, 0.001 mol of Mo(SO₄)₃ is replaced by 0.0005 mol of Nb₂(SO₄)₅, H₄SiO₄ is replaced by H₂SO₄, and NH₄HF₂ is replaced by NH₄HCl₂, the rest are the same as in Example I-1.

### Example 1-10

Except that in "1) Preparation of positive electrode active material", the amount of FeSO₄· H₂O is changed into 0.68 mol, 0.01 mol of VCl₂ and 0.01 mol of MgSO₄ are also added in the preparation of doped manganese oxalate, the amount of Li₂CO₃ is changed into 0.4975 mol, 0.001 mol of Mo(SO₄)₃ is replaced by 0.0005 mol of Nb₂(SO₄)₅, and NH₄HF₂ is replaced by NH₄HBr₂, the rest are the same as in Example I-1.

### Example I-11

Except that in "1) Preparation of positive electrode active material", the amount of FeSO₄· H₂O is changed into 0.69 mol, 0.01 mol of VCl₂ is also added in the preparation of doped manganese oxalate, the amount of Li₂CO₃ is changed into 0.499 mol, Mo(SO₄)₃ is replaced by MgSO₄, and NH₄HF₂ is replaced by NH₄HBr₂, the rest are the same as in Example I-1.

### Example I-12

Except that in "1) Preparation of positive electrode active material", the amount of MnSO₄· H₂O is changed into 1.36 mol, the amount of FeSO₄· H₂O is changed into 0.6 mol, 0.04 mol of VCl₂ is also added in the preparation of doped manganese oxalate, the amount of Li₂CO₃ is changed into 0.4985 mol, Mo(SO₄)₃ is replaced by MgSO₄, and H₄SiO₄ is replaced by HNO₃, the rest are the same as in Example I-1, and Li_{0.997}Mg_{0.001}Mn_{0.68}Fe_{0.3}V_{0.02}P_{0.999}N_{0.001}O_{3.999}F_{0.001} is obtained.

### Example I-13

Except that in "1) Preparation of positive electrode active material", the amount of MnSO₄· H₂O is changed into 1.16 mol, and the amount of FeSO₄· H₂O is changed into 0.8 mol, the rest are the same as in Example I-12.

### Example I-14

Except that in "1) Preparation of positive electrode active material", the amount of MnSO₄· H₂O is changed into 1.3 mol, and the amount of VCl₂ is changed into 0.1 mol, the rest are the same as in Example I-12.

### Example I-15

Except that in "1) Preparation of positive electrode active material", the amount of MnSO₄· H₂O is changed into 1.2 mol, 0.1 mol of VCl₂ is also added in the preparation of doped manganese oxalate, the amount of Li₂CO₃ is changed into 0.494 mol, 0.001 mol of Mo(SO₄)₃ is replaced by 0.005 mol of MgSO₄, and H₄SiO₄ is replaced by H₂SO₄, the rest are the same as in Example I-1.

### Example I-16

Except that in "1) Preparation of positive electrode active material", the amount of MnSO₄· H₂O is changed into 1.2 mol, 0.1 mol of VCl₂ is also added in the preparation of doped manganese oxalate, the amount of Li₂CO₃ is changed into 0.467 mol, 0.001 mol of Mo(SO₄)₃ is replaced by 0.005 mol of MgSO₄, 0.001 mol of H₄SiO₄ is replaced by 0.005 mol of H₂SO₄, and 1.175 mol of 85% phosphoric acid is replaced by 1.171 mol of 85% phosphoric acid., the rest are the same as in Example I-1.

### Example I-17

Except that in "1) Preparation of positive electrode active material", the amount of MnSO₄· H₂O is changed into 1.2 mol, 0.1 mol of VCl₂ is also added in the preparation of doped manganese oxalate, the amount of Li₂CO₃ is changed into 0.492 mol, 0.001 mol of Mo(SO₄)₃ is replaced by 0.005 mol of MgSO₄, H₄SiO₄ is replaced by H₂SO₄, and 0.0005 mol of NH₄HF₂ is changed into 0.0025 mol, the rest are the same as in Example I-1.

### Example I-18

Except that in "1) Preparation of positive electrode active material", the amount of FeSO₄· H₂O is changed into 0.5 mol, 0.1 mol of VCl₂ and 0.1 mol of CoSO₄ are also added in the preparation of doped manganese oxalate, the amount of Li₂CO₃ is changed into 0.492 mol, 0.001 mol of Mo(SO₄)₃ is replaced by 0.005 mol of MgSO₄, H₄SiO₄ is replaced by H₂SO₄, and 0.0005 mol of NH₄HF₂ is changed into 0.0025 mol, the rest are the same as in Example 1-1.

### Example I-19

Except that in "1) Preparation of positive electrode active material", the amount of FeSO₄· H₂O is changed into 0.4 mol, and 0.1 mol of CoSO₄ is changed into 0.2 mol, the rest are the same as in Example 1-18.

### Example I-20

Except that in "1) Preparation of positive electrode active material", the amount of MnSO₄· H₂O is changed into 1.5 mol, the amount of FeSO₄· H₂O is changed into 0.1 mol, and the amount of CoSO₄ is changed into 0.3 mol, the rest are the same as in Example I-18.

### Example I-21

Except that in "1) Preparation of positive electrode active material", 0.1 mol of CoSO₄ is replaced by 0.1 mol of NiSO₄, the rest are the same as in Example I-18.

### Example I-22

Except that in "1) Preparation of positive electrode active material", the amount of MnSO₄· H₂O is changed into 1.5 mol, the amount of FeSO₄· H₂O is changed into 0.2 mol, and 0.1 mol of CoSO₄ is replaced by 0.2 mol of NiSO₄, the rest are the same as in Example I-18.

### Example I-23

Except that in "1) Preparation of positive electrode active material", the amount of MnSO₄· H₂O is changed into 1.4 mol, the amount of FeSO₄· H₂O is changed into 0.3 mol, and the amount of CoSO₄ is changed into 0.2 mol, the rest are the same as in Example I-18.

### Example 1-24

Except that in "1) Preparation of positive electrode active material", 1.3 mol of MnSO₄· H₂O is changed into 1.2 mol, 0.7 mol of FeSO₄· H₂O is changed into 0.5 mol, 0.1 mol of VCl₂ and 0.2 mol of CoSO₄ are also added in the preparation of doped manganese oxalate, the amount of Li₂CO₃ is changed into 0.497 mol, 0.001 mol of Mo(SO₄)₃ is replaced by 0.005 mol of MgSO₄, H₄SiO₄ is replaced by H₂SO₄, and 0.0005 mol of NH₄HF₂ is changed into 0.0025 mol, the rest are the same as in Example I-1.

### Example I-25

Except that in "1) Preparation of positive electrode active material", the amount of MnSO₄· H₂O is changed into 1.0 mol, the amount of FeSO₄· H₂O is changed into 0.7 mol, and the amount of CoSO₄ is changed into 0.2 mol, the rest are the same as in Example I-18.

### Example I-26

Except that in "1) Preparation of positive electrode active material", the amount of MnSO₄· H₂O is changed into 1.4 mol, the amount of FeSO₄· H₂O is changed into 0.3 mol, 0.1 mol of VCl₂ and 0.2 mol of CoSO₄ are also added in the preparation of doped manganese oxalate, the amount of Li₂CO₃ is changed into 0.4825 mol, 0.001 mol of Mo(SO₄)₃ is replaced by 0.005 mol of MgSO₄, the amount of H₄SiO₄ is changed into 0.1 mol, the amount of phosphoric acid is changed into 0.9 mol, and the amount of NH₄HF₂ is changed into 0.04 mol, the rest are the same as in Example I-1.

### Example I-27

Except that in "1) Preparation of positive electrode active material", the amount of MnSO₄· H₂O is changed into 1.4 mol, the amount of FeSO₄· H₂O is changed into 0.3 mol, 0.1 mol of VCl₂ and 0.2 mol of CoSO₄ are also added in the preparation of doped manganese oxalate, the amount of Li₂CO₃ is changed into 0.485 mol, 0.001 mol of Mo(SO₄)₃ is replaced by 0.005 mol of MgSO₄, the amount of H₄SiO₄ is changed into 0.08 mol, the amount of phosphoric acid is changed into 0.92 mol, and the amount of NH₄HF₂ is changed into 0.05 mol, the rest are the same as in Example I-1.

### Examples I-28 to I-41

The stirring rotation speed and temperature in the preparation of doped manganese oxalate, time of grinding and stirring in a sander, and sintering temperature and sintering time are changed, see Table 13 for details.

### Examples I-42 to I-54

The lithium source, manganese source, phosphorus source and sources of doping elements A, B, C and D are changed, see Table 14 for details.

### Example I-55

### (1) Preparation of doped manganese oxalate

1.2 mol of MnSO₄·H₂O and 0.79 mol of FeSO₄·H₂O are mixed thoroughly for 6 hours in a mixer; the mixture is transferred into a reaction kettle, 10 L of deionized water, 2 mol of oxalic acid dihydrate and 0.01 mol of VCl₂ are added thereto, heated to 80°C, and then stirred for 6 hours at a rotation speed of 600 rpm, the reaction is completed (no bubbles are generated), so as to obtain an Fe-doped manganese oxalate suspension; the suspension is filtered, and the resulting filter cake is dried at 120°C and then ground to obtain Fe-doped manganese oxalate particles with a particle size Dv₅₀ of about 100 nm.

### (2) Preparation of doped lithium manganese phosphate

1 mol of the Fe-doped manganese oxalate particles, 0.45 mol of lithium carbonate, 0.05 mol of MgSO₄, an 85% aqueous phosphoric acid solution containing 0.9 mol of phosphoric acid, 0.1 mol of H₄SiO₄, 0.05 mol of NH₄HF₂ and 0.005 mol of sucrose are added into 20 L of deionized water, and the mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles; the particles are sintered at 700°C for 10 hours in a protective atmosphere of nitrogen (90 % v/v) + hydrogen (10 % v/v) to obtain a positive electrode active material. The element content is detected using inductively coupled plasma (ICP) emission spectrometry, and the chemical formula Li_{0.9}Mg_{0.05}Mn_{0.6}Fe_{0.395}V_{0.005}P_{0.9}Si_{0.1}O_{3.9}F_{0.1} is obtained.

### Example I-56

Except that in step (2), lithium carbonate is 0.55 mol, MgSO₄ is 0.001 mol, and NH₄HF₂ is 0.001 mol, the rest are the same as in Preparation example B55; and a positive electrode active material Li_{1.1}Mg_{0.001}Mn_{0.6}Fe_{0.395}V_{0.005}P_{0.9}Si_{0.1}O_{3.998}F_{0.002} is obtained.

### Example I-57

Except that in step (2), MgSO₄ is 0.1 mol, 85% aqueous phosphoric acid solution contains 0.95 mol of phosphoric acid, H₄SiO₄ is 0.05 mol, and NH₄HF₂ is 0.025 mol, the rest are the same as in Preparation example B55; and a positive electrode active material Li_{0.9}Mg_{0.1}Mn_{0.6}Fe_{0.395}V_{0.005}P_{0.95}Si_{0.05}O_{3.95}F_{0.05} is obtained.

### Example I-58

Except that in step (1), MnSO₄·H₂O is 1.998 mol, FeSO₄·H₂O is 0.002 mol and VCl₂ is not used; and except that in step (2), lithium carbonate is 0.475 mol, 85% aqueous phosphoric acid solution contains 0.96 mol of phosphoric acid, H₄SiO₄ is 0.04 mol, and NH₄HF₂ is 0.01 mol; the rest are the same as in Preparation example B55; a positive electrode active material Li_{0.95}Mg_{0.05}Mn_{0.999}Fe_{0.001}P_{0.96}Si_{0.04}O_{3.99}F_{0.01} is obtained.

### Example I-59

Except that in step (1), MnSO₄·H₂O is 1.98 mol, FeSO₄·H₂O is 0.02 mol and VCl₂ is not used; and except that in step (2), lithium carbonate is 0.475 mol, 85% aqueous phosphoric acid solution contains 0.96 mol of phosphoric acid, H₄SiO₄ is 0.04 mol, and NH₄HF₂ is 0.01 mol; the rest are the same as in Preparation example B55; a positive electrode active material Li_{0.95}Mg_{0.05}Mn_{0.99}Fe_{0.01}P_{0.96}Si_{0.04}O_{3.99}F_{0.01} is obtained.

### Example I-60

Except that in step (1), MnSO₄·H₂O is 1.6 mol, FeSO₄·H₂O is 0.4 mol and VCl₂ is not used; and except that in step (2), lithium carbonate is 0.475 mol, 85% aqueous phosphoric acid solution contains 0.96 mol of phosphoric acid, H₄SiO₄ is 0.04 mol, and NH₄HF₂ is 0.01 mol; the rest are the same as in Preparation example B55; a positive electrode active material Li_{0.95}Mg_{0.05}Mn_{0.8}Fe_{0.2}P_{0.96}Si_{0.04}O_{3.99}F_{0.01} is obtained.

### Example I-61

Preparation of Fe, Co and V co-doped manganese oxalate: 689.5 g of manganese carbonate (in MnCO₃, the same below), 455.2 g of ferrous carbonate (in FeCO₃, the same below), 4.6 g of cobalt sulfate (in CoSO₄, the same below) and 4.9 g of vanadium dichloride (in VCl₂, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotation speed of 600 rpm until the reaction is completed (no bubbles are generated), so as to obtain an Fe, Co, V and S co-doped manganese oxalate suspension. Then, the suspension is filtered, and the resulting filter cake is dried at 120°C and then ground, so as to obtain Fe, Co, and V co-doped manganese oxalate dihydrate particles with a median particle size Dv50 of 100 nm.

Preparation of Fe, Co, V and S co-doped lithium manganese phosphate: Manganese oxalate dihydrate particles (1793.4 g) obtained in the previous step, 314 g of lithium carbonate (in Li₂CO₃, the same below), 89.8 g of MgSO₄, 1.6 g of 60% dilute sulfuric acid (in 60% H₂SO₄, the same below) and 1148.9 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 hours, so as to obtain a powder. The above powder is sintered at 700°C for 4 hours in a protective atmosphere of nitrogen (90% by volume) + hydrogen (10% by volume), so as to Li_{0.85}Mg_{0.075}Mn_{0.60}Fe_{0.393}V_{0.004}Co_{0.003}P_{0.999}S_{0.001}O₄.

### Example I-62

Except that MgSO₄ is not added and the mass of lithium carbonate is 425 g, the rest are the same as in Example I-61, so as to obtain Li_{1.15}Mn_{0.60}Fe_{0.393}V_{0.004}Co_{0.003}P_{0.999}S_{0.001}O₄.

### Example I-63

Except that cobalt sulfate, vanadium dichloride and MgSO₄ are not added, the mass of manganese carbonate is 1.149 g, the mass of ferrous carbonate is 1157 g, and the mass of lithium carbonate is 425 g, the rest are the same as in Example I-61, so as to obtain Li_{1.15}Mn_{0.001}Fe_{0.999}P_{0.999}S_{0.001}O₄.

### Example I-64

Except that Mo(SO₄)₃ is not added, lithium carbonate is adjusted to 0.575 mol, MnSO₄· H₂O is adjusted to 0.002 mol, FeSO₄· H₂O is adjusted to 1.998 mol, the aqueous phosphoric acid solution with a phosphoric acid concentration of 85% is adjusted to 0.5 mol, 0.001 mol of H₄SiO₄ is replaced by 0.5 mol of H₂SO₄, manganese oxalate particles are adjusted to 0.875 mol, and NH₄HF₂ is adjust to 0.25 mol, the rest are the same as in Example I-1, so as to obtain Li_{1.15}Mn_{0.001}Fe_{0.999}P_{0.5}S_{0.5}O_{3.5}F_{0.5}.

### Example I-65

Except that MgSO₄ is not added and the amount of Li₂CO₃ is changed to 0.499 mol, the rest are the same as in Example I-12, so as to obtain Li_{0.998}Mn_{0.68}Fe_{0.3}V_{0.02}P_{0.999}N_{0.001}O_{3.999}F_{0.001}.

### Example I-66

Except that HNO₃ is not added and the aqueous phosphoric acid solution with a phosphoric acid concentration of 85% is adjusted to 1 mol, the rest are the same as in Example I-12, so as to obtain Li_{0.997}Mg_{0.001}Mn_{0.68}Fe_{0.3}V_{0.02}PO_{3.999}F_{0.001}.

### Example I-67

Except that NH₄HF₂ is not added, the rest are the same as in Example I-12, so as to obtain Li_{0.997}Mg_{0.001}Mn_{0.68}Fe_{0.3}V_{0.02}P_{0.999}N_{0.001}O₄.

### Example I-68

Except that MgSO₄ and HNO₃ are not added, the amount of Li₂CO₃ is changed to 0.499 mol, and the aqueous phosphoric acid solution with a phosphoric acid concentration of 85% is adjusted to 1 mol, the rest are the same as in Example I-12, so as to obtain Li_{0.998}Mn_{0.68}Fe_{0.3}V_{0.02}PO_{3.999}F_{0.001}.

### Example I-2-1

### 1) Preparation of a positive electrode active material

**Preparation of doped manganese oxalate:** 1.3 mol of MnSO₄· H₂O and 0.7 mol of FeSO₄· H₂O are mixed thoroughly for 6 hours in a mixer. The mixture is transferred into a reaction kettle, and 10 L of deionized water and 2 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain an Fe-doped manganese oxalate suspension. Then, the suspension is filtered, and the resulting filter cake is dried at 120°C and then ground to obtain Fe-doped manganese oxalate particles with a median particle size Dv₅₀ of about 100 nm.

**Preparation of doped lithium manganese phosphate:** 1 mol of the above manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂, 0.05 mol of sucrose and 0.025 mol of ethanediamine are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 hours, so as to obtain particles. The above powder is sintered at 700°C for 10 hours in a protective atmosphere of nitrogen (90% by volume) + hydrogen (10% by volume), so as to obtain Li_{0.994}Mo_{0.001}Mn_{0.65}Fe_{0.35}P_{0.999}Si_{0.001}O_{3.999}F_{0.001} coated with a doped carbon layer.

### 2) Preparation of button battery

The above positive electrode active material, polyvinylidene fluoride (PVDF) and acetylene black in a weight ratio of 90 : 5 : 5 are added into N-methylpyrrolidone (NMP), and stirred in a drying room to make a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate is used as a negative electrode, a solution of 1 mol/L LiPF₆ in ethylene carbonate (EC), diethyl carbonate (DEC) and dimethyl carbonate (DMC) in a volume ratio of 1 : 1 : 1 is used as an electrolyte solution, and the lithium plate and the electrolyte solution are assembled, together with the positive electrode plate prepared above, into a button battery in a button battery box.

### (3) Preparation of full battery

The above positive electrode active material is uniformly mixed with a conductive agent acetylene black and a binder polyvinylidene fluoride (PVDF) in a weight ratio of 92 : 2.5 : 5.5 in an N-methylpyrrolidone solvent system, and the mixture is applied to an aluminum foil, followed by drying and cold pressing, so as to obtain a positive electrode plate. The coating amount is 0.4 g/cm², and the compacted density is 2.4 g/cm³.

Negative electrode active materials artificial graphite and hard carbon, a conductive agent acetylene black, a binder styrene butadiene rubber (SBR) and a thickening agent sodium carboxymethylcellulose (CMC) are uniformly mixed in deionized water in a weight ratio of 90 : 5 : 2 : 2 : 1, and the mixture is applied to a copper foil, followed by drying and cold pressing, so as to obtain a negative electrode plate. The coating amount is 0.2 g/cm², and the compacted density is 1.7 g/cm³.

With a polyethylene (PE) porous polymer film as a separator, the positive electrode plate, the separator and the negative electrode plate are stacked in sequence, such that the separator is located between the positive electrode and the negative electrode to play a role of isolation, and then winding is performed to obtain a bare cell. The bare cell is placed in an outer package, and the same electrolyte solution as that for the preparation of the button battery is injected, followed by encapsulation, so as to obtain a full battery.

### Example I-2-2

Except that in "1) Preparation of positive electrode active material", the amount of high-purity Li₂CO₃ is changed into 0.4885 mol, Mo(SO₄)₃ is replaced by MgSO₄, the amount of FeSO₄· H₂O is changed into 0.68 mol, 0.02 mol of Ti(SO₄)₂ is also added in the preparation of doped manganese oxalate, and H₄SiO₄ is replaced by HNO₃, the rest are the same as in Example 1.

### Comparative example I-1

Preparation of manganese oxalate: 1 mol of MnSO₄· H₂O is added into a reaction kettle, and 10 L of deionized water and 1 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain a manganese oxalate suspension. Then, the suspension is filtered, and the resultant filter cake is dried at 120°C and then ground, so as to obtain manganese oxalate particles with a median particle size Dv₅₀ of about 50 to 200 nm.

Preparation of lithium manganese phosphate: 1 mol of the above manganese oxalate particles, 0.5 mol of lithium carbonate, an 85% aqueous phosphoric acid solution containing 1 mol of phosphoric acid and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 hours, so as to obtain particles. The above powder is sintered at 700°C for 10 hours in a protective atmosphere of nitrogen (90% by volume) + hydrogen (10% by volume), so as to obtain carbon-coated LiMnPO₄.

### Comparative example I-2

Except that in Comparative example I-1, 1 mol of MnSO₄· H₂O is replaced by 0.85 mol of MnSO₄· H₂O and 0.15 mol of FeSO₄· H₂O, which are added into a mixer and thoroughly mixed for 6 hours before adding into a reaction kettle, the rest are the same as in Comparative example I-1.

### Comparative example I-3

Except that in "1) Preparation of positive electrode active material", the amount of MnSO₄· H₂O is changed into 1.9 mol, 0.7 mol of FeSO₄· H₂O is replaced by 0.1 mol of ZnSO₄, the amount of Li₂CO₃ is changed into 0.495 mol, 0.001 mol of Mo(SO₄)₃ is replaced by 0.005 mol of MgSO₄, the amount of phosphoric acid is changed into -1 mol, and no H₄SiO₄ and NH₄HF₂ is added, the rest are the same as in Example I-1.

### Comparative example I-4

Except that in "1) Preparation of positive electrode active material", the amount of MnSO₄· H₂O is changed into 1.2 mol, the amount of FeSO₄· H₂O is changed into 0.8 mol, the amount of Li₂CO₃ is changed into 0.45 mol, 0.001 mol of Mo(SO₄)₃ is replaced by 0.005 mol of Nb₂(SO₄)₅, 0.999 mol of phosphoric acid is changed into -1 mol, 0.0005 mol of NH₄HF₂ is changed into 0.025 mol, and no H₄SiO₄ is added, the rest are the same as in Example I-1.

### Comparative example I-5

Except that in "1) Preparation of positive electrode active material", the amount of MnSO₄· H₂O is changed into 1.4 mol, the amount of FeSO₄· H₂O is changed into 0.6 mol, the amount of Li₂CO₃ is changed into 0.38 mol, and 0.001 mol of Mo(SO₄)₃ is replaced by 0.12 mol of MgSO₄, the rest are the same as in Example I-1.

### Comparative example I-6

Except that in "1) Preparation of positive electrode active material", the amount of MnSO₄· H₂O is changed into 0.8 mol, 0.7 mol of FeSO₄· H₂O is changed into 1.2 mol of ZnSO₄, the amount of Li₂CO₃ is changed into 0.499 mol, and 0.001 mol of Mo(SO₄)₃ is replaced by 0.001 mol of MgSO₄, the rest are the same as in Example I-1.

### Comparative example I-7

Except that in "1) Preparation of positive electrode active material", the amount of MnSO₄· H₂O is changed into 1.4 mol, the amount of FeSO₄· H₂O is changed into 0.6 mol, the amount of Li₂CO₃ is changed into 0.534 mol, 0.001 mol of Mo(SO₄)₃ is replaced by 0.001 mol of MgSO₄, the amount of phosphoric acid is changed into 0.88 mol, the amount of H₄SiO₄ is changed into 0.12 mol, and the amount of NH₄HF₂ is changed into 0.025 mol, the rest are the same as in Example I-1.

### Comparative example I-8

Except that in "1) Preparation of positive electrode active material", the amount of MnSO₄· H₂O is changed into 1.2 mol, the amount of FeSO₄· H₂O is changed into 0.8 mol, the amount of Li₂CO₃ is changed into 0.474 mol, 0.001 mol of Mo(SO₄)₃ is replaced by 0.001 mol of MgSO₄, the amount of phosphoric acid is changed into 0.93 mol, the amount of H₄SiO₄ is changed into 0.07 mol, and the amount of NH₄HF₂ is changed into 0.06 mol, the rest are the same as in Example I-1.

### [Preparation of double-coated positive electrode active material and battery]

### Example II-1-1

### (1) Preparation of a positive electrode active material

### Preparation of co-doped lithium manganese phosphate inner core

Preparation of Fe, Co and V co-doped manganese oxalate: 689.5 g of manganese carbonate (in MnCO₃, the same below), 455.2 g of ferrous carbonate (in FeCO₃, the same below), 4.6 g of cobalt sulfate (in CoSO₄, the same below) and 4.9 g of vanadium dichloride (in VCl₂, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotation speed of 600 rpm until the reaction is completed (no bubbles are generated), so as to obtain an Fe, Co, V and S co-doped manganese oxalate suspension. Then, the suspension is filtered, and the resulting filter cake is dried at 120°C and then ground, so as to obtain Fe, Co, and V co-doped manganese oxalate dihydrate particles with a median particle size Dv50 of 100 nm.

Preparation of Fe, Co, V and S co-doped lithium manganese phosphate: Manganese oxalate dihydrate particles (1793.4 g) obtained in the previous step, 369.0 g of lithium carbonate (in Li₂CO₃, the same below), 1.6 g of 60% dilute sulfuric acid (in 60% H₂SO₄, the same below) and 1148.9 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 hours, so as to obtain a powder. The above powder is sintered at 700°C for 4 hours in a protective atmosphere of nitrogen (90% by volume) + hydrogen (10% by volume), so as to obtain 1572.1 g of Fe, Co, V and S co-doped lithium manganese phosphate.

### Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate and 1.3 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension of Li₂FeP₂O₇, which is filtered, washed with deionized water, and dried at 120°C for 4 hours to obtain a powder. The powder is sintered at 650°C under a nitrogen atmosphere for 8 h, cooled naturally to room temperature and then ground to obtain a Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate and 74.6 g of sucrose (in C₁₂H₂₂O₁₁, the same below) are dissolved in 150 ml of deionized water to obtain a mixture, and then stirring is performed for 6 hours such that the mixture is fully reacted. Then, the reacted solution is heated to 120°C and kept at this temperature for 6 hours to obtain a suspension of LiFePO₄.

### Coating

1572.1 g of the above Fe, Co, V and S co-doped lithium manganese phosphate and 15.72 g of the above lithium iron pyrophosphate (Li₂FeP₂O₇) powder are added into the suspension of lithium iron phosphate (LiFePO₄) prepared in the previous step, stirred and mixed uniformly, then transferred to a vacuum oven and dried at 150°C for 6 h. The resulting product is then dispersed by sanding. After dispersion, the obtained product is sintered at 700°C under a nitrogen atmosphere for 6 hours to obtain the target product of double-coated lithium manganese phosphate.

### (2) Preparation of positive electrode plate

The double-coated lithium manganese phosphate positive electrode active material prepared above, a conductive agent acetylene black and a binder polyvinylidene fluoride (PVDF) are added to N-methylpyrrolidone (NMP) in a weight ratio of 92 : 2.5 : 5.5, followed by stirring and uniformly mixing to obtain a positive electrode slurry. The positive electrode slurry is uniformly coated onto an aluminum foil in 0.280 g/1540.25 mm², followed by drying, cold pressing, and slitting to obtain the positive electrode plate.

### (3) Preparation of negative electrode plate

Negative electrode active materials artificial graphite and hard carbon, a conductive agent acetylene black, a binder styrene butadiene rubber (SBR) and a thickening agent sodium carboxymethylcellulose (CMC) are dissolved in deionized water in a weight ratio of 90 : 5 : 2 : 2 : 1, followed by stirring and uniformly mixing to prepare a negative electrode slurry. The negative electrode slurry is uniformly coated onto a negative electrode current collector copper foil in 0.117 g/1540.25 mm², followed by drying, cold pressing, and slitting to obtain the negative electrode plate.

### (4) Preparation of electrolyte solution

In an argon atmosphere glove box (H₂O < 0.1 ppm, and O₂ < 0.1 ppm), the organic solvent ethylene carbonate (EC)/ethyl methyl carbonate (EMC) is mixed uniformly by a volume ratio of 3/7, and 12.5% by weight (on the basis of the weight of the organic solvent) of LiPF₆ is dissolved in the above organic solvent and stirred uniformly to obtain the electrolyte solution.

### (5) Separator

A commercially available PP-PE copolymer microporous film having a thickness of 20 µm and an average pore size of 80 nm (Model 20, from Zhuogao Electronic Technology Co. Ltd.) is used.

### (6) Preparation of full battery

The above obtained positive electrode plate, separator and negative electrode plate are stacked in sequence, such that the separator is located between the positive electrode plate and the negative electrode plate to function for isolation, and are then wound to obtain a bare cell. The bare cell is placed in an outer package, injected with the above electrolyte solution and packaged to obtain a full battery.

### (7) Preparation of button battery

The double-coated lithium manganese phosphate positive electrode active material prepared above, PVDF and acetylene black are added into NMP in the weight ratio of 90 : 5 : 5, and stirred in a drying room to make a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate is used as a negative electrode, a solution of 1 mol/L LiPF₆ in ethylene carbonate (EC) + diethyl carbonate (DEC) + dimethyl carbonate (DMC) in a volume ratio of 1 : 1 : 1 is used as an electrolyte solution, and the lithium plate and the electrolyte solution are assembled, together with the positive electrode plate prepared above, into a button battery in a button battery box.

### Examples II-1-2 to II-1-6

In the preparation process of the co-doped lithium manganese phosphate inner core, except that vanadium dichloride and cobalt sulfate are not used, and 463.4 g of ferrous carbonate, 1.6 g of 60% dilute sulfuric acid, 1148.9 g of ammonium dihydrogen phosphate and 369.0 g of lithium carbonate are used, the preparation conditions of the lithium manganese phosphate inner core in Examples II-1-2 to II-1-6 are the same as in Example II-1-1.

In addition, in the preparation process of lithium iron pyrophosphate and lithium iron phosphate and in the process of coating the first coating layer and the second coating layer, except that the raw materials used are adjusted correspondingly according to the ratio of the coating amount shown in Table 1 to the coating amount corresponding to Example II-1-1, such that the amount of Li₂FeP₂O₇/LiFePO₄ in Examples II-1-2 to II-1-6 is 12.6 g/37.7 g, 15.7 g/47.1 g, 18.8 g/56.5 g, 22.0/66.0 g and 25.1 g/75.4 g, respectively, the amount of sucrose in the Examples II-1-2 to II-1-6 is 37.3 g, other conditions are the same as in Example II-1-1.

### Examples II-1-7 to II-1-10

Except that the amounts of sucrose are 74.6 g, 149.1 g, 186.4 g and 223.7 g, respectively, such that the corresponding coating amounts of the carbon layer as the second coating layer are 31.4 g, 62.9 g, 78.6 g and 94.3 g, respectively, the conditions of Examples II-1-7 to II-1-10 are the same as in Example II-1-3.

### Examples II-1-11 to II-1-14

In the preparation process of lithium iron pyrophosphate and lithium iron phosphate, except that the amounts of various raw materials are adjusted correspondingly according to the coating amount shown in Table 1, such that the amount of Li₂FeP₂O₇/LiFePO₄ is 23.6 g/39.3 g, 31.4 g/31.4 g, 39.3 g/23.6 g and 47.2 g/15.7 g, respectively, the conditions of Examples II-1-11 to **II**-1-14 are the same as in Example II-1-7.

### Example II-1-15

In the preparation process of co-doped lithium manganese phosphate inner core, except that iron ferrous carbonate is replaced by 492.80 g of ZnCO₃, the conditions of Example II-1-15 are the same as in Example II-1-14.

### Examples II-1-16 to II-1-18

Except that in the preparation process of co-doped lithium manganese phosphate inner core of Example II-1-16, ferrous carbonate is replaced by 466.4 g of NiCO₃, 5.0 g of zinc carbonate and 7.2 g of titanium sulfate; except that in the preparation process of co-doped lithium manganese phosphate inner core of Example II-1-17, 455.2 g of ferrous carbonate and 8.5 g of vanadium dichloride are used; and except that in the preparation process of co-doped lithium manganese phosphate inner core of Example II-1-18, 455.2 g of ferrous carbonate,4.9 g of vanadium dichloride and 2.5 g of magnesium carbonate are used, the conditions of Examples II-1-17 to 1-19 are the same as in Example II-1-7.

### Examples II-1-19 to II-1-20

Except that in the preparation process of co-doped lithium manganese phosphate inner core of Example II-1-19, 369.4 g of lithium carbonate is used, and dilute sulphuric acid is replaced by 1.05 g of 60% dilute nitric acid; and except that in the preparation process of co-doped lithium manganese phosphate inner core of Example II-1-20, 369.7 g of lithium carbonate is used, and dilute sulphuric acid is replaced by 0.78 g of siliceous acid, the conditions of Examples II-1-19 to II-1-20 are the same as in Example II-1-18.

### Examples II-1-21 to II-1-22

Except that in the preparation process of co-doped lithium manganese phosphate inner core of Example II-1-21, 632.0 g of manganese carbonate, 463.30 g of ferrous carbonate, 30.5 g of vanadium dichloride, 21.0 g of magnesium carbonate and 0.78 g of siliceous acid are used; and except that in the preparation process of co-doped lithium manganese phosphate inner core of Example II-1-22, 746.9 g of manganese carbonate, 289.6 g of ferrous carbonate, 60.9 g of vanadium dichloride, 42.1 g of magnesium carbonate and 0.78 g of siliceous acid are used, the conditions of Examples II-1-21 to II-1-22 are the same as in Example II-1-20.

### Examples II-1-23 to II-1-24

Except that in the preparation process of co-doped lithium manganese phosphate inner core of Example II-1-23, 804.6 g of manganese carbonate, 231.7 g of ferrous carbonate, 1156.2 g of ammonium dihydrogen phosphate, 1.2 g of boric acid (with a mass fraction of 99.5%) and 370.8 g of lithium carbonate are used; and except that in the preparation process of co-doped lithium manganese phosphate inner core of Example II-1-24, 862.1 g of manganese carbonate, 173.8 g of ferrous carbonate, 1155.1 g of ammonium dihydrogen phosphate, 1.86 g of boric acid ( with a mass fraction of 99.5%) and 371.6 g of lithium carbonate are used, the conditions of Examples II-1-23 to II-1-24 are the same as in Example II-1-22.

### Example II-1-25

Except that in the preparation process of co-doped lithium manganese phosphate inner core of Example II-1-25, 370.1 g of manganese carbonate, 1.56 g of siliceous acid and 1147.7 g of ammonium dihydrogen phosphate are used, the conditions of Example II-1-25 are the same as in Example II-1-20.

### Example II-1-26

Except that in the preparation process of co-doped lithium manganese phosphate inner core of Example II-1-26, 368.3 g of lithium carbonate, 4.9 g of 60% dilute sulfuric acid, 919.6 g of manganese carbonate, 224.8 g of ferrous carbonate, 3.7 g of vanadium dichloride, 2.5 g of magnesium carbonate and 1146.8 g of ammonium dihydrogen phosphate are used, the conditions of Example II-1-26 are the same as in Example II-1-20.

### Example II-1-27

Except that in the preparation process of co-doped lithium manganese phosphate inner core of Example II-1-27, 367.9 g of manganese carbonate, 6.5 g of 60% dilute sulfuric acid and 1145.4 g of ammonium dihydrogen phosphate are used, the conditions of Example II-1-27 are the same as in Example II-1-20.

### Examples II-1-28 to II-1-33

Except that in the preparation process of co-doped lithium manganese phosphate inner core of Examples II-1-28 to II-1-33, 1034.5 g of manganese carbonate, 108.9 g of ferrous carbonate, 3.7 g of vanadium dichloride and 2.5 g of magnesium carbonate are used; the amounts of lithium carbonate are respectively: 367.6 g, 367.2 g, 366.8 g, 366.4 g, 366.0 g and 332.4 g; the amounts of ammonium dihydrogen phosphate are respectively: 1144.5 g, 1143.4 g, 1142.2 g, 1141.1 g, 1139.9 g and 1138.8 g; and the amounts of 60% dilute sulfuric acid are respectively: 8.2 g, 9.8 g, 11.4 g, 13.1 g, 14.7 g and 16.3 g, the conditions of Examples II-1-28 to II-1-33 are the same as in Example II-1-20.

### Example II-1-34

### Preparation of the inner core Li_{1.1}Mn_{0.6}Fe_{0.393}Mg_{0.007}P_{0.9}Si_{0.1}O₄:

**Preparation of Fe and Mg co-doped manganese oxalate:** 689.5 g of manganese carbonate (in MnCO₃, the same below), 455.2 g of ferrous carbonate (in FeCO₃, the same below) and 5.90 g of magnesium carbonate (in MgCO₃, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotation speed of 600 rpm until the reaction is completed (no bubbles are generated), so as to obtain an Fe and Mg co-doped manganese oxalate suspension. Then, the suspension is filtered, and the resulting filter cake is dried at 120°C and then ground, so as to obtain Fe and Mg co-doped manganese oxalate dihydrate particles with a median particle size Dv50 of 100 nm.

**Preparation of Fe, Mg and Si co-doped lithium manganese phosphate:** Manganese oxalate dihydrate particles (1791.3 g) obtained in the previous step, 406.3 g of lithium carbonate (in Li₂CO₃, the same below), 7.8 g of siliceous acid (in H₂SiO₃, the same below) and 1035.0 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain 1574.0 g of Fe, Mg and Si co-doped lithium manganese phosphate.

Other conditions refer to Example II-1-1.

### Example II-1-35

Preparation of the inner core LiMn_{0.50}Fe_{0.50}P_{0.995}N_{0.005}O₄.

**Preparation of Fe-doped manganese oxalate:** 574.7 g of manganese carbonate (in MnCO₃, the same below) and 579.27 g of ferrous carbonate (in FeCO₃, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotation speed of 600 rpm until the reaction is completed (no bubbles are generated), so as to obtain an Fe-doped manganese oxalate suspension. Then, the suspension is filtered, and the resulting filter cake is dried at 120°C and then ground, so as to obtain Fe-doped manganese oxalate dihydrate particles with a median particle size Dv50 of 100 nm.

**Preparation of Fe and N co-doped lithium manganese phosphate:** Manganese oxalate dihydrate particles (1794.4 g) obtained in the previous step, 369.4 g of lithium carbonate (in Li₂CO₃, the same below), 5.25 g of dilute nitric acid (in 60% HNO₃, the same below) and 1144.3 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain 1572.2 g of Fe and N co-doped lithium manganese phosphate.

Other conditions refer to **Example II-1-**1**.**

### Example 11-1-36

Except that in the preparation of inner core LiMn_{0.909}Fe_{0.091}P_{0.99}N_{0.01}O₄, 1044.6 g of manganese carbonate, 1138.5 g of ammonium dihydrogen phosphate and 369.4 g of lithium carbonate are used, and 105.4 g of ferrous carbonate and 10.5 g of dilute nitric acid (in 60% HNO₃, the same below) are additionally added, the rest are the same as in **Example II-1-**1.

### Example II-1-37

Except that in the preparation of inner core LiMn_{0.091}Fe_{0.909}P_{0.995}N_{0.005}O₄, 104.5 g of manganese carbonate, 1138.5 g of ammonium dihydrogen phosphate and 371.3 g of lithium carbonate are used, and 1052.8 g of ferrous carbonate and 5.25 g of dilute nitric acid (in 60% HNO₃, the same below) are additionally added, the rest are the same as in **Example II-1-**1**.**

### Example II-1-38

In the preparation process of lithium iron pyrophosphate and lithium iron phosphate and in the process of coating the first coating layer and the second coating layer, except that the raw materials used are adjusted correspondingly according to the ratio of the coating amount shown in Table 4 to the coating amount corresponding to **Example II-1**-1, such that the amount of Li₂FeP₂O₇/LiFePO₄ is 62.9 g/47.1 g, respectively, other conditions are the same as in **Example II-1**-1**.**

### Example II-1-39

In the preparation process of silver pyrophosphate, 463.4 of silver oxide (in Ag₂O, the same below) and 230.6 phosphoric acid (in 85% H₃PO₄, the same below) are mixed thoroughly. It is heated to 450°C while stirring continuously for 2 hours such that the reaction mixture is fully reacted. Then the reacted solution is kept at 450°C for 4 hours to obtain a viscous paste containing Ag₄P₂O₇, which finally becomes a solid; the solid is washed with deionized water, and the resulting product is ground in a ball mill containing ethanol for 4 h, and the resulting product is dried under an infrared lamp to obtain a Ag₄P₂O₇ powder. The rest are the same as in **Example II-1**-1.

### Example II-1-40

Except in the process of preparing Fe, Co, V and S co-doped lithium manganese phosphate, the powder is sintered at 650°C for 43.5 hours in the protective atmosphere of nitrogen (90% by volume) + hydrogen (10% by volume), the rest are the same as in **Example 11-1-**21.

### Example II-1-41

### Preparation of the inner core LiMn_{0.999}Fe_{0.001}P_{0.995}N_{0.005}O₄

**Preparation of Fe-doped manganese oxalate:** 1148.0 g of manganese carbonate (in MnCO₃, the same below) and 11.58 g of ferrous carbonate (in FeCO₃, the same below) are mixed thoroughly for 6 hours in a mixer. The mixture is transferred into a reaction kettle, and 5 L of deionized water and 1260.6 g of oxalic acid dihydrate (in C₂H₂O₄.2H₂O, the same below) are added. The reaction kettle is heated to 80°C, stirring is performed for 6 hours at a rotation speed of 600 rpm until the reaction is completed (no bubbles are generated), so as to obtain an Fe-doped manganese oxalate suspension. Then, the suspension is filtered, and the resulting filter cake is dried at 120°C and then ground, so as to obtain Fe-doped manganese oxalate dihydrate particles with a median particle size Dv50 of 100 nm.

**Preparation of Fe and N co-doped lithium manganese phosphate:** Manganese oxalate dihydrate particles (1789.9 g) obtained in the previous step, 369.4 g of lithium carbonate (in Li₂CO₃, the same below), 5.25 g of dilute nitric acid (in 60% HNO₃, the same below) and 1144.3 g of ammonium dihydrogen phosphate (in NH₄H₂PO₄, the same below) are added to 20 L of deionized water, and the mixture is stirred for 10 hours for mixing uniformly, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain 1567.7 g of Fe and N co-doped lithium manganese phosphate.

Other conditions of Example II-1-41 refer to Example II-1-1.

### Example II-2-1

Except that in the preparation process of lithium iron pyrophosphate (Li₂FeP₂O₇), in the powder sintering step, the sintering temperature is 550°C and the sintering time is 1 h to control the crystallinity of Li₂FeP₂O₇ to be 30%; and except in the preparation process of lithium iron phosphate (LiFePO₄), in the coating sintering step, the sintering temperature is 650°C and the sintering time is 2 h to control the crystallinity of LiFePO₄ to be 30%, other conditions are the same as in Example II-1-1.

### Example II-2-2

Except that in the preparation process of lithium iron pyrophosphate (Li₂FeP₂O₇), in the powder sintering step, the sintering temperature is 550°C and the sintering time is 2 h to control the crystallinity of Li₂FeP₂O₇ to be 50%; and except in the preparation process of lithium iron phosphate (LiFePO₄), in the coating sintering step, the sintering temperature is 650°C and the sintering time is 3 h to control the crystallinity of LiFePO₄ to be 50%, other conditions are the same as in Example II-1-1.

### Example II-2-3

Except that in the preparation process of lithium iron pyrophosphate (Li₂FeP₂O₇), in the powder sintering step, the sintering temperature is 600°C and the sintering time is 3 h to control the crystallinity of Li₂FeP₂O₇ to be 70%; and except in the preparation process of lithium iron phosphate (LiFePO₄), in the coating sintering step, the sintering temperature is 650°C and the sintering time is 4 h to control the crystallinity of LiFePO₄ to be 70%, other conditions are the same as in Example II-1-1.

### Example 11-2-4

Except that in the preparation process of lithium iron pyrophosphate (Li₂FeP₂O₇), in the powder sintering step, the sintering temperature is 650°C and the sintering time is 4 h to control the crystallinity of Li₂FeP₂O₇ to be 100%; and except in the preparation process of lithium iron phosphate (LiFePO₄), in the coating sintering step, the sintering temperature is 700°C and the sintering time is 6 h to control the crystallinity of LiFePO₄ to be 100%, other conditions are the same as in Example II-1-1.

### Examples 11-3-1 to II-3-12

Except that in the preparation process of Fe, Co, and V co-doped manganese oxalate particles, the heating temperature/stirring time in the reaction kettle of Example II-3-1 is respectively 60°C/120 min; The heating temperature/stirring time in the reaction kettle of Example II-3-2 is respectively 70°C/120 min; The heating temperature/stirring time in the reaction kettle of Example II-3-3 is respectively 80°C/120 min; The heating temperature/stirring time in the reaction kettle of Example II-3-4 is respectively 90°C/120 min; The heating temperature/stirring time in the reaction kettle of Example II-3-5 is respectively 100°C/120 min; The heating temperature/stirring time in the reaction kettle of Example II-3-6 is respectively 110°C/120 min; The heating temperature/stirring time in the reaction kettle of Example II-3-7 is respectively 120°C/120 min; The heating temperature/stirring time in the reaction kettle of Example II-3-8 is respectively 130°C/120 min; The heating temperature/stirring time in the reaction kettle of Example II-3-9 is respectively 100°C/60 min; The heating temperature/stirring time in the reaction kettle of Example II-3-10 is respectively 100°C/90 min; The heating temperature/stirring time in the reaction kettle of Example II-3-11 is respectively 100°C/150 min; Except that the heating temperature/stirring time in the reaction kettle of Example II-3-12 is respectively 100°C/180 min, other conditions of Examples II-3-1 to II-3-12 are the same as in Example II-1-1.

### Examples 11-4-1 to II-4-7

**Examples 11-4-1 to II-4-4:** Except that in the preparation process of lithium iron pyrophosphate (Li₂FeP₂O₇), in the drying step, the drying temperature/drying time is 100°C/4 h, 150°C/6 h, 200°C/6 h and 200°C/6 h, respectively; and except that in the preparation process of lithium iron pyrophosphate (Li₂FeP₂O₇), in the sintering step, the sintering temperature and sintering time are 700°C/6 h, 700°C/6 h, 700°C/6 h and 600°C/6 h, respectively, other conditions are the same as in Example **II**-1-7.

**Examples II-4-5 to II-4-7:** Except that in the coating process, the drying temperature/drying time in the drying step is 150°C/6 h, 150°C/6 h and 150°C/6 h, respectively; and except that in the coating process, the sintering temperature and sintering time in the sintering step are 600°C/4 h, 600°C/6 h and 800°C/8 h, respectively, other conditions are the same as in Example **II**-1-12.

### Example II-5-1:

**(1) Preparation of co-doped lithium manganese phosphate inner core:** It is the same as "Preparation of co-doped lithium manganese phosphate inner core" in Example II-1-1.
**(2) Preparation of lithium iron pyrophosphate and suspension containing aluminum oxide and sucrose:**
   **Preparation of lithium iron pyrophosphate powder:** 4.77 g of lithium carbonate, 7.47 g of ferrous carbonate, 14.84 g of ammonium dihydrogen phosphate and 1.3 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension of Li₂FeP₂O₇, which is filtered, washed with deionized water, and dried at 120°C for 4 hours to obtain a powder. The powder is sintered at 650°C under a nitrogen atmosphere for 8 h, cooled naturally to room temperature and then ground to obtain a Li₂FeP₂O₇ powder.
   **Preparation of the suspension containing aluminum oxide and sucrose:** 47.1 g of nano-Al₂O₃ (with a particle size of 20 nm) and 74.6 g of sucrose (in C₁₂H₂₂O₁₁, the same below) are dissolved in 1500 ml of deionized water, and then stirred for 6 hours such that the mixture is fully reacted. Then, the resulting solution is heated to 120°C and kept at this temperature for 6 hours to obtain a suspension containing aluminum oxide and sucrose.
**(3) Coating**
   1572.1 g of the above Fe, Co, V and S co-doped lithium manganese phosphate and 15.72 g of the above lithium iron pyrophosphate (Li₂FeP₂O₇) powder are added into the suspension containing aluminum oxide and sucrose prepared in the previous step, stirred and mixed uniformly, then transferred to a vacuum oven and dried at 150°C for 6 h. The resulting product is then dispersed by sanding. After dispersion, the obtained product is sintered at 700°C under a nitrogen atmosphere for 6 hours to obtain the target product of double-coated lithium manganese phosphate.

### Example 11-5-2

In the preparation process of the co-doped lithium manganese phosphate inner core, except that vanadium dichloride and cobalt sulfate are not used, and 463.4 g of ferrous carbonate, 1.6 g of 60% dilute sulfuric acid, 1148.9 g of ammonium dihydrogen phosphate and 369.0 g of lithium carbonate are used, the preparation conditions of the lithium manganese phosphate inner core in Example II-5-2 are the same as in Example II-5-1.

In addition, in the preparation process of lithium iron pyrophosphate and the suspension containing aluminum oxide and sucrose and in the process of coating the first coating layer and the second coating layer, except that the raw materials used are adjusted correspondingly according to the ratio of the coating amount shown in Table 24 to the coating amount corresponding to Example II-5-1, such that the amount of Li₂FeP₂O₇/Al₂O₃ in Example II-5-2 is 12.6 g/37.68 g, respectively, the amount of sucrose in the Example II-5-2 is 37.3 g, other conditions are the same as in Example II-5-1.

### Example II-5-3

### Step S1: Preparation of doped manganese oxalate

1.3 mol of MnSO₄·H₂O and 0.7 mol of FeSO₄·H₂O are mixed thoroughly for 6 hours in a mixer; the mixture is transferred into a reaction kettle, 10 L of deionized water and 2 mol of oxalic acid dihydrate are added thereto, heated to 80°C, and then stirred for 6 hours at a rotation speed of 600 rpm, the reaction is completed (no bubbles are generated), so as to obtain an Fe-doped manganese oxalate suspension; the suspension is filtered, and the resulting filter cake is dried at 120°C and then ground to obtain Fe-doped manganese oxalate particles with a particle size Dᵥ50 of about 100 nm.

### Step S2: Preparation of inner core containing Li_{0.994}Mo_{0.001}Mn_{0.65}Fe_{0.35}P_{0.999}Si_{0.001}O_{3.999}F_{0.001}

1 mol of the Fe-doped manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water, and the mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles; the particles are sintered at 700°C for 10 hours in a protective atmosphere of nitrogen (90 % v/v) + hydrogen (10 % v/v) to obtain a inner core material. The element content of the inner core material is detected using inductively coupled plasma (ICP) emission spectrometry, and the chemical formula of the inner core is obtained as shown above.

### Step S3: Preparation of lithium iron pyrophosphate powder

4.77 g of lithium carbonate, 7.47 g of ferrous carbonate, 14.84 g of ammonium dihydrogen phosphate and 1.3 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension of Li₂FeP₂O₇, which is filtered, washed with deionized water, and dried at 120°C for 4 hours to obtain a powder. The powder is sintered at 650°C under a nitrogen atmosphere for 8 h, cooled naturally to room temperature and then ground to obtain a Li₂FeP₂O₇ powder.

### Step S4: Preparation of the suspension containing aluminum oxide and sucrose

4.71 g of nano-Al₂O₃ (with a particle size of 20 nm) and 3.73 g of sucrose (in C₁₂H₂₂O₁₁, the same below) are dissolved in 150 ml of deionized water, and then stirred for 6 hours such that the mixture is fully reacted. The mixture is then heated to 120°C and kept at this temperature for 6 hours to obtain a suspension containing aluminum oxide and sucrose.

### Step S5: Preparation of two-layer coating

157.21 g of the above inner core and 1.57 g of the above lithium iron pyrophosphate (Li₂FeP₂O₇) powder are added into the suspension containing aluminum oxide and sucrose prepared in the previous step, stirred and mixed uniformly, then transferred to a vacuum oven and dried at 150°C for 6 h, then the resulting product is dispersed by sanding; after dispersion, the product is sintered at 700°C for 6 hours under a nitrogen atmosphere to obtain double-coated lithium manganese phosphate.

### Example II-5-4

Except that in the preparation of lithium iron pyrophosphate (Li₂FeP₂O₇) powder of step S3, in the powder sintering step, the sintering temperature is 550°C and the sintering time is 1 h to control the crystallinity of Li₂FeP₂O₇ to be 30%, other conditions are the same as in Example II-5-3.

### Example II-5-5

Preparation of doped manganese oxalate: 1.3 mol of MnSO₄· H₂O and 0.7 mol of FeSO₄· H₂O are mixed thoroughly for 6 hours in a mixer. The mixture is transferred into a reaction kettle, and 10 L of deionized water and 2 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain an Fe-doped manganese oxalate suspension. Then, the suspension is filtered, and the resultant filter cake is dried at 120°C and then ground, so as to obtain Fe-doped manganese oxalate particles with a median particle size Dv₅₀ of about 100 nm.

Preparation of inner core: 1 mol of the above manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles. The above powder is sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}, i.e., inner core. The element content may be tested using inductively coupled plasma (ICP) emission spectroscopy.

Coating of the coating layer: Aminoethylaminopropyl polydimethylsiloxane is dissolved in xylene to form a coating solution, then the prepared inner core is added thereto and stirred evenly to form a mixed slurry, then the mixed slurry is placed in a wet coating machine, and dried under a nitrogen atmosphere at 120°C for 4 h, so as to obtain a positive electrode active material.The mass content percentage of the polar functional groups (i.e., - CH₂NH₂ and -CH₂-) of aminoethylaminopropyl polydimethylsiloxane is 12%, the number average molecular weight is 3700, and the coating amount is 1% by weight, based on the weight of the prepared inner core.

See Example II-1-1 for the preparation of button battery and full battery.

### Example II-5-6

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride are mixed thoroughly for 6 hours in a mixer. The resulting mixture is then transferred into a reaction kettle, 5 L of deionized water and 1260.6 g of oxalic acid dihydrate are added, heated to 80°C, then stirred thoroughly for 6 hours at a rotation speed of 500 rpm and mixed uniformly until the reaction is completed (no bubbles are generated), so as to obtain an Fe, Co, and V co-doped manganese oxalate suspension. Then, the suspension is filtered, dried at 120°C and then sanded, so as to obtain manganese oxalate particles with a particle size of 100 nm.

### Step S2: Preparation of inner core Li_{0.997}Mn_{0.60}Fe_{0.393}V_{0.004}Co₀.₀₀₃P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid are added to 20 L of deionized water, fully stirred, and mixed uniformly and reacted at 80°C for 10 hours to obtain a slurry. The slurry is transferred into a spray drying apparatus for spray-drying granulation, and dried at a temperature of at 250°C to obtain a powder. In a protective atmosphere (90% of nitrogen and 10% of hydrogen), the powder is sintered in a roller kiln at 700°C for 4 hours to obtain the above inner core material.

### Step S3: Preparation of the first coating layer suspension

Preparation of a Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 hours to obtain a solution, and then the solution is heated to 80°C and kept at this temperature for 4 hours to obtain a first coating layer suspension.

### Step S4: Coating of the first coating layer

1571.9 g of doped lithium manganese phosphate inner core material obtained in step S2 is added to the first coating layer suspension (the content of the coating material is 15.7 g) obtained in step S3, fully stirred and mixed for 6 h; after uniformly mixing, same is transferred in an oven at 120°C and dried for 6 h, and then sintered at 650°C for 6 hours to obtain a pyrophosphate coated material.

### Step S5: Preparation of the second coating layer suspension

3.7 g of lithium carbonate, 11.6 g of ferrous carbonate, 11.5 g of ammonium dihydrogen phosphate and 12.6 g of oxalic acid dihydrate are dissolved in 1500 mL of deionized water, then same is stirred and reacted for 6 hours to obtain a solution, and then the solution is heated to 120°C and kept at this temperature for 6 hours to obtain a second coating layer suspension.

### Step S6: Coating of the second coating layer

1586.8 g of the pyrophosphate coated material obtained in step S4 is added to the second coating layer suspension (the content of the coating material is 47.1 g) obtained in step S5, fully stirred and mixed for 6 h; after uniformly mixing, same is transferred in an oven at 120°C and dried for 6 h, and then sintered at 700°C for 8 hours to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, same is transferred in an oven at 150°C and dried for 6 h, and then sintered at 700°C for 10 hours to obtain a third-layer coated material.

### Step S9: Coating of the fourth coating layer

Hydroxy-terminated polydimethylsiloxane is dissolved in xylene to form a fourth coating solution, then the three-layer coated material obtained in step S8 is added thereto and stirred evenly to form a mixed slurry, then the mixed slurry is placed in a wet coating machine, and dried under a nitrogen atmosphere at 120°C for 4 h, so as to obtain a four-layer coated positive electrode active material. The mass content percentage of the polar functional groups (i.e., -OH-) of hydroxy-terminated polydimethylsiloxane is 3.4%, the number average molecular weight is 1000, and the coating amount is 1% by weight, based on the weight of the three-layer coated material obtained in step S8.

### See Example for the preparation of button battery and full battery.

### Example II-5-7

Preparation of doped manganese oxalate: 1.3 mol of MnSO₄· H₂O and 0.7 mol of FeSO₄· H₂O are mixed thoroughly for 6 hours in a mixer. The mixture is transferred into a reaction kettle, and 10 L of deionized water and 2 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain an Fe-doped manganese oxalate suspension. Then, the suspension is filtered, and the resultant filter cake is dried at 120°C and then ground, so as to obtain Fe-doped manganese oxalate particles with a median particle size Dv₅₀ of about 100 nm.

Preparation of inner core: 1 mol of the above manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles. The above powder is sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}, i.e., inner core. The element content may be tested using inductively coupled plasma (ICP) emission spectroscopy.

Coating of the coating layer: Carboxymethyl chitosan is dissolved in deionized water to form a coating solution, then the inner core material is added thereto and stirred evenly to form a mixed slurry, then the mixed slurry is placed in a wet coating machine, and dried under a nitrogen atmosphere at 120°C for 4 h, so as to obtain a positive electrode active material.The mass content percentage of substituents connected to sugar units in carboxymethyl chitosan is 60.2%, the number average molecular weight is 26000, and the coating amount is 1% by weight, based on the weight of the inner core.

See Example for the preparation of button battery and full battery.

### Comparative example 11-1

**Preparation of manganese oxalate:** 1149.3 g of manganese carbonate is added into a reaction kettle, and 5 L of deionized water and 1260.6 g of oxalic acid dihydrate (in C₂H₂O₄•2H₂O, the same below) are added. The reaction kettle is heated to 80°C, stirring is performed for 6 hours at a rotation speed of 600 rpm until the reaction is completed (no bubbles are generated), so as to obtain a manganese oxalate suspension. Then, the suspension is filtered, and the resulting filter cake is dried at 120°C and then ground to obtain manganese oxalate dihydrate particles with a median particle size Dv50 of 100 nm.

**Preparation of carbon-coated lithium manganese phosphate:** 1789.6 g of manganese oxalate dihydrate particles obtained above, 369.4 g of lithium carbonate (in Li₂CO₃, the same below), 1150.1 g of ammonium dihydrogen phosphate (in NH₄H₂PO₄, the same below) and 31 g of sucrose (in C₁₂H₂₂O₁₁, the same below) are added to 20 L of deionized water, and the mixture is stirred for 10 hours to be uniformly mixed, so as to obtain a slurry. The slurry is transferred into a spray drying apparatus for spray-drying granulation, where the drying temperature is set at 250°C and the drying time is 4 h, so as to obtain a powder. The above powder is sintered at 700°C for 4 hours in a protective atmosphere of nitrogen (90% by volume) + hydrogen (10% by volume), so as to obtain carbon doped lithium manganese phosphate.

### Comparative example II-2

Except that 689.5 g of manganese carbonate is used and 463.3 g of ferrous carbonate is additionally added, other conditions of Comparative example II-2 are the same as in Comparative example II-1.

### Comparative example II-3

Except that 1148.9 g of ammonium dihydrogen phosphate and 369.0 g of lithium carbonate are used, and 1.6 g of 60% dilute sulfuric acid is additionally added, other conditions of Comparative example II-3 are the same as in Comparative example II-1.

### Comparative example II-4

Except that 689.5 g of manganese carbonate, 1148.9 g of ammonium dihydrogen phosphate and 369.0 g of lithium carbonate are used, and 463.3 g of ferrous carbonate and 1.6 g of 60% dilute sulfuric acid are additionally added, other conditions of Comparative example II-4 are the same as in Comparative example II-1.

### Comparative example II-5

Except for the following additional steps: **Preparation of lithium iron pyrophosphate powder:** 9.52 g of lithium carbonate, 29.9 g of ferrous carbonate, 29.6 g of ammonium dihydrogen phosphate and 32.5 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension of Li₂FeP₂O₇, which is filtered, washed with deionized water, and dried at 120°C for 4 hours to obtain a powder. The powder is sintered at 500°C under a nitrogen atmosphere for 4 h, and then ground after cooling to room temperature naturally to control the crystallinity of Li₂FeP₂O₇ to be 5%; when preparing a carbon-coated material, the amount of Li₂FeP₂O₇ is 62.8 g, other conditions of Comparative example II-5 are the same as Comparative example II-4.

### Comparative example II-6

Except for the following additional steps: **Preparation of lithium iron phosphate suspension:** 14.7 g of lithium carbonate, 46.1 g of ferrous carbonate, 45.8 g of ammonium dihydrogen phosphate and 50.2 g of oxalic acid dihydrate are dissolved in 500 ml of deionized water, and then stirred for 6 hours such that the mixture is fully reacted. Then, the reacted solution is heated to 120°C and kept at this temperature for 6 hours to obtain a LiFePO₄ suspension; in the preparation process of lithium iron phosphate (LiFePO₄), the sintering temperature is 600°C and the sintering time is 4 hours in the coating sintering step to control the crystallinity of LiFePO₄ to be 8%; and when preparing a carbon-coated material, the amount of LiFePO₄ is 62.8 g, other conditions of Comparative example II-6 are the same as Comparative example II-4.

### Comparative example 11-7

**Preparation of lithium iron pyrophosphate powder:** 2.38 g of lithium carbonate, 7.5 g of ferrous carbonate, 7.4 g of ammonium dihydrogen phosphate and 8.1 g of oxalic acid dihydrate are dissolved in 50 ml of deionized water. The pH of the mixture is 5, and stirring is performed for 2 hours such that the reaction mixture is fully reacted. Then, the reacted solution is heated to 80°C and kept at this temperature for 4 hours to obtain a suspension of Li₂FeP₂O₇, which is filtered, washed with deionized water, and dried at 120°C for 4 hours to obtain a powder. The powder is sintered at 500°C under a nitrogen atmosphere for 4 h, cooled naturally to room temperature and then ground to control the crystallinity of Li₂FeP₂O₇ to be 5%.

**Preparation of lithium iron phosphate suspension:** Except that 11.1 g of lithium carbonate, 34.7 g of ferrous carbonate, 34.4 g of ammonium dihydrogen phosphate, 37.7 g of oxalic acid dihydrate and 37.3 g of sucrose (in C₁₂H₂₂O₁₁, the same below) are dissolved in 1500 ml of deionized water, and then stirred for 6 hours such that the mixture is fully reacted. Then, the reacted solution is heated to 120°C and kept at this temperature for 6 hours to obtain a suspension of LiFePO₄.

15.7 g of the obtained lithium iron pyrophosphate powder is added to the above lithium iron phosphate (LiFePO₄) and sucrose suspension; in the preparation process, the sintering temperature is 600°C and the sintering time is 4 h in the coating sintering step to control the crystallinity of LiFePO₄ to be 8%, other conditions of Comparative example II-7 are the same as in Comparative example II-4, and amorphous lithium iron pyrophosphate, amorphous lithium iron phosphate, and the carbon-coated positive electrode active material are obtained.

### Comparative examples 11-8 to 11-11

Except that in the preparation process of lithium iron pyrophosphate (Li₂FeP₂O₇), in Comparative examples II-8 to II-10, the drying temperature/drying time in the drying step is 80°C/3 h, 80°C/3 h and 80°C/3 h, respectively; in the preparation process of lithium iron pyrophosphate (Li₂FeP₂O₇), in Comparative examples II-8 to **II-**10, the sintering temperature/sintering time in the sintering step is 400°C/3 h, 400°C/3 h and 350°C/2 h, respectively; in Comparative example II-11, in the preparation process of lithium iron phosphate (LiFePO₄), the drying temperature/drying time in the drying step is 80°C/3 h; and in Comparative examples II-8 to **II**-11, the amount of Li₂FeP₂O₇/LiFePO₄ is 47.2 g/15.7 g, 15.7 g/47.2 g, 62.8 g/0 g, and 0 g/62.8 g, respectively, other conditions are the same as in Example II-1-7.

The preparation of the positive electrode plate, the negative electrode plate, the electrolyte solution, the separator and the battery of the above Examples and Comparative examples are all the same as in Example II-1-1.

### [Preparation of three-layer coated positive electrode active material and battery]

### Example 111-1:

### Step 1: Preparation of a positive electrode active material

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride are mixed thoroughly for 6 h in a mixer. The resulting mixture is then transferred into a reaction kettle, 5 L of deionized water and 1260.6 g of oxalic acid dihydrate are added, heated to 80°C, then stirred thoroughly for 6 h at a rotation speed of 500 rpm and mixed uniformly until the reaction is completed (no bubbles are generated), so as to obtain an Fe, Co, and V co-doped manganese oxalate suspension. Then, the suspension is filtered, dried at 120°C and then sanded, so as to obtain manganese oxalate particles with a particle size of 100 nm.

### Step S2: Preparation of inner core Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid are added to 20 L of deionized water, fully stirred, and mixed uniformly and reacted at 80°C for 10 h to obtain a slurry. The slurry is transferred into a spray drying apparatus for spray-drying granulation, and dried at a temperature of at 250°C to obtain a powder. In a protective atmosphere (90% of nitrogen and 10% of hydrogen), the powder is sintered in a roller kiln at 700°C for 4 h to obtain the above inner core material.

### Step S3: Preparation of the first coating layer suspension

Preparation of a Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 h to obtain a solution, and then the solution is heated to 80°C and kept at this temperature for 4 h to obtain a first coating layer suspension.

### Step S4: Coating of the first coating layer

1571.9 g of doped lithium manganese phosphate inner core material obtained in step S2 is added to the first coating layer suspension (the content of the coating material is 15.7 g) obtained in step S3, fully stirred and mixed for 6 h; after uniformly mixing, same is transferred in an oven at 120°C and dried for 6 h, and then sintered at 650°C for 6 h to obtain a pyrophosphate coated material.

### Step S5: Preparation of the second coating layer suspension

3.7 g of lithium carbonate, 11.6 g of ferrous carbonate, 11.5 g of ammonium dihydrogen phosphate and 12.6 g of oxalic acid dihydrate are dissolved in 1500 mL of deionized water, then same is stirred and reacted for 6 h to obtain a solution, and then the solution is heated to 120°C and kept at this temperature for 6 h to obtain a second coating layer suspension.

### Step S6: Coating of the second coating layer

1586.8 g of the pyrophosphate coated material obtained in step S4 is added to the second coating layer suspension (the content of the coating material is 47.1 g) obtained in step S5, fully stirred and mixed for 6 h; after uniformly mixing, same is transferred in an oven at 120°C and dried for 6 h, and then sintered at 700°C for 8 h to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, same is transferred in an oven at 150°C and dried for 6 h, and then sintered at 700°C for 10 h to obtain a third-layer coated material.

### Step 2: Preparation of positive electrode plate

The three-layer coated positive electrode active material prepared above, a conductive agent acetylene black and a binder polyvinylidene fluoride (PVDF) are added to N-methylpyrrolidone (NMP) in a weight ratio of 97.0 : 1.2 : 1.8, followed by stirring and uniformly mixing to obtain a positive electrode slurry. The positive electrode slurry is uniformly coated onto an aluminum foil in 0.280 g/1540.25 mm², followed by drying, cold pressing, and slitting to obtain the positive electrode plate.

### Step 3: Preparation of negative electrode plate

Negative electrode active materials artificial graphite and hard carbon, a conductive agent acetylene black, a binder styrene butadiene rubber (SBR) and a thickening agent sodium carboxymethylcellulose (CMC) are dissolved in deionized water as a solvent in a weight ratio of 90 : 5 : 2 : 2 : 1, followed by stirring and uniformly mixing to prepare a negative electrode slurry. The negative electrode slurry is uniformly coated onto a negative electrode current collector copper foil in 0.117 g/1540.25 mm², followed by drying, cold pressing, and slitting to obtain the negative electrode plate.

### Step 4: Preparation of electrolyte solution

In an argon atmosphere glove box (H₂O < 0.1 ppm, and O₂ < 0.1 ppm), the organic solvent ethylene carbonate (EC)/ethyl methyl carbonate (EMC) is mixed uniformly by a volume ratio of 3/7, and 12.5% (on the basis of the weight of the ethylene carbonate/ethyl methyl carbonate solvent) by weight of LiPF₆ is dissolved in the above organic solvent and stirred uniformly to obtain the electrolyte solution.

### Step 5: Preparation of separator

A commercially available PP-PE copolymer microporous film having a thickness of 20 µm and an average pore size of 80 nm (Model 20, from Zhuogao Electronic Technology Co. Ltd.) is used.

### Step 6: Preparation of full battery

The above obtained positive electrode plate, separator and negative electrode plate are stacked in sequence, such that the separator is located between the positive electrode plate and the negative electrode plate to function for isolation, and are then wound to obtain a bare cell. The bare cell is placed in an outer package, injected with the above electrolyte solution and packaged to obtain a full battery.

### (Preparation of button battery)

The positive electrode active material prepared above, polyvinylidene fluoride (PVDF) and acetylene black in a weight ratio of 90 : 5 : 5 are added into N-methylpyrrolidone (NMP), and stirred in a drying room to make a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate is used as a negative electrode, a solution of 1 mol/L LiPF₆ in ethylene carbonate (EC), diethyl carbonate (DEC) and dimethyl carbonate (DMC) in a volume ratio of 1 : 1 : 1 is used as an electrolyte solution, and the lithium plate and the electrolyte solution are assembled, together with the positive electrode plate prepared above, into a button battery in a button battery box.

### Examples III-2 to III-53 and Comparative examples 111-1 to 111-17

The positive electrode active materials and batteries in Examples III-2 to III-53 and Comparative examples III-1 to III-17 are prepared in a manner similar to Example III-1, and the differences in the preparation of positive electrode active materials are shown in the Tables 1-6, wherein in Comparative examples III-1 to III-2, Comparative examples III-4 to III-10 and Comparative example III-12, the first layers are not coated, so there are no steps S3 and S4; and in comparative examples III-1 to III-11, the second layers are not coated, so there are no steps S5-S6.

Note: In all Examples and Comparative examples of the present application, if not indicated, the first coating layer material and/or the second coating layer material used are crystalline by default.

**Table 1: Raw materials for the preparation of the inner core**

| No. | Inner core | Raw materials used in step S1 | Raw materials used in step S2 |
|---|---|---|---|
| Comparative examples III-1 and III-13 | LiMnPO₄ | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 369.4 g; ammonium dihydrogen phosphate, 1150.1 g; water, 20 L |
| Comparative example III-2 | LiMn_{0.60}Fe_{0.40}PO₄ | Manganese carbonate, 689.6 g; ferrous carbonate, 463.4 g; water, 5 L; oxalic acid dihydrate, 1260.6 g; | Iorn manganese oxalate dihydrate obtained in step S1 (in C₂O₄Mn_{0.60}Fe_{0.40}•2H₂O), 1793.2 g; lithium carbonate, 369.4 g; ammonium dihydrogen phosphate, 1150.1 g; water, 20 L |
| Comparative example III-3 | LiMn_{0.80}Fe_{0.20}PO₄ | Manganese carbonate, 919.4 g; ferrous carbonate, 231.7 g; water, 5 L; oxalic acid dihydrate, 1260.6 g; | Iorn manganese oxalate dihydrate obtained in step S1 (in C₂O₄Mn_{0.80}Fe_{0.20}•2H₂O), 1791.4 g; lithium carbonate, 369.4 g; ammonium dihydrogen phosphate, 1150.1 g; water, 20 L |
| Comparative example III-4 | LiMn_{0.70}Fe_{0.295}V_{0.005}PO₄ | Manganese carbonate, 804.5 g; ferrous carbonate, 341.8 g; vanadium dichloride, 6.1 g; water, 5 L; oxalic acid dihydrate, 1260.6 g; | Vanadium iron manganese oxalate dihydrate obtained in step S1 (in C₂O₄Mn_{0.70}Fe_{0.295}V_{0.005}•2H₂O), 1792.0 g; lithium carbonate, 369.4 g; ammonium dihydrogen phosphate, 1150.1 g; water, 20 L |
| Comparative examples III-5 and III-15 | LiMn_{0.60}Fe_{0.395}Mg_{0.005}PO₄ | Manganese carbonate, 689.6 g; ferrous carbonate, 457.6 g; magnesium carbonate, 4.2 g; water, 5 L; oxalic acid dihydrate, 1260.6 g; | Magnesium iron manganese oxalate dihydrate obtained in step S1 (in C₂O₄Mn_{0.60}Fe_{0.395}Mg_{0.005}•2H₂O), 1791.6 g; lithium carbonate, 369.4 g; ammonium dihydrogen phosphate, 1150.1 g; water, 20 L |
| Comparative example III-6 | LiMn_{0.60}Fe_{0.35}Ni_{0.05}PO₄ | Manganese carbonate, 689.6 g; ferrous carbonate, 405.4 g; nickel carbonate, 59.3 g; water, 5 L; oxalic acid dihydrate, 1260.6 g; | Nickel manganese oxalate dihydrate obtained in step S1 (in C₂O₄Mn_{0.60}Fe_{0.35}Ni_{0.05}•2H₂O), 1794.6 g; lithium carbonate, 369.4 g; ammonium dihydrogen phosphate, 1150.1 g; water, 20 L |
| Comparative examples III-7 and III-9 | LiMn_{0.60}Fe_{0.395}V_{0.002}Ni_{0.003}PO₄ | Manganese carbonate, 689.6 g; ferrous carbonate, 457.6 g; vanadium dichloride, 2.4 g; | Nickel vanadium iron manganese oxalate dihydrate obtained in step S1 (in C₂O₄Mn_{0.60}Fe_{0.395}V_{0.002}Ni_{0.003}•2H₂O), 1793.2 g; |
| | | nickel carbonate, 3.6 g; water, 5 L; oxalic acid dihydrate, 1260.6 g; | lithium carbonate, 369.4 g; ammonium dihydrogen phosphate, 1150.1 g; water, 20 L |
| Comparative example III-8 | LiMn_{0.60}Fe_{0.395}V_{0.002}Mg_{0.003}PO₄ | Manganese carbonate, 689.6 g; ferrous carbonate, 457.6 g; vanadium dichloride, 2.4 g; magnesium carbonate, 2.53 g; water, 5 L; oxalic acid dihydrate, 1260.6 g; | Magnesium vanadium iron manganese oxalate dihydrate obtained in step S1 (in C₂O₄Mn_{0.60}Fe_{0.395}V_{0.002}Mg_{0.003}•2H₂O), 1792.1 g; lithium carbonate, 369.4 g; ammonium dihydrogen phosphate, 1150.1 g; water, 20 L |
| Comparative examples III-10 to III-12, Comparative examples III-16 to III-17, and Examples III-1 to III-10, Examples III-30 to III-42, and Examples III-48 to III-54 | Li_{0.997}Mn_{0.60}Fe_{0.393}V_{0.004}Co_{0.003} P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 368.3 g; ammonium dihydrogen phosphate, 1146.6 g; dilute sulfuric acid, 4.9 g; water, 20 L |
| Comparative example III-14 | Li_{1.2}MnP_{0.8}Si_{0.2}O₄ | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 443.3 g; ammonium dihydrogen phosphate, 920.1 g; Siliceous acid, 156.2 g; water, 20 L |
| Example III-11 | Li_{1.001}Mn_{0.60}Fe_{0.393}V_{0.004}Co_{0.003} P_{0.999}Si_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.8 g; ammonium dihydrogen phosphate, 1148.9 g; Siliceous acid, 0.8 g; water, 20 L |
| Example III-12 | LiMn_{0.60}Fe_{0.393}V_{0.004}Co_{0.003}P_{0.99 8}N_{0.002}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1147.8 g; dilute nitric acid, 2.7 g; water, 20 L |
| Example III-13 | Li_{0.995}Mn_{0.65}Fe_{0.341}V_{0.004}Co_{0.005} P_{0.995}S_{0.005}O₄ | Manganese carbonate, 747.1 g; ferrous carbonate, 395.1 g; cobalt sulfate, 7.8 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.65}Fe_{0.341}V_{0.004}Co_{0.005}•2H₂O), 1792.7 g; lithium carbonate, 367.6 g; ammonium dihydrogen phosphate, 1144.3 g; dilute sulfuric acid, 8.2 g; water, 20 L |
| Example III-14 | Li_{1.002}Mn_{0.70}Fe_{0.293}V_{0.004}Co_{0.003} P_{0.998}Si_{0.002}O₄ | Manganese carbonate, 804.6 g; ferrous carbonate, 339.5 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.70}Fe_{0.293}V_{0.004}CO_{0.003}•2H₂O), 1792.2 g; lithium carbonate, 370.2 g; 1147.8; Siliceous acid, 1.6 g; water, 20 L |
| Examples III-15 and III-17 | LiMn_{0.60}Fe_{0.393}V_{0.004}Co_{0.003}P_{0.99 9}N_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1148.9 g; dilute nitric acid, 1.4 g; water, 20 L |
| Example III-16 | Li_{0.997}Mn_{0.60}Fe_{0.393}V_{0.004}Co_{0.003} P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 368.7 g; ammonium dihydrogen phosphate, 1146.6 g; dilute sulfuric acid, 4.9 g; water, 20 L |
| Example III-18 | LiMn_{0.60}Fe_{0.393}V_{0.004}Mg_{0.003}P_{0.9 95}N_{0.005}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂₄Mn_{0.60}Fe_{0.393}V_{0.004}Mg_{0.003}•2H₂O), 1791.1 g; lithium carbonate, 369.4 g; ammonium dihydrogen phosphate, 1144.3 g; dilute nitric acid, 7.0 g; water, 20 L |
| Example III-19 | Li_{0.999}Mn_{0.60}Fe_{0.393}V_{0.004}Mg_{0.003} P_{0.999}S_{0.001}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O), 1791.1 g; lithium carbonate, 369.0 g; ammonium dihydrogen phosphate, 1148.9 g; dilute sulfuric acid, 1.6 g; water, 20 L |
| Example III-20 | Li_{0.998}Mn_{0.60}Fe_{0.393}V_{0.004}Ni_{0.003} P_{0.998}S_{0.002}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1792.2 g; lithium carbonate, 368.7 g; ammonium dihydrogen phosphate, 1147.8 g; dilute sulfuric acid, 3.2 g; water, 20 L |
| Examples III-21 to III-24 | Li_{1.001}Mn_{0.60}Fe_{0.393}V_{0.004}Ni_{0.003} P_{0.999}Si_{0.001}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.8 g; ammonium dihydrogen phosphate, 1148.9 g; Siliceous acid, 0.8 g; water, 20 L |
| Example III-25 | Li_{1.001}Mn_{0.50}Fe_{0.493}V_{0.004}Ni_{0.003} P_{0.999}Si_{0.001}O₄ | Manganese carbonate, 574.7 g; ferrous carbonate, 571.2 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.50}Fe_{0.493}V_{0.004}Ni_{0.003}•2H₂O), 1794.0 g; lithium carbonate, 369.8 g; ammonium dihydrogen phosphate, 1148.9 g; Siliceous acid, 0.8 g; water, 20 L |
| Example III-26 | Li_{1.001}Mn_{0.999}Fe_{0.001}P_{0.999}Si_{0.001} O₄ | Manganese carbonate, 1148.2 g; ferrous carbonate, 1.2 g; water, 5 L; oxalic acid dihydrate, 1260.6 g; | Iorn manganese oxalate dihydrate obtained in step S1 (in C₂O₄Mn_{0.999}Fe_{0.001}•2H₂O), 1789.6 g; lithium carbonate, 369.8 g; ammonium dihydrogen phosphate, 1148.9 g; Siliceous acid, 0.8 g; water, 20 L |
| Example III-27 | LiMn_{0.60}Fe_{0.393}V_{0.004}Ni_{0.003}P_{0.9} N_{0.100}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.4 g; ammonium dihydrogen phosphate, 1035.1 g; dilute nitric acid, 140.0 g; water, 20 L |
| Example III-28 | Li_{1.001}Mn_{0.40}Fe_{0.593}V_{0.004}Ni_{0.003} P_{0.999}Si_{0.001}O₄ | Manganese carbonate, 459.7 g; ferrous carbonate, 686.9 g; vanadium dichloride, 4.8 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.593}V_{0.004}Ni_{0.003}•2H₂O), 1794.9 g; lithium carbonate, 369.8 g; ammonium dihydrogen phosphate, 1148.9 g; Siliceous acid, 0.8 g; water, 20 L |
| Example III-29 | Li_{1.001}Mn_{0.40}Fe_{0.393}V_{0.204}Ni_{0.003} P_{0.999}Si_{0.001}O₄ | Manganese carbonate, 459.7 g; ferrous carbonate, 455.2 g; vanadium dichloride, 248.6 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 369.8 g; ammonium dihydrogen phosphate, 1148.9 g; Siliceous acid, 0.8 g; water, 20 L |
| Example III-43 | Li_{0.900}Mn_{0.40}Fe_{0.393}V_{0.204}Ni_{0.003} P_{0.900}S_{0.100}O₄ | Manganese carbonate, 459.7 g; ferrous carbonate, 455.2 g; vanadium dichloride, 248.6 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 332.5 g; ammonium dihydrogen phosphate, 1035.0 g; dilute sulfuric acid, 160 g; water, 20 L; |
| Example III-44 | Li_{1.100}Mn_{0.40}Fe_{0.393}V_{0.204}Ni_{0.003} P_{0.900}Si_{0.100}O | Manganese carbonate, 459.7 g; ferrous carbonate, 455.2 g; | Nickel vanadium iron manganese oxalate dihydrate obtained in step S1 (in |
| | | vanadium dichloride, 248.6 g; nickel carbonate, 3.6 g; water, 5 L; oxalic acid dihydrate, 1260.6 g; | C₂O₄Mn_{0.40}Fe_{0.393}V_{0.204}Ni_{0.003}•2H₂O), 1785.1 g; lithium carbonate, 406.4 g; ammonium dihydrogen phosphate, 1035.0 g; Siliceous acid, 80 g; water, 20 L; |
| Example III-45 | Li_{1.001}Mn_{0.909}Fe_{0.091}P_{0.999}Si_{0.001} O₄ | Manganese carbonate, 1044.8 g; ferrous carbonate, 109.2 g; water, 5 L; oxalic acid dihydrate, 1260.6 g; | Iorn manganese oxalate dihydrate obtained in step S1 (in C₂O₄Mn_{0.909}Fe_{0.091}•2H₂O), 1790.7 g; lithium carbonate, 369.8 g; ammonium dihydrogen phosphate, 1148.9 g; Siliceous acid, 0.8 g; water, 20 L; |
| Example III-46 | LiMn_{0.091}Fe_{0.909}P_{0.995}N_{0.005}O₄ | Manganese carbonate, 104.5 g; ferrous carbonate, 1052.8 g; water, 5 L; oxalic acid dihydrate, 1260.6 g; | Iorn manganese oxalate dihydrate obtained in step S1 (in C₂O₄Mn_{0.909}Fe_{0.091}•2H₂O), 1793.4 g; lithium carbonate, 371.3 g; ammonium dihydrogen phosphate, 1138.5 g; dilute nitric acid, 5.25 g; water, 20 L; |
| Example III-47 | LiMn_{0.80}Fe_{0.193}V_{0.004}Co_{0.003}P_{0.99 9}N_{0.001}O₄ | Manganese carbonate, 919.5 g; ferrous carbonate, 223.6 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.80}Fe_{0.193}V_{0.004}Co_{0.003}•2H₂O), 1791.6 g; lithium carbonate, 369.4 g; ammonium dihydrogen phosphate, 1148.9 g; dilute nitric acid, 1.4 g; water, 20 L; |

| | | | |
|---|---|---|---|
| ^{∗}For the determination method, please refer to the "Material Performance Test" section below for details. | | | |

**Table 2: Preparation of the first coating layer suspension (step S3)**

| Example No. | Coating material of the first coating layer | Preparation of the first coating layer suspension |
|---|---|---|
| Comparative examples III-3 and III-16 | Amorphous Li₂FeP₂O₇ | 7.4 g of lithium carbonate; 11.6 g of ferrous carbonate; 23.0 g of ammonium dihydrogen phosphate; 12.6 g of oxalic acid dihydrate; controlling the pH to be 5 |
| Comparative example III-11, Comparative examples III-13 to III-15, Comparative example III-17, and Examples III-1 to III-14, Example III-19, Examples III-21 to III-29, and Examples III-43 to III-52 | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; controlling the pH to be 5 |
| Examples III-15 to III-16 | Crystalline Al₄(P₂O₇)₃ | 53.3 g of aluminum chloride; 34.5 g of ammonium dihydrogen phosphate; 18.9 g of oxalic acid dihydrate; controlling the pH to be 4 |
| Examples III-17 to III-18, and example III-20 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; controlling the pH to be 5 |
| Example III-53 | Crystalline TiP₂O₇ | 24.0 g of titanium sulfate; 23.0 g of ammonium dihydrogen phosphate; 12.6 g of oxalic acid dihydrate; |
| Example III-54 | Crystalline W₂(P₂O₇)3 | 79.34 g of tungsten chloride; 34.5 g of ammonium dihydrogen phosphate; 18.9 g of oxalic acid dihydrate |

| | | |
|---|---|---|
| ^{∗}For the determination method, please refer to the "Material Performance Test" section below for details; **When the quality of the coating material of the first coating layer increases or decreases, the quality of the raw materials used in the suspension of the first coating layer increases or decreases by the same multiple. | | |

**Table 3: Coating of the first coating layer (step S4)**

| No. | Coating material of the first coating layer and the amount thereof (based on the weight of the inner core) | Amount of the inner core added in step S4 | Step S4: Coating of the first coating layer | | | | |
|---|---|---|---|---|---|---|---|
| | | | Amount of the corresponding coating material in the first coating layer suspension | Mixing time (h) | Drying temperature (°C) | Sintering temperature (°C) | Sintering time (h) |
| Comparative example III-3 | 2% of amorphous Li₂FeP₂O₇ | 1570.4 g | 31.4 g | 6 | 120 | 500 | 4 |
| Comparative example III-11 | 1% of crystalline Li₂FeP₂O₇ | 1571.1 g | 15.7 g | 6 | 120 | 650 | 6 |
| Comparative example III-13 | 2% of crystalline Li₂FeP₂O₇ | 1568.5 g | 31.4 g | 6 | 120 | 650 | 6 |
| Comparative example III-14 | 2% of crystalline Li₂FeP₂O₇ | 1562.8 g | 31.2 g | 6 | 120 | 650 | 6 |
| Comparative example III-15 | 2% of crystalline Li₂FeP₂O₇ | 1570.6 g | 31.4 g | 6 | 120 | 650 | 6 |
| Comparative example III-16 | 2% of amorphous Li₂FeP₂O₇ | 1571.1 g | 31.4 g | 6 | 120 | 500 | 4 |
| Comparative example III-17 | 2% of crystalline Li₂FeP₂O₇ | 1571.1 g | 31.4 g | 6 | 120 | 650 | 6 |
| Examples III-1 to III-4, | 1% of Li₂FeP₂O₇ | 1571.9 g | 15.7 g | 6 | 120 | 650 | 6 |
| Examples III-8 to III-10, | | | | | | | |
| Examples III-45 to III-47, and | | | | | | | |
| Examples III-49 to III-52 | | | | | | | |
| Example III-5 | 2% of Li₂FeP₂O₇ | 1571.9 g | 31.4 g | 6 | 120 | 650 | 6 |
| Example III-6 | 3% of Li₂FeP₂O₇ | 1571.1 g | 47.1 g | 6 | 120 | 650 | 6 |
| Example III-7 | 5% of Li₂FeP₂O₇ | 1571.9 g | 78.6 g | 6 | 120 | 650 | 6 |
| Example III-11 | 1% of Li₂FeP₂O₇ | 1572.1 g | 15.7 g | 6 | 120 | 650 | 6 |
| Example III-12 | 1% of Li₂FeP₂O₇ | 1571.7 g | 15.7 g | 6 | 120 | 650 | 6 |
| Example III-13 | 2% of Li₂FeP₂O₇ | 1571.4 g | 31.4 g | 6 | 120 | 650 | 6 |
| Example III-14 | 2.5% of Li₂FeP₂O₇ | 1571.9 g | 39.3 g | 6 | 120 | 650 | 6 |
| Example III-15 | 2% of Al₄(P₂O₇)₃ | 1571.9 g | 31.4 g | 6 | 120 | 680 | 8 |
| Example III-16 | 3% of Al₄(P₂O₇)₃ | 1571.9 g | 47.2 g | 6 | 120 | 680 | 8 |
| Example III-17 | 1.5% of Li₂NiP₂O₇ | 1571.9 g | 23.6 g | 6 | 120 | 630 | 6 |
| Example III-18 | 1% of Li₂NiP₂O₇ | 1570.1 g | 15.7 g | 6 | 120 | 630 | 6 |
| Example III-19 | 2% of Li₂FeP₂O₇ | 1571.0 g | 31.4 g | 6 | 120 | 650 | 6 |
| Example III-20 | 1% of Li₂NiP₂O₇ | 1571.9 g | 15.7 g | 6 | 120 | 630 | 6 |
| Examples III-21, III-23 and III-24 | 2% of Li₂FeP₂O₇ | 1572.1 g | 31.4 g | 6 | 120 | 650 | 6 |
| Example III-22 | 5.50% of Li₂FeP₂O₇ | 1572.1 g | 86.5 g | 6 | 120 | 650 | 6 |
| Example III-25 | 1% of Li₂FeP₂O₇ | 1573.0 g | 15.7 g | 6 | 120 | 650 | 6 |
| Example III-26 | 1% of Li₂FeP₂O₇ | 1568.6 g | 15.7 g | 6 | 120 | 650 | 6 |
| Example III-27 | 1% of Li₂FeP₂O₇ | 1569.2 g | 15.7 g | 6 | 120 | 650 | 6 |
| Example III-28 | 2% of crystalline Li₂FeP₂O₇ | 1573.9 g | 31.4g | 6 | 120 | 650 | 6 |
| Example III-29 | 2% of crystalline Li₂FeP₂O₇ | 1564.1 g | 31.2 g | 6 | 120 | 650 | 6 |
| Example III-43 | 1% of crystalline Li₂FeP₂O₇ | 1558.2 g | 15.6 g | 6 | 120 | 650 | 6 |
| Example III-44 | 1% of crystalline Li₂FeP₂O₇ | 1568.1 g | 15.7 g | 6 | 120 | 650 | 6 |
| Example III-48 | 6% of crystalline Li₂FeP₂O₇ | 1571.9 g | 94.3 g | 6 | 120 | 650 | 6 |
| Example III-53 | 1% of crystalline TiP₂O₇ | 1571.9 g | 15.7 g | 7 | 120 | 660 | 6 |
| Example III-54 | 2% of crystalline W₂(P₂O₇)₃ | 1571.9 g | 31.4 g | 6 | 120 | 680 | 8 |

| | | | | | | | |
|---|---|---|---|---|---|---|---|
| ^{∗}For the determination method, please refer to the "Material Performance Test" section below for details. | | | | | | | |

**Table 4: Preparation of the second coating layer suspension (step S5)**

| Example No. | Second coating layer material | Step S5: Preparation of the second coating layer suspension |
|---|---|---|
| Comparative example III-12, Examples III-1 to III-14, Examples III-18 to III-19, Examples III-25 to III-27, and Examples III-43 to III-54 | Crystalline LiFePO₄ | 3.7 g of lithium carbonate; 11.6 g of ferrous carbonate; 11.5 g of ammonium dihydrogen phosphate; 12.6 g of oxalic acid dihydrate |
| Comparative examples III-13 to III-16; | Crystalline LiCoPO₄ | 3.7 g of lithium carbonate; 15.5 g of cobalt sulfate; 11.5 g of ammonium dihydrogen phosphate; 12.6 g of oxalic acid dihydrate |
| Examples III-15, III-17, III-20, | | |
| Examples III-21 to III-24, and | | |
| Examples III-28 to III-29 | | |
| Comparative example III-17 | Amorphous LiCoPO₄ | 3.7 g of lithium carbonate; 15.5 g of cobalt sulfate; 11.5 g of ammonium dihydrogen phosphate; 12.6 g of oxalic acid dihydrate |
| Example III-16 | Crystalline LiNiPO₄ | 3.7 g of lithium carbonate; 11.9 g of nickel carbonate; 11.5 g of ammonium dihydrogen phosphate; 12.6 g of oxalic acid dihydrate |

| | | |
|---|---|---|
| ^{∗}For the determination method, please refer to the "Material Performance Test" section below for details; **When the quality of the material of the second coating layer increases or decreases, the quality of the raw materials used in the suspension of the second coating layer increases or decreases by the same multiple. | | |

**Table 5: Coating of the second coating layer (step S6)**

| No. | Second coating layer material and the amount thereof (based on the weight of the inner core) | Amount of pyrophosphate-coated material added in step S6 (wherein Comparative Example III-12 is the amount of inner core added) (g) | Step S6: Coating of the second coating layer | | | | |
|---|---|---|---|---|---|---|---|
| | | | Amount of the corresponding coating material in the second coating layer suspension (g) | Mixing time (h) | Drying temperature (°C) | Sintering temperature (°C) | Sintering time (h) |
| Comparative example III-12 | 3% of LiFePO₄ | 1571.1 | 47.1 | 6 | 120 | 700 | 8 |
| Comparative example III-13 | 4% of LiCoPO₄ | 1599.9 | 62.7 | 6 | 120 | 750 | 8 |
| Comparative example III-14 | 4% of LiCoPO₄ | 1594.0 | 62.5 | 6 | 120 | 750 | 8 |
| Comparative example III-15 | 4% of LiCoPO₄ | 1602.0 | 62.8 | 6 | 120 | 750 | 8 |
| Comparative example III-16 | 4% of LiCoPO₄ | 1602.5 | 62.8 | 6 | 120 | 750 | 8 |
| Comparative example III-17 | 4% of amorphous LiCoPO₄ | 1602.5 | 62.8 | 6 | 120 | 650 | 8 |
| Examples III-1 to III-4, | 3% of LiFePO₄ | 1586.8 | 47.1 | 6 | 120 | 700 | 8 |
| Examples III-45 to III-48, | | | | | | | |
| and Examples III-50 to III-54 | | | | | | | |
| Example III-5 | 3% of LiFePO₄ | 1602.5 | 47.1 | 6 | 120 | 700 | 8 |
| Example III-6 | 3% of LiFePO₄ | 1618.2 | 47.1 | 6 | 120 | 700 | 8 |
| Example III-7 | 3% of LiFePO₄ | 1649.6 | 47.1 | 6 | 120 | 700 | 8 |
| Example III-8 | 1% of LiFePO₄ | 1586.8 | 15.7 | 6 | 120 | 700 | 8 |
| Example III-9 | 4% of LiFePO₄ | 1586.8 | 62.8 | 6 | 120 | 700 | 8 |
| Example III-10 | 5% of LiFePO₄ | 1586.8 | 78.6 | 6 | 120 | 700 | 8 |
| Example III-11 | 2.50% of LiFePO₄ | 1587.8 | 39.3 | 6 | 120 | 700 | 8 |
| Example III-12 | 3% of LiFePO₄ | 1587.4 | 47.2 | 6 | 120 | 700 | 8 |
| Example III-13 | 2% of LiFePO₄ | 1602.8 | 31.4 | 6 | 120 | 700 | 8 |
| Example III-14 | 3.50% of LiFePO₄ | 1610.5 | 55.0 | 6 | 120 | 700 | 8 |
| Example III-15 | 2.5% of LiCoPO₄ | 1603.3 | 39.3 | 6 | 120 | 750 | 8 |
| Example III-16 | 3% of LiNiPO₄ | 1619.0 | 47.2 | 6 | 120 | 680 | 8 |
| Example III-17 | 2.5% of LiCoPO₄ | 1595.5 | 39.3 | 6 | 120 | 750 | 8 |
| Example III-18 | 3% of LiFePO₄ | 1585.9 | 47.1 | 6 | 120 | 700 | 8 |
| Example III-19 | 4% of LiFePO₄ | 1602.4 | 62.8 | 6 | 120 | 700 | 8 |
| Example III-20 | 3% of LiCoPO₄ | 1587.7 | 47.2 | 6 | 120 | 750 | 8 |
| Example III-21 | 4% of LiCoPO₄ | 1603.5 | 62.9 | 6 | 120 | 750 | 8 |
| Example III-22 | 4% of LiCoPO₄ | 1658.6 | 62.9 | 6 | 120 | 750 | 8 |
| Example III-23 | 5.50% of LiCoPO₄ | 1603.5 | 86.5 | 6 | 120 | 750 | 8 |
| Example III-24 | 4% of LiCoPO₄ | 1603.5 | 62.9 | 6 | 120 | 750 | 8 |
| Example III-25 | 3% of LiFePO₄ | 1588.7 | 47.2 | 6 | 120 | 700 | 8 |
| Example III-26 | 3% of LiFePO₄ | 1584.3 | 47.1 | 6 | 120 | 700 | 8 |
| Example III-27 | 3% of LiFePO₄ | 1584.9 | 47.1 | 6 | 120 | 700 | 8 |
| Example III-28 | 4% of LiCoPO₄ | 1605.4 | 63.0 | 6 | 120 | 750 | 8 |
| Example III-29 | 4% of LiCoPO₄ | 1605.4 | 63.0 | 6 | 120 | 750 | 8 |
| Example III-43 | 3% of LiFePO₄ | 1573.8 | 47.1 | 6 | 120 | 700 | 8 |
| Example III-44 | 3% of LiFePO₄ | 1583.8 | 47.1 | 6 | 120 | 700 | 8 |
| Example III-49 | 6% of LiFePO₄ | 1586.8 | 94.2 | 6 | 120 | 700 | 8 |

| | | | | | | | |
|---|---|---|---|---|---|---|---|
| ^{∗}For the determination method, please refer to the "Material Performance Test" section below for details. | | | | | | | |

**Table 6: Coating of the third coating layer (step S8)**

| | Third coating layer | Molar ratio of SP2 to SP3 | The amount of material coated with two layers added in step S8 (wherein Comparative examples III-1 to III-2 and III-4 to III-10 related to the amount of inner core added, and Comparative example III-11 related to the amount of material coated with the first layer added) (g) | Step S8: Coating of the third coating layer | | | | |
|---|---|---|---|---|---|---|---|---|
| | | | | Amount of sucrose (g) | Mixing time (h) | Drying temperature (°C) | Sintering temperature (°C) | Sintering time (h) |
| Comparative example III-1 | 1% of carbon | 2.5 | 1568.5 | 37.3 | 6 | 150 | 650 | 8 |
| Comparative example III-2 | 2% of carbon | 2.8 | 1572.2 | 74.7 | 6 | 150 | 680 | 8 |
| Comparative example III-3 | 2% of carbon | 2.7 | 1601.8 | 74.6 | 6 | 150 | 680 | 7 |
| Comparative example III-4 | 1% of carbon | 2.4 | 1571.0 | 37.3 | 6 | 150 | 630 | 8 |
| Comparative example III-5 | 1.5% of carbon | 2.6 | 1570.6 | 56.0 | 6 | 150 | 650 | 7 |
| Comparative example III-6 | 2.5% of carbon | 2.8 | 1573.6 | 93.4 | 6 | 150 | 680 | 8 |
| Comparative example III-7 | 1% of carbon | 2.7 | 1572.2 | 37.3 | 6 | 150 | 680 | 7 |
| Comparative example III-8 | 1.5% of carbon | 2.9 | 1571.1 | 56.0 | 6 | 150 | 680 | 10 |
| Comparative example III-9 | 1% of carbon | 2.2 | 1572.2 | 37.3 | 6 | 150 | 600 | 8 |
| Comparative example III-10 | 1% of carbon | 2.4 | 1571.1 | 37.3 | 6 | 150 | 630 | 8 |
| Comparative example III-11 | 1% of carbon | 2.3 | 1586.8 | 37.3 | 6 | 150 | 620 | 8 |
| Comparative example III-12 | 1% of carbon | 2.1 | 1618.2 | 37.3 | 6 | 150 | 600 | 6 |
| Comparative example III-13 | 1% of carbon | 2 | 1662.6 | 37.3 | 6 | 120 | 600 | 6 |
| Comparative example III-14 | 1% of carbon | 1.8 | 1656.5 | 37.1 | 6 | 120 | 600 | 6 |
| Comparative example III-15 | 1% of carbon | 1.7 | 1664.8 | 37.3 | 6 | 100 | 600 | 6 |
| Comparative example III-16 | 1% of carbon | 3.1 | 1665.4 | 37.3 | 6 | 150 | 700 | 10 |
| Comparative example III-17 | 1% of carbon | 3.5 | 1665.4 | 37.3 | 6 | 150 | 750 | 10 |
| Examples III-1, Examples | 1% of carbon | 2.2 | 1633.9 | 37.3 | 6 | 150 | 700 | 10 |
| III-45 and III-49 | | | | | | | | |
| Example III-2 | 3% of carbon | 2.3 | 1633.9 | 111.9 | 6 | 150 | 600 | 9 |
| Example III-3 | 4% of carbon | 2.1 | 1633.9 | 149.2 | 6 | 150 | 600 | 6 |
| Example III-4 | 5% of carbon | 2.4 | 1633.9 | 186.5 | 6 | 150 | 630 | 8 |
| Example III-5 | 1% of carbon | 2.5 | 1649.6 | 37.3 | 6 | 150 | 650 | 8 |
| Example III-6 | 1% of carbon | 2.5 | 1665.3 | 37.3 | 6 | 150 | 650 | 8 |
| Example III-7 | 1% of carbon | 2.4 | 1696.7 | 37.3 | 6 | 150 | 630 | 8 |
| Example III-8 | 1% of carbon | 2.3 | 1602.5 | 37.3 | 6 | 150 | 600 | 9 |
| Example III-9 | 1% of carbon | 2.2 | 1649.6 | 37.3 | 6 | 150 | 600 | 8 |
| Example III-10 | 1% of carbon | 2.2 | 1665.3 | 37.3 | 6 | 150 | 600 | 9 |
| Example III-11 | 1.5% of carbon | 2.3 | 1629.0 | 56.1 | 6 | 150 | 600 | 9 |
| Example III-12 | 2% of carbon | 2.4 | 1634.6 | 74.7 | 6 | 150 | 630 | 8 |
| Example III-13 | 2% of carbon | 2.5 | 1634.2 | 74.6 | 6 | 150 | 650 | 8 |
| Example III-14 | 2.5% of carbon | 2.7 | 1665.5 | 93.3 | 6 | 150 | 680 | 7 |
| Example III-15 | 2% of carbon | 2.8 | 1642.6 | 74.7 | 6 | 150 | 680 | 8 |
| Example III-16 | 1% of carbon | 2.7 | 1666.2 | 37.3 | 6 | 150 | 680 | 7 |
| Example III-17 | 1.5% of carbon | 2.3 | 1634.8 | 56.0 | 6 | 150 | 600 | 9 |
| Example III-18 | 1% of carbon | 2.6 | 1633.0 | 37.3 | 6 | 150 | 650 | 7 |
| Example III-19 | 1.5% of carbon | 2.4 | 1665.2 | 56.0 | 6 | 150 | 630 | 8 |
| Example III-20 | 1.5% of carbon | 2.2 | 1634.8 | 56.0 | 6 | 150 | 600 | 9 |
| Example III-21 | 1% of carbon | 2.2 | 1666.4 | 37.3 | 6 | 150 | 600 | 9 |
| Example III-22 | 1% of carbon | 2.3 | 1721.4 | 37.3 | 6 | 150 | 600 | 9 |
| Example III-23 | 1% of carbon | 2.4 | 1690.0 | 37.3 | 6 | 150 | 630 | 8 |
| Example III-24 | 5.5% of carbon | 2.6 | 1666.4 | 205.4 | 6 | 150 | 650 | 7 |
| Example III-25 | 1% of carbon | 2.4 | 1635.9 | 37.4 | 6 | 150 | 630 | 8 |
| Example III-26 | 1% of carbon | 2.3 | 1631.3 | 37.3 | 6 | 150 | 600 | 9 |
| Example III-27 | 1.5% of carbon | 2.1 | 1631.9 | 55.9 | 6 | 150 | 600 | 6 |
| Example III-28 | 1% of carbon | 0.07 | 1668.3 | 37.4 | 6 | 80 | 600 | 6 |
| Example III-29 | 1% of carbon | 13 | 1668.3 | 37.4 | 6 | 150 | 850 | 10 |
| Example III-43 | 1% of carbon | 2.2 | 1620.5 | 37.3 | 6 | 150 | 700 | 10 |
| Example III-44 | 1% of carbon | 2.2 | 1630.8 | 37.3 | 6 | 150 | 700 | 10 |
| Example III-50 | 1% of carbon | 0.1 | 1633.9 | 37.3 | 6 | 85 | 600 | 6 |
| Example III-51 | 1% of carbon | 10 | 1633.9 | 37.3 | 6 | 150 | 800 | 9 |
| Example III-52 | 6% of carbon | 2.5 | 1633.9 | 223.8 | 6 | 150 | 640 | 8 |
| Examples III-53 to III-54 | 1% of carbon | 2.2 | 1633.9 | 37.3 | 6 | 150 | 700 | 10 |

### Examples 111-30 to III-42: Investigation of other coating layer materials

Examples III-30 to III-42 are carried out in a manner similar to that in Example III-1, and the differences are shown in Tables 7-8 below.

**Table 7: Investigation of the first coating layer material**

| No. | Coating material of the first coating layer | Preparation of the first coating layer suspension |
|---|---|---|
| Example III-30 | Li₂MgP₂O₇ | 7.4 g of lithium carbonate, 8.4 g of magnesium carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-31 | Li₂CoP₂O₇ | 7.4 g of lithium carbonate, 15.5 g of cobalt sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-32 | Li₂CuP₂O₇ | 7.4 g of lithium carbonate, 16.0 g of copper sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-33 | Li₂ZnP₂O₇ | 7.4 g of lithium carbonate, 12.5 g of zinc carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-34 | TiP₂O₇ | 24.0 g of titanium sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-35 | Ag₄P₂O₇ | 67.9 g of silver nitrate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example III-36 | ZrP₂O₇ | 56.6 g of zirconium sulfate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |

**Table 8: Investigation of the second coating layer material**

| No. | Second coating layer material | Preparation of the second coating layer suspension |
|---|---|---|
| Example III-37 | Cu₃(PO₄)₂ | 48.0 g of copper sulfate, 23.0 g of ammonium dihydrogen phosphate and 37.8 g of oxalic acid dihydrate are dissolved in 1500 mL of deionized |
| | | water, then same is stirred and fully reacted for 6 h to obtain a solution, and then the solution is heated to 120°C and kept at this temperature for 6 h to obtain a suspension |
| Example III-38 | Zn₃(PO₄)₂ | 37.6 g of zinc carbonate, 23.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example III-39 | Ti₃(PO₄)₄ | 72.0 g of titanium sulfate, 46.0 g of ammonium dihydrogen phosphate and 75.6 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example III-40 | Ag₃PO₄ | 50.9 g of silver nitrate, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example III-41 | Zr₃(PO₄)₄ | 85.0 g of zirconium sulfate, 46.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example III-42 | AlPO₄ | 13.3 g of aluminum chloride, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |

### Examples III-2-1 to III-2-24

The sintering temperature and sintering time in steps S4, S6 and S8 are changed, and the rest are the same as in Example III-1, see Table 30 for details.

### Examples 111-3-1 to III-3-20

The reaction temperature and reaction time in the preparation of the inner core are changed, and the rest are the same as in Example III-1, see Table 31 for details.

### Example III-4-1

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride are mixed thoroughly for 6 h in a mixer. The resulting mixture is then transferred into a reaction kettle, 5 L of deionized water and 1260.6 g of oxalic acid dihydrate are added, heated to 80°C, then stirred thoroughly for 6 h at a rotation speed of 500 rpm and mixed uniformly until the reaction is completed (no bubbles are generated), so as to obtain an Fe, Co, and V co-doped manganese oxalate suspension. Then, the suspension is filtered, dried at 120°C and then sanded, so as to obtain manganese oxalate particles with a particle size of 100 nm.

### Step S2: Preparation of inner core Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid are added to 20 L of deionized water, fully stirred, and mixed uniformly and reacted at 80°C for 10 h to obtain a slurry. The slurry is transferred into a spray drying apparatus for spray-drying granulation, and dried at a temperature of at 250°C to obtain a powder. In a protective atmosphere (90% of nitrogen and 10% of hydrogen), the powder is sintered in a roller kiln at 700°C for 4 h to obtain a inner core material. The element content of the inner core material is detected using inductively coupled plasma (ICP) emission spectrometry, and the chemical formula of the inner core is obtained as shown above.

### Step S3: Preparation of the first coating layer suspension

Preparation of Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 h to obtain a solution, and then the solution is heated to 80°C and kept at this temperature for 4 h to obtain a first coating layer suspension.

### Step S4: Coating of the first coating layer

1571.9 g of doped lithium manganese phosphate inner core material obtained in step S2 is added to the first coating layer suspension (the content of the coating material is 15.7 g) obtained in step S3, fully stirred and mixed for 6 h; after uniformly mixing, same is transferred in an oven at 120°C and dried for 6 h, and then sintered at 650°C for 6 h to obtain a pyrophosphate coated material.

### Step S5: Preparation of the second coating layer suspension

47.1 g of nanoscale Al₂O₃ (with a particle size of about 20 nm) is dissolved in 1500 mL of deionized water, and stirred for 2 h to obtain a second coating layer suspension.

### Step S6: Coating of the second coating layer

1586.8 g of the pyrophosphate coated material obtained in step S4 is added to the second coating layer suspension (the content of the coating material is 47.1 g) obtained in step S5, fully stirred and mixed for 6 h; after uniformly mixing, same is transferred in an oven at 120°C and dried for 6 h, and then sintered at 700°C for 8 h to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, same is transferred in an oven at 150°C and dried for 6 h, and then sintered at 700°C for 10 h to obtain a third-layer coated material.

Inner core: Li_{0.997}Mn_{0.60}Fe_{0.393}V_{0.004}Co_{0.003}P_{0.997}S_{0.003}O₄; the first coating layer contains 1% of crystalline Li₂FeP₂O₇; the second coating layer contains 3% of crystalline Al₂O₃; and the third coating layer contains 1% of carbon, in which the molar ratio of SP2 to SP3 is 2.2.

### Example III-4-2

Except that in step S8, the amount of sucrose is 111.9 g and sintering is carried out at 600°C for 9 h, the rest are the same as in Example III-4-1.

Inner core, the first coating layer and the second coating layer are the same as in Example III-4-1; the third coating layer contains 3% of carbon, in which the molar ratio of SP2 to SP3 is 2.3.

### Example III-4-3

### Step S1: Preparation of doped manganese oxalate

1.3 mol of MnSO₄·H₂O and 0.7 mol of FeSO₄·H₂O are mixed thoroughly for 6 hours in a mixer; the mixture is transferred into a reaction kettle, 10 L of deionized water and 2 mol of oxalic acid dihydrate are added thereto, heated to 80°C, and then stirred for 6 hours at a rotation speed of 600 rpm, the reaction is completed (no bubbles are generated), so as to obtain an Fe-doped manganese oxalate suspension; the suspension is filtered, and the resulting filter cake is dried at 120°C and then ground to obtain Fe-doped manganese oxalate particles with a particle size Dv₅₀ of about 100 nm.

### Step S2: Preparation of inner core containing Li_{0.994}Mo_{0.001}Mn_{0.65}Fe_{0.35}P_{0.999}Si_{0.001}O_{3.999}F_{0.001}

1 mol of the Fe-doped manganese oxalate particles, 0.497 mol of lithium carbonate, 0.001 mol of Mo(SO₄)₃, an 85% aqueous phosphoric acid solution containing 0.999 mol of phosphoric acid, 0.001 mol of H₄SiO₄, 0.0005 mol of NH₄HF₂ and 0.005 mol of sucrose are added into 20 L of deionized water, and the mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles; the particles are sintered at 700°C for 10 hours in a protective atmosphere of nitrogen (90 % v/v) + hydrogen (10 % v/v) to obtain a inner core material. The element content of the inner core material is detected using inductively coupled plasma (ICP) emission spectrometry, and the chemical formula of the inner core is obtained as shown above.

### Step S3: Preparation of the first coating layer suspension

Preparation of Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 h to obtain a solution, and then the solution is heated to 80°C and kept at this temperature for 4 h to obtain a first coating layer suspension.

### Step S4: Coating of the first coating layer

157.2 g of doped lithium manganese phosphate inner core material obtained in step S2 is added to the first coating layer suspension (the content of the coating material is 1.572 g) obtained in step S3, fully stirred and mixed for 6 h; after uniformly mixing, same is transferred in an oven at 120°C and dried for 6 h, and then sintered at 650°C for 6 h to obtain a pyrophosphate coated material.

### Step S5: Preparation of the second coating layer suspension

4.71 g of nano-Al₂O₃ (with a particle size of about 20 nm) is dissolved in 1500 mL of deionized water, and stirred for 2 h to obtain a second coating layer suspension.

### Step S6: Coating of the second coating layer

158.772 g of the pyrophosphate coated material obtained in step S4 is added to the second coating layer suspension (the content of the coating material is 4.71 g) obtained in step S5, fully stirred and mixed for 6 h; after uniformly mixing, same is transferred in an oven at 120°C and dried for 6 h, and then sintered at 700°C for 8 h to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, same is transferred in an oven at 150°C and dried for 6 h, and then sintered at 700°C for 10 h to obtain a third-layer coated material.

Inner core: Li_{0.994}Mo_{0.001}Mn_{0.65}Fe_{0.35}P_{0.999}Si_{0.001}O_{3.999}F_{0.001}; the first coating layer contains 1% of crystalline Li₂FeP₂O₇; the second coating layer contains 3% of crystalline Al₂O₃; and the third coating layer contains 1% of carbon, in which the molar ratio of SP2 to SP3 is 2.2.

### Example III-4-4

### Except for the following differences, the rest are the same as in Example III-4-3:

Step S3: 53.3 g of aluminum chloride, 34.5 g of ammonium dihydrogen phosphate and 18.9 g of oxalic acid dihydrate are dissolved in 500 mL of deionized water, the pH is controlled to be 4, then same is stirred and reacted at room temperature for 2 h to obtain a solution, and then the solution is heated to 80°C and kept at this temperature for 4 h to obtain a first coating layer suspension.

Step S4: Except that sintering is carried out at 680°C for 8 h, the rest are the same as step S4 of Example III-4-3.

### Inner core, the second coating layer and the third coating layer are the same as in Example III-4-3; the first coating layer contains 1% of crystalline Al₄(P₂O₇)₃.

### [Mixed use of two positive electrode active materials and preparation of battery]

### Example IV-1

The inner core material of Example I-1 is mixed with lithium nickel cobalt manganate LiNi_{0.5}Co_{0.2}Mn_{0.3}O₂ in a mass ratio of 1 : 1 as the positive electrode active material.

Preparation of positive electrode plate: The slurry of positive electrode active material is evenly coated on both sides of the aluminum foil of the current collector in a coating amount of 0.019 g/cm², vacuum-dried at a high temperature of 100-120°C for 14 h, and compacted by a roller press to obtain the positive electrode plate P4.

Preparation of negative electrode plate: A negative electrode active material artificial graphite, a conductive agent superconducting carbon black (Super-P), a binder styrene butadiene rubber (SBR) and a thickening agent sodium carboxymethylcellulose (CMC-Na) are dissolved in deionized water in a mass ratio of 95% : 1.5% : 1.8% : 1.7, followed by fully stirring and uniformly mixing to obtain a negative electrode slurry with a viscosity of 3000 mPa s and a solid content of 52%; the negative electrode slurry is coated on a negative electrode current collector copper foil with a thickness of 6 µm, and then baked at 100°C for 4 hours for drying, followed by roll pressing to obtain the negative electrode plate with a compacted density of 1.75 g/cm3.

### Separator: a polypropylene film is used.

Preparation of electrolyte solution: ethylene carbonate, dimethyl carbonate and 1,2-propylene glycol carbonate are mixed in a volume ratio of 1 : 1 : 1, and then LiPF6 is evenly dissolved in the above solution to obtain an electrolyte solution. In the electrolyte solution, the concentration of LiPF₆ is 1 mol/L.

Preparation of full battery: the above positive electrode plate is used, and a bare cell is formed by a winding method according to the sequence of a negative electrode plate, a separator, and a positive electrode plate, and aluminum tabs and copper tabs are respectively punched out to obtain the bare cell; Copper and copper tabs, and aluminum and aluminum tabs of two bare cells are welded together to the top cover of the battery via an adapter. After the bare cells are wrapped and insulated, the bare cells are put into an aluminum shell, and the top cover and the aluminum shell are welded to form a dry cell. The day cell is baked to remove water and then injected with an electrolyte solution, and the battery is formed and aged to obtain a whole battery accordingly.

Preparation of button battery: The above positive electrode plate, negative electrode and electrolyte solution are assembled together into a button battery in a button battery box.

### Example IV-2

The inner core material of Example I-1 is mixed with nickel cobalt lithium aluminate LiNi_{0.33}Co_{0.33}Al_{0.34}O₂ in a mass ratio of 1 : 1 as the positive electrode active material.

The rest are the same as in Example IV-1.

### Test of battery

### 1. Testing method of lattice change rate:

In a constant-temperature environment at 25°C, a positive electrode active material sample is placed in XRD (model: Bruker D8 Discover) and tested at 1°/min, and the test data are organized and analyzed; and with reference to the standard PDF card, lattice constants a0, b0, c0 and v0 at this moment are calculated (a0, b0 and c0 represent the lengths of a unit cell on all sides, and v0 represents the volume of the unit cell, which may be obtained directly from XRD refinement results).

By using the method for preparing a button battery in the above examples, the positive electrode active material sample is made into a button battery, and the button battery is charged at a small rate of 0.05C until the current is reduced to 0.01C. Then a positive electrode plate in the button battery is taken out and soaked in dimethyl carbonate (DMC) for 8 h. Then the positive electrode plate is dried, powder is scraped off, and particles with a particle size of less than 500 nm are screened out. Sampling is performed, and a cell volume v1 is calculated in the same way as that for testing the fresh sample as described above. (v0 - v1)/v0 × 100% is shown in a table as a lattice change rate (cell volume change rate) of the sample before and after complete lithium intercalation and de-intercalation.

### 2. Li/Mn antisite defect concentration:

The XRD results determined in the "Method for measuring lattice change rate" are compared with the PDF (Powder Diffraction File) card of a standard crystal, so as to obtain a Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

### 3. Compacted density:

5 g of positive electrode active material powder prepared above is put into a compaction dedicated mold (U.S. CARVER mold, model: 13 mm), and then the mold is placed on a compacted density instrument. A pressure of 3T is applied, the thickness of the powder under pressure (thickness after pressure relief) is read on the device, and the compacted density is calculated with ρ = m/v, where the area value used is the standard small picture area of 1540.25 mm².

### 4. 3C charge constant current rate:

Under a constant temperature environment of 25°C, the fresh full batteries prepared in each of the above Examples and Comparative examples are left to stand for 5 m, and discharged at 1/3C to 2.5 V. The full battery is allowed to stand for 5 min, charged at 1/3C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3C to 2.5 V, allowed to stand for 5 min, then charged at 3C to 4.3 V, and allowed to stand for 5 min, and the charge capacity at this moment is recorded as C1. The 3C charge constant current rate is C1/C0 × 100%.

A higher 3C charge constant current rate indicates a better rate performance of the second battery.

### 5. Dissolution test of transition metal Mn (and Fe doping Mn position):

After cycling at 45°C until the capacity is fading to 80%, the full batteries prepared in each of the above Examples and Comparative examples are discharged to a cut-off voltage of 2.0 V at a rate of 0.1C. Then the battery is disassembled, a negative electrode plate is taken out, a round piece of 30 unit areas (1540.25 mm²) is randomly taken from the negative electrode plate, and inductively coupled plasma (ICP) emission spectroscopy is performed with Agilent ICP-OES730. The amounts of Fe (if the Mn position of the positive electrode active material is doped with Fe) and Mn therein are calculated according to the ICP results, and then the dissolution of Mn (and Fe doping the Mn position) after cycling is calculated. The testing standard is in accordance with EPA-6010D-2014.

### 6. Surface oxygen valence state:

5 g of a positive electrode active material prepared above is made into a button battery according to the method for preparing a button battery in the above examples. The button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. The obtained particles are measured with electron energy loss spectroscopy (EELS, instrument model used: Talos F200S), so as to obtain an energy loss near-edge structure (ELNES) which reflects the density of states and energy level distribution of an element. According to the density of states and energy level distribution, the number of occupied electrons is calculated by integrating the data of valence-band density of states, and then a valence state of surface oxygen after the charging is extrapolated.

### 7. Measurement of manganese and phosphorus elements in positive electrode active material:

5 g of the positive electrode active material prepared above is dissloved in 100 ml of inverse aqua regia (concentrated hydrochloric acid concentrated nitric acid = 1 : 3) (concentrated hydrochloric acid concentration is about 37%, concentrated nitric acid concentration is about 65%). The content of each element in the solution is measured by ICP, and then the content of manganese or phosphorus element is measured and converted (100% × the amount of manganese or phosphorus element/the amount of the positive electrode active material) to obtain its weight ratio.

### 8. Method for measuring initial gram capacity of button battery:

At 2.5 to 4.3 V, the button batteries prepared in each of the above Examples III- and Comparative examples III- are charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, which is recorded as D0.

### 9. Cell expansion test of full battery stored at 60°C for 30 days:

The full batteries prepared in each of the above Examples III- and Comparative examples III- are stored at 60°C with 100% state of charge (SOC). Before and after and during the storage, the open-circuit voltage (OCV) and AC internal impedance (IMP) of a cell are measured for monitoring the SOC, and the volume of the cell is measured. Herein, the full battery is taken out after every 48 h of storage, and allowed to stand for 1 h, then the OCV and internal IMP are measured, and the cell volume is measured with the displacement method after the full battery is cooled to room temperature. The displacement method means that the gravity F₁ of the cell is measured separately using a balance of which the on-board data is subjected to automatic unit conversion, then the cell is completely placed in deionized water (with a density known as 1 g/cm³), the gravity F₂ of the cell at this moment is measured, the buoyancy F_{buoyancy} on the cell is F₁ - F₂, and then the cell volume V = (F₁ - F₂)/ (ρ × g) is calculated according to the Archimedes principle F_{buoyancy} = ρ × g × V_{displacement}.

From the test results of OCV and IMP, the battery of all the example always maintains a SOC of no less than 99% in the experimental process till the end of the storage.

After 30 days of storage, the cell volume is measured, and a percentage increase in cell volume after the storage relative to the cell volume before the storage is calculated.

In addition, residual capacity of the cell is measured. At 2.5 to 4.3 V, the full battery is charged at 1C to 4.3 V, and then charged at a constant voltage of 4.3 V until the current is less than or equal to 0.05 mA. The full battery is allowed to stand for 5 min, and the charge capacity at this moment is recorded as the residual capacity of the cell.

### 10. Test of cycling performance of full battery at 45°C:

In a constant-temperature environment at 45°C, at 2.5 to 4.3 V, a full battery is charged at 1C to 4.3 V, and then charged at a constant voltage of 4.3 V until the current is ≤ 0.05 mA, allowed to stand for 5 min, then discharged at 1C to 2.5 V, and the capacity is recorded as Dₙ (n = 0, 1, 2, ......). The above-mentioned process is repeated until the capacity is fading to 80%, and the number of repetitions at this moment is recorded, which is the number of cycles corresponding to the 80% capacity retention rate at 45°C.

### 11. Test of interplanar distance and angle:

1 g of each positive electrode active material powder prepared above is placed in a 50 mL test tube, and 10 mL of alcohol with a mass fraction of 75% is injected into the test tube, then fully stirred and dispersed for 30 min, and then a clean disposable plastic straw is used to take an appropriate amount of the solution, which is dripped on a 300-mesh copper mesh, at this moment, part of the powder will remain on the copper mesh. The copper mesh and the sample are transferred to TEM (Talos F200s G2) sample chamber for testing, the original picture of the TEM test is obtained and the original picture format ( xx.dm3) is saved.

The original picture obtained from the above TEM test is opened in Digital Micrograph software, and Fourier transform (automatically completed by the software after the clicking operation) is performed to obtain a diffraction pattern, and the distance from the diffraction spot to the center position in the diffraction pattern is measured to obtain the interplanar distance, and the angle is calculated according to the Bragg equation.

By comparing the obtained interplanar distance and corresponding angle data with their standard values, different materials in the coating layer can be identified.

### 12. Test of the coating layer thickness:

The test of the coating layer thickness mainly comprises cutting a thin slice with a thickness of about 100 nm from the middle of the single particle of the positive electrode active material prepared above by FIB, and then performing a TEM test on the thin slice to obtain the original picture of the TEM test, and saving the original picture format (xx.dm3).

The original picture obtained from the above TEM test is opened in Digital Micrograph software, the coating layer is be identified with the lattice spacing and angle information, and the thickness of the coating layer is measured.

The thickness is measured at three locations on the selected particle and the average value is taken.

### 13. Determination of the molar ratio of SP2 form to SP3 form of the carbon in the third coating layer

This test is performed by Raman spectroscopy. By splitting the energy spectrum of the Raman test, Id/Ig is obtained, where Id is the peak intensity of SP3-form carbon, and Ig is the peak intensity of SP2-form carbon, thereby determining the molar ratio of the two.

### 14. Average discharge voltage (V) test of button battery:

The button battery prepared above is allowed to stand for 5 min at a constant temperature of 25°C, discharged at 0.1C to 2.5 V, allowed to stand for 5 min, charged at 0.1C to 4.3 V, and then charged at a constant voltage of 4.3 V until the current is less than or equal to 0.05 mA, and allowed to stand for 5 min; then discharged at 0.1C to 2.5 V, the discharge capacity at this moment is the initial gram capacity, which is recorded as D0; the discharge energy is the initial energy, which is recorded as E0; so the average discharge voltage V of the button battery is E0/D0.

### 15. Test of the crystallinity of pyrophosphate and phosphate by X-ray diffraction:

5 g of the positive electrode active material powder prepared above is taken and measured for total scattering intensity by X-rays, which is the sum of the scattering intensity of the entire space material, and is only related to the intensity of the primary ray, the chemical structure, and the total number of electrons participating in the diffraction, that is, the mass, but has nothing to do with the order of the sample; then the crystalline scattering and non-crystalline scattering are separated from the diffraction pattern, and the degree of crystallinity is the ratio of the scattering of the crystalline part to the total intensity of the scattering.

### 16. A secondary battery is tested as follows:

(1) according to the method in the national standard GB 38031-2020 "Electric vehicles traction battery safety requirements", the energy density and furnace temperature test results of the secondary battery are determined;
(2) Needling test: the secondary battery is fully charged to 100% SOC, the cell is pierced with a Φ8 mm steel needle at a speed of 25 mm/2, and observed for 1 h, if no fire occurs, the secondary battery passes the test;
(3) according to the national standard GBT31486-2015 "Electrical performance requirements and test methods for traction battery of electric vehicle", the charge capacity retention rate at 1C at room temperature and the discharge capacity retention rate at low temperature of the secondary battery are determined to obtain the dynamic data of the battery;
(4) according to the national standard GBT31484-2015 "Cycle life requirements and test methods for traction battery of electric vehicle", the cycle life data of the second battery are determined.

The performance test results of all Examples and Comparative examples are shown in the Table below.

### [Determination results of positive electrode active material including inner core and battery]

The compositions of the positive electrode active materials of Examples I-1 to I-11 and Comparative examples I-1 to I-8 are shown in Table 9. The performance data of the positive electrode active materials or button batteries or full batteries of Examples I-1 to I-11 and Comparative examples I-1 to I-8 obtained according to the above performance testing methods are shown in Table 10. The compositions of the positive electrode active materials of Examples I-12 to I-27 are shown in Table 11. The performance data of positive electrode active materials or button batteries or full batteries of Examples I-12 to I-27 obtained according to the above performance testing methods are shown in Table 12.

**Table 9: Compositions of positive electrode active materials of Examples I-1 to I-11 and Comparative examples I-1 to I-8**

| | Positive electrode active material | (1-y):y | a:x |
|---|---|---|---|
| Comparative example I-1 | LiMnPO₄ | - | - |
| Comparative example I-2 | LiMn_{0.85}Fe_{0.15}PO₄ | - | - |
| Comparative example I-3 | Li_{0.990}Mg_{0.005}Mn_{0.95}Zn_{0.05}PO₄ | - | - |
| Comparative example I-4 | Li_{0.90}Nb_{0.01}Mn_{0.6}Fe_{0.4}PO_{3.95}F_{0.05} | - | - |
| Comparative example I-5 | Li_{0.76}Mg_{0.12}Mn_{0.7}Fe_{0.3}P_{0.999}Si_{0.001}O_{3.999}F_{0.001} | - | - |
| Comparative example I-6 | Li_{0.998}Mg_{0.001}Mn_{0.4}Zn_{0.6}P_{0.999}Si_{0.001}O_{3.999}F_{0.001} | - | - |
| Comparative example I-7 | Li_{1.068}Mg_{0.001}Mn_{0.7}Fe_{0.3}P_{0.8s}Si_{0.12}O_{3.95}F_{0.05} | - | - |
| Comparative example I-8 | Li_{0.948}Mg_{0.001}Mn_{0.6}Fe_{0.4}P_{0.93}Si_{0.07}O_{3.88}F_{0.12} | - | - |
| Example I-1 | Li_{0.994}Mo_{0.001}Mn_{0.65}Fe_{0.35}P_{0.999}Si_{0.001}O_{3.999}F_{0.001} | 1.86 | 994 |
| Example I-2 | Li_{0.977}Mg_{0.001}Mn_{0.65}Fe_{0.34}Ti_{0.01}P_{0.999}N_{0.001}O_{3.999}F_{0.001} | 1.86 | 977 |
| Example I-3 | Li_{0.992}W_{0.001}Mn_{0.65}Fe_{0.35}P_{0.999}S_{0.001}O_{3.999}F_{0.001} | 1.86 | 992 |
| Example I-4 | Li_{0.997}Al_{0.001}Mn_{0.65}Fe_{0.35}P_{0.999}Si_{0.001}O_{3.999}Q_{0.001} | 1.86 | 997 |
| Example I-5 | Li_{0.993}Nb_{0.001}Mn_{0.65}Fe_{0.345}V_{0.005}P_{0.999}S_{0.001}O_{3.999}F_{0.001} | 1.86 | 993 |
| Example I-6 | Li_{0.993}Nb_{0.001}Mn_{0.65}Fe_{0.34}V_{0.005}Mg_{0.005}P_{0.999}S_{0.001}O_{3.999}F_{0.001} | 1.86 | 993 |
| Example I-7 | Li_{0.993}Nb_{0.001}Mn_{0.65}Fe_{0.34}V_{0.005}Co_{0.005}P_{0.999}S_{0.001}O_{3.999}F_{0.001} | 1.86 | 993 |
| Example I-8 | Li_{0.993}Nb_{0.001}Mn_{0.65}Fe_{0.34}V_{0.005}Ni_{0.005}P_{0.999}S_{0.001}O_{3.999}F_{0.001} | 1.86 | 993 |
| Example I-9 | Li_{0.991}Nb_{0.001}Mn_{0.65}Fe_{0.349}Ti_{0.001}P_{0.999}S_{0.001}O_{3.999}Q_{0.001} | 1.86 | 991 |
| Example I-10 | Li_{0.995}Nb_{0.001}Mn_{0.65}Fe_{0.34}V_{0.005}Mg_{0.005}P_{0.999}Si_{0.001}O_{3.999}Br_{0.001} | 1.86 | 995 |
| Example I-11 | Li_{0.99s}Mg_{0.001}Mn_{0.65}Fe₀.₃₄₅V₀.₀₀₅P_{0.999}Si_{0.001}O₃.₉₉₉Br_{0.001} | 1.86 | 998 |

**Table 10 Performance data of positive electrode active materials or button batteries or full batteries of Examples I-1 to I-11 and Comparative examples I-1 to I-8 obtained according to the above performance testing methods**

| | Lattice change rate (%) | Li/Mn antisite defect concentration (%) | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Comparative example I-1 | 11.4 | 5.2 | -1.55 | 1.7 | 2060 | 125.6 | 50.1 | 121 | 48.6 |
| Comparative example I-2 | 10.6 | 4.3 | -1.51 | 1.87 | 1510 | 126.4 | 50.4 | 129 | 37.3 |
| Comparative example I-3 | 10.8 | 3.6 | -1.64 | 1.88 | 1028 | 134.7 | 51.7 | 134 | 31.9 |
| Comparative example I-4 | 9.7 | 2.4 | -1.71 | 1.93 | 980 | 141.3 | 62.3 | 148 | 30.8 |
| Comparative example I-5 | 5.6 | 1.8 | -1.81 | 1.98 | 873 | 110.8 | 50.2 | 387 | 21.4 |
| Comparative example I-6 | 3.7 | 1.5 | -1.80 | 2.01 | 574 | 74.3 | 65.8 | 469 | 15.8 |
| Comparative example I-7 | 7.8 | 1.5 | -1.75 | 2.05 | 447 | 139.4 | 64.3 | 396 | 18.3 |
| Comparative example I-8 | 8.4 | 1.4 | -1.79 | 2.16 | 263 | 141.7 | 63.9 | 407 | 22.7 |
| Example I-1 | 6.3 | 1.2 | -1.82 | 2.21 | 192 | 156.2 | 68.1 | 552 | 8.4 |
| Example I-2 | 6.8 | 1.1 | -1.85 | 2.25 | 161 | 153.4 | 75.1 | 583 | 7.5 |
| Example I-3 | 6.4 | 0.9 | -1.86 | 2.31 | 144 | 154.6 | 76.7 | 646 | 8.6 |
| Example I-4 | 5.5 | 0.9 | -1.89 | 2.38 | 125 | 153.6 | 78.4 | 638 | 8.3 |
| Example I-5 | 5.3 | 0.7 | -1.98 | 2.45 | 102 | 153.8 | 84.5 | 769 | 7.8 |
| Example I-6 | 2.4 | 0.7 | -1.95 | 2.47 | 88 | 157.5 | 92.5 | 747 | 6.4 |
| Example I-7 | 2.2 | 0.6 | -1.96 | 2.49 | 85 | 158.5 | 94.8 | 858 | 6.3 |
| Example I-8 | 3.4 | 0.5 | -1.98 | 2.51 | 79 | 157.6 | 93.8 | 726 | 6.2 |
| Example I-9 | 3.8 | 0.5 | -1.96 | 2.45 | 86 | 146.8 | 90.3 | 686 | 6.8 |
| Example I-10 | 4.0 | 0.6 | -1.97 | 2.46 | 103 | 155.7 | 91.2 | 638 | 6.5 |
| Example I-11 | 3.6 | 0.7 | -1.95 | 2.46 | 112 | 155.8 | 92.6 | 587 | 6.4 |

**Table 11 Compositions of positive electrode active materials of Examples I-12 to I-27**

| | Positive electrode active material | (1-y):y | a: x |
|---|---|---|---|
| Example I-12 | Li_{0.997}Mg_{0.001}Mn_{0.68}Fe_{0.3}V_{0.02}P_{0.999}N_{0.001}O_{3.999}F_{0.001} | 2.26 | 997 |
| Example I-13 | Li_{0.997}Mg_{0.001}Mn_{0.58}Fe_{0.4}V_{0.02}P_{0.999}N_{0.001}O_{3.999}F_{0.001} | 1.45 | 997 |
| Example I-14 | Li_{0.997}Mg_{0.001}Mn_{0.65}Fe_{0.3}V_{0.05}P_{0.999}N_{0.001}O_{3.999}F_{0.001} | 2.17 | 997 |
| Example I-15 | Li_{0.988}Mg_{0.005}Mn_{0.6}Fe_{0.35}V_{0.05}P_{0.999}S_{0.001}O_{3.999}F_{0.001} | 1.71 | 197.6 |
| Example I-16 | Li_{0.984}Mg_{0.005}Mn_{0.6}Fe_{0.35}V_{0.05}P_{0.995}S_{0.005}O_{3.999}F_{0.001} | 1.71 | 196.8 |
| Example I-17 | Li_{0.984}Mg_{0.005}Mn_{0.6}Fe_{0.35}V_{0.05}P_{0.999}S_{0.001}O_{3.995}F_{0.005} | 1.71 | 196.8 |
| Example I-18 | Li_{0.934}Mg_{0.005}Mn_{0.65}Fe_{0.25}V_{0.05}Co_{0.05}P_{0.999}S_{0.001}O_{3.995}F_{0.005} | 2.60 | 196.8 |
| Example I-19 | Li_{0.984}Mg_{0.005}Mn_{0.65}Fe_{0.20}V_{0.05}Co_{0.10}P_{0.999}S_{0.001}O_{3.995}F_{0.005} | 3.25 | 196.8 |
| Example I-20 | Li_{0.984}Mg_{0.005}Mn_{0.75}Fe_{0.05}V_{0.05}Co_{0.15}P_{0.999}S_{0.001}O_{3.995}F_{0.005} | 15.0 | 196.8 |
| Example I-21 | Li_{0.984}Mg_{0.005}Mn_{0.65}Fe_{0.25}V_{0.05}Ni_{0.05}P_{0.999}S_{0.001}O_{3.995}F_{0.005} | 2.60 | 196.8 |
| Example I-22 | Li_{0.984}Mg_{0.005}Mn_{0.75}Fe_{0.10}V_{0.05}Ni_{0.10}P_{0.999}S_{0.001}O_{3.995}F_{0.005} | 7.50 | 196.8 |
| Example I-23 | Li_{0.984}Mg_{0.005}Mn_{0.7}Fe_{0.15}V_{0.05}Co_{0.10}P_{0.999}S_{0.001}O_{3.995}F_{0.005} | 4.67 | 196.8 |
| Example I-24 | Li_{0.984}Mg_{0.005}Mn_{0.6}Fe_{0.25}V_{0.05}Co_{0.10}P_{0.999}S_{0.001}O_{3.995}F_{0.005} | 2.40 | 196.8 |
| Example I-25 | Li_{0.984}Mg_{0.005}Mn_{0.5}Fe_{0.35}V_{0.05}Co_{0.10}P_{0.999}S_{0.001}O_{3.995}F_{0.005} | 1.43 | 196.8 |
| Example I-26 | Li_{1.01}Mg_{0.005}Mn_{0.7}Fe_{0.15}V_{0.05}Co_{0.10}P_{0.9}Si_{0.1}O_{3.92}F_{0.08} | 4.67 | 202 |
| Example I-27 | Li_{0.97}Mg_{0.005}Mn_{0.7}Fe_{0.15}V_{0.05}Co_{0.10}P_{0.92}Si_{0.08}O_{3.9}F_{0.1} | 4.67 | 194 |

**Table 12 Performance data of positive electrode active materials or button batteries or full batteries of Examples 1-12 to 1-27 obtained according to the above performance testing methods**

| | Lattice change rate (%) | Li/Mn antisite defect concentration (%) | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansio n rate of cell when stored at 60°C (%) |
|---|---|---|---|---|---|---|---|---|---|
| Example I-12 | 7.4 | 0.5 | -1.96 | 2.45 | 92 | 153.3 | 97.2 | 948 | 6.7 |
| Example I-13 | 7.6 | 0.4 | -1.98 | 2.48 | 83 | 157.1 | 85.1 | 953 | 7.8 |
| Example I-14 | 7.8 | 0.6 | -1.95 | 2.47 | 87 | 155.4 | 85.2 | 1067 | 6.9 |
| Example I-15 | 6.4 | 0.5 | -1.97 | 2.49 | 86 | 156.4 | 82.1 | 938 | 7.5 |
| Example I-16 | 5.4 | 0.7 | -1.94 | 2.44 | 86 | 156.1 | 87.3 | 927 | 8.4 |
| Example I-17 | 4.2 | 0.6 | -1.98 | 2.42 | 88 | 156.5 | 92.1 | 919 | 7.5 |
| Example I-18 | 2.5 | 0.4 | -1.96 | 2.46 | 84 | 157.4 | 94.0 | 1057 | 6.4 |
| Example I-19 | 2.4 | 0.4 | -1.97 | 2.47 | 84 | 156.8 | 94.4 | 1064 | 6.7 |
| Example I-20 | 2.6 | 0.4 | -1.95 | 2.45 | 86 | 154.8 | 93.7 | 975 | 7.3 |
| Example I-21 | 3.3 | 0.5 | -1.93 | 2.46 | 82 | 155.7 | 91.5 | 989 | 6.3 |
| Example I-22 | 3.1 | 0.5 | -1.95 | 2.46 | 75 | 157.3 | 91.6 | 964 | 6.3 |
| Example I-23 | 2.8 | 0.6 | -1.96 | 2.44 | 67 | 151.8 | 84.4 | 864 | 5.9 |
| Example I-24 | 2.5 | 0.5 | -1.97 | 2.45 | 65 | 152.3 | 90.2 | 976 | 5.6 |
| Example I-25 | 2.2 | 0.4 | -1.98 | 2.46 | 58 | 153.3 | 92.2 | 986 | 5.2 |
| Example I-26 | 3.4 | 0.6 | -1.95 | 2.25 | 45 | 147.3 | 92.5 | 978 | 9.3 |
| Example I-27 | 2.7 | 0.5 | -1.98 | 2.28 | 42 | 145.8 | 91.8 | 937 | 10.5 |

### Examples I-28 to I-41

A positive electrode active material, a button battery and a full battery are prepared in the same way as in Example 1-1, except that the stirring rotation speed and temperature in the preparation of doped manganese oxalate, the time of grinding and stirring in a sander, and the sintering temperature and sintering time are changed, specifically as shown in Table 13 below.

And, the performance data of the positive electrode active materials or button batteries or full batteries of Examples 1-28 to 1-41 obtained according to the above performance testing methods are shown in Table 14.

**Table 13 Stirring rotation speed and temperature in the preparation of doped manganese oxalate, time of grinding and stirring in a sander, and sintering temperature and sintering time in Examples 1-28 to 1-41**

| | Stirring rotation speed (rpm) | Stirring temperature (°C) | Grinding time (h) | Sintering temperature (°C) | Sintering time (h) |
|---|---|---|---|---|---|
| Example I-28 | 200 | 50 | 12 | 700 | 10 |
| Example I-29 | 300 | 50 | 12 | 700 | 10 |
| Example I-30 | 400 | 50 | 12 | 700 | 10 |
| Example I-31 | 500 | 50 | 12 | 700 | 10 |
| Example I-32 | 600 | 50 | 10 | 700 | 10 |
| Example I-33 | 700 | 50 | 11 | 700 | 10 |
| Example I-34 | 800 | 50 | 12 | 700 | 10 |
| Example I-35 | 600 | 60 | 12 | 700 | 10 |
| Example I-36 | 600 | 70 | 12 | 700 | 10 |
| Example I-37 | 600 | 80 | 12 | 700 | 10 |
| Example I-38 | 600 | 90 | 12 | 600 | 10 |
| Example I-39 | 600 | 100 | 12 | 800 | 10 |
| Example I-40 | 600 | 110 | 12 | 700 | 8 |
| Example I-41 | 600 | 120 | 12 | 700 | 12 |

**Table 14 Performance data of positive electrode active materials or button batteries or full batteries of Examples 1-28 to 1-41 obtained according to the above performance testing methods**

| | Lattice change rate (%) | Li/Mn antisite defect concentration | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansio n rate of cell when stored at 60°C (%) |
|---|---|---|---|---|---|---|---|---|---|
| Example I-28 | 7.8 | 5.6 | -1.59 | 1.89 | 341 | 138.1 | 53.1 | 594 | 24.1 |
| Example I-29 | 7.4 | 4.8 | -1.62 | 1.94 | 279 | 140.3 | 55.6 | 628 | 22.4 |
| Example I-30 | 7.2 | 4.5 | -1.66 | 1.98 | 248 | 141.5 | 56.8 | 689 | 21.6 |
| Example I-31 | 7.1 | 4.1 | -1.68 | 2.01 | 216 | 142.3 | 57.5 | 721 | 18.7 |
| Example I-32 | 6.8 | 3.8 | -1.71 | 2.04 | 184 | 143.8 | 59.3 | 749 | 15.6 |
| Example I-33 | 6.7 | 3.4 | -1.75 | 2.06 | 176 | 144.2 | 61.4 | 756 | 11.3 |
| Example I-34 | 6.6 | 3.1 | -1.76 | 2.08 | 139 | 148.2 | 62.6 | 787 | 10.8 |
| Example I-35 | 6.4 | 2.7 | -1.76 | 2.13 | 126 | 149.8 | 63.8 | 816 | 9.6 |
| Example I-36 | 6.4 | 1.9 | -1.77 | 2.15 | 103 | 152.3 | 65.4 | 937 | 8.9 |
| Example I-37 | 6.4 | 1.4 | -1.84 | 2.27 | 89 | 157.2 | 69.1 | 982 | 8.2 |
| Example I-38 | 6.5 | 1.8 | -1.78 | 2.16 | 113 | 153.9 | 66.3 | 921 | 9.1 |
| Example I-39 | 6.8 | 2.7 | -1.76 | 2.12 | 134 | 152.1 | 64.5 | 998 | 9.8 |
| Example I-40 | 7.1 | 3.4 | -1.74 | 2.08 | 161 | 150.2 | 63.4 | 926 | 10.5 |
| Example I-41 | 7.8 | 4.5 | -1.70 | 2.03 | 189 | 148.1 | 61.3 | 837 | 11.8 |

### Examples 1-42 to I-54

A positive electrode active material, a button battery and a full battery are prepared in the same way as in Example 1-1, except that the lithium source, the manganese source, the phosphorus source and the sources of doping elements A, B, C and D are changed, specifically as shown in Table 15 below. The prepared positive electrode active materials all had the same composition as in Example 1-1, namely, Li_{0.994}Mo_{0.001}Mn_{0.65}Fe_{0.35}P_{0.999}Si_{0.001}O_{3.999}F_{0.001}.

And, the performance data of the positive electrode active materials or button batteries or full batteries of Examples 1-42 to 1-54 obtained according to the above performance testing methods are shown in Table 16.

**Table 15 Lithium source, manganese source, phosphorus source and sources of doping elements A, B, C and D in Examples 1-42 to I-54**

| | Lithium source | Manganese source | Phosphorus source | Source of *A* | Source of *B* | Source of *C* | Source of *D* |
|---|---|---|---|---|---|---|---|
| Example I-42 | LiOH | MnCO₃ | NH₄H₂PO₄ | Mo(NO₃)₆ | FeO | H₄SiO₄ | NH₄F |
| Example I-43 | LiOH | MnO | NH₄H₂PO₄ | Mo(NO₃)₆ | FeO | H₄SiO₄ | NH₄F |
| Example I-44 | LiOH | Mn₃O₄ | NH₄H₂PO₄ | Mo(NO₃)₆ | FeO | H₄SiO₄ | NH₄F |
| Example I-45 | LiOH | Mn(NO₃)₂ | NH₄H₂PO₄ | Mo(NO₃)₆ | FeO | H₄SiO₄ | NH₄F |
| Example I-46 | LiOH | MnO | NH₄H₂PO₄ | Mo(NO₃)₆ | FeCO₃ | H₄SiO₄ | NH₄F |
| Example I-47 | LiOH | MnO | NH₄H₂PO₄ | Mo(NO₃)₆ | Fe(NO₃)₂ | H₄SiO₄ | NH₄F |
| Example I-48 | LiOH | MnO | NH₄H₂PO₄ | Mo(NO₃)₆ | Fe₃O₄ | H₄SiO₄ | NH₄F |
| Example I-49 | LiOH | MnO | NH₄H₂PO₄ | Mo(NO₃)₆ | FeC₂O₄ | H₄SiO₄ | NH₄F |
| Example I-50 | LiOH | MnO | NH₄H₂PO₄ | Mo(NO₃)₆ | Fe | H₄SiO₄ | NH₄F |
| Example I-51 | LiOH | MnO | NH₄H₂PO₄ | Mo(PO₄)₂ | FeO | H₄SiO₄ | NH₄F |
| Example I-52 | LiOH | MnO | NH₄H₂PO₄ | Mo(C₂O₄)₃ | FeO | H₄SiO₄ | NH₄F |
| Example I-53 | LiOH | MnO | NH₄H₂PO₄ | MoO₃ | FeO | H₄SiO₄ | NH₄F |
| Example I-54 | LiOH | MnO | NH₄H₂PO₄ | Mo | FeO | H₄SiO₄ | NH₄F |

**Table 16 Performance data of positive electrode active materials or button batteries or full batteries of Examples 1-42 to 1-54 obtained according to the above performance testing methods**

| | Lattice change rate (%) | Li/Mn antisite defect concentration | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example I-42 | 6.5 | 2.8 | -1.80 | 2.19 | 95 | 155.7 | 67.3 | 519 | 10.3 |
| Example I-43 | 6.7 | 2.6 | -1.81 | 2.18 | 88 | 156.1 | 67.6 | 525 | 9.8 |
| Example I-44 | 6.8 | 2.7 | -1.83 | 2.20 | 91 | 155.5 | 67.5 | 522 | 10.1 |
| Example I-45 | 6.7 | 2.6 | -1.82 | 2.17 | 85 | 155.9 | 67.4 | 517 | 9.5 |
| Example I-46 | 6.4 | 2.5 | -1.83 | 2.18 | 134 | 150.9 | 61.4 | 501 | 11.6 |
| Example I-47 | 6.1 | 2.1 | -1.81 | 2.21 | 114 | 152.8 | 63.7 | 518 | 10.8 |
| Example I-48 | 6.6 | 1.8 | -1.79 | 2.23 | 105 | 154.3 | 65.4 | 538 | 9.2 |
| Example I-49 | 6.4 | 1.4 | -1.85 | 2.22 | 95 | 156.6 | 68.4 | 572 | 8.7 |
| Example I-50 | 7.5 | 3.4 | -1.75 | 2.08 | 115 | 149.5 | 58.3 | 426 | 9.6 |
| Example I-51 | 6.5 | 1.5 | -1.83 | 2.21 | 95 | 155.8 | 67.5 | 531 | 8.8 |
| Example I-52 | 6.8 | 1.7 | -1.81 | 2.23 | 101 | 154.6 | 66.9 | 518 | 7.4 |
| Example I-53 | 6.6 | 1.6 | -1.82 | 2.24 | 118 | 155.3 | 67.2 | 508 | 7.9 |
| Example I-54 | 8.7 | 2.4 | -1.79 | 2.17 | 129 | 152.3 | 65.4 | 483 | 11.2 |

**Table 17 Positive electrode active materials of Examples 1-55 to 1-68**

| | Positive electrode active material | (1-y):y | a:x |
|---|---|---|---|
| Example I-55 | Li_{0.9}Mg_{0.05}Mn_{0.6}Fe_{0.395} V_{0.005}P_{0.9}Si_{0.1}O_{3.9}F_{0.1} | 1.5 | 18 |
| Example I-56 | Li_{1.1}Mg_{0.001}Mn_{0.6}Fe_{0.395}V_{0.005}P_{0.9}Si_{0.1}O_{3.998}F_{0.002} | 1.5 | 1100 |
| Example I-57 | Li_{0.9}Mg_{0.1}Mn_{0.6}Fe_{0.395}V_{0.005}P_{0.95}Si_{0.05}O_{3.95}F_{0.05} | 1.5 | 9 |
| Example I-58 | Li_{0.95}Mg_{0.05}Mn_{0.999}Fe_{0.001}P_{0.96}Si_{0.04}O_{3.99}F_{0.01} | 999 | 19 |
| Example I-59 | Li_{0.95}Mg_{0.05}Mn_{0.99}Fe_{0.01}P_{0.96}Si_{0.04}O_{3.99}F_{0.01} | 99 | 19 |
| Example I-60 | Li_{0.95}Mg_{0.05}Mn_{0.8}Fe_{0.2}P_{0.96}Si_{0.04}O_{3.99}F_{0.01} | 4 | 19 |
| Example I-61 | Li_{0.85}Mg_{0.075}Mn_{0.60}Fe_{0.393}V_{0.004}Co_{0.003}P_{0.999}S_{0.001}O₄ | 3:2 | 11.3 |
| Example I-62 | Li_{1.15}Mn_{0.60}Fe_{0.393}V_{0.004}CO_{0.003}P_{0.999}S_{0.001}O₄ | 3:2 | / |
| Example I-63 | Li_{1.15}Mn_{0.001}Fe_{0.999}P_{0.999}S_{0.001}O₄ | 1:999 | / |
| Example I-64 | Li_{1.15}Mn_{0.001}Fe_{0.999}P_{0.5}S_{0.5}O_{3.5}F_{0.5} | 0.735417 | / |
| Example I-65 | Li_{0.998}Mn_{0.68}Fe_{0.3}V_{0.02}P_{0.999}N_{0.001}O_{3.999}F_{0.001} | 17:8 | / |
| Example I-66 | Li_{0.997}Mg_{0.001}Mn_{0.68}Fe_{0.3}V_{0.02}PO_{3.999}F_{0.001} | 17:8 | 997:1 |
| Example I-67 | Li_{0.997}Mg_{0.001}Mn_{0.68}Fe_{0.3}V_{0.02}P_{0.999}N_{0.001}O₄ | 17:8 | 997:1 |
| Example I-68 | Li_{0.998}Mn_{0.68}Fe_{0.3}V_{0.02}PO_{3.999}F_{0.001} | 17:8 | / |

**Table 18 Performance data of positive electrode active materials or button batteries or full batteries of Examples 1-55 to 1-68 obtained according to the above performance testing methods**

| | Lattice change rate (%) | Li/Mn antisite defect concentration | Surface oxygen valence state | Compacted density (g/cm3) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example I-55 | 5.1 | 2.2 | -1.82 | 2.25 | 93 | 153.1 | 66.5 | 562 | 7.9 |
| Example I-56 | 4.8 | 2.0 | -1.83 | 2.23 | 112 | 156.8 | 67.1 | 550 | 8.1 |
| Example I-57 | 4.8 | 2.4 | -1.81 | 2.21 | 97 | 153.4 | 65.7 | 557 | 7.5 |
| Example I-58 | 5.4 | 3.2 | -1.74 | 2.20 | 220 | 144.5 | 55.2 | 429 | 12.7 |
| Example I-59 | 5.3 | 2.8 | -1.78 | 2.21 | 187 | 148.3 | 58.3 | 458 | 11.9 |
| Example I-60 | 5.3 | 2.6 | -1.80 | 2.23 | 163 | 152.4 | 61.5 | 512 | 10.3 |
| Example I-61 | 3.5 | 0.8 | -1.96 | 2.42 | 81 | 150 | 64 | 758 | 4.5 |
| Example I-62 | 2.8 | 1.2 | -1.97 | 2.41 | 78 | 157 | 75 | 846 | 5.3 |
| Example I-63 | 3.2 | 0.2 | -1.96 | 2.43 | 75 | 158 | 68 | 959 | 5.1 |
| Example I-64 | 3.1 | 0.3 | -1.95 | 2.42 | 68 | 156 | 65 | 861 | 4.9 |
| Example I-65 | 2.3 | 1.9 | -1.97 | 2.41 | 75 | 154 | 84 | 768 | 5.2 |
| Example I-66 | 2.5 | 2.1 | -1.98 | 2.42 | 78 | 156 | 89 | 923 | 6.3 |
| Example I-67 | 2.4 | 1.8 | -1.96 | 2.43 | 76 | 157 | 93 | 865 | 5.4 |
| Example I-68 | 2.6 | 1.7 | -1.97 | 2.42 | 83 | 158 | 98 | 1095 | 6.8 |

It can be seen from Tables 9-18 above that, the positive electrode active materials of the examples of the present application all achieve a better effect than the comparative examples in one or even all terms of cycling performance, high-temperature stability, gram capacity and compacted density.

Through comparison between Examples 1-18 to 1-20 and 1-23 to 1-25, it can be seen that in the case of the same rest elements, when (1*-y*):*y* is in a range of 1 to 4, the energy density and cycling performance of the secondary battery can be further improved.

Fig. 2 shows an XRD pattern of undoped LiMnPO₄ and a positive electrode active material prepared in Example 1-2. It can be seen from the figure that, the position of main characteristic peaks in the XRD pattern of the positive electrode active material of Example I-2 is consistent with that of the undoped LiMnPO₄, indicating that no impurity phase is introduced in the doping process, and an improvement in performance is mainly attributed to the doping with elements, rather than an impurity phase.

Fig. 10 shows an EDS diagram of a positive electrode active material prepared in Example 1-2. Those in spotted distribution in the figure are the doping elements. It can be seen from the figure that in the positive electrode active material of Example 1-2, the doping with elements is uniform.

**Table 19 Performance data of positive electrode active materials or button batteries or full batteries of Examples 1-2-1 to 1-2-2 obtained according to the above performance testing methods**

| | Positive electrode active material | Mass content of doped carbon layer | Content of doping elements | Lattice change rate (%) | Li/Mn antisite defect concentration (%) | Surface oxygen valence state | Compacted density (g/cm³) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|---|---|---|
| Example I-2-1 | Li_{0.9M}Mo_{0.001}Mn_{0.65}Fe_{0.35}P_{0.999}Si_{0.001}O_{3.999}F_{0.001} | 4% | 8% | 6.2 | 1.1 | -1.82 | 2.21 | 192 | 158.7 | 74.9 | 559 | 8.5 |
| Example I-2-2 | Li_{0.977}Mg_{0.001}Mn_{0.65}Fe_{0.34}Ti_{0.01}P_{0.999}N_{0.001}O_{3.999}F_{0.001} | 4% | 8% | 6.9 | 1.2 | -1.85 | 2.25 | 161 | 155.7 | 82.6 | 591 | 7.1 |

It can be seen from the above table that the specific capacity and rate performance of the positive electrode material are also improved correspondingly when the doped carbon layer is compared with the undoped carbon layer.

### [Determination results of two-layer coated positive electrode active material and battery]

**Table 20 Performance test results of Examples II-1-1 to II-1-40 and Comparative examples II-1 to II-7**

| Example No. | Inner core | First coating layer | Second coating layer | Lattice change rate (%) | Li/Mn antisite defect concentration /% | Dissolution of Fe and Mn after cycling (ppm) | Surface oxygen valence state | Compacted density (g/cm³) | Gram capacity of button battery at 0.1C (mAh/g) | Average discharge voltage of button battery (V) | Expansion of cell w h en stored at 60°C for 30 d (%) | Number of cycles corresponding to 80% capacity retention at 45°C |
|---|---|---|---|---|---|---|---|---|---|---|---|---|
| Example II-1-1 | Li_{0.999}Mn_{0.60}Fe_{0.393}V_{0.00 4}CO_{0.003}P_{0.999}S_{0.001}O₄ | 1% Li₂FeP₂O₇/3% LiFePO₄ | 2% of carbon | 2.4 | 0.4 | 8 | -1.98 | 2.41 | 158.2 | 3.78 | 1.9 | 1328 |
| Example II-1-2 | Li_{0.999}Mn_{0.60}Fe_{0.40}P_{0.999} S_{0.001}O₄ | 0.8% Li₂FeP₂O₇/2.4% LiFePO₄ | 1% of carbon | 6.6 | 1.2 | 63 | -1.97 | 2.43 | 148.9 | 3.75 | 6.4 | 804 |
| Example II-1-3 | Li_{0.999}Mn_{0.60}Fe_{0.40}P_{0.999} S_{0.001}O₄ | 1% Li₂FeP₂O₇/3% LiFePO₄ | 1% of carbon | 6.5 | 1.1 | 48 | -1.97 | 2.45 | 148.5 | 3.74 | 5.3 | 918 |
| Example II-1-4 | Li_{0.999}Mn_{0.60}Fe_{0.40}P_{0.999} S_{0.001}O₄ | 1.2% Li₂FeP₂O₇/3.6% LiFePO₄ | 1% of carbon | 6.5 | 0.8 | 32 | -1.97 | 2.44 | 147.3 | 3.73 | 4.8 | 968 |
| Example II-1-5 | Li_{0.999}Mn_{0.60}Fe_{0.40}P_{0.999} S_{0.001}O₄ | 1.4% Li₂FeP₂O₇/4.2% LiFePO₄ | 1% of carbon | 6.5 | 0.7 | 20 | -1.98 | 2.45 | 146.8 | 3.73 | 3.6 | 1064 |
| Example II-1-6 | Li_{0.999}Mn_{0.60}Fe_{0.40}P_{0.999} S_{0.001}O₄ | 1.6% Li₂FeP₂O₇/4.8% LiFePO₄ | 1% of carbon | 6.6 | 0.6 | 15 | -1.98 | 2.45 | 145.9 | 3.72 | 2.8 | 1189 |
| Example II-1-7 | Li_{0.999}Mn_{0.60}Fe_{0.40}P_{0.999} S_{0.001}O₄ | 1% Li₂FeP₂O₇/3% LiFePO₄ | 2% of carbon | 6.5 | 1.0 | 42 | -1.97 | 2.46 | 147.5 | 3.73 | 4.8 | 968 |
| Example II-1-8 | Li_{0.999}Mn_{0.60}Fe_{0.40}P_{0.999} S_{0.001}O₄ | 1% Li₂FeP₂O₇/3% LiFePO₄ | 4% of carbon | 6.5 | 1.0 | 38 | -1.97 | 2.47 | 146.4 | 3.73 | 4.3 | 1012 |
| Example II-1-9 | Li_{0.999}Mn_{0.60}Fe_{0.40}P_{0.999} S_{0.001}O₄ | 1% Li₂FeP₂O₇/3% LiFePO₄ | 5% of carbon | 6.4 | 1.1 | 29 | -1.98 | 2.44 | 144.3 | 3.73 | 3.7 | 1108 |
| Example II-1-10 | Li_{0.999}Mn_{0.60}Fe_{0.40}P_{0.999} S_{0.001}O₄ | 1% Li₂FeP₂O₇/3% LiFePO₄ | 6% of carbon | 6.4 | 1.1 | 18 | -1.98 | 2.41 | 142.1 | 3.73 | 2.8 | 1219 |
| Example II-1-11 | Li_{0.999}Mn_{0.60}Fe_{0.40}P_{0.999} S_{0.001}O₄ | 1.5% Li₂FeP₂O₇/2.5% LiFePO₄ | 2% of carbon | 6.5 | 1.1 | 34 | -1.97 | 2.44 | 147.8 | 3.74 | 5.2 | 927 |
| Example II-1-12 | Li_{0.999}Mn_{0.60}Fe_{0.40}P_{0.999} S_{0.001}O₄ | 2% Li₂FeP₂O₇/2% LiFePO₄ | 2% of carbon | 6.6 | 1.0 | 22 | -1.96 | 2.47 | 147.6 | 3.74 | 6.1 | 897 |
| Example II-1-13 | Li_{0.999}Mn_{0.60}Fe_{0.40}P_{0.999} S_{0.001}O₄ | 2.5% Li₂FeP₂O₇/1.5% LiFePO₄ | 2% of carbon | 6.7 | 1.2 | 18 | -1.96 | 2.46 | 147.2 | 3.74 | 6.9 | 816 |
| Example II-1-14 | Li_{0.999}Mn_{0.60}Fe_{0.40}P_{0.999} S_{0.001}O₄ | 3% Li₂FeP₂O₇/1% LiFePO₄ | 2% of carbon | 6.7 | 1.1 | 9 | -1.97 | 2.45 | 147.0 | 3.75 | 7.5 | 764 |
| Example II-1-15 | Li_{0.999}Mn_{0.60}Zn_{0.40}P_{0.999} S_{0.001}O₄ | 3% Li₂FeP₂O₇/l% LiFePO₄ | 2% of carbon | 7.5 | 2.5 | 18 | -1.97 | 2.45 | 138.7 | 3.86 | 8.4 | 857 |
| Example II-1-16 | Li_{0.993}Mn_{0.6}Ni_{0.393}Zn_{0.00 4}Ti_{0.003}P_{0.999}S_{0.0001}O₄ | 1% Li₂FeP₂O₇/3% LiFePO₄ | 2% of carbon | 5.4 | 0.8 | 14 | -1.97 | 2.44 | 139.4 | 3.86 | 4.5 | 974 |
| Example II-1-17 | Li_{0.999}Mn_{0.60}Fe_{0.393}V_{0.00 7}P_{0.999}S_{0.001}O₄ | 1% Li₂FeP₂O₇/3% LiFePO₄ | 2% of carbon | 4.2 | 0.6 | 13 | -1.97 | 2.45 | 153.2 | 3.78 | 3.2 | 1241 |
| Example II-1-18 | Li_{0.999}Mn_{0.60}Fe_{0.393}V_{0.00 4}Mg_{0.003}P _{0.999}S_{0.001}O₄ | 1% Li₂FeP₂O₇/3% LiFePO₄ | 2% of carbon | 2.6 | 0.5 | 10 | -1.97 | 2.45 | 155.6 | 3.80 | 2.7 | 1245 |
| Example II-1-19 | LiMn_{0.60}Fe_{0.393}V_{0.004}M g_{0.003}P_{0.999}N_{0.001}O₄ | 1% Li₂FeP₂O₇/3% LiFePO₄ | 2% of carbon | 2.3 | 0.5 | 9 | -1.98 | 2.45 | 157.6 | 3.80 | 2.1 | 1349 |
| Example II-1-20 | Li_{1.001}Mn_{0.60}Fe_{0.393}V_{0.00 4}Mg_{0.003}P_{0.999}S1_{0.001}O₄ | 1% Li₂FeP₂O₇/3% LiFePO₄ | 2% of carbon | 2.4 | 0.7 | 11 | -1.98 | 2.44 | 157.4 | 3.80 | 2.4 | 1368 |
| Example II-1-21 | Li_{1.001},Mn_{0.55}Fe _{0.40}V_{0.0025} Mg_{0.025}P_{0.999}S_{10.001}O₄ | 1% Li₂FeP₂O₇/3% LiFePO₄ | 2% of carbon | 2.2 | 0.5 | 8 | -1.98 | 2.43 | 158.4 | 3.72 | 2.0 | 1459 |
| Example II-1-22 | Li_{1.001}Mn_{0.65}Fe_{0.25}V_{0.05} Mg_{0.05}P_{0.999}S_{0.001}O₄ | 1% Li₂FeP₂O₇/3% LiFePO₄ | 2% of carbon | 2.5 | 0.8 | 12 | -1.98 | 2.42 | 156.9 | 3.83 | 2.8 | 1283 |
| Example II-1-23 | Li_{1.004}Mn_{0.7}Fe_{0.2}V_{0.05}M g_{0.05}P_{0.998}B_{0.002}O₄ | 1% Li₂FeP₂O₇/3% LiFePO₄ | 2% of carbon | 2.6 | 0.8 | 11 | -1.98 | 2.43 | 157.1 | 3.83 | 2.5 | 1268 |
| Example II-1-24 | Li_{1.006}Mn_{0.75}Fe_{0.15}V_{0.05} Mg_{0.05}P_{0.997}B_{0.003}O₄ | 1% Li₂FeP₂O₇/3% LiFePO₄ | 2% of carbon | 2.6 | 0.8 | 10 | -1.98 | 2.44 | 157.4 | 3.83 | 2.6 | 1329 |
| Example II-1-25 | Li_{1.002}Mn_{0.60}Fe _{0.393}V_{0.00 4}Mg_{0.003}P_{0.998}Si_{0.002}O₄ | 1% Li₂FeP₂O₇/3% LiFePO₄ | 2% of carbon | 2.3 | 0.7 | 10 | -1.98 | 2.45 | 157.3 | 3.78 | 2.4 | 1369 |
| Example II-1-26 | Li_{0.997}Mn_{0.80}Fe_{0.194}V_{0.00 3}Mg_{0.003}P_{0.997}S_{0.003}O₄ | 1% Li₂FeP₂O₇/3% LiFePO₄ | 2% of carbon | 2.8 | 0.9 | 12 | -1.98 | 2.45 | 156.1 | 3.85 | 2.9 | 1128 |
| Example II-1-27 | Li_{0.996}Mn_{0.60}Fe_{0.393}V_{0.00 4}Mg_{0.003}P_{0.996}S_{0.004}O₄ | 1% Li₂FeP₂O₇/3% LiFePO₄ | 2% of carbon | 2.2 | 0.6 | 11 | -1.98 | 2.46 | 157.5 | 3.78 | 2.4 | 1394 |
| Example II-1-28 | Li_{0.995}Mn_{0.9}Fe_{0.094}V_{0.003} Mg_{0.003}P_{0.995}O_{4 0.005}O₄ | 1% Li₂FeP₂O₇/3% LiFePO₄ | 2% of carbon | 3.2 | 1.1 | 13 | -1.96 | 2.45 | 156.8 | 3.89 | 3.2 | 1089 |
| Example II-1-29 | Li_{0.994}Mn_{0.90}Fe_{0.090}V_{0.00 3}Mg_{0.003}P_{0.994}S _{0.006}O₄ | 1% Li₂FeP₂O₇/3% LiFePO₄ | 2% of carbon | 3.0 | 1.2 | 14 | -1.95 | 2.44 | 156.1 | 3.89 | 3.2 | 1038 |
| Example II-1-30 | Li_{0.993}Mn_{0.90}Fe_{0.094}V_{0.00 3}Mg_{0.003}P_{0.993}S_{0.007}O₄ | 1% Li₂FeP₂O₇/3% LiFePO₄ | 2% of carbon | 2.8 | 1.4 | 16 | -1.95 | 2.45 | 155.8 | 3.89 | 3.1 | 948 |
| Example II-1-31 | Li_{0.99}Mn_{0.90}Fe_{0.09}V_{0.00 3}Mg_{0.003}P_{0.992}S_{0.008}O₄ | 1% Li₂FeP₂O₇/3% LiFePO₄ | 2% of carbon | 2.6 | 1.4 | 17 | -1.94 | 2.44 | 155.4 | 3.89 | 3.0 | 917 |
| Example II-1-32 | Li_{0.991}Mn_{0.90}Fe_{0.094}V_{0.00 3}Mg_{0.003}P_{0.991} S_{0.009}O₄ | 1% Li₂FeP₂O₇/3% LiFePO₄ | 2% of carbon | 2.4 | 1.2 | 18 | -1.94 | 2.45 | 154.8 | 3.89 | 2.8 | 897 |
| Example II-1-33 | Li_{0.9}Mn_{0.90}Fe_{0.094}V_{0.003} Mg_{0.003}P_{0.0}S_{0.1}O₄ | 1% Li₂FeP₂O₇/3% LiFePO₄ | 2% of carbon | 2.1 | 0.9 | 20 | -1.94 | 2.44 | 154.5 | 3.89 | 2.7 | 879 |
| Example II-1-34 | Li_{1.1}Mn_{0.6}Fe_{0.393}Mg_{0.007} P_{0.9}Si_{0.1}O₄ | 1% Li₂FeP₂O₇/3% LiFePO₄ | 2% of carbon | 4.6 | 2 | 85 | -1.85 | 2.33 | 156.8 | 3.78 | 8 | 651 |
| Example II-1-35 | LiMn_{0.50}Fe _{0.50}P_{0.995}N_{0.0 05}O₄ | 1% Li₂FeP₂O₇/3% LiFePO₄ | 2% of carbon | 2.2 | 0.6 | 6 | -1.98 | 2.44 | 157.9 | 3.65 | 1.9 | 1539 |
| Example II-1-36 | LiMn_{0.909}Fe_{0.091}P_{0.99}N_{0. 01}O₄ | 1% Li₂FeP₂O₇/3% LiFePO₄ | 2% of carbon | 5.3 | 2.8 | 133 | -1.72 | 2.31 | 137.2 | 3.95 | 9.3 | 627 |
| Example II-1-37 | LiMn_{0.0091}Fe_{0.909}P_{0.995}N_{0 .005}O₄ | 1% Li₂FeP₂O₇/3% LiFePO₄ | 2% of carbon | 2.1 | 0.4 | 5 | -1.99 | 2.45 | 159 | 3.35 | 3.2 | 1632 |
| Example II-1-38 | Li_{1.001}Mn_{0.55}Fe _{0.40}V_{0.025} Mg_{0.025}P_{0.999}S_{10.001}O₄ | 4% Li₂FeP₂O₇/3%Li FePO₄ | 2% of carbon | 2.5 | 0.5 | 3 | -1.98 | 2.43 | 142.4 | 3.67 | 1.9 | 834 |
| Example II-1-39 | Li_{1.001}Mn_{0.55}Fe _{0.40}V_{0.025} Mg_{0.025}P_{0.999}Si_{0.001}O₄ | 1% Ag₄P₂O₇/3% LiFePO₄ | 2% of carbon | 2.3 | 0.5 | 9 | -1.97 | 2.44 | 153.1 | 3.72 | 2 | 1321 |
| Example II-1-40 | Li_{1.001}Mn_{0.55}Fe _{0.40}V_{0.025} Mg_{0.025}P_{0.999}S_{10.001}O₄ | 1% Li₂FeP₂O₇/3% LiFePO₄ | 2% of carbon | 2.2 | 0.5 | 16 | -1.98 | 2 | 159 | 3.75 | 3.3 | 1278 |
| Example II-1-41 | LiMn_{0.999}Fe_{0.001}P_{0.995}N_{0. 005}O₄ | 1% Li₂FeP₂O₇/3% LiFePO₄ | 2% of carbon | 3.5 | 2.4 | 115 | -1.93 | 2.38 | 154 | / | 3.1 | 1124 |
| Comparative example II-1 | LiMnPO₄ | - | 1% of carbon | 11.4 | 3.2 | 2060 | -1.55 | 1.81 | 125.6 | 4.02 | 48.6 | 185 |
| Comparative example II-2 | LiMn_{0.60}Fe_{0.40}PO₄ | - | 1% of carbon | 8.7 | 2.8 | 1597 | -1.76 | 1.92 | 134.8 | 3.76 | 42.5 | 358 |
| Comparative example II-3 | Li_{0.999}MnP_{0.999}S _{0.001}O₄ | - | 1% of carbon | 9.8 | 2.5 | 1895 | -1.66 | 1.88 | 128.6 | 4.05 | 45.5 | 267 |
| Comparative example II-4 | Li_{0.999}Mn_{0.60}Fe_{0.40}P_{0.999} S_{0.001}O₄ | - | 1% of carbon | 6.7 | 1.8 | 1279 | -1.83 | 1.82 | 140.5 | 3.78 | 38.5 | 417 |
| Comparative example II-5 | Li_{0.999}Mn_{0.60}Fe_{0.40}P_{0.999} S_{0.001}O₄ | 4% of amorphous Li₂FeP₂O₇ | 1% of carbon | 6.5 | 1.8 | 208 | -1.90 | 1.79 | 140.3 | 3.73 | 12.5 | 519 |
| Comparative example II-6 | Li_{0.999}Mn_{0.60}Fe_{0.40}P_{0.999} S_{0.001}O₄ | 4% of amorphous LiFePO₄ | 1% of carbon | 6.6 | 1.8 | 318 | -1.91 | 1.83 | 140.2 | 3.74 | 11.5 | 528 |
| Comparative example II-7 | Li_{0.999}Mn_{0.60}Fe_{0.40}P_{0.999} S_{0.001}O₄ | 1% of amorphous Li₂FeP₂O₇ + 3% of amorphous LiFePO₄ | 1% of carbon | 6.6 | 1.8 | 174 | -1.90 | 1.84 | 140.1 | 3.75 | 8.6 | 682 |
| Note: 1) the crystallinity of Li₂FeP₂O₇ and LiFePO₄ in Examples II-1-1 to II-1-41 are both 100%; 2) in Comparative examples II-5 to II-7, the crystallinity of Li₂FeP₂O₇ is 5%, and the crystallinity of LiFePO₄ is 8%. | | | | | | | | | | | | |

From the combination of Examples II-1-1 to II-1-41 and Comparative examples II-1 to II-4, it can be seen that the existence of the first coating layer is beneficial to reduce the Li/Mn antisite defect concentration of the obtained material and the dissolution of Fe and Mn after cycling, increase the gram capacity of button battery of the battery, and improve the safety performance and cycling performance of the battery. When other elements are doped on the Mn site and phosphorus site respectively, the lattice change rate, antisite defect concentration and Fe and Mn dissolution of the obtained material can be significantly reduced, the gram capacity of the battery can be increased, and the safety performance and cycling performance of the battery can be improved.

From the combination of Examples II-1-1 to II-1-6, it can be seen that with the increase of the amount of the first coating layer from 3.2% to 6.4%, the Li/Mn antisite defect concentration of the obtained material gradually decreases, and the Fe and Mn dissolution gradually decreases after cycling, and the safety performance and cycling performance at 45°C of the corresponding battery are also improved, but the gram capacity of the button battery decreases slightly. Optionally, when the total amount of the first coating layer is 4-5.6% by weight, the overall performance of the corresponding battery is the best.

From the combination of Example II-1-3 and Examples II-1-7 to II-1-10, it can be seen that with the increase of the amount of the second coating layer from 1% to 6%, the Li/Mn antisite defect concentration of the obtained material gradually decreases, and the Fe and Mn dissolution gradually decreases after cycling, and the safety performance and cycling performance at 45°C of the corresponding battery are also improved, but the gram capacity of the button battery decreases slightly. Optionally, when the total amount of the second coating layer is 3-5% by weight, the overall performance of the corresponding battery is the best.

From the combination of Examples II-1-11 to II-1-15 and Comparative examples II-5 to II-6, it can be seen that when Li₂FeP₂O₇ and LiFePO₄ exist simultaneously in the first coating layer, especially the weight ratio of Li₂FeP₂O₇ and LiFePO₄ is 1 : 3 to 3 : 1, and especially 1 : 3 to 1 : 1, the improvement of battery performance is more obvious.

**Table 21 Performance test results of Examples II-2-1 to II-2-4**

| Example No. | First coating layer | Crystallinity of pyrophosphate and phosphate¹ | Lattice change rate (%) | Li/Mn antisite defect concentra tion/% | Dissolution of Fe and Mn after cycling (ppm) | Surface oxygen valence state | Capacity of button battery at 0.1C (mAh/g) | Average discharge voltage of button battery (V) | Expansion of cell when stored at 60°C for 30 d (%) | Capacity retention rate during cycling at 45°C |
|---|---|---|---|---|---|---|---|---|---|---|
| Example II-2-1 | 1% Li₂FeP₂O₇/3% LiFePO₄ | 30% | 6.3 | 1.9 | 147 | -1.88 | 145.2 | 3.72 | 5.6 | 698 |
| Example II-2-2 | 1% Li₂FeP₂O₇/3% LiFePO₄ | 50% | 4.7 | 1.2 | 97 | -1.89 | 149.2 | 3.74 | 4.7 | 869 |
| Example II-2-3 | 1% Li₂FeP₂O₇/3% LiFePO₄ | 70% | 3.5 | 0.8 | 29 | -1.91 | 151.3 | 3.75 | 3.8 | 1027 |
| Example II-2-4 | 1% Li₂FeP₂O₇/3% LiFePO₄ | 100% | 2.4 | 0.4 | 8 | -1.98 | 158.2 | 3.79 | 1.9 | 1328 |
| | ¹: refers to the crystallinity of Li₂FeP₂O₇ and LiFePO₄ are 30%, 50%, 70%, and 100%, respectively. | | | | | | | | | |

It can be seen from Table 21 that as the crystallinity of pyrophosphate and phosphate in the first coating layer gradually increases, the lattice change rate of the corresponding material, the Li/Mn antisite defect concentration, and the dissolution of Fe and Mn gradually decrease, the button battery capacity of the battery is gradually increased, and the safety performance and cycling performance are also gradually improved.

**Table 22 Performance test results of Examples II-3-1 to II-3-12**

| Example No. | Doping element type and doping amount | Temper ature in reaction kettle (°C) | Stirring time/min | Lattice change rate (%) | Li/Mn antisite defect concentrat ion/% | Dissolu tion of Fe and Mn after cycling (ppm) | Surface oxygen valence state | Capacity of button battery at 0.1C (mAh/g) | Average discharge voltage of button battery (V) | Expansion of cell when stored at 60°C for 30 d (%) | Number of cycles for capacity retention rate of 80% at 45°C |
|---|---|---|---|---|---|---|---|---|---|---|---|
| Example II-3-1 | Li₀₉₉₉Mn_{0.60}Fe _{0.393}V_{0.004}CO_{0.00 3}P_{0.999}S_{0.001}O₄ | 60 | 120 | 5.6 | 2.4 | 49 | -1.98 | 155.2 | 3.67 | 5.6 | 1102 |
| Example II-3-2 | Li_{0.999}Mn_{0.60}Fe _{0.393}V_{0.004}CO_{0. 3}P_{0.999}S_{0.001}O₄ | 70 | 120 | 4.8 | 1.9 | 37 | -1.98 | 155.7 | 3.69 | 4.7 | 1203 |
| Example II-3-3 | Li_{0.999}Mn_{0.60}Fe _{0.393}V_{0.004}CO_{0. 3}P_{0.999}S_{0.001}O₄ | 80 | 120 | 3.7 | 1.3 | 28 | -1.98 | 156.4 | 3.72 | 3.8 | 1275 |
| Example II-3-4 | Li_{0.999}Mn_{0.60}Fe _{0.393}V_{0.004}CO_{0. 3}P_{0.999}S_{0.001}O₄ | 90 | 120 | 2.9 | 1.1 | 17 | -1.98 | 157.8 | 3.75 | 3.1 | 1305 |
| Example II-3-5 | Li_{0.999}Mn_{0.60}Fe _{0.393}V_{0.004}CO_{0. 3}P_{0.999}S_{0.001}O₄ | 100 | 120 | 2.5 | 0.5 | 9 | -1.98 | 158.5 | 3.78 | 2.4 | 1327 |
| Example II-3-6 | Li_{0.999}Mn_{0.60}Fe _{0.393}V_{0.004}CO_{0. 3}P_{0.999}S_{0.001}O₄ | 110 | 120 | 2.8 | 1.2 | 19 | -1.98 | 156.7 | 3.73 | 3.6 | 1257 |
| Example II-3-7 | Li_{0.999}Mn_{0.60}Fe _{0.393}V₀.₀₀₄CO_{0.00 3}P_{0.999}S_{0.001}O₄ | 120 | 120 | 3.7 | 2.1 | 38 | -1.98 | 154.8 | 3.69 | 4.8 | 1179 |
| Example II-3-8 | Li_{0.999}Mn_{0.60}Fe _{0.393}V_{0.004}CO_{0.00 3}P_{0.999}S_{0.001}O₄ | 130 | 120 | 4.5 | 3.4 | 46 | -1.98 | 153.7 | 3.64 | 6.3 | 986 |
| Example II-3-9 | Li_{0.999}Mn_{0.60}Fe _{0.393}V₀.₀₀₄CO_{0.00 3}P_{0.999}S_{0.001}O₄ | 100 | 60 | 4.9 | 3.1 | 38 | -1.98 | 155.4 | 3.76 | 4.9 | 1021 |
| Example II-3-10 | Li_{0.999}Mn_{0.60}Fe _{0.393}V_{0.004}CO_{0.00 3}P_{0.999}S_{0.001}O₄ | 100 | 90 | 4.1 | 2.5 | 27 | -1.98 | 156.3 | 3.77 | 4.2 | 1097 |
| Example II-3-11 | Li_{0.999}Mn_{0.60}Fe _{0.393}V_{0.004}Co_{0.00 3}P_{0.999}S_{0.001}O₄ | 100 | 150 | 3.5 | 1.1 | 15 | -1.98 | 157.8 | 3.79 | 3.1 | 1184 |
| Example II-3-12 | Li_{0.999}Mn_{0.60}Fe _{0.393}V_{0.004}Co_{0.00 3}P_{0.999}S_{0.001}O₄ | 100 | 180 | 2.5 | 0.5 | 11 | -1.98 | 158.1 | 3.79 | 2.4 | 1297 |
| Note | 1. The temperature and stirring time in the reaction kettle are the parameters during the preparation of element A doped manganese oxalate (i.e, step (1)). | | | | | | | | | | |

It can be seen from Table 22 that by adjusting the reaction temperature and reaction time in the reaction kettle during the preparation of manganese oxalate particles, various performances of the positive electrode material of the present application can be further improved. For example, when the reaction temperature gradually increases from 60°C to 130°C, the lattice change rate and Li/Mn antisite defect concentration first decreases and then increases, and the corresponding metal dissolution and safety performance after cycling also show similar rules, while the button battery capacity and cycling performance first increase and then decrease with the increase of temperature. Keeping the reaction temperature constant and adjusting the reaction time can also show a similar rule.

**Table 23 Performance test results of Examples II-4-1 to II-4-7 and Comparative examples II-8 to II-11**

| Example No. | Li₂FeP₂O₇: LiFePO₄ (weight ratio) | Drying temperature (°C) | Drying time (h) | Sintering temperature (°C) | Sintering time (h) | Lattice spacing of pyrophosphate in the first coating layer (nm) | Angle of the pyrophosphate of the first coating layer (°) | Lattice spacing of phosphate in the first coating layer (nm) | Angle of the phosphate of the first coating layer (°) | Lattice change rate (%) | Li/Mn antisite defect concentr ation/% | Surface oxygen valence state | Capacity of button battery at 0.1C (mAh/g) | Average discharge voltage of button battery (V) | Expansion of cell when stored at 60°C for 30 d (%) | Number of cycles for capacity retention rate of 80% at 45°C |
|---|---|---|---|---|---|---|---|---|---|---|---|---|---|---|---|---|
| Example II-4-1 | 1: 3 | 100 | 4 | 700 | 6 | 0.303 | 29.496 | 0.348 | 25.562 | 2.9 | 0.6 | -1.97 | 155.4 | 3.71 | 3.4 | 1183 |
| Example II-4-2 | 1: 3 | 150 | 6 | 700 | 6 | 0.303 | 29.496 | 0.348 | 25.562 | 2.6 | 0.6 | -1.98 | 157.8 | 3.78 | 2.4 | 1347 |
| Example II-4-3 | 1: 3 | 200 | 6 | 700 | 6 | 0.303 | 29.496 | 0.348 | 25.562 | 2.7 | 0.6 | -1.98 | 156.5 | 3.73 | 3.1 | 1277 |
| Example II-4-4 | 1: 3 | 200 | 6 | 600 | 6 | 0.303 | 29.496 | 0.348 | 25.562 | 2.9 | 1.1 | -1.95 | 153.8 | 3.69 | 3.9 | 984 |
| Example II-4-5 | 1: 1 | 150 | 6 | 600 | 4 | 0.303 | 29.496 | 0.348 | 25.562 | 2.8 | 1.2 | -1.94 | 155.5 | 3.71 | 3.5 | 895 |
| Example II-4-6 | 1: 1 | 150 | 6 | 600 | 6 | 0.303 | 29.496 | 0.348 | 25.562 | 2.6 | 0.8 | -1.95 | 156.3 | 3.72 | 3.1 | 963 |
| Example II-4-7 | 1: 1 | 150 | 6 | 800 | 8 | 0.303 | 29.496 | 0.348 | 25.562 | 2.5 | 0.4 | -1.97 | 156.9 | 3.74 | 2.7 | 1043 |
| Comparative example II-8 | 1: 3 | 80 | 3 | 400 | 3 | - | - | - | - | 3.9 | 1.8 | -1.91 | 148.0 | 3.67 | 9.4 | 779 |
| Comparative example II-9 | 1: 1 | 80 | 3 | 400 | 3 | - | - | - | - | 3.6 | 1.6 | -1.93 | 149.4 | 3.70 | 6.8 | 683 |
| Comparative example II-10 | Only Li₂FeP₂O₇ | 80 | 3 | 350 | 2 | - | - | - | - | 3.7 | 1.7 | -1.86 | 147.5 | 3.68 | 11.5 | 385 |
| Comparative example II-11 | Only LiFePO₄ | 80 | 3 | - | - | - | - | - | - | 3.4 | 1.4 | -1.93 | 150.3 | 3.72 | 4.7 | 526 |

It can be seen from Table 23 that when preparing lithium iron pyrophosphate by the method of the present application, by adjusting the drying temperature/time and sintering temperature/time during the preparation process, the performance of the obtained material can be improved, thereby improving the battery performance. From Comparative examples II-8 to II-11, it can be seen that when the drying temperature in the preparation process of lithium iron pyrophosphate is lower than 100°C or the temperature in the sintering step is lower than 400°C, Li₂FeP₂O₇, which is expected to be prepared in the present application, will not be obtained, thereby failing to improve the material properties as well as the performance of the battery comprising the resulting material.

**Table 24 Performance test results of Examples 11-5-1 to II-5-2**

| Example No. | Inner core | First coating layer | | Thickness of the first coating layer | Second coating layer | Thickness of the second coating layer | Lattice change rate (%) | Li/Mn antisite defect concentrat ion/% | Dissolutio n of Fe and Mn after cycling (ppm) | Surface oxygen valence state | Gram capacity of button battery at 0.1C (mAh/g) | Average discharge voltage of button battery (V) | Expansion of cell when stored at 60°C for 30 d (%) | Number of cycles correspondin g to 80% capacity retention at 45°C | Compacte d density (g/cm³) |
|---|---|---|---|---|---|---|---|---|---|---|---|---|---|---|---|
| Example II-5-1 | Li_{0.999}Mn_{0.60}Fe_{0.393}V_{0.004}C o_{0.003}P_{0.999}S_{0.001}O₄ | 1% of Li₂FeP₂O₇ | 3% Al₂O₃ | 9 | 2% of carbon | 10 | 2.4 | 0.4 | 6 | -1.96 | 157.4 | 3.76 | 1.5 | 1247 | 2.40 |
| Example II-5-2 | Li_{0.999}Mn_{0.60}Fe_{0.40}P_{0.999}S_{0.0 01}O₄ | 0.8% of Li₂FeP₂O₇ | 2.4% Al₂O₃ | 7.2 | 1% of carbon | 5 | 6.6 | 1.2 | 56 | -1.96 | 147.4 | 3.73 | 5.2 | 726 | 2.41 |

**Table 25 Performance test results of Examples 11-5-3 to II-5-4**

| Example No. | Inner core | First coating layer | | | Second coating layer | Crystallinity of pyrophospha te | Lattice change rate (%) | Li/Mn antisite defect concentr ation/% | Dissolution of Fe and Mn after cycling (ppm) | Surface oxygen valence state | Gram capacity of button battery at 0.1C (mAh/g) | Average discharge voltage of button battery (V) | Expansion of cell when stored at 60°C for 30 d (%) | Number of cycles corresponding to 80% capacity retention at 45°C | Compacted density (g/cm³) |
|---|---|---|---|---|---|---|---|---|---|---|---|---|---|---|---|
| Example II-5-3 | Li_{0.994}Mo_{0.001}Mn_{0.65} F_{0.35}P_{0.999}Si_{0.001}O_{4 3.999}F_{0.001} | 1% of crystalline Li₂FeP₂O₇ | 3% Al₂O₃ | | 1% of carbon | 100% | 5.2 | 0.7 | 91 | -1.96 | 157.1 | 3.74 | 3.2 | 1197 | 2.2 |
| Example II-5-4 | Li_{0.994}Mo_{0.00},Mn_{0.6 5}Fe_{0.35}P_{0.999}Si_{0.0001}O _{3.999}F_{0.001} | 1% of crystalline Li₂FeP₂O₇ | 3% Al₂O₃ | | 1% of carbon | 30% | 5.3 | 1 | 143 | -1.95 | 151.8 | 3.73 | 6.1 | 879 | 2.2 |
| Example II-5-5 | Li_{0.99}Mo_{0.001}Mn_{0.6} F_{0.35}P_{0.999}Si_{0.001}O_{4 3.999}F_{0.001} | 1% of aminoethylaminoprop y1 polydimethylsiloxane | | | / | / | 6.3 | 1.1 | 72 | -1.82 | 156.3 | / | 8 | 728 | 2.22 |
| Example II-5-6 | Li_{0.997}Mn_{0.60}Fe_{0.393} V_{0.004}Co_{0.003}P_{0.997}S _{0.003}O₄ | the first coating layer contains 1% of crystalline Li₂FeP₂O₇; the second coating layer contains 3% of crystalline LiFePO₄; the third coating layer contains 1 % of carbon; the fourth coating layer contains 1% of hydroxyl-terminated polydimethylsiloxane (the number average molecular weight is 1000, and the content of polar functional groups is 3.4%) | | | | / | 2.4 | 1.8 | 2 | -1.93 | 157.3 | / | 4.0 | 1532 | 2.34 |
| Example II-5-7 | Li_{0.994}Mo_{0.00},Mn_{0.6} F_{0.35}P_{0.999}Si_{0.001}O_{4 3.999}F_{0.001} | 1% of carboxymethyl chitosan | | / | | / | 6.4 | 1.1 | 53 | -1.82 | 156.1 | / | 8.2 | 896 | 2.23 |

### [Determination results of three-layer coated positive electrode active material and battery]

**Table 26: Powder properties of positive electrode active materials and battery properties of prepared batteries in Examples III-1 to III-27, Examples III-43 to III-48, Examples III-52, Comparative examples III-1, and Comparative examples III-2 to III-17**

| Example No. | Powder properties of positive electrode active material | | | | | | Performances of batteries | | |
|---|---|---|---|---|---|---|---|---|---|
| | Lattice change rate (%) | Li/Mn antisite defect concentration (%) | Compacted density (g/cm³) | Surface oxygen valence state | 3C charge constant current rate (%) | Dissolution of Mn and Fe after cycling (ppm) | Capacity of button battery at 0.1C (mAh/g) | Expansion of cell when stored at 60°C for 30 d (%) | Number of cycles for capacity retention rate of 80% at 45°C |
| Comparative example III-1 | 11.4 | 5.2 | 1.5 | -1.55 | 50.1 | 2060 | 125.6 | 48.6 | 185 |
| Comparative example III-2 | 10.6 | 3.3 | 1.67 | -1.51 | 54.9 | 1810 | 126.4 | 47.3 | 243 |
| Comparative example III-3 | 10.8 | 3.4 | 1.64 | -1.64 | 52.1 | 1728 | 144.7 | 41.9 | 378 |
| Comparative example III-4 | 4.3 | 2.8 | 1.69 | -1.82 | 56.3 | 1096 | 151.2 | 8.4 | 551 |
| Comparative example III-5 | 2.8 | 2.5 | 1.65 | -1.85 | 58.2 | 31 | 148.4 | 7.5 | 668 |
| Comparative example III-6 | 3.4 | 2.4 | 1.61 | -1.86 | 58.4 | 64 | 149.6 | 8.6 | 673 |
| Comparative example III-7 | 4.5 | 2.4 | 1.73 | -1.83 | 59.2 | 85 | 148.6 | 8.3 | 669 |
| Comparative example III-8 | 2.3 | 2.4 | 1.68 | -1.89 | 59.3 | 30 | 152.3 | 7.3 | 653 |
| Comparative example III-9 | 2.3 | 2.4 | 1.75 | -1.89 | 59.8 | 30 | 152.3 | 7.3 | 672 |
| Comparative example III-10 | 2.3 | 2.2 | 1.81 | -1.9 | 64.1 | 28 | 154.2 | 7.2 | 685 |
| Comparative example III-11 | 2.3 | 2.2 | 1.92 | -1.92 | 65.4 | 12 | 154.3 | 5.4 | 985 |
| Comparative example III-12 | 2.3 | 2.1 | 1.95 | -1.95 | 65.5 | 18 | 154.6 | 4.2 | 795 |
| Comparative example III-13 | 11.4 | 5.2 | 1.63 | -1.96 | 52.4 | 56 | 130.2 | 5.4 | 562 |
| Comparative example III-14 | 8.1 | 3.8 | 1.76 | -1.96 | 58.3 | 41 | 135.1 | 5.1 | 631 |
| Comparative example III-15 | 2 | 1.8 | 2.13 | -1.96 | 61.3 | 8 | 154.3 | 3.7 | 1126 |
| Comparative example III-16 | 2 | 1.9 | 1.95 | -1.96 | 60.5 | 18 | 152.7 | 4.5 | 1019 |
| Comparative example III-17 | 2 | 1.9 | 1.9 | -1.89 | 60.4 | 24 | 152.4 | 5.1 | 897 |
| Example III-1 | 2.5 | 1.8 | 2.35 | -1.93 | 70.3 | 7 | 157.2 | 4.2 | 1128 |
| Example III-2 | 2.5 | 1.8 | 2.24 | -1.94 | 70.2 | 6 | 156.3 | 3.7 | 1253 |
| Example III-3 | 2.5 | 1.8 | 2.22 | -1.94 | 70.1 | 5 | 155.4 | 3.4 | 1374 |
| Example III-4 | 2.5 | 1.8 | 2.21 | -1.95 | 70.2 | 3 | 153.7 | 2.9 | 1406 |
| Example III-5 | 2.5 | 1.8 | 2.33 | -1.93 | 70.1 | 5 | 156.7 | 3.1 | 1501 |
| Example III-6 | 2.5 | 1.8 | 2.31 | -1.93 | 69.7 | 4 | 156.2 | 2.8 | 1576 |
| Example III-7 | 2.5 | 1.8 | 2.28 | -1.93 | 68.4 | 3 | 155.8 | 2.5 | 1647 |
| Example III-8 | 2.5 | 1.8 | 2.29 | -1.93 | 69.1 | 9 | 156.4 | 3.4 | 1058 |
| Example III-9 | 2.5 | 1.8 | 2.46 | -1.98 | 73.4 | 6 | 157.6 | 2.9 | 1286 |
| Example III-10 | 2.5 | 1.8 | 2.49 | -1.98 | 75.4 | 5 | 157.8 | 2.5 | 1486 |
| Example III-11 | 2.6 | 1.9 | 2.38 | -1.97 | 72.4 | 6 | 157.3 | 3.5 | 1026 |
| Example III-12 | 2.4 | 1.8 | 2.41 | -1.97 | 74.5 | 4 | 156.3 | 2.5 | 1136 |
| Example III-13 | 2.7 | 1.9 | 2.42 | -1.97 | 75.3 | 5 | 156.6 | 3.5 | 1207 |
| Example III-14 | 2.8 | 1.9 | 2.45 | -1.97 | 76.5 | 3 | 153.8 | 3.7 | 1308 |
| Example III-15 | 2.2 | 1.9 | 2.46 | -1.97 | 74.3 | 3 | 153.8 | 3.7 | 1109 |
| Example III-16 | 2.1 | 1.9 | 2.47 | -1.98 | 73.1 | 5 | 154.2 | 3.8 | 1132 |
| Example III-17 | 2.5 | 1.7 | 2.41 | -1.98 | 75.3 | 4 | 155.4 | 4.5 | 1258 |
| Example III-18 | 2.3 | 1.6 | 2.42 | -1.97 | 76.1 | 4 | 154.3 | 4.7 | 1378 |
| Example III-19 | 2.2 | 1.7 | 2.43 | -1.97 | 76.8 | 4 | 154.3 | 4.7 | 1328 |
| Example III-20 | 2.6 | 1.8 | 2.42 | -1.94 | 75.4 | 4 | 153.9 | 3.3 | 1458 |
| Example III-21 | 2.4 | 1.7 | 2.41 | -1.97 | 76.1 | 4 | 154.5 | 3.5 | 1327 |
| Example III-22 | 2.4 | 1.8 | 2.32 | -1.95 | 72.1 | 2 | 152.1 | 2.7 | 1556 |
| Example III-23 | 2.3 | 1.7 | 2.46 | -1.96 | 76.4 | 3 | 151.4 | 2.4 | 1645 |
| Example III-24 | 2.2 | 1.8 | 2.47 | -1.95 | 76.3 | 3 | 152.1 | 2.5 | 1548 |
| Example III-25 | 2.1 | 1.7 | 2.49 | -1.98 | 78.4 | 3 | 158.6 | 2.9 | 1538 |
| Example III-26 | 3.6 | 2.5 | 2.21 | -1.97 | 56.4 | 8 | 152.3 | 4.8 | 1017 |
| Example III-27 | 2.8 | 2.1 | 2.24 | -1.98 | 74.3 | 6 | 155.4 | 3.8 | 1126 |
| Example III-28 | 2.5 | 1.9 | 1.95 | -1.94 | 54.7 | 9 | 154.9 | 6.4 | 986 |
| Example III-29 | 2.4 | 1.8 | 1.98 | -1.95 | 68.4 | 7 | 155.6 | 4.5 | 1047 |
| Example III-43 | 2.4 | 2.3 | 2.25 | -1.95 | 76.3 | 15 | 139.86 | 3.4 | 1068 |
| Example III-44 | 4.6 | 2 | 2.33 | -1.85 | 75.2 | 85 | 156.8 | 8 | 651 |
| Example III-45 | 5.3 | 2.8 | 2.31 | -1.72 | 72.1 | 133 | 137.2 | 9.3 | 627 |
| Example III-46 | 2.1 | 0.4 | 2.45 | -1.99 | 78.3 | 5 | 159 | 1632 | 1632 |
| Example III-47 | 3 | 2 | 2.45 | -1.97 | 74.2 | 12 | 150.3 | 4.5 | 1107 |
| Example III-48 | 2.5 | 1.8 | 2.25 | -1.93 | 67.4 | 3 | 154.2 | 2.2 | 1691 |
| Example III-52 | 2.5 | 1.8 | 2.2 | -0.194 | 70.3 | 3 | 152.6 | 2.6 | 1468 |
| Example III-53 | 2.6 | 1.7 | 2.4 | -1.96 | 79 | 85 | 157 | 3.1 | 1196 |
| Example III-54 | 2.7 | 1.8 | 2.42 | -1.97 | 88 | 87 | 156 | 3.2 | 1164 |

It can be seen from Table 26 that, compared with Comparative examples, these Examples achieve a smaller lattice change rate, a smaller Li/Mn antisite defect concentration, a larger compacted density, and a surface oxygen valence state more closer to -2 valence, less Mn and Fe dissolution after cycling, and better battery performance, such as better high-temperature storage performance and high-temperature cycling performance.

**Table 27: Thickness of each layer of the positive electrode active materials and the weight ratio of manganese element to phosphorus element prepared in Examples III-1 to III-14, and Comparative examples III-3 to III-4 and Comparative example III-12**

| No. | Inner core | First coating layer | Second coating layer | Third coating layer | Thickness of the first coating layer (nm) | Thickness of the second coating layer (nm) | Thickness of the third coating layer (nm) | Mn element content (weight%) | Weight ratio of Mn element to P element |
|---|---|---|---|---|---|---|---|---|---|
| Compar ative example III-3 | LiMn_{0.80}Fe_{0.20}PO₄ | 2% of amorphous Li₂FeP₂O₇ | - | 2% of carbon | 4 | - | 10 | 26.1 | 1.383 |
| Compar ative example III-4 | LiMn_{0.70}Fe_{0.295}V_{0.005}PO₄ | - | - | 1% of carbon | - | - | 5 | 24.3 | 1.241 |
| Compar ative example III-12 | Li_{0.999}Mn_{0.60}Fe_{0.393}V_{0.004} Co_{0.003}P_{0.999}S_{0.001}O₄ | - | 3% of crystalline LiFePO₄ | 1% of carbon | - | 7.5 | 5 | 19.6 | 1.034 |
| Example III-1 | Li_{0.997}Mn_{0.60}Fe_{0.393}V_{0.004} Co_{0.003}P_{0.997}5_{0.003}O₄ | 1% of Li₂FeP₂O₇ | 3% of LiFePO₄ | 1% of carbon | 2 | 7.5 | 5 | 19.0 | 1.023 |
| Example III-2 | Li_{0.997}Mn_{0.60}Fe_{0.393}V_{0.004} Co_{0.003}P_{0.997}5_{0.003}O₄ | 1% of Li₂FeP₂O₇ | 3% of LiFePO₄ | 3% of carbon | 2 | 7.5 | 15 | 18.3 | 1.023 |
| Example III-3 | Li_{0.997}Mn_{0.60}Fe_{0.393}V_{0.004} Co_{0.003}P_{0.997}5_{0.003}O₄ | 1% of Li₂FeP₂O₇ | 3% of LiFePO₄ | 4% of carbon | 2 | 7.5 | 20 | 18.0 | 1.023 |
| Example III-4 | Li_{0.997}Mn_{0.60}Fe_{0.393}V_{0.004} Co_{0.003}P_{0.997}5_{0.003}O₄ | 1% of Li₂FeP₂O₇ | 3% of LiFePO₄ | 5% of carbon | 2 | 7.5 | 25 | 17.9 | 1.023 |
| Example III-5 | Li_{0.997}Mn_{0.60}Fe_{0.393}V_{0.004} Co_{0.003}P_{0.997}5_{0.003}O₄ | 2% of Li₂FeP₂O₇ | 3% of LiFePO₄ | 1% of carbon | 4 | 7.5 | 5 | 18.7 | 1.011 |
| Example III-6 | Li_{0.997}Mn_{0.60}Fe_{0.393}V_{0.004} Co_{0.003}P_{0.997}5_{0.003}O₄ | 3% of Li₂FeP₂O₇ | 3% of LiFePO₄ | 1% of carbon | 6 | 7.5 | 5 | 18.3 | 0.999 |
| Example III-7 | Li_{0.997}Mn_{0.60}Fe_{0.393}V_{0.004} Co_{0.003}P_{0.997}5_{0.003}O₄ | 5% of Li₂FeP₂O₇ | 3% of LiFePO₄ | 1% of carbon | 10 | 7.5 | 5 | 17.6 | 0.975 |
| Example III-8 | Li_{0.997}Mn_{0.60}Fe_{0.393}V_{0.004} Co_{0.003}P_{0.997}5_{0.003}O₄ | 1% of Li₂FeP₂O₇ | 1% of LiFePO₄ | 1% of carbon | 2 | 2.5 | 5 | 19.8 | 1.043 |
| Example III-9 | Li_{0.997}Mn_{0.60}Fe_{0.393}V_{0.004} Co_{0.003}P_{0.997}5_{0.003}O₄ | 1% of Li₂FeP₂O₇ | 4% of LiFePO₄ | 1% of carbon | 2 | 10 | 5 | 18.7 | 1.014 |
| Example III-10 | Li_{0.997}Mn_{0.60}Fe_{0.393}V_{0.004} Co_{0.003}P_{0.997}5_{0.003}O₄ | 1% of Li₂FeP₂O₇ | 5% of LiFePO₄ | 1% of carbon | 2 | 12.5 | 5 | 18.4 | 1.004 |
| Example III-11 | Li_{1.001}Mn_{0 .60}Fe_{0.393}V_{0.004} Co_{0.003}P_{0.999}Si_{0.001}O₄ | 1% of Li₂FeP₂O₇ | 2.50% of LiFePO₄ | 1.5% of carbon | 2 | 6.3 | 7.5 | 19.0 | 1.026 |
| Example III-13 | Li_{0.995}Mn_{0.65}Fe_{0.341}V_{0.004} Co_{0.005}P_{0.995}S_{0.005}O₄ | 2% of Li₂FeP₂O₇ | 2% of LiFePO₄ | 2% of carbon | 4 | 5 | 10 | 18.7 | 1.108 |
| Example III-14 | Li_{1.002}Mn_{0.70}Fe₀.₂₉₃V₀.₀₀₄ Co_{0.003}P_{0.998}Si_{0.002}O₄ | 2.5% of Li₂FeP₂O₇ | 3.50% of LiFePO₄ | 2.5% of carbon | 5 | 8.8 | 12.5 | 17.8 | 1.166 |

It can be seen from Table 27 that by doping the manganese and phosphorus sites of lithium manganese iron phosphate (containing 35% of manganese and about 20% of phosphorus) and three-layer coating, the manganese element content in the positive electrode active material and the weight content ratio of manganese element to phosphorus element is obviously reduced; in addition, comparing Examples III-1 to III-14 with Comparative examples III-3, III-4 and III-12, combined with Table 26, it can be known that the decrease of manganese and phosphorus elements in the positive electrode active material will lead to the decrease of manganese and iron dissolution and the improvement of the battery performance of the secondary battery prepared therefrom.

**Table 28: Powder properties of the positive electrode active materials and the performance of the prepared batteries in Example III-30 to III-42**

| Example No. | Powder properties of positive electrode active material | | | | | | Performances of batteries | | |
|---|---|---|---|---|---|---|---|---|---|
| | Lattice change rate (%) | Li/Mn antisite defect concentration (%) | Compacted density (g/cm³) | Surface oxygen valence state | 3C charge constant current rate (%) | Dissolution of Mn and Fe after cycling (ppm) | Capacity of button battery at 0.1C | Expansion of cell when stored at 60°C for 30 d (%) | Number of cycles for capacity retention rate of 80% at 45°C |
| Example III-1 | 2.5 | 1.8 | 2.35 | -1.93 | 70.3 | 7 | 157.2 | 4.2 | 1128 |
| Example III-30 | 2.4 | 1.9 | 2.36 | -1.97 | 68.7 | 15 | 156.2 | 4.8 | 1018 |
| Example III-31 | 2.5 | 1.7 | 2.36 | -1.96 | 70.1 | 12 | 155.6 | 4.6 | 1087 |
| Example III-32 | 2.5 | 1.7 | 2.38 | -1.97 | 69.1 | 14 | 155.9 | 4.3 | 1054 |
| Example III-33 | 2.6 | 1.8 | 2.39 | -1.98 | 69.4 | 23 | 156.2 | 5.3 | 997 |
| Example III-34 | 2.6 | 1.9 | 2.34 | -1.96 | 71.3 | 16 | 156.4 | 4.6 | 1004 |
| Example III-35 | 2.4 | 1.7 | 2.36 | -1.94 | 70.9 | 11 | 157.5 | 5.1 | 1102 |
| Example III-36 | 2.5 | 1.9 | 2.33 | -1.92 | 71.6 | 14 | 155.8 | 5.4 | 1024 |
| Example III-37 | 2.5 | 1.7 | 2.34 | -1.92 | 68.4 | 18 | 156.1 | 4.9 | 1054 |
| Example III-38 | 2.4 | 1.9 | 2.33 | -1.95 | 67.5 | 27 | 154.7 | 5.9 | 954 |
| Example III-39 | 2.2 | 1.8 | 2.36 | -1.94 | 69.4 | 24 | 156.4 | 5.7 | 1017 |
| Example III-40 | 2.4 | 1.9 | 2.37 | -1.91 | 71.6 | 31 | 155.8 | 5.3 | 991 |
| Example III-41 | 2.6 | 1.9 | 2.38 | -1.94 | 70.8 | 27 | 154.8 | 5.1 | 975 |
| Example III-42 | 2.4 | 1.9 | 2.36 | -1.92 | 71.5 | 15 | 156.8 | 4.2 | 1154 |

It can be seen from Table 28 that the use of the first coating layer and the second coating layer containing other elements within the scope of the present application can also obtain a positive electrode active material with good performance and achieve good battery performance results.

**Table 29: Interplanar distance and angle between the first coating layer material and the second coating layer material**

| No. | Interplanar distance of the first coating layer material | Angle of the crystal direction (111) of the first coating layer material | Interplanar distance of the second coating layer material | Angle of the crystal direction (111) of the second coating layer material |
|---|---|---|---|---|
| Example III-1 | 0.303 | 29.496 | 0.348 | 25.562 |
| Example III-30 | 0.451 | 19.668 | 0.348 | 25.562 |
| Example III-31 | 0.297 | 30.846 | 0.348 | 25.562 |
| Example III-32 | 0.457 | 19.456 | 0.348 | 25.562 |
| Example III-33 | 0.437 | 20.257 | 0.348 | 25.562 |
| Example III-34 | 0.462 | 19.211 | 0.348 | 25.562 |
| Example III-35 | 0.450 | 19.735 | 0.348 | 25.562 |
| Example III-36 | 0.372 | 23.893 | 0.348 | 25.562 |
| Example III-37 | 0.303 | 29.496 | 0.374 | 23.789 |
| Example III-38 | 0.303 | 29.496 | 0.360 | 24.710 |
| Example III-39 | 0.303 | 29.496 | 0.350 | 25.428 |
| Example III-40 | 0.303 | 29.496 | 0.425 | 20.885 |
| Example III-41 | 0.303 | 29.496 | 0.356 | 24.993 |
| Example III-42 | 0.303 | 29.496 | 0.244 | 36.808 |

It can be seen from Table 29 that the interplanar distance and angle between the first coating layer and the second coating layer in the present application are both within the scope of the present application.

### III. Investigation of the influence of coating layer sintering method on the performances of positive electrode active material and secondary battery

The batteries of the Examples and Comparative examples in the Table below are prepared similarly to Example III-1, except that the method parameters in the Table below are used. The results are shown in Table 13 below.

**Table 30: Influence of sintering temperature and sintering time on secondary battery in steps S4, S6 and S8**

| No. | Sintering temperature in S4 (°C) | Sintering time in S4(h) | Sintering temperature in S6 (°C) | Sintering time in S6 (h) | Sintering temperat ure in S8 (°C) | Sintering time in S8 (h) | Lattice change rate (%) | Li/Mn antisite defect concentra tion | Compa cted density | 3C charge constant current rate (%) | Dissolut ion of Mn and Fe after cycling (ppm) | Surface oxygen valence state | Capacity of button battery at 0.1C (mAh/g) | Expansion of cell when stored at 60°C for 30 d (%) | Number of cycles for capacity retention rate of 80% at 45°C |
|---|---|---|---|---|---|---|---|---|---|---|---|---|---|---|---|
| Example III-1 | 650 | 6 | 700 | 8 | 700 | 10 | 2.5 | 1.8 | 2.35 | 70.3 | 7 | -1.93 | 157.2 | 4.2 | 1128 |
| Example III-2-1 | 750 | 4 | 600 | 6 | 700 | 6 | 3.0 | 2.4 | 2.24 | 64.2 | 12 | -1.95 | 154.2 | 6.4 | 894 |
| Example III-2-2 | 800 | 4 | 600 | 6 | 700 | 6 | 3.1 | 2.4 | 2.21 | 67.3 | 12 | -1.95 | 153.2 | 6.2 | 904 |
| Example III-2-3 | 700 | 2 | 600 | 6 | 700 | 6 | 2.9 | 2.3 | 2.20 | 62.3 | 15 | -1.96 | 151.1 | 5.8 | 846 |
| Example III-2-4 | 700 | 3 | 600 | 6 | 700 | 6 | 2.7 | 2.1 | 2.23 | 64.3 | 14 | -1.96 | 152.8 | 5.4 | 908 |
| Example III-2-5 | 700 | 4 | 500 | 6 | 700 | 6 | 2.5 | 1.8 | 2.31 | 62.4 | 28 | -1.95 | 153.1 | 4.7 | 798 |
| Example III-2-6 | 700 | 4 | 700 | 6 | 700 | 6 | 2.5 | 1.8 | 2.34 | 63.5 | 14 | -1.96 | 154.3 | 5.1 | 867 |
| Example III-2-7 | 700 | 4 | 600 | 8 | 700 | 6 | 2.5 | 1.8 | 2.31 | 67.3 | 11 | -1.95 | 156.8 | 4.7 | 959 |
| Example III-2-8 | 700 | 4 | 600 | 10 | 700 | 6 | 2.5 | 1.8 | 2.34 | 68.5 | 10 | -1.96 | 156.2 | 4.5 | 1045 |
| Example III-2-9 | 700 | 4 | 600 | 6 | 750 | 6 | 2.5 | 1.8 | 2.35 | 70.3 | 7 | -1.93 | 157.2 | 4.2 | 1128 |
| Example III-2-10 | 700 | 4 | 600 | 6 | 800 | 6 | 2.5 | 1.8 | 2.35 | 70.1 | 7 | -1.93 | 156.3 | 4.4 | 1097 |
| Example III-2-11 | 700 | 4 | 600 | 6 | 700 | 8 | 2.5 | 1.8 | 2.35 | 68.4 | 8 | -1.91 | 155.4 | 4.7 | 964 |
| Example III-2-12 | 700 | 4 | 600 | 6 | 700 | 10 | 2.5 | 1.8 | 2.35 | 66.7 | 10 | -1.95 | 154.7 | 5 | 897 |
| Example III-2-13 | 600 | 3 | 600 | 8 | 750 | 8 | 4.8 | 5.3 | 2.28 | 54.1 | 86 | -1.90 | 140.7 | 10.6 | 615 |
| Example III-2-14 | 850 | 3 | 600 | 8 | 750 | 8 | 5.3 | 4.7 | 2.38 | 57.2 | 84 | -1.91 | 145.3 | 9.0 | 684 |
| Example III-2-15 | 750 | 1.5 | 600 | 8 | 750 | 8 | 4.7 | 4.5 | 2.25 | 53.1 | 87 | -1.91 | 141.9 | 8.8 | 691 |
| Example III-2-16 | 750 | 4.5 | 600 | 8 | 750 | 8 | 4.1 | 4.0 | 2.31 | 58.1 | 79 | -1.92 | 140.1 | 8.1 | 711 |
| Example III-2-17 | 750 | 3 | 450 | 8 | 750 | 8 | 4.8 | 4.6 | 2.28 | 52.1 | 78 | -1.90 | 141.2 | 8.7 | 601 |
| Example III-2-18 | 750 | 3 | 750 | 8 | 750 | 8 | 3.9 | 4.8 | 2.35 | 49.7 | 78 | -1.95 | 142.4 | 8.8 | 604 |
| Example III-2-19 | 750 | 3 | 600 | 5.5 | 750 | 8 | 4.4 | 4.2 | 2.24 | 45.4 | 81 | -1.93 | 142.9 | 8.8 | 614 |
| Example III-2-20 | 750 | 3 | 600 | 10.5 | 750 | 8 | 4.1 | 3.9 | 2.34 | 49.1 | 79 | -1.92 | 141.1 | 7.9 | 684 |
| Example III-2-21 | 750 | 3 | 600 | 8 | 650 | 8 | 5.2 | 4.1 | 2.31 | 48.4 | 81 | -1.93 | 141.8 | 10.2 | 567 |
| Example III-2-22 | 750 | 3 | 600 | 8 | 850 | 8 | 5.0 | 4.0 | 2.34 | 49.1 | 78 | -1.95 | 141.2 | 8.7 | 678 |
| Example III-2-23 | 750 | 3 | 600 | 8 | 750 | 5.5 | 4.3 | 4.2 | 2.27 | 47.8 | 84 | -1.91 | 142.9 | 9.4 | 521 |
| Example III-2-24 | 750 | 3 | 600 | 8 | 750 | 10.5 | 50 | 4.9 | 2.35 | 49.8 | 78 | -1.94 | 141.7 | 9.5 | 655 |

It can be seen from the above that when the sintering temperature range in step S4 is 650-800°C and the sintering time is 2-6 h, the sintering temperature in step S6 is 500-700°C and the sintering time is 6-10 h, and the sintering temperature in step S8 is 700-800°C and the sintering time is 6-10 h, smaller lattice change rate, smaller Li/Mn antisite defect concentration, less dissolution of manganese and iron elements, better 3C charge constant current rate, larger battery capacity, better battery cycling performance, and better high temperature storage stability can be achieved.

In addition, compared with Example III-2-16 (the sintering temperature in step S4 is 750°C and the sintering time is 4.5 h), Example III-2-1 (the sintering temperature in step S4 is 750°C and the sintering time is 4 h) achieves better positive electrode active material performance and battery performance, which indicates that when the sintering temperature of step S4 is 750°C or greater than 750°C, it is necessary to control the sintering time to less than 4.5 h.

### IV. Investigation of the influence of reaction temperature and reaction time in inner core preparation on the performances of positive electrode active material and battery

The positive electrode active materials and batteries of Examples III-3-1 to III-3-20 in the Table below are prepared similarly to Example III-1, and for the differences in the preparation of positive electrode active materials, please refer to the method parameters in the Table below. The results are also shown in the Table below.

**Table 31: Influence of reaction temperature and reaction time in inner core preparation on the performance of positive electrode active materials and secondary batteries**

| No. | Step S1 | | Step S2 | | Lattice change rate (%) | Li/Mn antisite defect concentra tion (%) | Compacte d density (g/cm³) | 3C charge constant current rate (%) | Dissolution of Mn and Fe after cycling (ppm) | Surface oxygen valence state | Capacity of button battery at 0.1C (mAh/g) | Expansion of cell when stored at 60°C for 30 d (%) | Number of cycles for capacity retention rate of 80% at 45°C |
|---|---|---|---|---|---|---|---|---|---|---|---|---|---|
| | Reaction temperat ure (°C) | Reactio n time (h) | Reaction temperat ure (°C) | Reaction time (h) | | | | | | | | | |
| Example III-1 | 80 | 6 | 80 | 10 | 2.5 | 1.8 | 2.35 | 70.3 | 7 | -1.93 | 157.2 | 4.2 | 1128 |
| Example III-3-1 | 70 | 6 | 80 | 10 | 2.8 | 3.4 | 2.30 | 60.1 | 34 | -1.93 | 155.4 | 5.8 | 876 |
| Example III-3-2 | 60 | 6 | 80 | 10 | 3.1 | 3.1 | 2.33 | 64.2 | 18 | -1.92 | 156.2 | 5.1 | 997 |
| Example III-3-4 | 100 | 6 | 80 | 10 | 2.3 | 2.4 | 2.37 | 71.3 | 7 | -1.94 | 156.8 | 4.1 | 1137 |
| Example III-3-5 | 120 | 6 | 80 | 10 | 2.1 | 2.2 | 2.38 | 72.1 | 5 | -1.92 | 155.4 | 4.0 | 1158 |
| Example III-3-6 | 80 | 2 | 80 | 10 | 2.8 | 3.2 | 2.27 | 68.4 | 24 | -1.90 | 154.9 | 5.1 | 895 |
| Example III-3-7 | 80 | 3 | 80 | 10 | 2.6 | 2.7 | 2.29 | 69.7 | 17 | -1.92 | 156.1 | 4.7 | 967 |
| Example III-3-8 | 80 | 5 | 80 | 10 | 2.4 | 1.9 | 2.34 | 70.6 | 8 | -1.94 | 156.8 | 4.3 | 1137 |
| Example III-3-9 | 80 | 7 | 80 | 10 | 2.5 | 1.8 | 2.35 | 68.3 | 11 | -1.94 | 156.4 | 4.8 | 987 |
| Example III-3-10 | 80 | 9 | 80 | 10 | 2.6 | 1.8 | 2.36 | 67.2 | 15 | -1.93 | 155.9 | 5.2 | 921 |
| Example III-3-11 | 80 | 6 | 40 | 10 | 3.2 | 3.4 | 2.28 | 67.8 | 35 | -1.94 | 156.8 | 5.4 | 894 |
| Example III-3-12 | 80 | 6 | 60 | 10 | 2.8 | 2.9 | 2.31 | 68.7 | 18 | -1.95 | 157.0 | 4.9 | 927 |
| Example III-3-13 | 80 | 6 | 80 | 10 | 2.5 | 2.7 | 2.35 | 70.3 | 7 | -1.93 | 157.2 | 4.2 | 1128 |
| Example III-3-14 | 80 | 6 | 100 | 10 | 2.7 | 2.8 | 2.33 | 69.4 | 15 | -1.93 | 156.7 | 4.6 | 957 |
| Example III-3-15 | 80 | 6 | 120 | 10 | 2.8 | 3.1 | 2.32 | 68.1 | 24 | -1.94 | 156.2 | 4.8 | 914 |
| Example III-3-16 | 80 | 6 | 90 | 1 | 3.7 | 3.8 | 2.26 | 67.9 | 38 | -1.93 | 155.8 | 5.2 | 885 |
| Example III-3-17 | 80 | 6 | 90 | 3 | 3.4 | 3.4 | 2.31 | 68.2 | 32 | -1.94 | 156.1 | 4.8 | 915 |
| Example III-3-18 | 80 | 6 | 90 | 5 | 3.1 | 3.1 | 2.33 | 69.1 | 27 | -1.92 | 156.4 | 4.6 | 934 |
| Example III-3-19 | 80 | 6 | 90 | 7 | 2.8 | 2.9 | 2.34 | 69.4 | 15 | -1.93 | 156.8 | 4.5 | 971 |
| Example III-3-20 | 80 | 6 | 90 | 9 | 2.5 | 2.7 | 2.35 | 70.3 | 7 | -1.93 | 157.2 | 4.2 | 1128 |

It can be seen from Table 31 that when the reaction temperature range in step S1 is 60-120°C and the reaction time is 2-9 h; and the reaction temperature range in step S2 is 40-120°C and the reaction time is 1-10 h, the powder properties of the positive electrode active material (lattice change rate, Li/Mn antisite defect concentration, surface oxygen valence state, compacted density) and the performances of the prepared battery (electric capacity, high-temperature cycling performance, high-temperature storage performance) are all excellent.

**Table 32: Powder properties of the positive electrode active materials and the performances of the batteries in Example III-4-1 to III-4-2**

| No. | Powder properties of positive electrode active material | | | | | | Performances of batteries | | |
|---|---|---|---|---|---|---|---|---|---|
| | Lattice change rate (%) | Li/Mn antisite defect concentration (%) | Compacted density (g/cm³) | Surface oxygen valence state | 3C charge constant current rate (%) | Dissolution of Mn and Fe after cycling (ppm) | Capacity of button battery at 0.1C (mAh/g) | Expansion of cell when stored at 60°C for 30 d (%) | Number of cycles for capacity retention rate of 80% at 45°C |
| Example III-4-1 | 2.5 | 1.8 | 2.33 | -1.92 | 69.3 | 10 | 156.2 | 5.2 | 1079 |
| Example III-4-2 | 2.5 | 1.8 | 2.27 | -1.93 | 69.2 | 8 | 155.3 | 4.7 | 1157 |

**Table 33: Powder properties of the positive electrode active materials and the performances of the batteries in Example III-4-3 to III-4-4**

| No. | Inner core | First coating layer | Second coating layer | Third coating layer | (1-y):y | m:x | Powder properties | | | of positive electrode active material | | | | | | Performances of batteries | | |
|---|---|---|---|---|---|---|---|---|---|---|---|---|---|---|---|---|---|---|
| | | | | | | | Lattice change rate (%) | Li/Mn antisite defect concentrati on (%) | Compacte d density (g/cm³) | Surface oxygen valence state | Manganes e element content (%) | Phosphor us element content (%) | Weight ratio of manganese element to phosphorus element | 3C charge constant current rate (%) | Dissolu tion of Mn and Fe after cycling (ppm) | Capacity of button battery at 0.1C (mAh/g) | Expansio n of cell when stored at 60°C for 30 d (%) | Number of cycles for capacity retention rate of 80% at 45°C |
| Example III-4-3 | Li_{0.994}Mo_{0.001}Mn _{0.65}Fe_{0.35}P_{0.999}Si_{0. 001}O_{3.999}F_{0.001} | 1% of crystalline Li₂FeP₂O₇ | 3% of crystalline Al₂O₃ | 1% of carbon | 1.86 | 994 | 5.2 | 0.9 | 2.26 | -1.97 | 22.5 | 19.5 | 1.15 | 68.1 | 21 | 157.3 | 2.2 | 1268 |
| Example III-4-4 | Li_{0.994}Mo_{0.001} Mη _{0.65}Fe_{0.35}P_{0.999}Si_{0. 001}O_{3.999}F _{0.001} | 1% of crystalline Al₄(P₂O₇)₃ | 3% of crystalline Al₂O₃ | 1% of carbon | 1.86 | 994 | 5.5 | 0.9 | 2.45 | -1.98 | 21.7 | 18.8 | 1.15 | 81.6 | 40 | 158.1 | 2.5 | 1524 |

### [Test results of battery using a mixture of two positive electrode active materials]

**Table 34: Properties of the positive electrode active materials and the performances of the batteries in Examples IV-1 to IV-2**

| | Energy density (Wh/L) | | Energy density (Wh/kg) | | Furnace temperature experiment | Needling experiment | Charge capacity retention rate at 1C at room temperature (Vs 0.33C) | Cycle life, Cycles (80% SOH, 25°C) | -20°C, discharge capacity retention rate at 0.33C |
|---|---|---|---|---|---|---|---|---|---|
| Example IV-1 | 508.6 | ↑18% | 212.8 | ↑11% | PASS | PASS | 92% | 2570 | 71% |
| Example IV-2 | 508.6 | ↑18% | 212.8 | ↑11% | PASS | PASS | 92% | 2240 | 73% |

The secondary battery using two positive electrode active materials has higher energy density, higher cell rate performance, better kinetic performance and low temperature performance, longer cycle life, and higher safety.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode active material including a compound represented by formula (I),
LiₐAₓMn_{1-y}B_{y}P_{1-z}C_{z}O₄₋ₙDₙ (1)
wherein
the A includes one or more elements selected from group IA, group IIA, group IIIA, group IIB, group VB and group VIB;
the B includes one or more elements selected from group IA, group IIA, group IIIA, group IVA, group VA, group IIB, group IVB, group VB, group VIB and group VIII;
the C includes one or more elements selected from group IIIA, group IVA, group VA and group VIA;
the D includes one or more elements selected from group VIA and group VIIA;
the a is selected from a range of 0.85 to 1.15;
the x is selected from a range of 0 to 0.1;
the y is selected from a range of 0.001 to 0.999;
the z is selected from a range of 0 to 0.5; and
the n is selected from a range of 0 to 0.5.

2. The positive electrode active material according to claim 1, wherein
the A includes one or more elements selected from Rb, Cs, Be, Ca, Sr, Ba, Ga, In, Cd, V, Ta, Cr, Zn, Al, Na, K, Mg, Nb, Mo and W, optionally one or more elements selected from Zn, Al, Na, K, Mg, Nb, Mo and W; and/or
the B includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb and Ge, optionally one or more elements selected from Zn, Al, Na, K, Mg, Mo, W, Ti, V, Zr, Fe, Ni, Co, Ga, Sn, Sb, Nb and Ge; and/or
the C includes one or more elements selected from B (boron), S, Si and N; and/or
the D includes one or more elements selected from S, F, Cl and Br.

3. The positive electrode active material according to claim 1 or 2, wherein
the A includes any element selected from Zn, Al, Na, K, Mg, Nb, Mo and W, and optionally any element selected from Mg and Nb; and/or
the B includes one or more elements selected from Ti, V, Zr, Fe, Ni, Mg, Co, Ga, Sn, Sb, Nb and Ge, optionally at least two elements selected from Ti, V, Zr, Fe , Ni, Mg, Co, Ga, Sn, Sb, Nb and Ge, more optionally at least two elements selected from Fe, Ti, V, Ni, Co and Mg, further optionally at least two elements selected from Fe, Ti, V, Co and Mg, and more further optionally Fe and one or more elements selected from Ti, V, Co and Mg; and/or
the C includes any element selected from B (boron), S, Si and N, optionally S; and/or
the D includes any element selected from S, F, Cl and Br, optionally F.

4. The positive electrode active material according to any one of claims 1 to 3, wherein
the a is selected from a range of 0.9 to 1.1, optionally in a range of 0.97 to 1.01; and/or
the x is selected from a range of 0.001 to 0.005; and/or
the y is selected from a range of 0.001 to 0.5, optionally in a range of 0.01 to 0.5, optionally in a range of 0.25 to 0.5; and/or
the z is selected from a range of 0.001 to 0.5, optionally in a range of 0.001 to 0.1, more optionally in a range of 0.001 to 0.005; and/or
the n is selected from a range of 0 to 0.1, optionally in a range of 0.001 to 0.005.

5. The positive electrode active material according to any one of claims 1 to 4, wherein
the x is 0, the z is selected from a range of 0.001 to 0.5, and the n is selected from a range of 0.001 to 0.1; or,
the x is selected from a range of 0.001 to 0.1, the z is 0, and the n is selected from a range of 0.001 to 0.1; or,
the x is selected from a range of 0.001 to 0.1, the z is selected from a range of 0.001 to 0.5, and the n is 0; or,
the x is 0, the z is 0, and the n is selected from a range of 0.001 to 0.1; or,
the x is 0, the z is selected from a range of 0.001 to 0.5, and the n is 0; or,
the x is selected from a range of 0.001 to 0.1, the z is selected from a range of 0.001 to 0.5, and the n is selected from a range of 0.001 to 0.1.

6. The positive electrode active material according to any one of claims 1 to 5, wherein y:z is selected from a range of 0.002 to 999, optionally in a range of 0.025 to 999, more optionally in a range of 0.2 to 600.

7. The positive electrode active material according to any one of claims 1 to 6, wherein z: n is selected from a range of 0.002 to 500, optionally in a range of 0.2 to 100, more optionally in a range of 0.2 to 50.

8. The positive electrode active material according to any one of claims 1 to 7, wherein
the A includes one or more elements selected from Zn, Al, Na, K, Mg, Nb, Mo and W;
the B includes one or more elements selected from Ti, V, Zr, Fe, Ni, Mg, Co, Ga, Sn, Sb, Nb and Ge;
the C includes one or more elements selected from B (boron), S, Si and N;
the D includes one or more elements selected from S, F, Cl and Br;
the a is selected from a range of 0.9 to 1.1, the x is selected from a range of 0.001 to 0.1, the y is selected from a range of 0.001 to 0.5, the z is selected from a range of 0.001 to 0.1, and the n is selected from a range of 0.001 to 0.1.

9. The positive electrode active material according to any one of claims 1 to 7, wherein
the B includes one or more elements selected from Zn, Al, Na, K, Mg, Mo, W, Ti, V, Zr, Fe, Ni, Co, Ga, Sn, Sb, Nb and Ge, optionally one or more elements selected from Zn, Fe, Ti, V, Ni, Co and Mg;
the C is one or more elements selected from B, Si, N and S;
the a is selected from a range of 0.9 to 1.1, the x is 0, the y is selected from a range of 0.001 to 0.5, the z is selected from a range of 0.001 to 0.1, and the n is 0.

10. The positive electrode active material according to any one of claims 1 to 9, wherein the positive electrode active material includes an inner core and a shell coating the inner core,
the inner core includes the compound shown in formula I;
the shell includes one or more coating layers; and the coating layer has ion conductivity or electron conductivity.

11. The positive electrode active material according to claim 10, wherein each of the one or more coating layers independently includes one or more selected from pyrophosphate, phosphate, carbon, doped carbon, an oxide, a boride and a polymer.

12. The positive electrode active material according to claim 10 or 11, wherein the shell includes a coating layer;
optionally, the coating layer includes one or more selected from pyrophosphate, phosphate, carbon, doped carbon, an oxide, a boride and a polymer.

13. The positive electrode active material according to claim 10 or 11, wherein
the shell includes a first coating layer coating the inner core and a second coating layer coating the first coating layer;
optionally, the first coating layer and the second coating layer each independently include one or more selected from pyrophosphate, phosphate, carbon, doped carbon, an oxide, a boride and a polymer.

14. The positive electrode active material according to claim 13, wherein the first coating layer includes one or more selected from pyrophosphate, phosphate, an oxide and a boride, and the second coating layer includes one or more selected from carbon and doped carbon.

15. The positive electrode active material according to claim 10 or 11, wherein
the shell includes a first coating layer coating the inner core, a second coating layer coating the first coating layer, and a third coating layer coating the second coating layer;
optionally, each of the first coating layer, the second coating layer and the third coating layer independently includes one or more selected from pyrophosphate, phosphate, carbon, doped carbon, an oxide, a boride and a polymer.

16. The positive electrode active material according to claim 15, wherein the first coating layer includes pyrophosphate, and the second coating layer includes one or more of selected from phosphate, an oxide and a boride, and the third coating layer includes one or more selected from carbon and doped carbon.

17. The positive electrode active material according to any one of claims 11 to 16, wherein
the pyrophosphate is M_{b}(P₂O₇)_{c}; and/or
the phosphate is Xₘ(PO₄)_{q}; and/or
the doping elements in the doped carbon include one or more selected from group IIIA, group VA, group VIA and group VIIA; and/or
the oxide is M'_{d}Oₑ; and/or
the boride is ZᵥB_{w}; and/or
the polymer includes one or more selected from polysaccharides and their derivatives, and polysiloxanes;
wherein
the M, X and Z each independently include one or more elements selected from group IA, group IIA, group IIIA, group IB, group IIB, group IVB, group VB, group VIIB and group VIII; the b is selected from a range of 1 to 4; the c is selected from a range of 1 to 6; the m is selected from a range of 1 to 2; the q is selected from a range of 1 to 4; the M' includes one or more elements selected from alkali metals, alkaline earth metals, transition metals, group IIIA elements, group IVA elements, lanthanides and Sb; the d is greater than 0 and less than or equal to 2; the e is greater than 0 and less than or equal to 5; the v is selected from a range of 1 to 7; and the w is selected from a range of 1 to 2.

18. The positive electrode active material according to claim 17, wherein
the M, X and Z each independently include one or more elements selected from Li, Fe, Ni, Mg, Co, Cu, Zn, Ti, Ag, Zr, Nb, Mn and Al; and/or
the doping elements in the doped carbon include one or more selected from nitrogen, phosphorus, sulfur, boron and fluorine; and/or
the M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, optionally one or more elements selected from Mg, Al, Si, Zn, Zr and Sn; and/or
the polysiloxane is selected from one or more of polysiloxanes with a linear structure and polysiloxanes with a ring structure; and/or
the polysaccharide is selected from one or more of plant polysaccharides and marine polysaccharides.

19. The positive electrode active material according to claim 10 or 11 or 13 or 14 or 17 or 18, wherein the positive electrode active material includes an inner core and a shell coating the inner core,
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb and Ge, and the C includes one or more elements selected from B (boron), S, Si and N;
the shell includes a first coating layer coating the inner core and a second coating layer coating the first coating layer,
wherein, the first coating layer includes pyrophosphate of MP₂O₇ and phosphate of XPO₄, wherein the M and X are each independently selected from one or more of Li, Fe, Ni, Mg, Co, Cu, Zn, Ti, Ag, Zr, Nb and Al; and
the second coating layer includes carbon.

20. The positive electrode active material according to claim 10 or 11 or 15 or 16 or 17 or 18, wherein the positive electrode active material includes an inner core and a shell coating the inner core,
the inner core includes LiₐMn_{1-y}B_{y}P_{1-z}C_{z}O₄, wherein the a is selected from a range of 0.9 to 1.1, the y is selected from a range of 0.001 to 0.5, and the z is selected from a range of 0.001 to 0.1, the B includes one or more elements selected from Ti, V, Zr, Fe, Ni, Mg, Co, Ga, Sn, Sb, Nb and Ge, and the C includes one or more elements selected from B (boron), S, Si and N;
the shell includes a first coating layer coating the inner core, a second coating layer coating the first coating layer, and a third coating layer coating the second coating layer, wherein
the first coating layer includes pyrophosphate of Li_{f}QP₂O₇ and/or Q_{g}(P₂O₇)ₕ, wherein, 0 ≤ f ≤ 2, 1 ≤ g ≤ 4, 1 ≤ h ≤ 6, the Q in the pyrophosphate of Li_{f}QP₂O₇ and/or Q_{g}(P₂O₇)ₕ are each independently one or more elements selected from Fe, Ni, Mg, Co, Cu, Zn, Ti, Ag, Zr, Nb and Al;
the second coating layer includes crystalline phosphate of XPO₄, wherein X is one or more elements selected from Li, Fe, Ni, Mg, Co, Cu, Zn, Ti, Ag, Zr, Nb and Al; and
the third coating layer includes carbon.

21. The positive electrode active material according to any one of claims 10 to 18, wherein one or more coating layers in the shell which are farthest from the inner core each independently comprise one or more of polysiloxanes, polysaccharides and polysaccharide derivatives.

22. The positive electrode active material according to any one of claims 10 to 21, wherein the polysiloxane comprises a structural unit represented by formula (i), 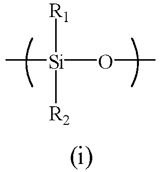
wherein R₁ and R₂ are independently selected from H, -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group;
optionally, R₁ and R₂ are independently selected from H, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl;

23. The positive electrode active material according to any one of claims 10 to 22, wherein the polysiloxane also includes a blocking group including at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl, a C1-C8 carboxyalkyl.

24. The positive electrode active material according to any one of claims 10 to 23, wherein the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxyl-terminated polydimethylsiloxane, polymethyltrifluoropropylsiloxane, perfluorooctylmethylpolysiloxane, aminoethylaminopropyl polydimethylsiloxane, polyether-terminated polydimethylsiloxane, side-chain aminopropyl polysiloxane, aminopropyl-terminated polydimethylsiloxane, side-chain phosphate-grafted polydimethylsiloxane, side-chain polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

25. The positive electrode active material according to any one of claims 10 to 24, wherein the number average molecular weights of the polysiloxane, the polysaccharide and the polysaccharide derivative are each independently 300000 or less, optionally 10000 to 200000, more optionally 20000 to 120000, further optionally 400 to 80000.

26. The positive electrode active material according to any one of claims 10 to 25, wherein the polysiloxane has a polar functional group mass content percentage of α, with 0 ≤ α < 50%, optionally 5% ≤ α ≤ 30%.

27. The positive electrode active material according to any one of claims 10 to 26, wherein the substituents attached to the sugar units in the polysaccharide and the polysaccharide derivative each independently include at least one of the following functional groups: -OH, -COOH and a salt thereof, -R-OH, -SO₃H and a salt thereof, -R-OH, -R-SO₃H and a salt thereof, a sulfate ester group, an alkoxy group, where R represents an alkylene, optionally a C1-C5 alkylene;
optionally, the substituents attached to the sugar units in the polysaccharide and the polysaccharide derivative each independently include at least one of the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, a methoxy, and an ethoxy.

28. The positive electrode active material according to any one of claims 10 to 27, wherein the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, acacia gum, lithium alginate, sodium alginate, potassium alginate, fucoidan, agar, carrageenan, carrageenan, xanthan gum and fenugreek gum.

29. The positive electrode active material according to any one of claims 10 to 28, wherein the mass percentages of the substituents attached to the sugar units in the polysaccharide and the polysaccharide derivative are each independently 20% to 85%, optionally 30% to 78%.

30. The positive electrode active material according to any one of claims 1 to 29, wherein the degree of lattice mismatch between the material of the inner core and the material of the shell is less than 10%.

31. The positive electrode active material according to any one of claims 1 to 30, wherein based on the weight of the positive electrode active material,
a manganese element content is in a range of 10 wt% to 35 wt%, optionally in a range of 13.3 wt% to 33.2 wt%, more optionally in a range of 15 wt% to 30 wt%, further optionally in a range of 17 wt% to 20 wt%; and/or
a content of phosphorus element is in a range of 12 wt% to 25 wt%, optionally in a range of 15 wt% to 20 wt%, more optionally in a range of 16.8 wt% to 19.5 wt%; and/or
a weight ratio range of manganese element to phosphorus element is 0.71-1.85, optionally 0.90-1.25, more optionally 0.95-1.20.

32. The positive electrode active material according to any one of claims 1 to 9, whose surface is coated with one or more of carbon and doped carbon; optionally, the surface of the positive electrode active material is coated with carbon.

33. The positive electrode active material according to claim 32, wherein the doping elements in the doped carbon include one or more selected from nitrogen, phosphorus, sulfur, boron and fluorine.

34. The positive electrode active material according to any one of claims 1 to 33, wherein in the inner core,
(1-y) : y is in a range of 0.1-999, optionally in a range of 0.1-10 or a range of 0.67-999, more optionally in a range of 1 to 10, further optionally in a range of 1 to 4, more further optionally in a range of 1.5 to 3; and/or
a : x is in a range of 1 to 1200, optionally in a range of 9 to 1100, more optionally in a range of 190-998.

35. The positive electrode active material according to any one of claims 1 to 34, wherein, in the inner core, a ratio of z to 1-z is 1 : 9 to 1 : 999, optionally 1 : 499 to 1 : 249.

36. The positive electrode active material according to any one of claims 10 to 35, wherein a coating amount of the shell is 0.1% to 6%, based on the weight of the inner core.

37. The positive electrode active material according to any one of claims 10 to 36, wherein
the coating amount of the first coating layer is greater than 0 wt% and less than or equal to 7 wt%, optionally greater than 0 and less than or equal to 6 wt%, more optionally greater than 0 and less than or equal to 5.5 wt% or 4-5.6 wt%, further optionally greater than 0 and less than or equal to 2 wt%, based on the weight of the inner core; and/or
a coating amount of the second coating layer is greater than 0 wt% and less than or equal to 6 wt%, optionally greater than 0 and less than or equal to 5.5 wt%, more optionally 2-4 wt% or 3-5 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

38. The positive electrode active material according to any one of claims 10 to 37, wherein the shell further includes a fourth coating layer coating the third coating layer and a fifth coating layer coating the fourth coating layer; wherein
coating amounts of the fourth coating layer and the fifth coating layer are each independently 0.01 wt% to 10 wt%, optionally 0.05 wt% to 10 wt%, more optionally 0.1 wt% to 5 wt%, further 0.1% to 2 wt%, based on the weight of the inner core.

39. The positive electrode active material according to any one of claims 10 to 38, wherein the shell is located on 40% to 90% of the surface of the inner core, optionally 60% to 80% of the surface.

40. The positive electrode active material according to any one of claims 10 to 39, wherein the shell has a thickness of 1-15 nm.

41. The positive electrode active material according to any one of claims 10 to 40, wherein
the first coating layer has a thickness of 1-10 nm, optionally 2-10 nm; and/or
the second coating layer has a thickness of 2-25 nm, optionally 2-15 nm, more optionally 3-15 nm; and/or
the third coating layer has a thickness of 2-25 nm, optionally 5-25 nm.

42. The positive electrode active material according to any one of claims 10 to 41, wherein
the one or more coating layers each independently include one or more selected from pyrophosphate, phosphate and an oxide, and the one or more selected from pyrophosphate, phosphate and an oxide is in a crystalline state;
optionally, the pyrophosphate, the phosphate and the oxide each independently has a crystallinity of 10% to 100%, more optionally 50% to 100%.

43. The positive electrode active material according to any one of claims 10 to 42, wherein
in the shell, a weight ratio of the pyrophosphate to the phosphate and a weight ratio of the pyrophosphate to the oxide are each independently 1 : 3 to 3 : 1, optionally 1 : 3 to 1 : 1.

44. The positive electrode active material according to any one of claims 10 to 43, wherein the one or more coating layers each independently includes carbon, and the carbon is a mixture of SP2-form carbon and SP3-form carbon;
optionally, in the carbon, a molar ratio of the SP2-form carbon to the SP3-form carbon is any value within a range of 0.07-13, more optionally any value within a range of 0.1-10, further optionally any value within a range of 2.0-3.0.

45. The positive electrode active material according to any one of claims 10 to 44, wherein
the one or more coating layers each independently include doped carbon, and, in the doped carbon, a mass content of the doping element is 30% or less; and optionally, in the doped carbon, the mass content of the doping element is 20% or less.

46. The positive electrode active material according to any one of claims 10 to 45, wherein
the one or more coating layers each independently include doped carbon, and, in the doped carbon,
the doping element is a nitrogen element and/or a sulfur element, and a mass content of the doping element in the doped carbon is 1% to 15%; or
the doping element is a phosphorus element, a boron element and/or a fluorine element, and a mass content of the doping element in the doped carbon is 0.5% to 5%; and
optionally, the doping element is nitrogen, phosphorus, sulfur, boron or fluorine.

47. The positive electrode active material according to any one of claims 10 to 46, wherein
the one or more coating layers each independently include pyrophosphate, and the pyrophosphate has an interplanar distance in a range of 0.293-0.470 nm, optionally 0.297-0.462 nm or 0.293-0.326 nm, more optionally 0.300-0.310 nm, and the crystal direction (111) has an angle in a range of 18.00°-32.57°, optionally 18.00°-32.00° or 26.41°-32.57°, more optionally 19.211°-30.846°, further optionally 29.00°-30.00°; and/or
the one or more coating layers each independently include phosphate, the phosphate has an interplanar spacing in a range of 0.244-0.425 nm, optionally 0.345-0.358 nm, and the crystal direction (111) has an angle range of 20.00°-37.00°, optionally 24.25°-26.45°;
optionally, the first coating layer or the second coating layer comprises phosphate.

48. The positive electrode active material according to any one of claims 1 to 47, wherein the positive electrode active material has a lattice change rate of, before and after complete lithium intercalation-deintercalation, 50% or less, optionally 9.8% or less, more optionally 8.1% or less, further optionally 7.5% or less, more further optionally 6% or less, more further optionally 4% or less, more further optionally 3.8% or less, more further optionally 2.0-3.8% or less.

49. The positive electrode active material according to any one of claims 1 to 48, wherein the positive electrode active material has an Li/Mn antisite defect concentration of 5.3% or less, optionally 5.1% or less, more optionally 4% or less, further optionally 2.2% or less, more further optionally 2% or less, more further optionally 1.5%-2.2% or 0.5% or less.

50. The positive electrode active material according to any one of claims 1 to 49, wherein the positive electrode active material has a compacted density at 3T of 1.89 g/cm³ or more, optionally 1.95 g/cm³ or more, more optionally 1.98 g/cm³ or more, further optionally 2.0 g/cm³ or more, more further optionally 2.2 g/cm³ or more, more further optionally 2.2 g/cm³ or more and 2.8 g/cm³ or less, or 2.2 g/cm³ or more and 2.65 g/cm³ or less.

51. The positive electrode active material according to any one of claims 1 to 50, wherein the positive electrode active material has a surface oxygen valence state of-1.55 or less, optionally -1.82 or less, more optionally -1.88 or less, further optionally -1.90 or less or -1.98 to -1.88, more further optionally -1.98 to -1.89, more further optionally -1.98 to - 1.90.

52. A method for preparing a positive electrode active material, including the steps of:
mixing a manganese source with an element B source, to obtain a manganese salt doped with element B;
mixing a lithium source, a phosphorus source, optionally an element A source, and optionally an element C source, and an optional source of element D with the manganese salt doped with element B, followed by drying, and sintering to obtain an inner core of LiₐAₓMn_{1-y}B_{y}P_{1-z}C_{z}O₄₋ₙDₙ, wherein the A, B, C, D, a, x, y, z and n are defined as in any one of claims 1 to 51.

53. The method according to claim 52, wherein the method specifically includes the steps of:
mixing and stirring the manganese source, the element B source and an acid in a solvent to produce a suspension of a manganese salt doped with element B, filtering the suspension and drying the filter cake to obtain the manganese salt doped with element B;
adding a lithium source, a phosphorus source, optionally an element A source, optionally an element C source, and optionally an element D source, a solvent, and the manganese salt doped with element B into a reaction container and grinding and mixing same to obtain a slurry;
transferring the resulting slurry to a spray drying apparatus for spray drying and granulation to obtain particles;
sintering the resulting particles to obtain an inner core of LiₐAₓMn_{1-y}B_{y}P_{1-z}C_{z}O₄₋ₙDₙ; wherein the A, B, C, D, a, x, y, z and n are defined as in any one of claims 1 to 51.

54. The method according to claim 53, wherein in the step of preparing the slurry, a lithium source, a phosphorus source, optionally an element A source, optionally an element C source, optionally an element D source, a carbon source, a source of a doping element for a carbon layer, a solvent, and the manganese salt doped with element B are added to a reaction container for grinding and mixing to obtain a slurry; the remaining steps are as described in claim 54; to obtain the positive electrode active material;
the positive electrode active material includes an inner core and a shell coating the inner core, the inner core includes LiₐAₓMn_{1-y}B_{y}P_{1-z}C_{z}O₄₋ₙDₙ, and the shell includes doped carbon, and the doped carbon has doping elements including one or more selected from nitrogen, phosphorus, sulfur, boron and fluorine; wherein the A, B, C, D, a, x, y, z and n are defined as in any one of claims 1 to 51.

55. The method according to claim 52 or 53, further including the steps of:
treating, by coating, the surface of the inner core by dry-coating or wet-coating with one or a mixture of more selected from pyrophosphate, phosphate, carbon, doped carbon, an oxide, a boride and a polymer, to obtain the positive electrode active material;
the positive electrode active material includes an inner core and a shell coating the inner core, the inner core is LiₐAₓMn_{1-y}B_{y}P_{1-z}C_{z}O₄₋ₙDₙ, and the shell includes one or more coating layers, each of which independently includes one or more selected from pyrophosphate, phosphate, carbon, doped carbon, an oxide, a boride, and a polymer, wherein the A, B, C, D, a, x, y, z and n are defined as in any one of claims 1 to 51; optionally, the polymer includes one or more selected from polysiloxanes, polysaccharides and polysaccharide derivatives; .

56. The method according to claim 55, further including the steps of:
providing a pyrophosphate M_{b}(P₂O₇)_{c} powder, a suspension comprising phosphate Xₘ(PO₄)_{q} and/or oxide M'_{d}Oₑ, wherein the suspension further comprises a carbon source and/or a doped carbon source;
adding the inner core and pyrophosphate M_{b}(P₂O₇)_{c} powder into the suspension and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate M_{b}(P₂O₇)_{c} and one or more selected from phosphate Xₘ(PO₄)_{q} and oxide M'_{d}Oₑ, the second coating layer includes one or more of selected from carbon and doped carbon, optionally, the doping elements in the doped carbon include one or more selected from nitrogen, phosphorus, sulfur, boron and fluorine, wherein the A, B, C, D, a, x, y, z and n are defined as in any one of claims 1 to 51, and the M, X, M', b, c, d, e, m, and q are defined as in any one of claims 17 to 19.

57. The method according to claim 55 or 56, further including the steps of:
providing a pyrophosphate MP₂O₇ powder, a phosphate XPO₄ suspension comprising a carbon source;
adding the inner core and pyrophosphate MP₂O₇ powder into the XPO₄ suspension comprising a carbon source and mixing, and sintering same to obtain the positive electrode active material; wherein
the positive electrode active material includes an inner core and a shell coating the inner core, the shell includes a first coating layer coating the inner core and a second coating layer coating the first coating layer, the inner core includes LiₐAₓMn_{1-y}B_{y}P_{1-z}C_{z}O₄₋ₙDₙ, the first coating layer includes pyrophosphate MP₂O₇ and phosphate XPO₄, the second coating layer includes carbon, wherein the A, B, C, D, a, x, y, z and n are defined as in any one of claims 1 to 51, and the M and X are defined as in claim 19.

58. The method according to any one of claims 52 to 54, further including the steps of:
providing a pyrophosphate M_{b}(P₂O₇)_{c} suspension, a suspension containing one or more selected from phosphate Xₘ(PO₄)_{q}, oxide M'_{d}Oₑ and a boride and a suspension comprising a carbon source and/or a doped carbon source;
mixing the inner core with all the above suspensions, and sintering same to obtain the positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n are as defined in any one of claims 1 to 51, and the M, X, M', b, c, d, e, m and q as defined in claim 17 or 18 or 20.

59. The method according to claim 55 or 58, further including the steps of:
providing an Li_{f}QP₂O₇ and/or Q_{g}(P₂O₇)ₕ and XPO₄ suspension respectively, adding the inner core to the above suspension, mixing and sintering same to obtain the positive electrode active material; wherein
the positive electrode active material includes an inner core and a shell coating the inner core, the inner core includes LiₐAₓMn_{1-y}B_{y}P_{1-z}C_{z}O₄₋ₙDₙ, and the shell includes a first coating layer coating the inner core, a second coating layer coating the first coating layer, and a third coating layer coating the second coating layer, the first coating layer includes pyrophosphate Li_{f}QP₂O₇ and/or Q_{g}(P₂O₇)ₕ, the second coating layer includes phosphate XPO₄, and the third coating layer includes carbon, wherein the A, B, C, D, a, x, y, z and n are as defined in any one of claims 1 to 51, and the Q, X, f, g and h are as defined in claim 20.

60. The method according to claim 58 or 59, further including the steps of:
first coating step: dissolving an element Q source, a phosphorus source and an acid, and optionally a lithium source in a solvent to obtain a first coating layer suspension comprising Li_{f}QP₂O₇ and/or Q_{g}(P₂O₇)ₕ; fully mixing the inner core with the first coating layer suspension, drying, and sintering same to obtain a first coating layer-coated material;
second coating step: dissolving an element X source, a phosphorus source and an acid in a solvent to obtain a second coating layer suspension comprising XPO₄; fully mixing the first coating layer-coated material obtained in the first coating step with the second coating layer suspension, drying, and sintering same to obtain a two-layer coating layer-coated material;
third coating step: dissolving the carbon source in a solvent, fully dissolving same to obtain a third coating layer solution; then adding the two-layer coating layer-coated material obtained in the second coating step into the third coating layer solution, mix uniformly, drying, and then sintering same to obtain a three-layer coating layer-coated material, that is, the positive electrode active material.

61. The method according to any one of claims 52 to 54, further including the steps of:
providing a pyrophosphate M_{b}(P₂O₇)_{c} powder, a powder selected from one or more of phosphate Xₘ(PO₄)_{q}, oxide M'_{d}Oₑ and a boride, and a carbon source powder and/or a doped carbon source powder;
mixing the inner core with all the above powders and grinding, and drying same to obtain a positive electrode active material; wherein
the positive electrode active material includes an inner core and a shell coating the inner core,
the inner core includes LiₐMn_{1-y}B_{y}P_{1-z}C_{z}O₄, the shell includes a first coating layer coating the inner core, a second coating layer coating the first coating layer, and a third coating layer coating the second coating layer, the first coating layer includes pyrophosphate M_{b}(P₂O₇)_{c}, and the second coating layer includes one or more selected from phosphate Xₘ(PO₄)_{q}, oxide M'_{d}Oₑ and a boride, the third coating layer is selected from one or more of carbon and doped carbon, wherein the A, B, C, D, a, x, y, z and n are as defined in any one of claims 1 to 51, and the M, X, M', b, c, d, e, m and q as defined in claim 17 or 18 or 20;
optionally, the drying is carried out by a spray granulation dryer.

62. The method according to any one of claims 54 to 61, further including the steps of:
providing a polymer, wherein the polymer includes one or more selected from polysiloxanes, polysaccharides and polysaccharide derivatives;
dry-coating or wet-coating the positive electrode active material and the polymer, and the resulting material includes an inner core and a shell coating the inner core; and
the one or more coating layers in the shell which are farthest from the inner core each independently comprise one or more of polysiloxanes, polysaccharides and polysaccharide derivatives.

63. A method according to any one of claims 52 to 62, wherein
the element A source is selected from at least one of the elementary substances, oxides, phosphates, oxalates, carbonates, and sulfates of element A; and/or
the element B source is selected from at least one of the elementary substances, oxides, phosphates, oxalates, carbonates, halides, nitrates, organic acid salts, hydroxides and sulfates of the element B, optionally at least one of the elementary substances, oxides, phosphates, oxalates, carbonates, and sulfates of the element B, optionally at least one of the elementary substances, sulfates, halides, nitrates, organic acid salts, oxides and hydroxides of the element B, optionally at least one of the elementary substances, carbonates, sulfates, chlorides, nitrates, organic acid salts, oxides and hydroxides of the element B; and/or
the element C source is selected from at least one of the elementary substances, halides, organic acid salts, oxides, hydroxides, inorganic acids, organic acids, sulfates, borates, nitrates and silicates of the element C, optionally at least one of the sulfate, borate, nitrate and silicate of the element C, optionally at least one of the elementary substances, sulfates, halides, nitrates, organic acid salts, oxides, hydroxides and inorganic acids of the element C, optionally at least one of the inorganic acids, organic acids, sulfates, chlorides, nitrates, organic acid salts, oxides, and hydroxides of the element C; and/or
the element D source is selected from at least one of the elementary substances and ammonium salts of the element D.

64. The method according to any one of claims 52 to 63, wherein in the step of preparing the manganese salt doped with element B,
the stirring is carried out at a temperature in a range of 20-120°C, optionally in a range of 25-80°C or 40-120°C, further optionally in a range of 60-120°C, and /or,
at a stirring rate of 200-800 rpm, optionally at 400-700 rpm for 1-9 hours, more optionally at 500-700 rpm for 60-420 minutes, further optionally for 3-7 hours or 120-360 minutes.

65. The method according to any one of claims 52 to 64, wherein in the step of preparing the slurry, the grinding and mixing are carried out for 1-15 hours, optionally 8-15 hours; optionally, the mixing is carried out at a temperature of 20-120°C, more optionally 40-120°C, for 1-10 h.

66. The method according to any one of claims 52 to 65, wherein in the step of producing the inner core, the sintering is carried out at a temperature in a range of 600-900°C for 6-14 hours.

67. The method according to any one of claims 52 to 66, wherein in the step of preparing the slurry, the method further includes: adding a carbon source into the reaction container for grinding and mixing.

68. A method according to claim 56 or 57, wherein
the MP₂O₇ powder is prepared by the following procedure:
adding the element M source and the phosphorus source into the solvent to obtain a mixture, adjusting the pH of the mixture to 4-6, stirring and fully reacting same, and then drying and sintering same to obtain the powder, wherein M is selected from one or more of Li, Fe, Ni, Mg, Co, Cu, Zn, Ti, Ag, Zr, Nb and Al.

69. The method according to claim 68, wherein in the method for preparing the MP₂O₇ powder,
the drying step involves drying at 100-300°C, optionally 150-200°C, for 4-8 hours.

70. The method according to claim 68 or 69, wherein in the method for preparing the MP₂O₇ powder,
the sintering step involves sintering at 500-800°C, optionally 650-800°C, in an inert gas atmosphere for 4-10 hours.

71. A method according to any one of claims 55 to 70, wherein
the sintering temperature in the coating step is 500-800°C, and the sintering time is 4-10 hours.

72. The method according to claim 60, wherein in the first coating step,
the pH of the solution dissolved with an element Q source, a phosphorus source and an acid, and optionally a lithium source is controlled to be 3.5-6.5, followed by stirring and reacting for 1-5 h, and then the temperature of the solution is increased to 50-120°C and maintained for 2-10 h, and/or,
the sintering is carried out at 650-800°C for 2-6 hours

73. The method for preparing a positive electrode active material according to claim 60 or 72, wherein in the second coating step,
after dissolving the element X source, phosphorus source and acid in the solvent, the mixture is stirred and reacted for 1-10 h, then the solution is brought to an increased temperature of 60-150°C and maintained at this temperature for 2-10 h, and/or,
the sintering is carried out at 500-700°C for 6-10 hours.

74. The method for preparing positive electrode active materials according to claim 60 or 72 or 73, wherein the sintering in the third coating step is carried out at 700-800°C for 6-10 hours.

75. A positive electrode plate, including a positive electrode current collector and a positive electrode film layer provided on at least one surface of the positive electrode current collector, the positive electrode film layer includes a first positive electrode active material, and the first positive electrode active material is a positive electrode active material according to any one of claims 1 to 51 or a positive electrode active material prepared by a method according to any one of claims 52 to 74; optionally, the content of the positive electrode active material in the positive electrode film layer is 90-99.5 wt%, more optionally 95-99.5 wt%, based on the total weight of the positive electrode film layer.

76. The positive electrode plate according to claim 75, further including a second positive electrode active material, and the second positive electrode active material is different from the first positive electrode active material.

77. The positive electrode plate according to claim 75 or 76, wherein the second positive electrode active material includes one or more selected from LiEₜCoₛF₍₁₋ₜ₋ₛ₎O₂, spinel-type lithium manganate and spinel-type of lithium titanate, wherein E includes one or more elements selected from group VIII, F includes one or more elements selected from IIIA and VIIB, t is selected from a range of 0 to 0.9, and the sum of t and s is selected from a range of 0.3 to 1.

78. The positive electrode plate according to claim 77, wherein E includes one or more elements selected from Ni, Fe, Ru, and Rh, and F includes one or more elements selected from Mn, Al, Ga, and In.

79. The positive electrode plate according to any one of claims 76 to 78, wherein the second positive electrode active material includes one or more selected from LiNiₜCoₛMn₍₁₋ₜ₋ₛ₎O₂, LiNiₜCoₛAl₍₁₋ₜ₋ₛ₎O₂, LiCoO₂, spinel-type lithium manganate and spinel-type lithium titanate; wherein t is independently selected from 0.3-0.9, optionally 0.33-0.8, and the sum of t and s is independently selected from 0.3-0.9, optionally 0.66-0.9.

80. The positive electrode plate according to any one of claims 76 to 79, wherein
the mass ratio of the first active material to the second active material is 1 : 7-7 : 1, optionally 1 : 4 -4 : 1

81. The positive electrode plate according to claim 79 or 80, wherein in the second positive electrode active material,
the ratio of t, (1-t-s) to s in the LiNiₜCoₛMn₍₁₋ₜ₋ₛ₎O₂ is 5 : 2 : 3 or 3 : 1 : 1 or 8 : 1 : 1; and/or
the ratio of t, s to (1-t-s) in the LiNiₜCoₛAl₍₁₋ₜ₋ₛ₎O₂ is 5 : 2 : 3 or 3 : 1 : 1 or 8 : 1 : 1.

82. The positive electrode plate according to any one of claims 76 to 81, wherein the sum of the mass of the first positive electrode active material and the second positive electrode active material accounts for 88%-98.7% of the mass of the positive electrode plate.

83. A secondary battery, including a positive electrode material according to any one of claims 1 to 51 or a positive electrode active material prepared by a method according to any one of claims 52 to 74 or a positive electrode plate according to any one of claims 75 to 82.

84. A battery module, including a secondary battery according to claim 83.

85. A battery pack including a battery module according to claim 84.

86. A power consuming device, including at least one selected from a secondary battery according to claim 83, a battery module according to claim 84, and a battery pack according to claim 85.
